# EUROPEAN PATENT SPECIFICATION

(11) **EP 1 435 140 B1**
(45) Date of publication and mention of the grant of the patent: **18.11.2009**
(21) Application number: 02765679.2
(22) Date of filing: 18.09.2002
(51) Int. Cl.: H04B 1/713, H04B 1/69

(54) **Digital communication method and system**
Digitales Kommunikationsverfahren und -System
Procédé et système de communication numérique

(30) Priority: 18.09.2001 KR 2001057421
(43) Date of publication of application: 07.07.2004
(60) Divisional application: 07075296.9
(73) Proprietor: Electronics and Telecommunications Research Institute, Daejon-city 305-350 (KR); Korea Advanced Institute of Science and Technology, Daejon 305-701 (KR)
(72) Inventor: KWON, Jae-Kyun 106-6, 704-909 Daegu-city (KR); SHIN, Kang-Soo 141-39, 121-252 Seoul (KR); CHUNG, Jae-Hoon 203-809, Hansol APT., 305-503 Daejeon-city (KR); YUN, Ji-Young 373-1, 305-701 Daejeon-city (KR); MOON, Sung-Ho 373-1, 305-701 Daejeon-city (KR); PARK, Soo-Mee 363-40, 606-808 Busan-city (KR); SUNG, Dan-Keun 103-1503, Hanwool Apt., 305-707 Daejeon-city (KR); PARK, Su-won 373-1, 305-701 Daejeon-city (KR); KYEONG, Mun-Geon 107-204, Hanwool Apt., 305-720 Daejeon-city (KR); CHA, Jae-Sang 232-502, Jugong Apt., 134-772 Seoul (KR); LEE, Seo-Young 108-401, Hanvit Apt. 99, 305-755 Daejeon-city (KR); SONG, Seog-Ill 103-702, Hanmaeul Apt., 305-503 Daejeon-city (KR); SOHN, In-Soo 105-1303, Hanwool Apt., 305-810 Daejeon-city (KR); CHO, Ju-Phil 102-1103, LG Apt., 305-330 Jeonju-city, Jeollabuk-do (KR); KIM, Jae-Joon 101-1006, Jindallae Apt., 157-222 Daegu-city (KR); LEE, Hee-Soo 560-4, 305-325 Daejeon-city (KR)
(74) Representative: Powell, Timothy John
(86) International application number: PCT/KR2002/001774
(87) International publication number: WO 2003/026159

(56) References cited:
- WO-A-00/03502
- WO-A-01/11897
- WO-A-01/93479
- JP-A- 8 256 087
- JP-A- 11 041 143
- US-A1- 5 586 120
- US-A1- 6 049 561
- US-A1- 6 112 094
- US-A1- 6 130 885
- US-B1- 6 240 073
- SAYEED Z: "Throughput analysis and design of fixed and adaptive ARQ/diversity systems for slow fading channels" GLOBAL TELECOMMUNICATIONS CONFERENCE, 1998. GLOBECOM 1998. THE BRIDGE TO GLOBAL INTEGRATION. IEEE SYDNEY,NSW,AUSTRALIA 8-12 NOV. 1998, PISCATAWAY, NJ, USA,IEEE, US, vol. 6, 8 November 1998 (1998-11-08), pages 3686-3691, XP010339471 ISBN: 0-7803-4984-9
- PATENT ABSTRACTS OF JAPAN vol. 1995, no. 06, 31 July 1995 (1995-07-31) & JP 07 086987 A (NIPPON TELEGR & TELEPH CORP <NTT>), 31 March 1995 (1995-03-31)

## Description

### BACKGROUND OF THE INVENTION

### (a) Field of the Invention

The present invention relates to a digital communication method and a system thereof, and specifically to an apparatus and method for a statistical multiplexing of channels based on a multidimensional orthogonal resource hopping method in case where each channel has a variable transmission rate less than a basic transmission rate R in wire/wireless communication systems using a plurality of low-activity communication channels mutually synchronized through a single medium.

More specifically, the present invention relates to a multiplexing apparatus and method in a system composed of a primary station and a plurality of secondary stations mutually synchronized, the primary station identifying a channel to each secondary station using a muitidimensional orthogonal resource hopping pattern, the multidimensional orthogonal resource hopping pattern corresponding to the secondary station including an intentional(non-random) hopping pattern allocated by the primary station during a call set up or a pseudo-random hopping pattern unique to the secondary station. The coordinates of the multidimensional orthogonal resources in hopping patterns of different channels can be identical(matched) (this phenomenon will be referred to as a "multidimensional hopping pattern collision"). In this case, whether or not the channels are matched is determined from the transmit data symbols for all transmit channels of the primary station related to the multidimensional hopping pattern collision. If a data symbol halving at least one unmatched channel is transmitted, the corresponding data symbol interval is turned off and the transmission power of all channels off in data symbol transmission may be increased as much as a predetermined amount for a predetermined time as defined by the protocols so as to compensate for a loss of the average bit energy of missing data of all the related channels.

In this description, the primary and secondary stations correspond to a base station and mobile stations, respectively, in the existing systems. The primary station is in communication with multiple secondary stations. The present invention relates to a statistical multiplexing method applicable in a synchronized channel group maintaining orthogonality in the direction from the primary station to the secondary stations.

### (b) Description of the Related Art

The present invention can be embodied independently in each channel group for a system maintaining orthogonality only in each channel group, e.g., a quasi-orthogonal code (QOC) used in the cdma2000 system that is a candidate technology of the next generation mobile communication system under standardization, i.e., IMT-2000, or a multi-scrambling code (MSC) to be used in the WCDMA system. With the channels of a primary station classified into channel groups having a same transmitter antenna beam as in a sectorizing or smart antenna system, the present invention can also be embodied independently in each channel,

For expediency in explaining which part of the prior art is modified in the embodiment of the multiplexing system of the present invention, the following description will be given on the basis of the IS-95 (cdmaOne) system that is a conventional mobile communication system now in commercial use.

In the digital/analog FDM (Frequency Division Multiplexing) communication system according to prior art, a primary station allocates available FA (Frequency Allocation) to a secondary station irrespective of the channel activity during a call set up, and the secondary station returns the FA to the primary station for another secondary station after termination of the call.

In the TDM (Time Division Multiplexing) communication system according to prior art, a primary station allocates one of available time slots in one FA to a secondary station irrespective of the channel activity during a call set up, and the secondary station returns the time slot to the primary station for another secondary station after termination of the call.

In the FHM (Frequency Hopping Multiplexing) communication system according to prior art, a primary station is in communication with a secondary station using a negotiated frequency hopping pattern irrespective of the channel activity during a call set up, and determines whether to allocate a new channel according to the number of allocated channels. But the FHM system has no control function of the present invention for not sending symbols of the related channel in order to reduce possible errors at the channel decoder of the receiver in the case of a hopping pattern collision.

In the OCDM (Orthogonal Code Division Multiplexing) communication system according to prior art, a primary station allocates an available orthogonal code symbol in an orthogonal code to a secondary station irrespective of the channel activity during a call set up, and the secondary station returns the orthogonal code symbol to the primary station for another secondary station after termination of the call.

In the description of the prior art, the same reference number will be assigned to the parts having the same function as in the description of the present invention.

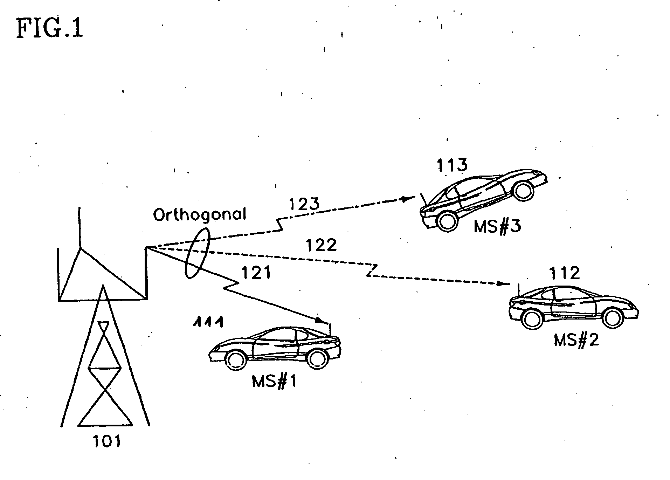

FIG. 1 is a schematic of a system according to an example of the prior art and an embodiment of the present invention, in which channels 121, 122 and 123 formed from a primary station 101 to secondary stations 111, 112 and 113 are in synchronization with one another and have mutual orthogonality.

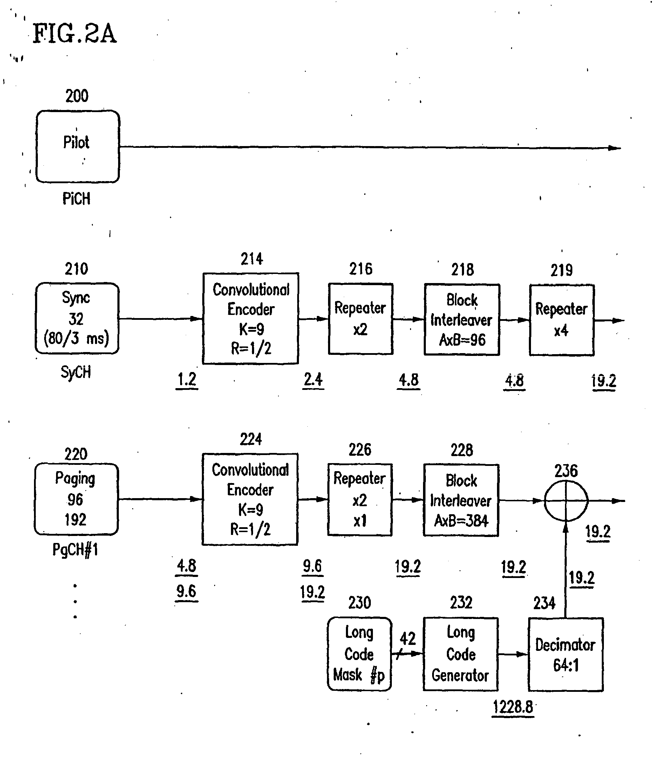

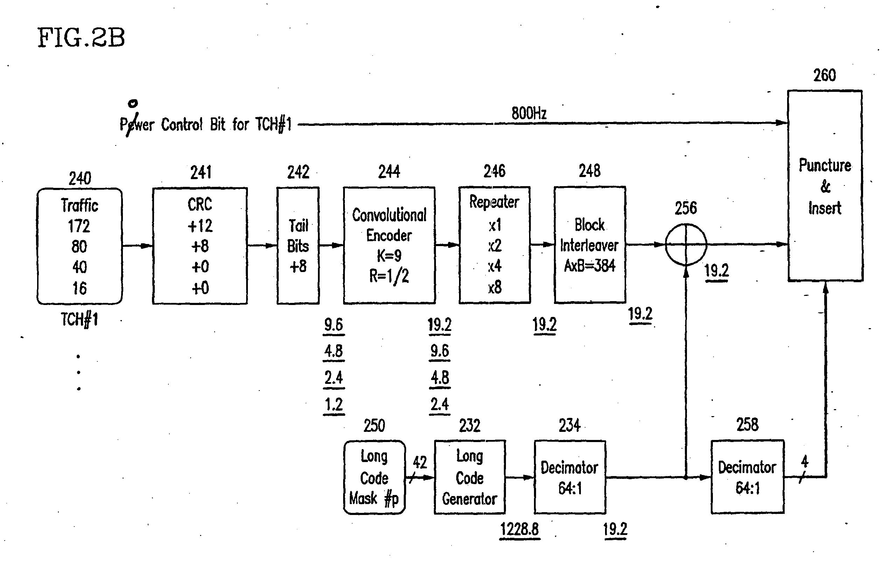

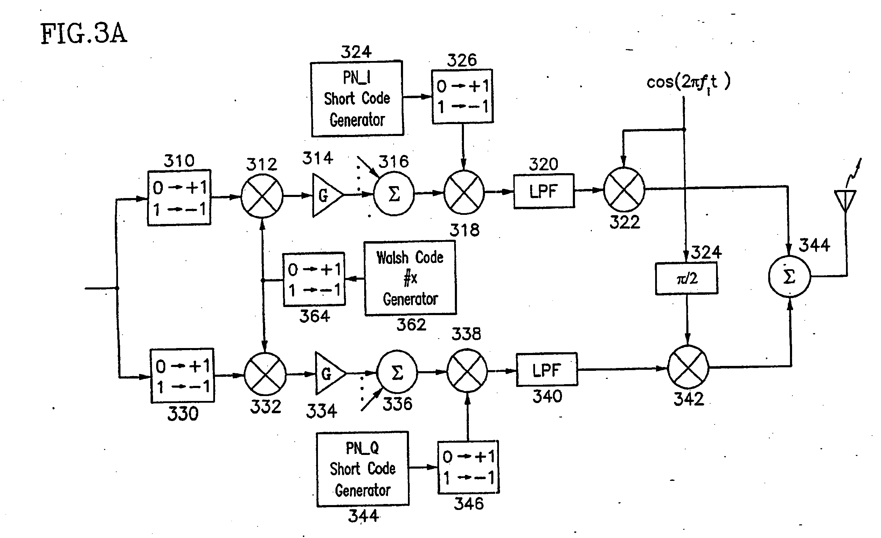

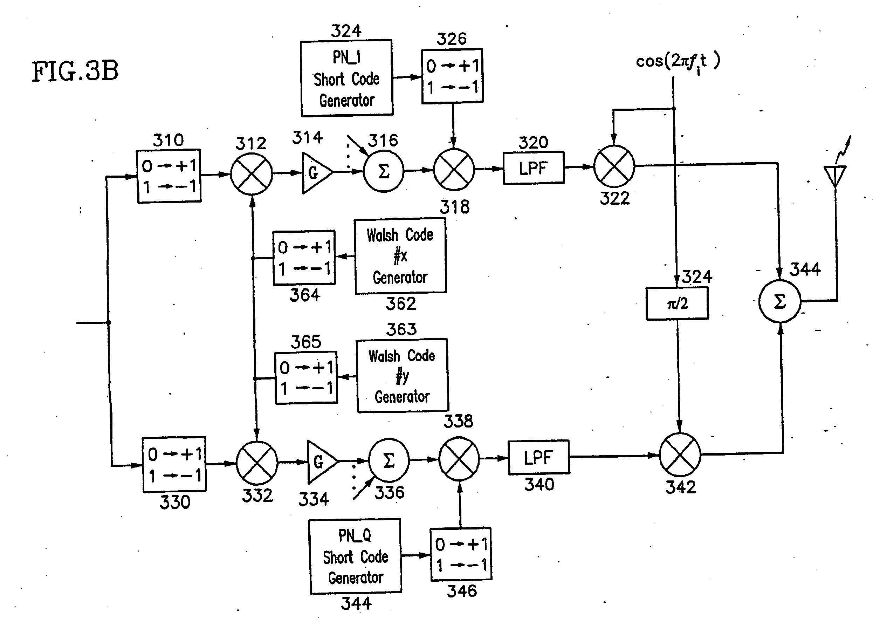

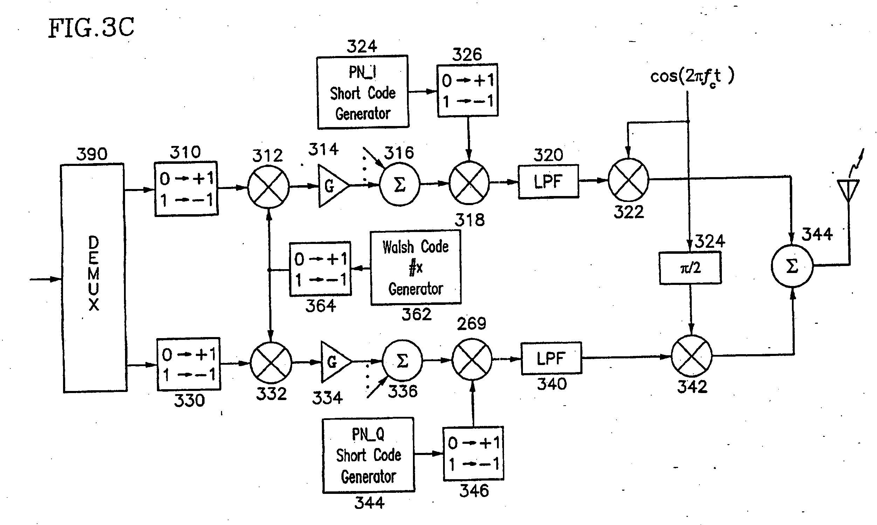

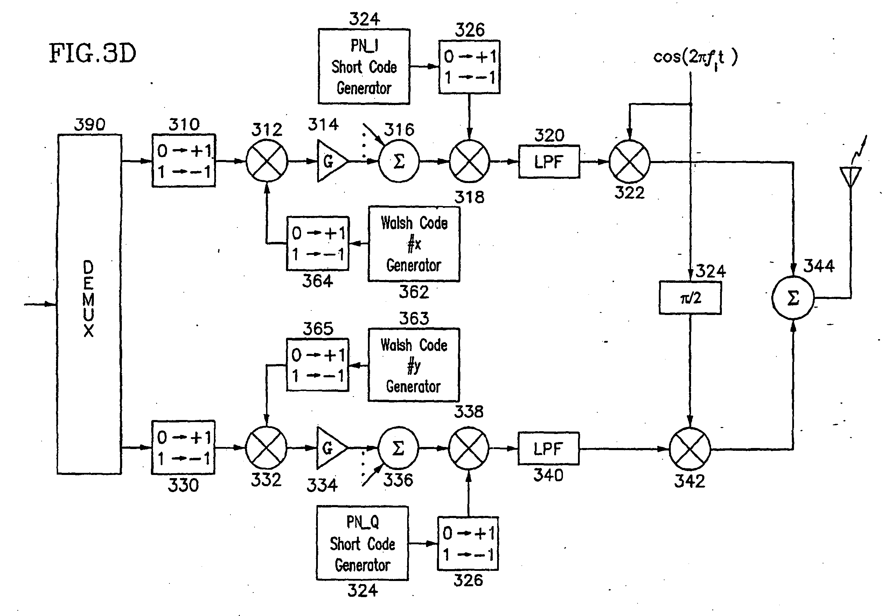

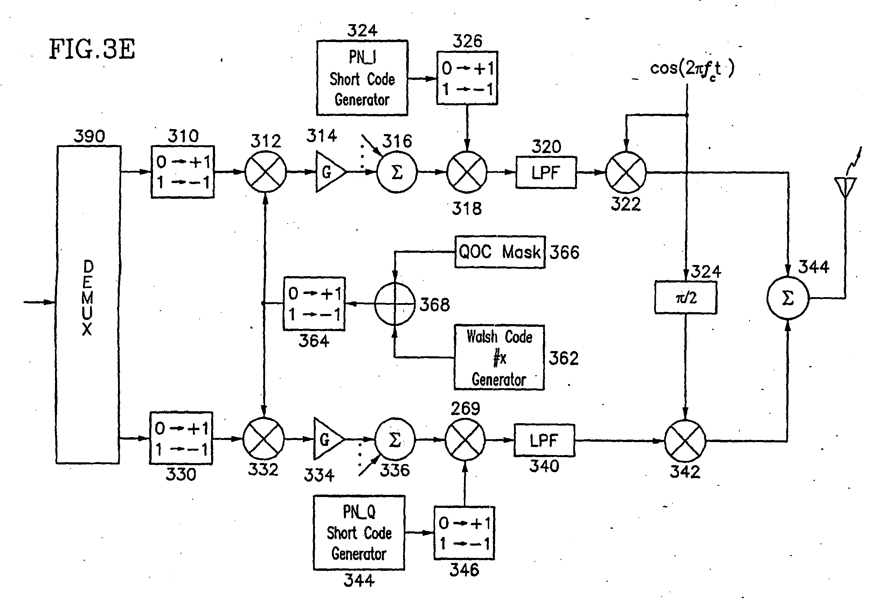

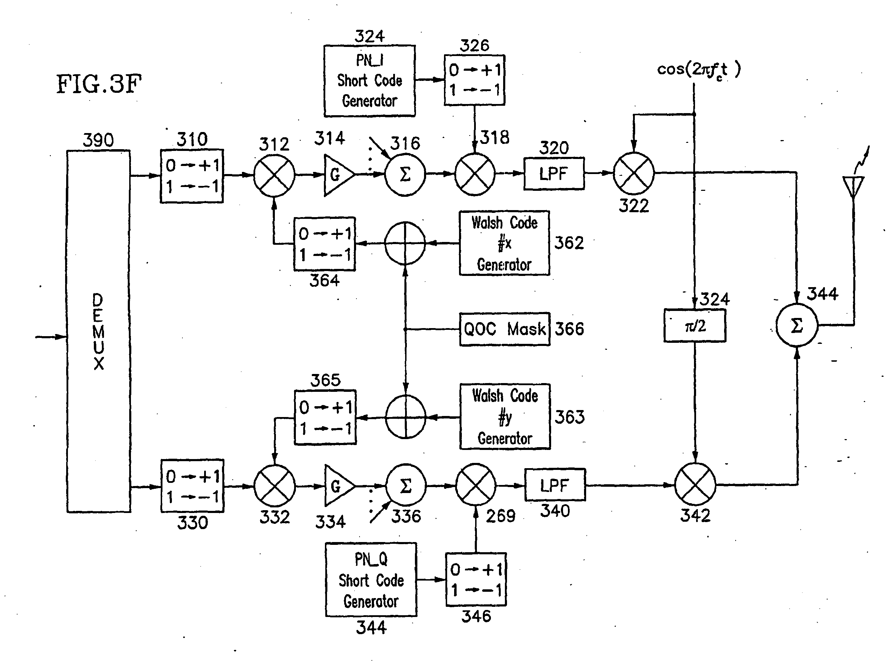

FIG. 2a is a schematic of a transmitter of the primary station for a part corresponding to the common component between the prior art and the present invention, and FIG. 2b is a schematic of a transmitter of the primary station for a traffic channel in the example of the prior art. A pilot channel 200 must be present by the respective subcarriers SCs, because it is used as a channel estimation signal for initial synchronization acquisition and search and synchronous demodulation at the secondary stations of FIG. 1. The pilot channel 200 is a channel shared among all secondary stations in an area that is under the control of the primary station. As illustrated in FIG. 2a, the pilot channel 200 is used to provide a phase reference for synchronous demodulation by transmitting a symbol of a known pattern without channel coding or channel interleaving. Like the pilot channel 200, a synchronous channel 210 is a broadcasting channel uni-directionally transferred to all the secondary stations in an area that is under the control of the primary station. The synchronous channel 210 is used for the primary station to transfer information (e.g., visual information, the identifier of the primary station, etc.) required in common to all the secondary stations. The data through the synchronous channel are sent to a spreader and modulator, which will be described later in FIG. 3, via a convolutional encoder 214, a repeater 216 for symbol rate control, a block interleaver 218 to overcome burst errors, and a repeater 219 to control a transmit data symbol rate. A paging channel 220 is a common channel used in the presence of an incoming message to the secondary station or for the purpose of responding to the request of the secondary station. Plural paging channels can be used.

The data transmitted through the paging channel are sent to an exclusive OR operator 236 via a convolutional encoder 224, a symbol repeater 226 and a block interleaver 228. The output of a long code generator 232 is sent to a decimator 234, which decimates the output of the long code generator 232 using a long code mask for paging channel 230. The exclusive OR operator 236 exclusive-OR operates the data from the block interleaver 248 with the decimated output of the long code generator 232 and then sends the resulting output to the spreader and modulator of FIG. 3. A traffic channel 240 of FIG. 2b is a channel allocated to each secondary station during a call set up and exclusively used by the secondary station until a call termination. The traffic channel is used to transfer data from the primary station to each secondary station. The traffic channel is sent to a CRC (Cyclic Redundancy Check) encoder 241 to check errors in the unit of a predetermined time called a frame (e.g., 20 ms in the IS-95. (cdmaOne) system), a tail bit inserter 252 to insert tail bits that are all "0" for independent channel coding in the unit of frames, a convolutional encoder 244 and then a symbol repeater 246 to correct the transmit data symbol rate according to the transmit data rate.

Subsequent to symbol repetition, the traffic channel is sent to a block interleaver 248 to convert burst errors to uniformly distributed errors, and then to a scrambler 256. The output of the long code generator 232 is decimated into a PN (Pseudo-Noise) sequence by the decimator 234 using the long code mask 250 generated from an ESN (Electronic Serial Number) allocated by the respective secondary stations. The scrambler 256 scrambles the traffic channel from the block interleaver 248 using the PN sequence.

The scrambled traffic channel is sent to a PCB (Power Control Bit) position extractor 258 to extract a PCB position from the PN sequence to insert a PCB for controlling the transmission power from the secondary station. A PCB puncture and insert section 260 punctures a data symbol corresponding to the PCB position among the scrambled data symbols from the scrambler 256, and inserts a PCB. The PCB-inserted traffic channel is sent to the spreader and modulator of FIG. 3.

The position of the transmit data symbol for transmission time hopping multiplexing according to the present invention can also be detected using the decimated PN sequence as described above.

FIGS. 3a, 3b and 3c illustrate an example of the spreader and modulator using the conventional code division multiplexing technology.

The spreader and modulator of FIG. 3a uses the existing IS-95 (cdmaOne) system based on a BPSK (Binary Phase Shift Keying) data modulation system.

The spreader and modulator of FIG. 3b spreads I/Q channel transmit data with a different orthogonal code symbol in the structure of FIG. 3a. The spreader and modulator of FIG. 3c employs a QPSK (Quadrature Phase Shift Keying) data modulation system so as to transmit double the data of FIG. 3a with the same bandwidth. The QPSK data modulation system is adapted to cdma2000, one of the candidate technologies of the IMT-2000 system.

The spreader and modulator of FIG. 3d use the QPSK data modulation system in order to transmit double the data of FIG. 3b with the same bandwidth. FIG. 3e shows a spreader and modulator using a QOC (Quasi-Orthogonal Code) modulation system usually adapted in cdma2000, one of the candidate technologies of the IMT-2000 system.

FIG. 3f shows that I/Q channel transmit data are spread with a different orthogonal code symbol in the structure of FIG. 3e.

Referring to FIG. 3a, signal converters 310, 330, 326, 346 and 364 convert logic signals of "0" and "1" to actual transmit physical signals of "+1" and "-1", respectively. The individual channels of FIG. 2 are sent to spreaders 312 and 332 via the signal converters and spread with the output of a corresponding Walsh code generator 362. The spread channels are then sent to amplifiers 314 and 334 to control their relative transmission power.

After passing through the spreaders 312 and 332 using an orthogonal Walsh function 362 fixedly allocated to each channel and the amplifiers 314 and 334, the channels of the primary station are all sent to orthogonal code division multiplexers 316 and 336.

The multiplexed signals are then sent to QPSK spreader and modulators 318 and 338 using short PN sequences generated from short PN sequence generators 324 and 344 for discrimination of the primary station. The spread and modulated signals are sent to low-pass filters 320 and 340 and modulators 322 and 342 for transition to a transmit band. The signals modulated with carriers are sent to a wireless section (not shown) such as a high power amplifier and then transferred via an antenna.

Referring to FIG. 3b, signal converters 310, 330, 326, 346 and 364 convert logic signals of "0" and "1" to actual transmit physical signals of "+1 and "-1", respectively. The individual channels of FIG. 2 are sent to spreaders 312 and 332 via the signal converters and spread with the output of a corresponding Walsh code generator 362 by the I/Q channels. The spread channels are then sent to amplifiers 314 and 334 to control their relative transmission power. After passing through the spreaders 312 and 332 using an orthogonal Walsh function 362 fixedly allocated to each channel and the amplifiers 314 and 334, all the channels of the primary station are sent to orthogonal code division multiplexers 316 and 336. The multiplexed signals are then sent to QPSK spreader and modulators 318 and 338 using short PN sequences generated from short PN sequence generators 324 and 344 for discrimination of the primary station. The spread and modulated signals are sent to low-pass filters 320 and 340 and modulators 322 and 342 using carriers for transition to a, transmit band. The signals modulated with carriers are sent to a wireless section (not shown) such as a high power amplifier and then transferred via an antenna.

FIG. 3c is the same as FIG. 3a, excepting that the signals generated in FIG. 2 are sent to a demultiplexer 390 for QPSK, rather than BPSK, using an in-phase (I) channel and a quadrature phase (Q) channel in sending different information data. The demultiplexer 390 and the signal converters 310 and 330 are used to realize QAM (Quadrature Amplitude Modulation) instead of QPSK.

FIG. 3d is the same as FIG. 3b, excepting that the signals generated in FIG. 2 are sent to a demultiplexer 390 for QPSK, rather than BPSK, using an in-phase (I) channel and a quadrature phase (Q) channel in sending different information data.

FIG. 3e shows that the transmit data are spread with a spreading code generated using the quasi-orthogonal code mask for discrimination of a channel from the primary station to the secondary station in FIG. 3c. Orthogonality is not maintained in the code symbol group using a different quasi-orthogonal code but in the code symbol group using a same orthogonal code mask.

Accordingly, the system proposed in the present invention is applied only to the orthogonal code symbol group using a same quasi-orthogonal code mask and maintaining orthogonality. -

FIG. 3f is the same as FIG. 3e, excepting that a separate Walsh code generator is used for I- and Q-channels so as to spread I/Q channel transmit data with a different orthogonal code symbol.

FIGS. 4b and 4c show a signal diagram explaining a multiplexing method in which orthogonal resources are allocated to the signals generated in FIGS. 2 and 3 by the respective channels to transmit the signals.

With a primary station in communication with secondary stations, the data rate by the respective secondary stations may be variable over time. Let the channel-based maximum transmission rate allocated to the secondary , stations by the primary station be a basic transmission rate R, the frame-based average transmission rate may be R, R/2, R/4, ... , or 0 according to the frame-based amount of data transferred from the primary station to the secondary stations.

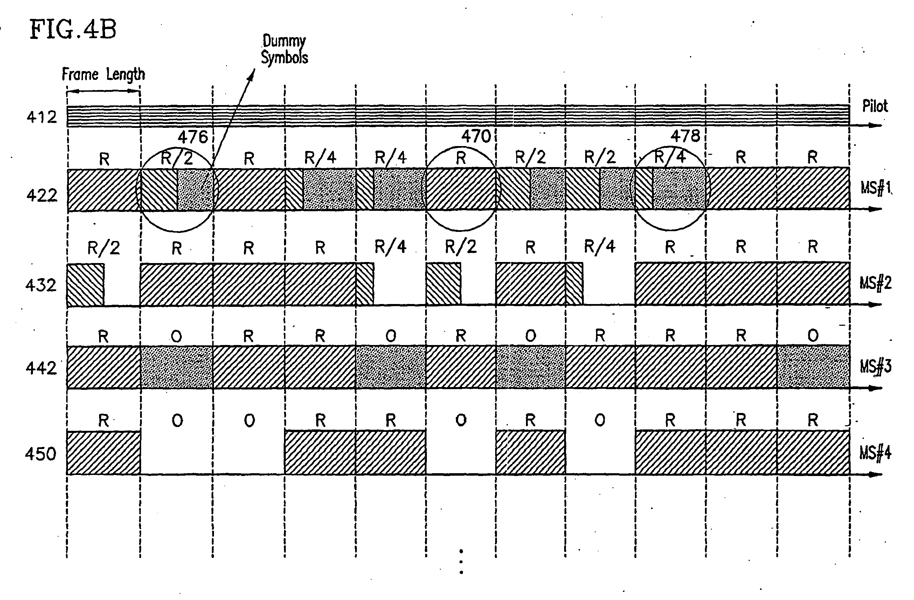

FIG. 4b is a signal diagram showing that the frame-based instantaneous transmission rate is adjusted to the average transmission rate, which method is applied on the forward link in the IS-95 (cdmaOne) orthogonal code division multiplexing communication systems.

In FIG. 4b, when the frame-base transmit data have a transmission rate below the basic transmission rate, dummy information is used to compensate for the deficient part and thereby match the frame-based instantaneous transmission rate to the average transmission rate.

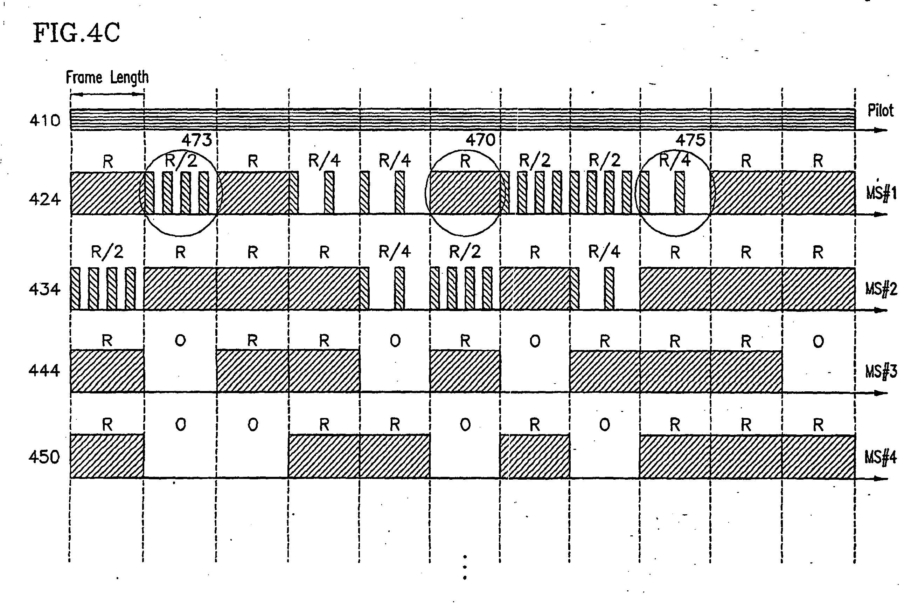

FIG. 4c shows that the instantaneous transmission rate is classified into a basic transmission rate R and 0 (no transmission) and that an average transmission rate for a given frame is adjusted according to the percentage of an interval having a transmission rate of R or 0.

In FIG. 4c, instead of the ON/OFF switching of transmit symbol units that are spreading units used in the present invention, the ON/OFF switching of time slot units that are power control units is used in adjusting the frame-based average transmission rate, while maintaining the amplitude of the reference signal for a closed loop power control of the reverse link in the IS-95 (cdmaOne) system.

Contrary to the present invention, there is no orthogonality between channels on the IS-95 (cdmaOne) reverse link.

In FIGS. 4b and 4c, the common pilot channel is used in parallel with a channel to the secondary stations. But the pilot channel, which is used at the receiver as a reference for synchronization, channel estimation and power control, can be transmitted by time division multiplexing as in the conventional GSM (Global System for Mobile) or WCDMA (Wideband CDMA) system. The pilot channel in this case is called "pilot symbol" or another various names such as preamble, midamble or post-amble according to the multiplexed position.

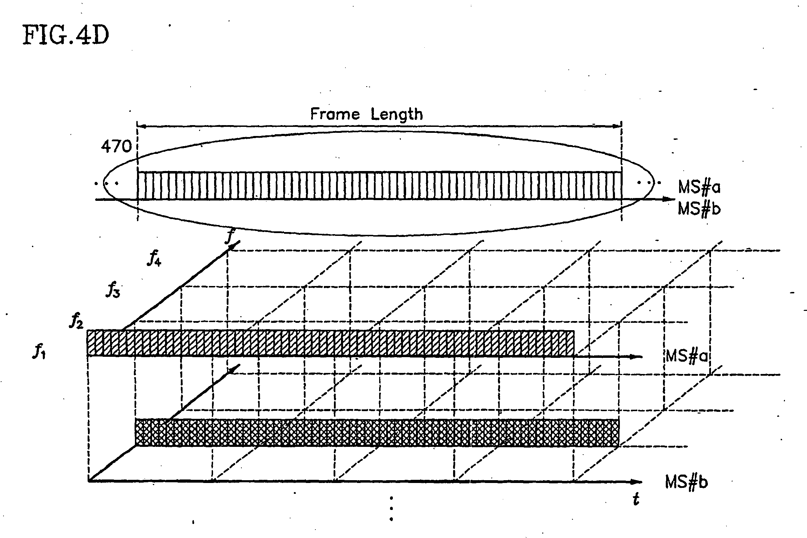

FIG. 4d illustrates the conventional frequency division multiplexing system, in which communication channels from a primary station to plural secondary stations use a different frequency allocation (FA). The frequency division multiplexing system of the present invention includes the OFDM (Orthogonal Frequency Division Multiplexing) system actively studied for satellite broadcasting.

For OFDM, the FA of the individual subcarrier channels is not completely independent but overlapped, but may be included in the orthogonal resource of the present invention, because orthogonality between the subcarrier channels is secured.

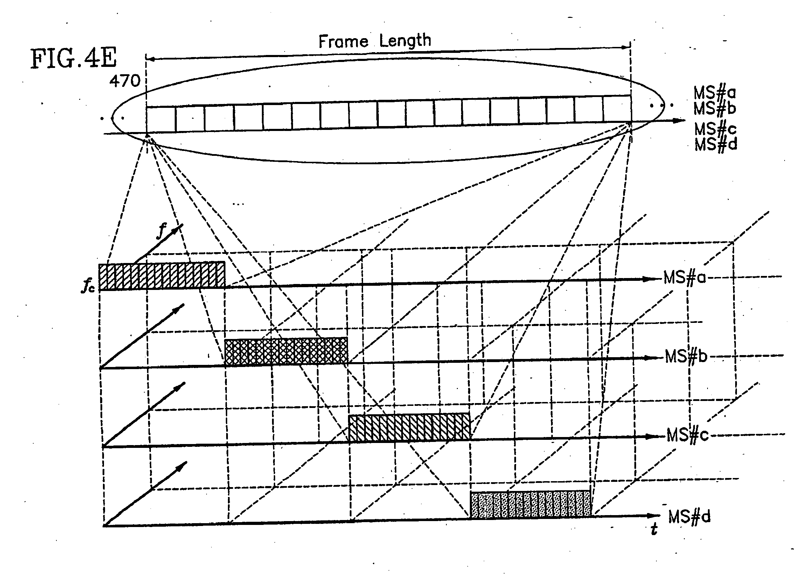

FIG. 4e illustrates the conventional time division multiplexing system such GSM, in which communication channels from a primary station to plural secondary stations use a same frequency allocation (FA) but the time slots in the frame are exclusively allocated by the respective secondary stations.

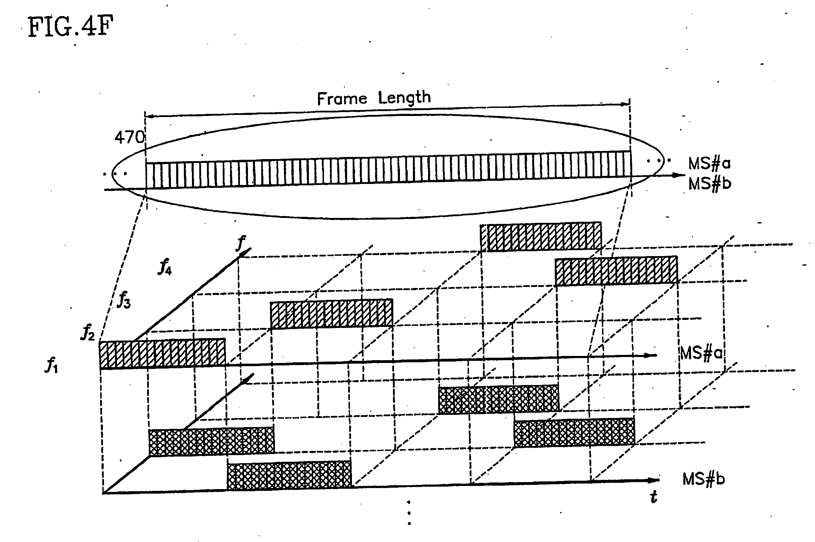

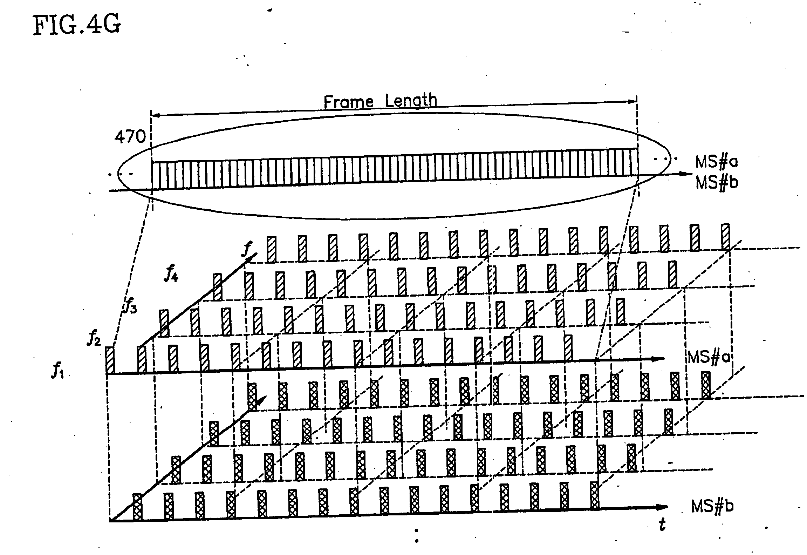

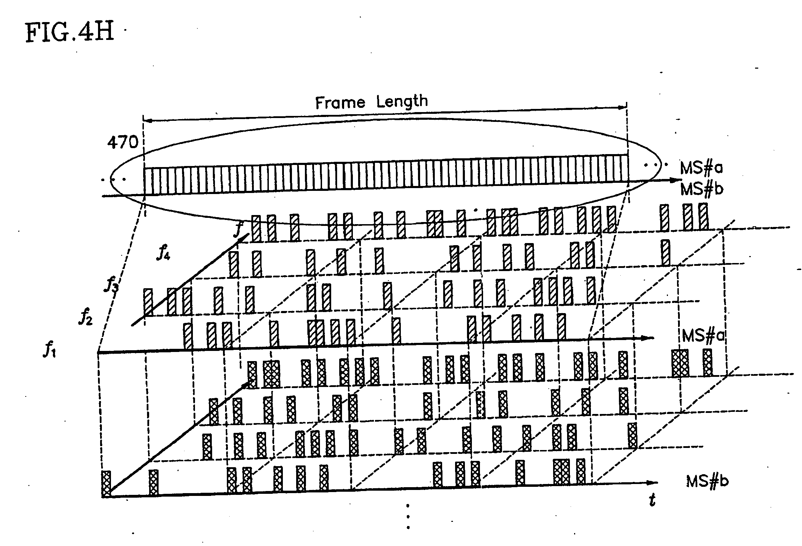

FIGS. 4f, 4g and 4h apply a frequency hopping system to the conventional frequency division multiplexing system of FIG. 4d for the purpose of strengthening frequency diversity and security. FIG. 4f shows frequency hopping in the unit of time slots. FIG. 4g shows regular frequency hopping in the unit of transmit data symbols. FIG. 4h shows irregular frequency hopping in the unit of transmit data symbols. The system of FIG. 4g brings focus into frequency diversity, and that of FIG. 4h has importance on frequency diversity and security for preventing a monitoring by an unauthorized receiver.

Frequency hopping multiplexing includes fast frequency hopping multiplexing in the unit of symbols or partial symbols and slow frequency hopping multiplexing in the unit of several symbols. The systems of FIGS. 4f, 4g and 4h applied to the time division multiplexing system of FIG. 4e provide frequency diversity.

In fact, the use of frequency hopping in the unit of time slots or frames is optionally given in the next-generation mobile communication system, i.e., GSM for the purpose of strengthening frequency diversity rather than security.

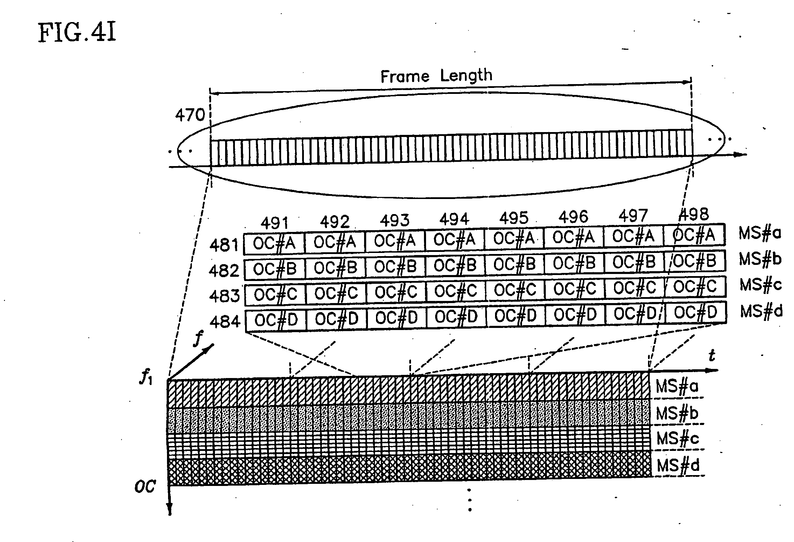

FIG. 4i illustrates the conventional orthogonal code division multiplexing system such as cdma2000 or WCDMA systems. In FIG. 4i, the communication channels from a primary station to the respective secondary stations are established using the same frequency allocation (FA) and all time slots in the frame. The primary station allocates a fixed orthogonal code symbol to each channel during a call set up, and each secondary station returns the orthogonal code symbol to the primary station for another secondary station involving another call set up. Accordingly, all the data symbols in the frame are spread with the same orthogonal code symbol. The transmitters of the primary station corresponding to FIG. 4i are presented in FIGS. 3a to 3f.

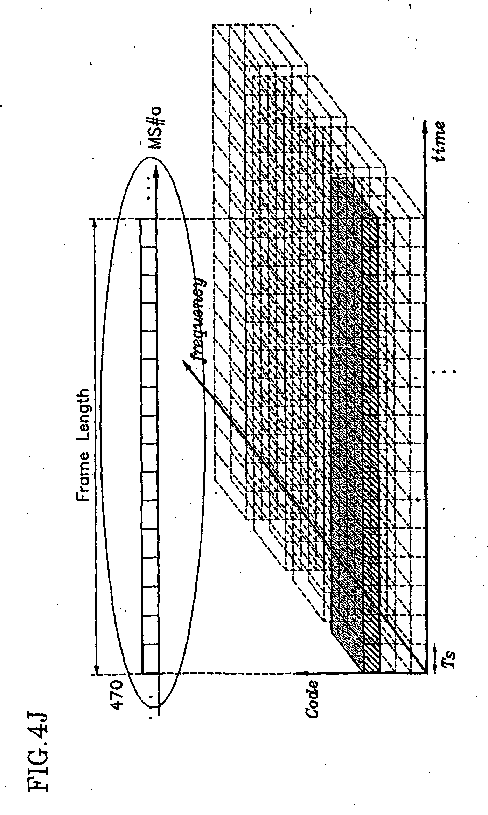

FIG. 4j is a signal diagram of a transmit signal from the primary station in the conventional ORDM (Orthogonal Resource Division Multiplexing) system, in which channel-based fixed allocation of orthogonal resources is illustrated. ORDM is applied to most of the conventional digital communication systems.

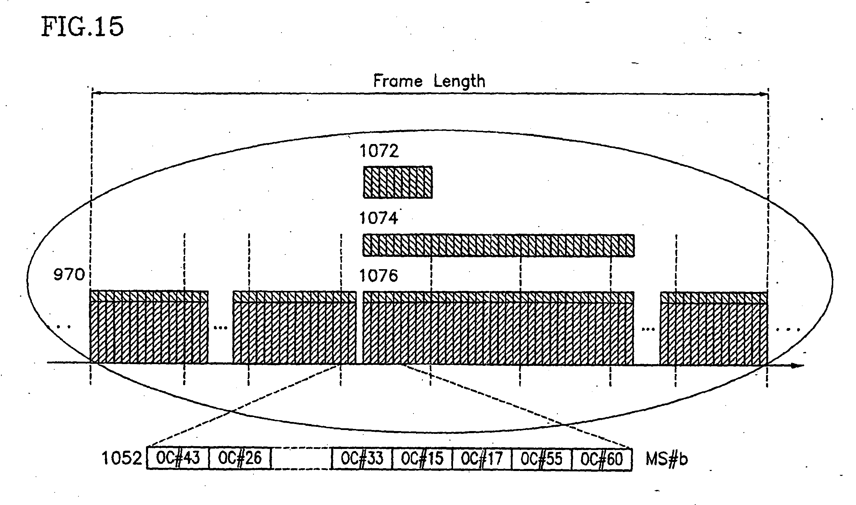

The receiver of the secondary station corresponding to the transmitter of the primary station according to the example of the prior art as shown in FIG. 4i is similar to the transmitters of FIGS. 3a to 3f except for the despreading part. Thus, FIG. 15 shows a schematic view of a receiver corresponding to the transmitter of FIG. 3a. The received signal through an antenna is demodulated with carriers at demodulators 510 and 530 and low-pass filtered at low-pass filters 512 and 533 into a baseband signal. The sequences, which are generated from PN-I/Q short code generators 520 and 540 and the same with PN sequences used at the transmitter, are synchronized and multiplied by the received baseband signal at multipliers 514 and 534. The multiplied sequences are cumulated for a transmit data symbol interval and sent to despreaders 516 and 536. A channel estimator 550 extracts a pilot channel component from the baseband signal with an orthogonal code symbol allocated to the pilot channel to estimate a transmit channel, and a phase recovery section 560 compensates for the phase distortion of the baseband signal using the estimated phase distortion value. If the pilot channel is subject to time division multiplexing rather than code division multiplexing, a demultiplexer is used to extract the pilot signal part and the intermittent phase change between the extracted pilot signals is then estimated by interpolation.

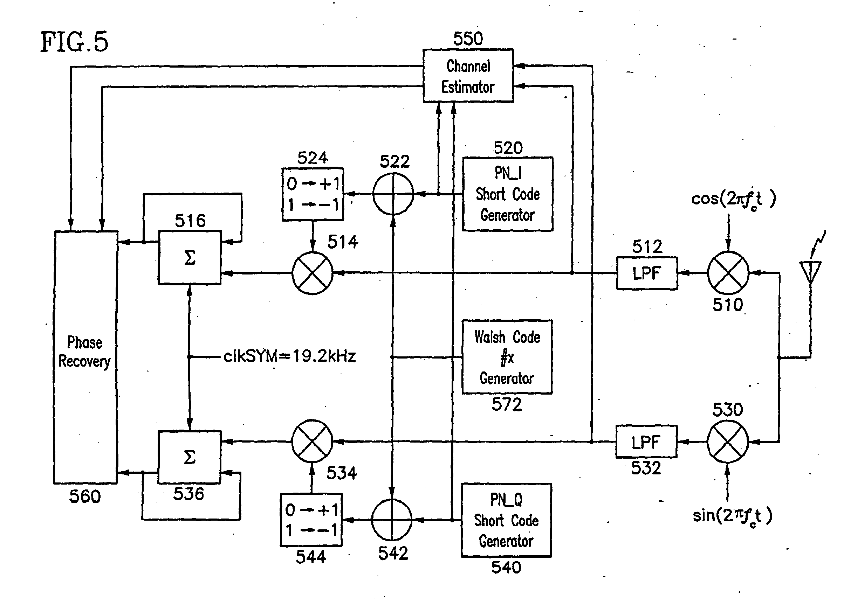

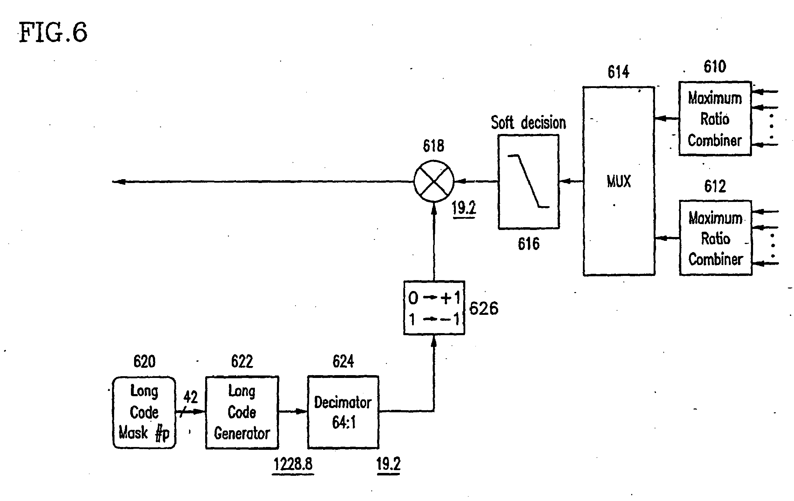

FIG. 6 shows the structure of a receiver for a channel without a PCB insertion from the primary station like the above-stated paging channel, where the PCB is a command for controlling the transmission power from the secondary stations to the primary station. After the phase compensation in FIG. 5, the signals are fed into maximum ratio combiners 610 and 620. With a QPSK data modulation at the transmitter as illustrated in FIG. 3b, the combined signal is sent to a multiplexer 614 for multiplexing; alternatively, with a BPSK data modulation, the two signals are added. The resulting signal is then sent to a soft decision section 616 for soft decision. The output of a long code generator 622 formed by a long code mask 620 is sent to a decimator 624. The signal from the soft decision section 616 is multiplied by the decimated output of the long code generator 622 by a multiplier 618 for descrambling. The receiver of the secondary station for a channel subject to orthogonal code hopping multiplexing according to the embodiment of the present invention is similar in structure to the receiver of FIG. 6. For the synchronous channels, the components related to the long code descrambling process are omitted.

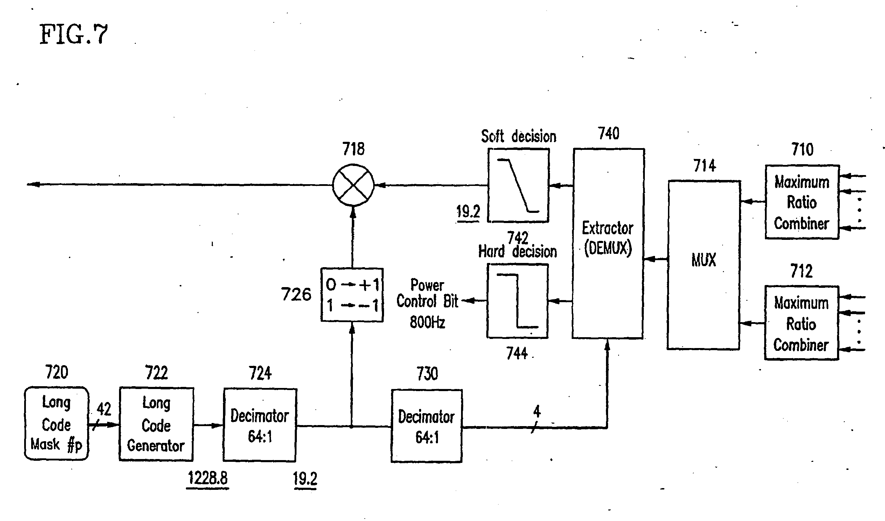

FIG. 7 shows the structure of a receiver for a channel with a PCB insertion from the primary station like the above-stated traffic channel, where the PCB is a command for controlling the transmission power from the secondary stations to the primary station. After the phase compensation in FIG. 5, the signals are fed into maximum ratio combiners 710 and 720. With a QPSK data modulation at the transmitter as illustrated in FIG. 3c, the in-phase (I) component and the quadrature (Q) phase component are sent to a multiplexer 714 for multiplexing; alternatively, with a BPSK data modulation as illustrated in FIG. 3a, the in-phase (I) component and the quadrature phase (Q) component are added. The resulting signal is sent to an extractor 740 for extraction of a signal component corresponding to the PCB from the primary station and then to a hard decision section 744 for hard decision. The signal from the hard decision section 744 is transferred to the transmission power controller of the secondary station. The data symbol generated by removing the PCB from the received signal of the multiplexer

714 is sent to a soft decision section 742 for soft decision. The output of a long code generator 722 formed by a long code mask 720 generated from the identifier of the secondary station is sent to a decimator 724. The signal from the soft decision section 742 is multiplied by the decimated output of the long code generator 722 by a multiplier 718 for descrambling.

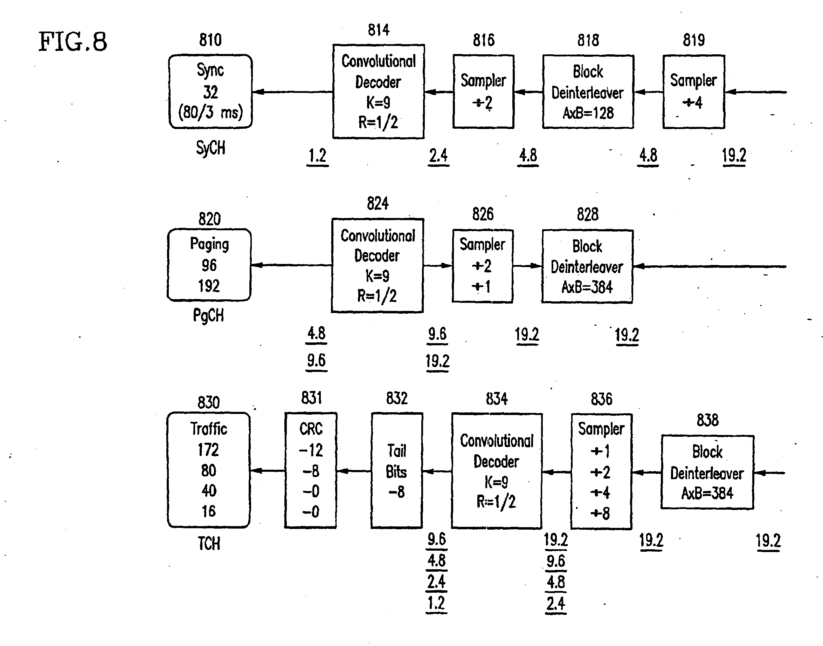

FIG. 8 illustrates that the received signal processed in FIG. 7 is subject to channel deinterleaving at block deinterleavers 818, 828 and 838 and channel decoding at convolutional decoders 814, 824 and 834 to reconstitute data transferred from the primary station. For a synchronous channel 810, the signal from the soft decision section is sent to a sampler 819 for symbol compression that is a reversed process of the symbol repeater 219 by accumulation of the received signals, thereby reducing a symbol rate. The signal from the sampler 819 is sent to the block deinterleaver 818 for channel deinterleaving. Before a channel decoding at the convolutional decoder 814, the channel-deinterleaved signal is sent to a sampler 816 for another symbol compression that is a reversed process of the symbol repeater 216. The signal from the sampler 816 is sent to the convolutional decoder 814 for channel decoding, thereby reconstituting the synchronous channel received from the primary station. For a paging channel 820, the signal from the soft decision section is sent to the block deinterleaver 828 for channel deinterleaving. The channel-deinterleaved signal is sent to a sampler 826 for symbol compression according to the transmit data rate that is a reversed process of the symbol repeater 226. The signal from the sampler 826 is sent to the convolutional decoder 824 for channel decoding, thereby reconstituting the paging channel received from the primary station. For a traffic channel 830, the signal from the soft decision section is sent to the block deinterleaver 838 for channel deinterleaving irrespective of the transmit data rate. The channel-deinterleaved signal is sent to a sampler 836 for symbol compression according to the transmit data rate that is a reversed process of the symbol repeater 246. The signal from the sampler 836 is sent to the convolutional decoder 834 for channel decoding and removed of a tail bit for frame-based independent transmit signal generation by a tail bit remover 832. As in the transmitter for the transmit data part, a CRC bit is generated and compared with a CRC bit reconstituted by channel decoding to determine whether or not there is an error. When the two CRC bits are matched, it is determined that there is no error, thereby reconstituting traffic channel data. If information about the transmit data rate in the unit of 20-ms frames is not stored at the transmitter, the channel deinterleaved signals are channel-decoded independently for all possible transmit data rates and then the CRC bits are compared to determined the transmit data rate from the primary station. For a system in which the transmit data rate is separately transferred, only the channel decoding process for a corresponding data rate is needed.

There are four conventional methods for maintaining orthogonality between channels from the primary station to the secondary stations as shown in FIG. 1. The first method is to use the frequency division multiplexing so that the primary station fixedly allocates FA to the secondary stations during a call set up as illustrated in FIG. 4d. The second method is to use the time division multiplexing so that the primary station fixedly allocates time slots to the secondary stations during a call set up as illustrated in FIG. 4e. The third method is to allocate a hopping pattern controlled to avoid a collision of the primary station during a call set up as illustrated in FIGS. 4f, 4g and 4h to the secondary stations, or to use the total bandwidth composed of multiple subcarriers for a single secondary station at a given time in a given area, as in the military use. The fourth method is to allocate unoccupied orthogonal code symbols by the primary station during a call set up and spreading channels as illustrated in FIG. 4i.

Apart from the frequency hopping multiplexing method, the other three methods have a common feature that the primary station allocates fixedly orthogonal resources (e.g., frequency, time, or orthogonal code) to the secondary stations. The frequency hopping multiplexing method is primarily used for the security purpose in many applications supporting a sufficient quantity of resources, as in the military use. Hence, the frequency hopping multiplexing is not aimed at an efficient use of resources.

It is therefore difficult in the above methods to efficiently use the resources when the limited orthogonal resource is allocated to the channels having a low activity or a variable transmit data rate less than or equal to a basic transmission rate.

A rapid channel allocation and release is required in order to fixedly allocate the resources as in the prior methods and increase the utilization of the resources. But, a considerable part of the confined resources are not used for actual data transmission but allocated to the control information for data transmission because the control signal information for frequent channel allocation and release is transferred.

Even with a rapid procedure of channel allocation and release, the data to be transmitted must be buffered during a period from its arrival at the primary station to transmission via the steps of channel allocation (or release) message transmission and confirmation. The required buffer capacity in this case increases with an increase in the processing time of the procedures.

In the method of fixedly allocating resources during a handoff to an adjacent cell, the handoff is hardly acquired even when the channels in the adjacent cell have a low activity, because there is no available resource to be allocated.

Furthermore, important information such as control information that necessarily requires a confirmation step after a transmission must be buffered for retransmission. But the required buffer capacity can be reduced only by transmitting the resources with a shortest delay in the transmission such as datagram transmission that does not require a confirmation step.

WO 01/11897 discloses a digital communication method and system for performing a statistical multiplexing by allocating communication channels from as primary station to a plurality of secondary stations in synchronization based on an orthogonal resource hopping method, the method comprising:
determining whether or not transmit data symbols are matched, when a collision between hopping patters of the orthogonal resources occurs;
transmitting all the data symbols, when the signs of the transmit data symbols are matched; and
perforating (puncturing) all the data symbols, when the signs of the transmit data symbols are not matched.

### SUMMARY OF THE INVENTION

In an aspect of the present invention, there is provided a digital communication method, which performs statistical multiplexing by allocating communication channels from a primary station to a plurality of secondary stations in synchronization using N-dimensional (N≥1) orthogonal resource hopping multiplexing, the method comprising:
(a) determining whether or not signs of the transmit data symbols are matched, when a collision between hopping patterns of N-dimensional orthogonal resources occurs, the transmit data symbols being data symbols for all channels involved in the collision;
(b) transmitting all the transmit data symbols, when the signs of the transmit data symbols are matched; and
(c) determining data symbols to be transmitted according to the amplitudes of the transmit data symbols when the signs of the transmit data symbols are not matched, puncturing the transmit data symbols except the determined data symbols, and transmitting the determined data symbols on the collided channels **characterized in that** the determining step in the step (c) includes calculating the amplitudes of the determined data symbols to control the respective amplitudes of the transmit signals to bye transmitted on the collided channels according to the step (c), to thereby reduce transmit data losses.

Preferably a set S of all channels allowed to be connected by the primary station comprises a set S⁰, a set S⁺, and a set S⁻, the set S° being a set of remaining channels excluding the collided channels in the set S, the set S⁺ being a set of the collided channels in which the signs of the transmitdata symbols to be transmitted on the collided channels are positive, and the set S⁻ being a set of the collided channels in which the signs of the transmit data symbol to be transmitted on the collided channels are negative, and the steps (b) and (c) determine the respective amplitudes of the transmit signals to be transmitted on the collided channels according to whether or not the set S⁰, the set S⁻ and the set S⁻ have a channel respectively.

In another aspect of the present invention, there is provided a digital communication apparatus according to claim 18.

Additionally, the method of the present invention is compatible with the existing systems because the sustained orthogonality of all resources makes it possible to operate a set of resources used for a multidimensional orthogonal resource hopping multiplexing independently to a set of resources used for the conventional methods.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 is a conceptual diagram of a system including a primary station and a plurality of secondary stations in accordance with an example of the prior art and an embodiment of the present invention;
FIG. 2a is a schematic of a transmitter of the primary station corresponding to a common component between the prior art and the present invention;
FIG. 2b is a schematic of a transmitter for traffic channels in the primary station according to an example of the prior art;
FIG. 3a is a schematic of a transmitter of the primary station for code division multiplexing according to an example of the prior art (based on BPSK data modulation and using the same orthogonal code symbol for I/Q channels);
FIG. 3b is a schematic of a transmitter of the primary station for code division multiplexing according to an example of the prior art (based on BPSK data modulation and using a different orthogonal code symbol for I/Q channels);
FIG. 3c is a schematic of a transmitter of the primary station for code division multiplexing according to an example of the prior art (based on QPSK data modulation and using the same orthogonal code symbol for I/Q channels);
FIG. 3d is a schematic of a transmitter of the primary station for code division multiplexing according to an example of the prior art (based on QPSK data modulation and using a different orthogonal code symbol for I/Q channels);
FIG. 3e is a schematic of a transmitter of the primary station for code division multiplexing according to an example of the prior art using quasi-orthogonal codes (based on QPSK data modulation and using the same orthogonal code symbol for I/Q channels);
FIG. 3f is a schematic of a transmitter of the primary station for code division multiplexing according to an example of the prior art using quasi-orthogonal codes (based on QPSK data modulation and using a different orthogonal code symbol for I/Q channels);

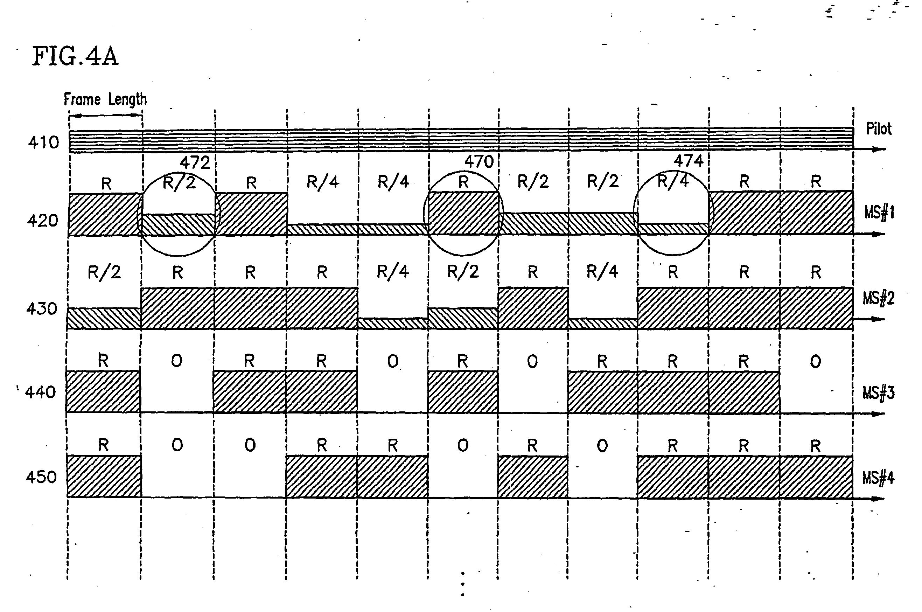

FIG. 4a is a signal diagram showing a transmit signal from the primary station by the respective frames according to an example of the prior art;
FIG. 4b is a signal diagram showing a transmit signal from the primary station by the respective frames according to another example of the prior art;
FIG. 4c is a signal diagram showing a transmit signal from the primary station by the respective frames according to further another example of the prior art;
FIG. 4d is a signal diagram showing a transmit signal from the primary station according to the conventional FDM (Frequency Division Multiplexing) system;
FIG. 4e is a signal diagram showing a transmit signal from the primary station according to the conventional TDM (Time Division Multiplexing) system;
FIG. 4f is a signal diagram showing a transmit signal from the primary station according to the conventional TDM system (using a slot-based frequency hopping);
FIG. 4g is a signal diagram showing a transmit signal from the primary station according to the conventional FHM (Frequency Hopping Multiplexing) system for frequency diversity (using a symbol-based regular frequency hopping);
FIG. 4h is a signal diagram showing a transmit signal from the primary station according to the conventional FHM system for frequency diversity and prevention of unauthorized monitoring (using a symbol-based irregular frequency hopping);
FIG. 4i is a signal diagram showing a transmit signal from the primary station according two the conventional OCDM (Orthogonal Code Division Multiplexing) system (using a channel-based fixed orthogonal code allocation method);
FIG. 4j is a signal diagram showing a transmit signal from the primary station according to the conventional ORDM (Orthogonal Resource Division Multiplexing) system (using a channel-based fixed orthogonal resource allocation method);
FIG. 5 is a schematic of a receiver in the secondary station for code division multiplexing according to the example of the prior art shown in FIG. 4i;
FIG. 6 is a schematic of a receiver in the secondary station showing the common components between the example of the prior art and the embodiment of the present invention;
FIG. 7 is a schematic of a receiver in the secondary station according to an example of the prior art;
FIG. 8 is a schematic of a receiver in the secondary station showing the common components between the example of the prior art and the embodiment of the present invention;

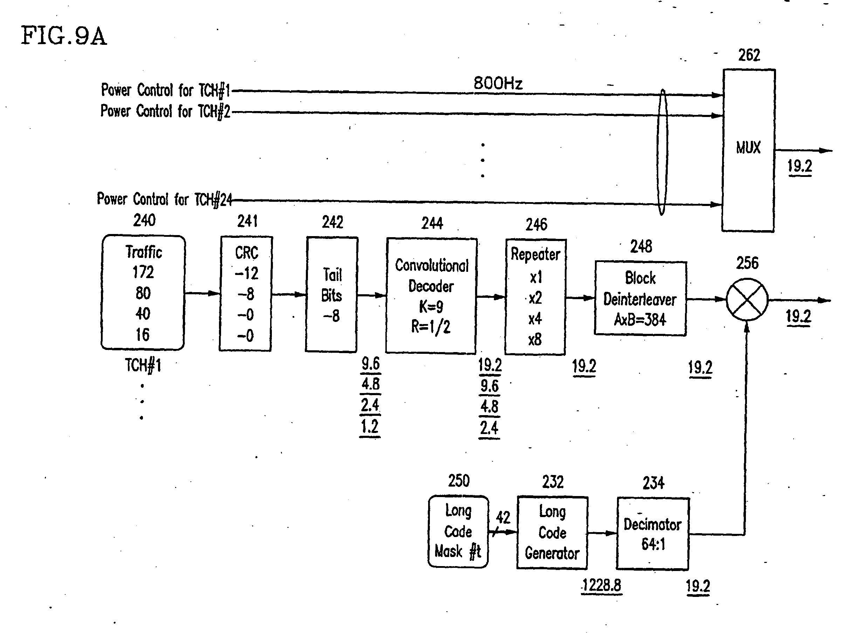

FIG. 9a presents a schematic of a transmitter in the primary station for traffic channels for orthogonal resource hopping multiplexing and a schematic of a CPCCH (Common Physical Control Channel) according to an embodiment of the present invention (orthogonal resource = orthogonal code);

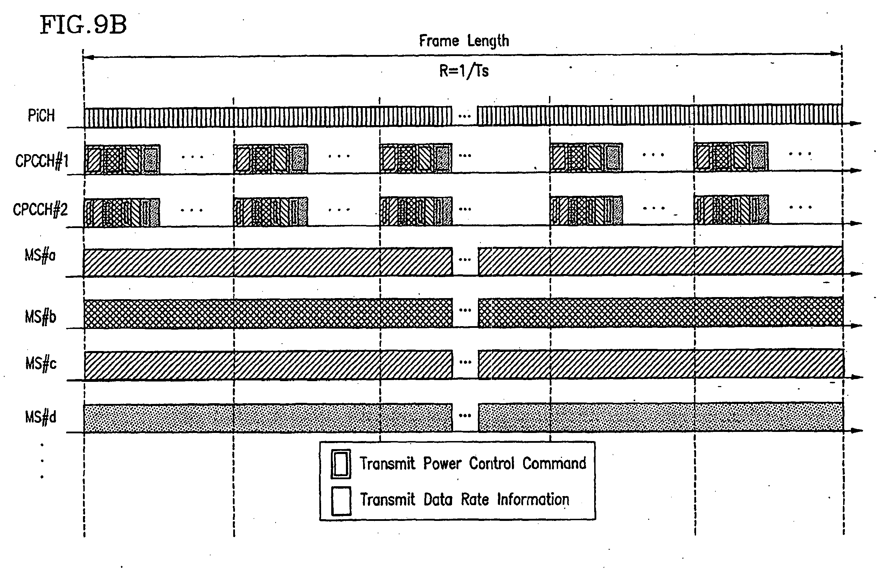

FIG. 9b is a signal diagram of the CPPCCH according to an embodiment of the present invention;

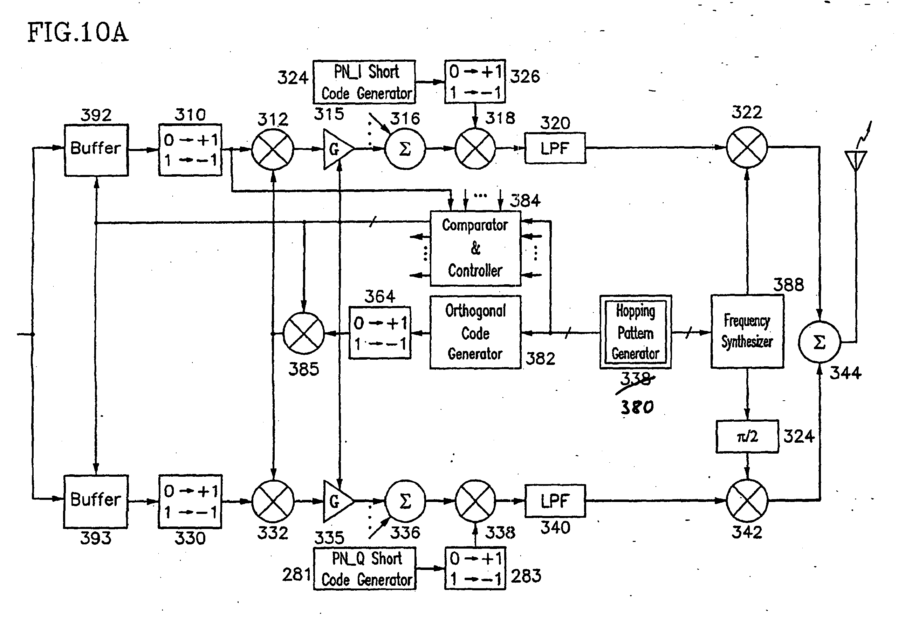

FIG. 10a is a schematic of a transmitter in the primary station for orthogonal resource hopping multiplexing according to an embodiment of the present invention (corresponding to FIG. 3a);

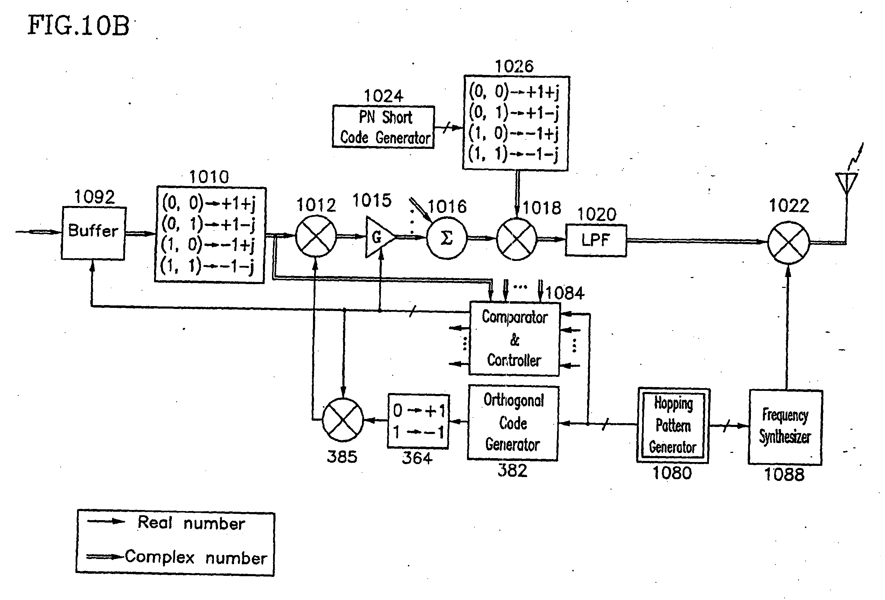

FIG. 10b is a schematic of a transmitter in the primary station for orthogonal resource hopping multiplexing according to an embodiment of the present invention (denotes the signal of FIG. 10a as a complex number , signal);

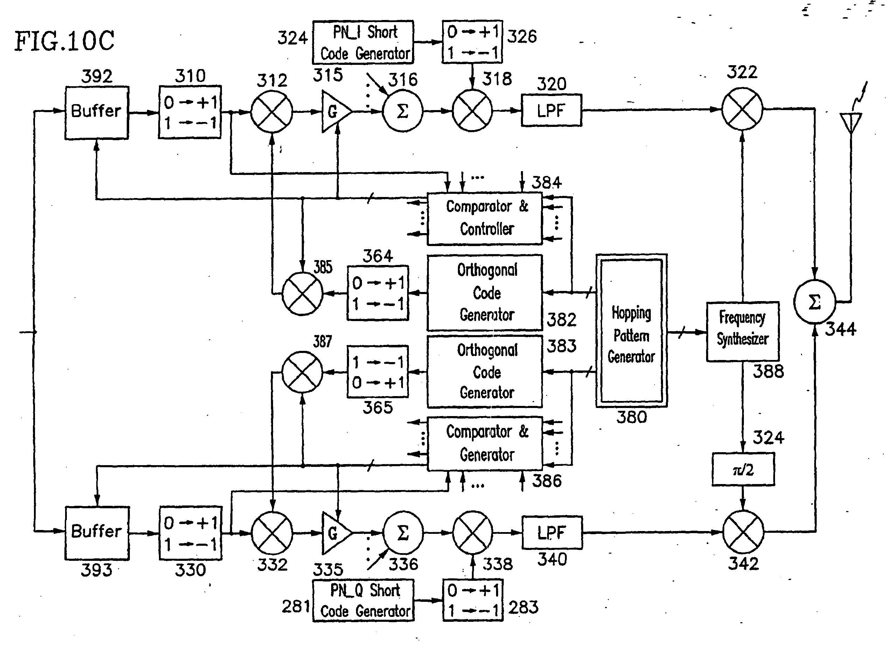

FIG. 10c is a schematic of a transmitter in the primary station for orthogonal resource hopping multiplexing according to an embodiment of the present invention (corresponding to FIG. 3b);

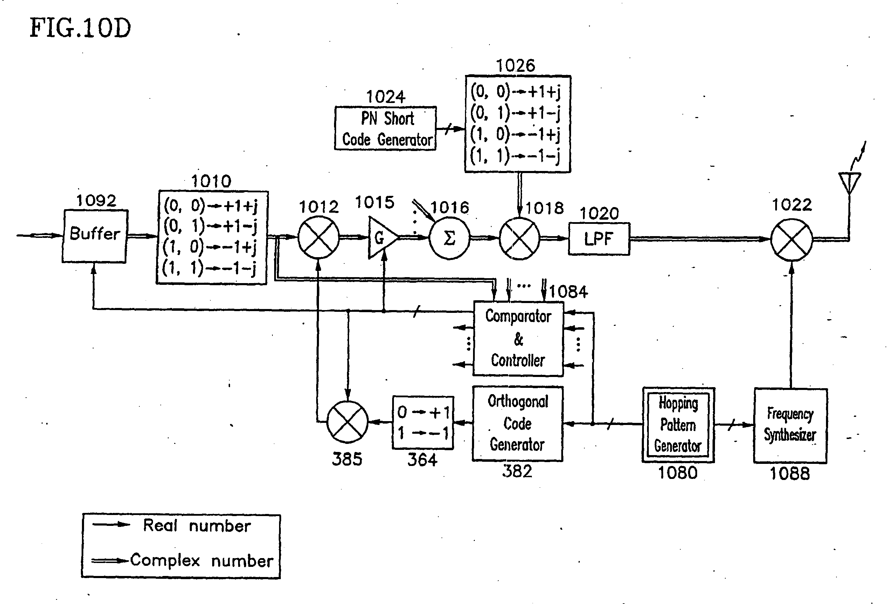

FIG. 10d is a schematic of a transmitter in the primary station for orthogonal resource hopping multiplexing according to an embodiment of the present invention (denotes the signal of FIG. 10b as a complex number signal);

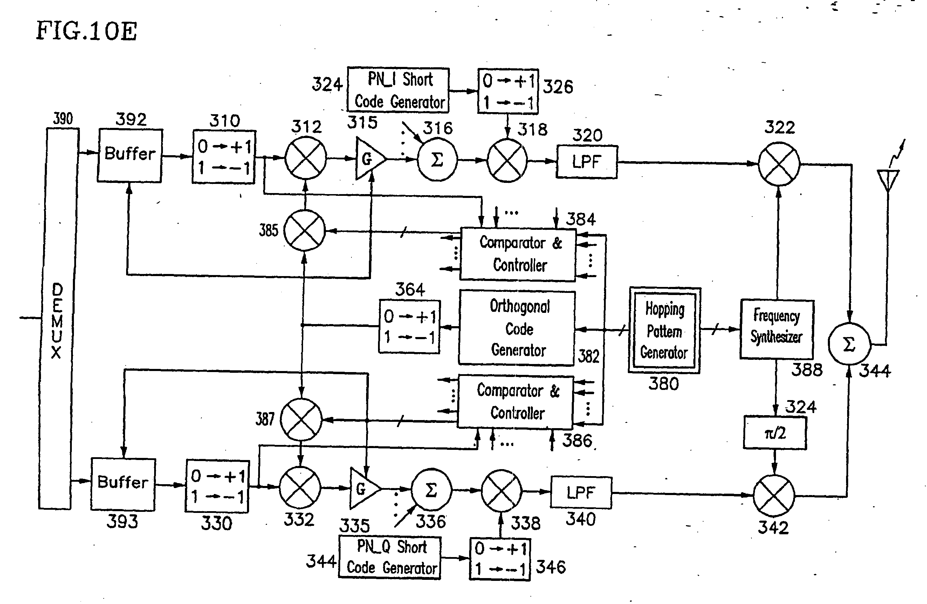

FIG. 10e is a schematic of a transmitter in the primary station for orthogonal resource hopping multiplexing according to an embodiment of the present invention (corresponding to FIG. 3c);

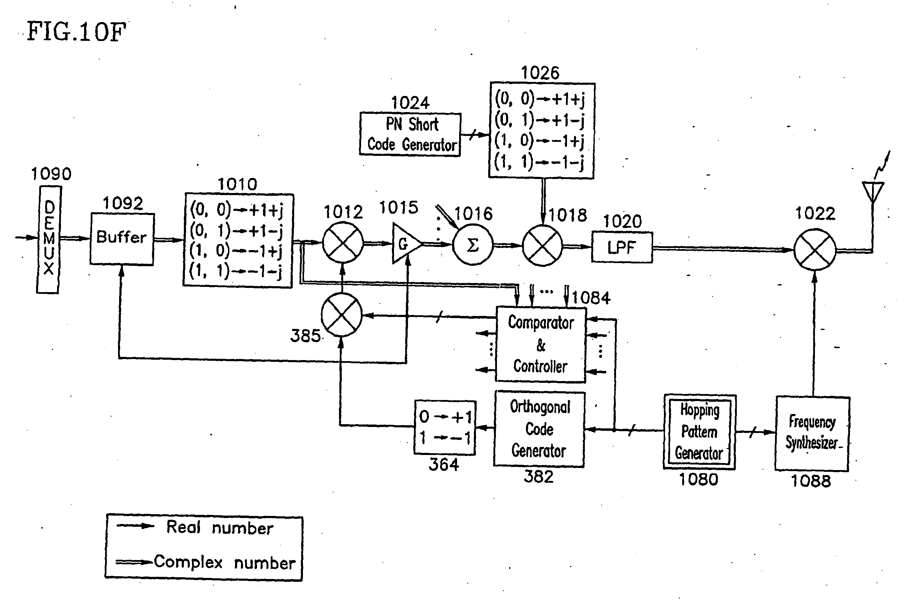

FIG. 10f is a schematic of a transmitter in the primary station for orthogonal resource hopping multiplexing according to an embodiment of the present invention (denotes the signal of FIG. 10c as a complex number signal);

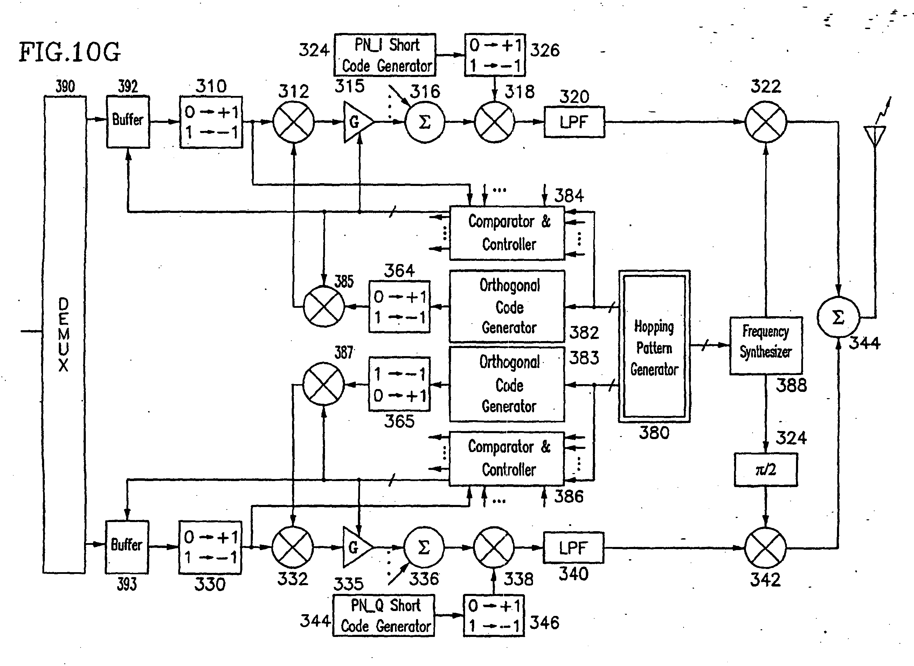

FIG. 10g is a schematic of a transmitter in the primary station for ORHM according to an embodiment of the present invention to the example of the prior art shown in FIG. 3d;

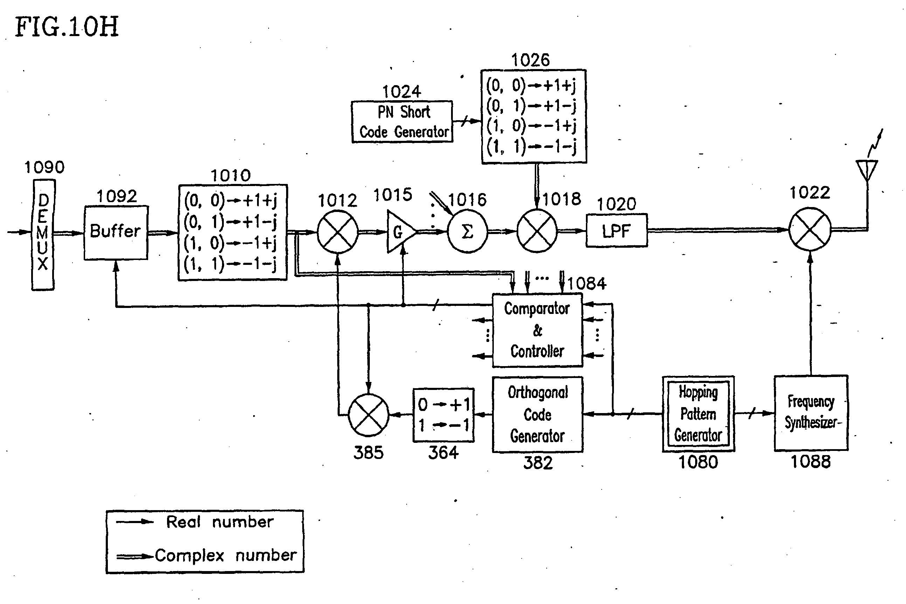

FIG. 10h is a schematic of a transmitter in the primary station for orthogonal resource hopping multiplexing according to an embodiment of the present invention (corresponding to FIG. 3d);

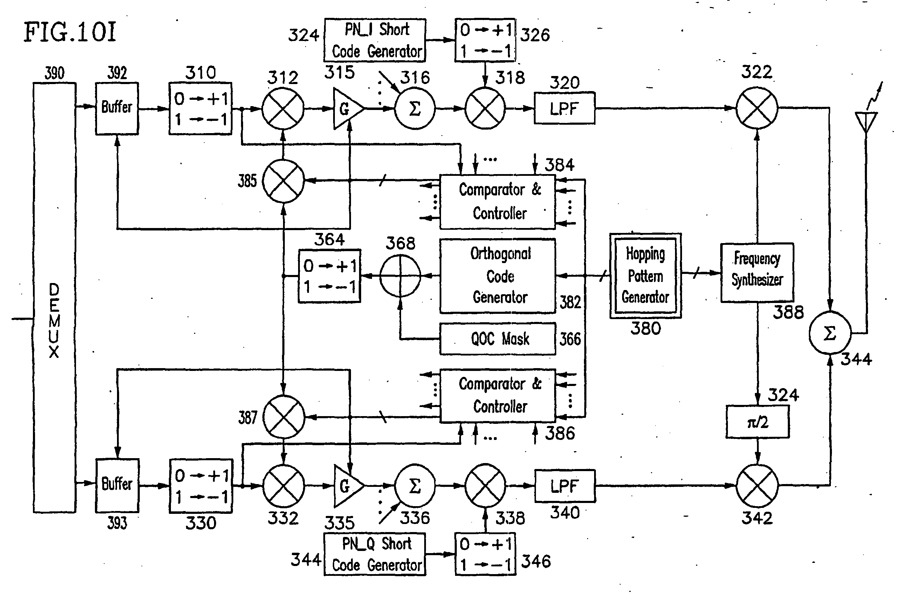

FIG. 10i is a schematic of a transmitter in the primary station for orthogonal resource hopping multiplexing according to an embodiment of the present invention (denotes the signal of FIG. 10d as a complex number signal);

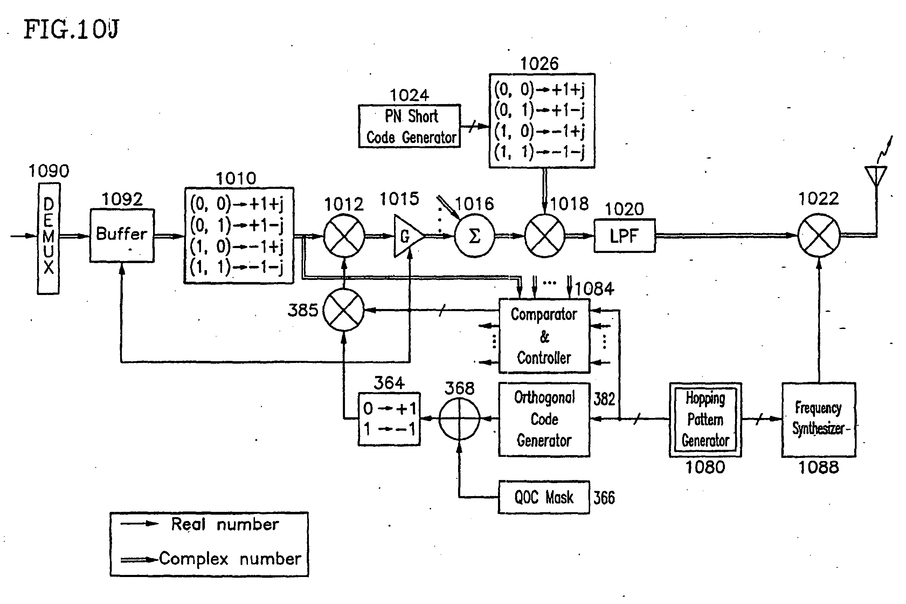

FIG. 10j is a schematic of a transmitter in the primary station for orthogonal resource hopping multiplexing according to an embodiment of the present invention (corresponding to FIG. 3e);

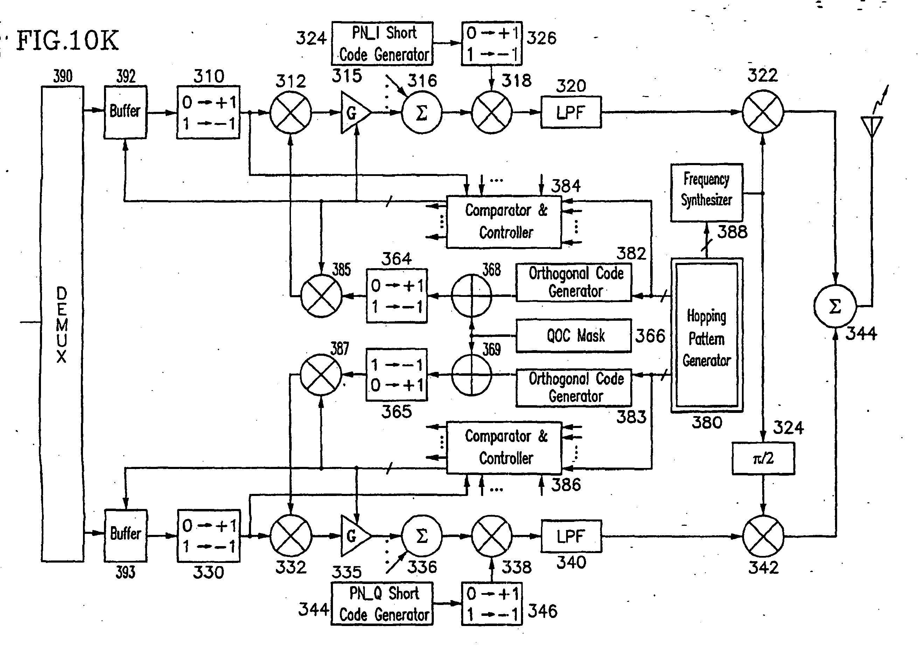

FIG. 10k is a schematic of a transmitter in the primary station for orthogonal resource hopping multiplexing according to an embodiment of the present invention (denotes the signal of FIG. 10e as a complex number signal);

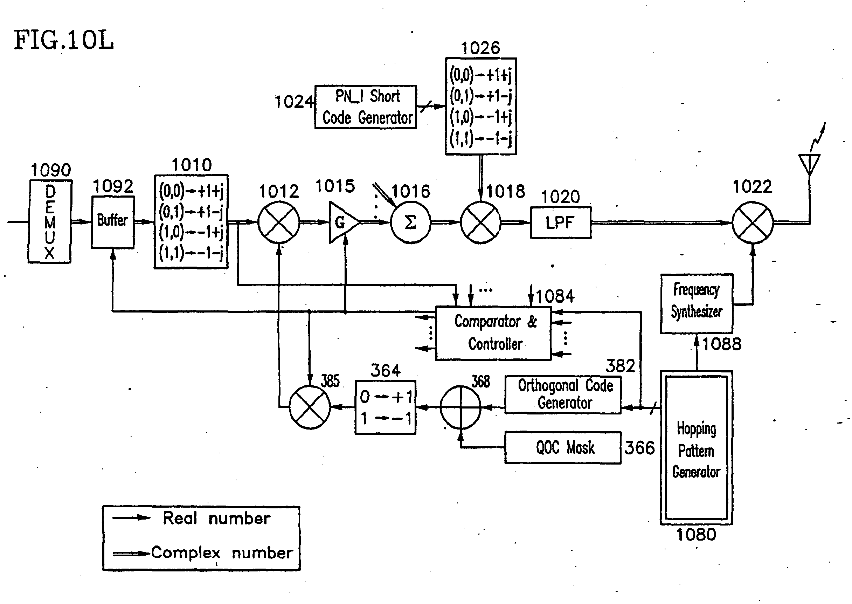

FIG. 10l is a schematic of a transmitter in the primary station for orthogonal resource hopping multiplexing according to an embodiment of the present invention (corresponding to FIG. 3f);
FIG. 10m is a schematic of a transmitter in the primary station for orthogonal resource hopping multiplexing according to an embodiment of the present invention (denotes the signal of FIG. 10f as a complex number signal);

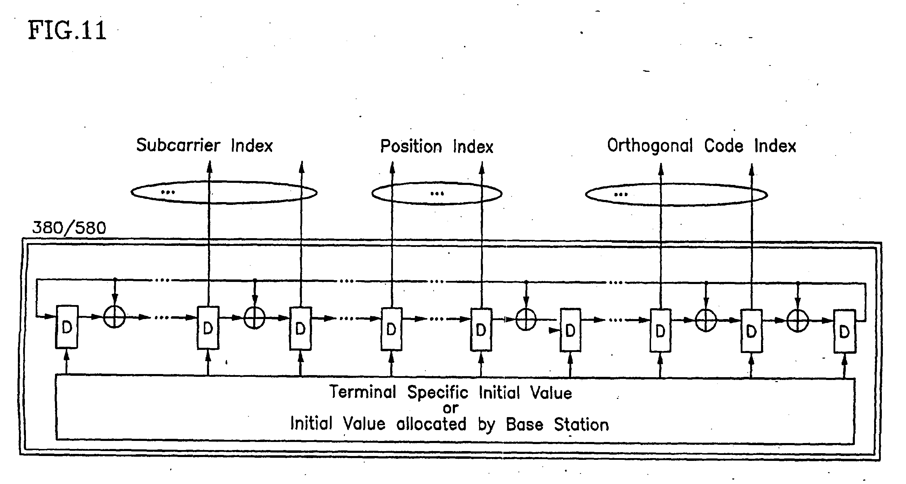

FIG. 11 is a schematic of a hopping pattern generator of a multidimensional orthogonal resource according to an embodiment of the present invention;

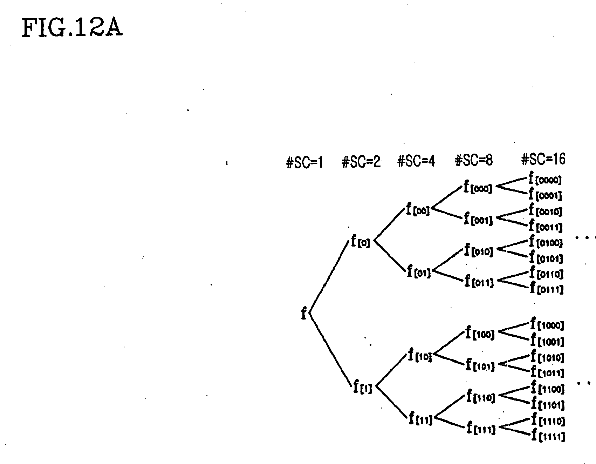

FIG. 12a is an illustration showing an example of a subcarrier group for frequency hopping according to an embodiment of the present invention (orthogonal resource = frequency);

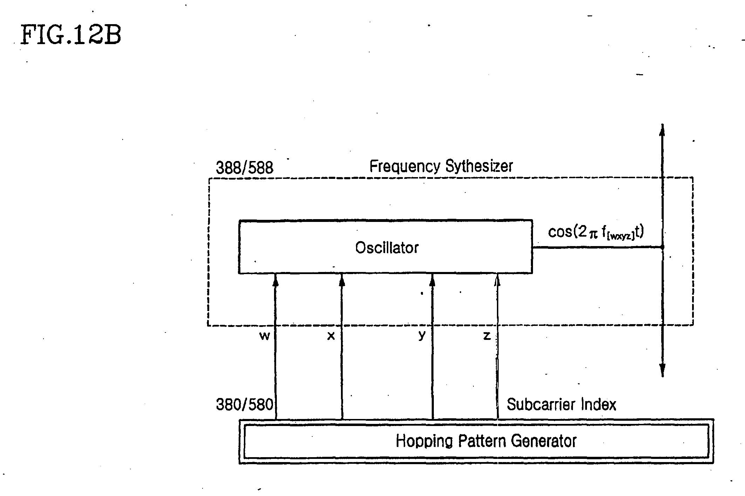

FIG. 12b is a schematic of a subcarrier synthesizer based on the output of a frequency hopping pattern generator according to an embodiment of the present invention;

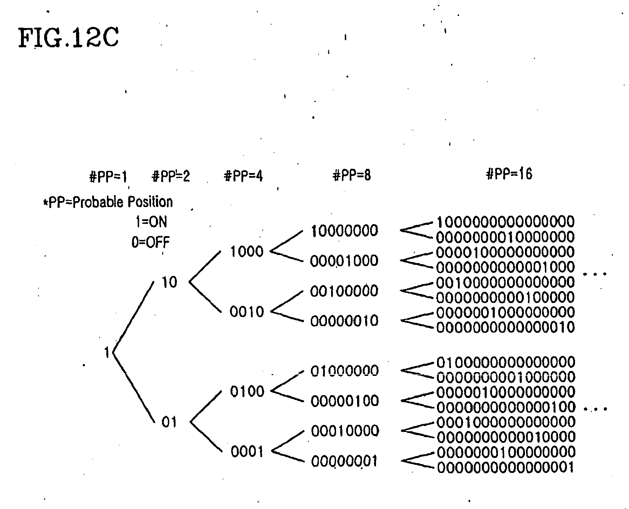

FIG. 12c is an illustration showing an example of a transmit data symbol position interval for symbol-based transmit time hopping according to an embodiment of the present invention (orthogonal resource = time; "1" = ON; and "0" = OFF);

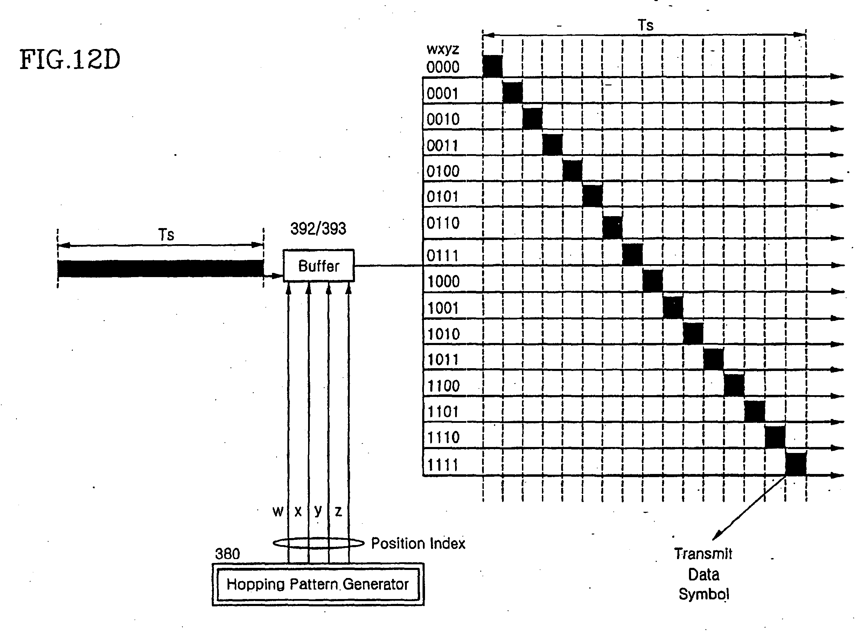

FIG. 12d is a schematic of a symbol position selector (or buffer) based on the output of a time hopping pattern generator at the transmitter of the primary station according to an embodiment of the present invention;

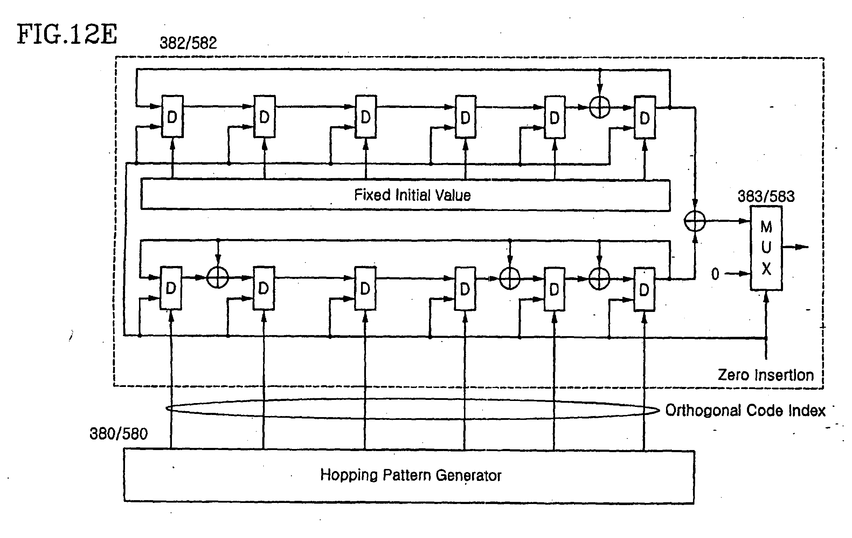

FIG. 12e is a schematic of an orthogonal gold code generator based on an orthogonal code hopping pattern according to an embodiment of the present invention (orthogonal resource = orthogonal gold code);

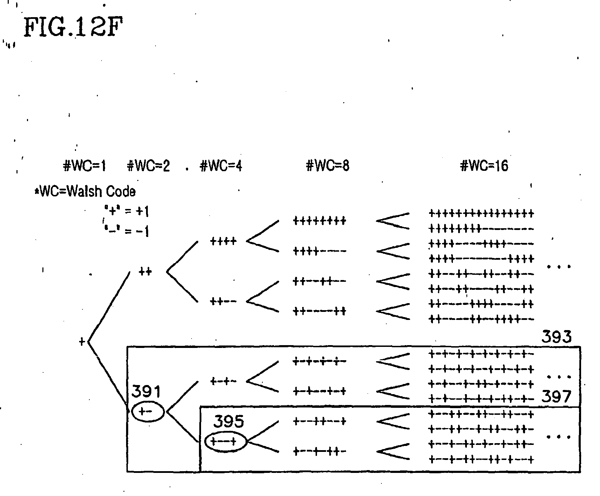

FIG. 12f is an illustration showing a tree-type orthogonal Walsh code based on different spreading factors (orthogonal resource = orthogonal Walsh code);

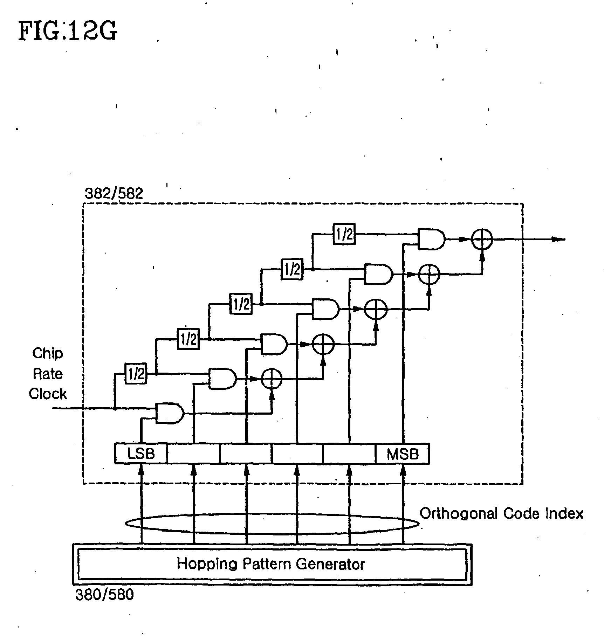

FIG. 12g is a schematic of an orthogonal Walsh code generator based on the orthogonal code hopping pattern according to an embodiment of the present invention (orthogonal resource = orthogonal Walsh code);

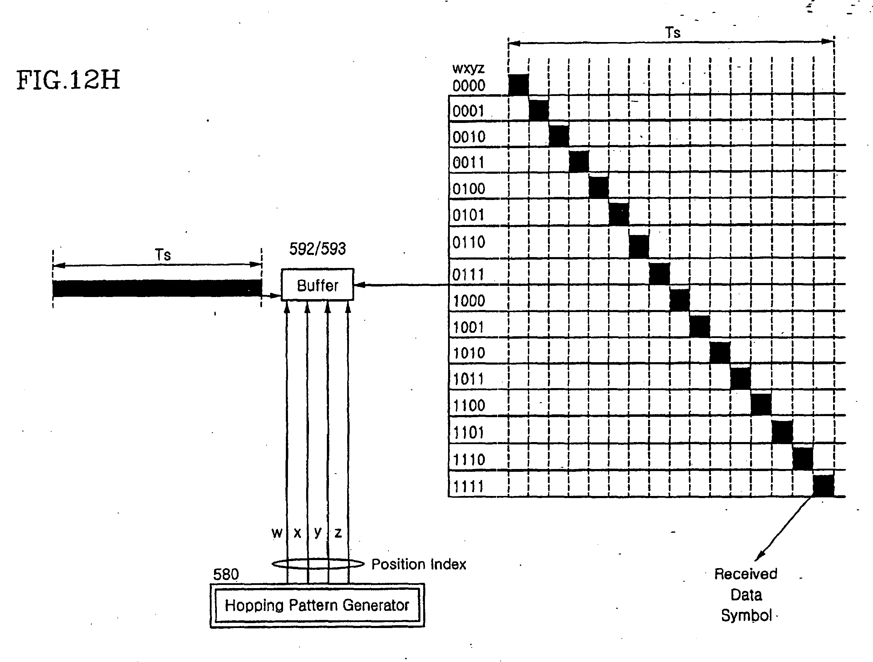

FIG. 12h is a schematic of a symbol position selector (or buffer) based on the output of a time hopping pattern generator at a receiver of the secondary station according to an embodiment of the present invention;

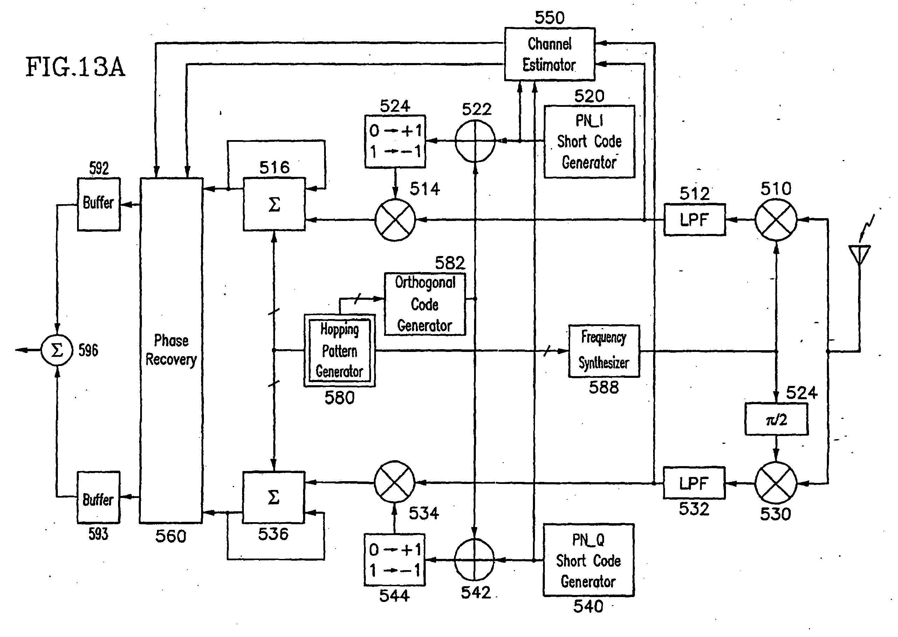

FIG. 13a is a schematic of a receiver in the secondary station for orthogonal resource hopping multiplexing according to the embodiment of the present invention shown in FIG. 10a;

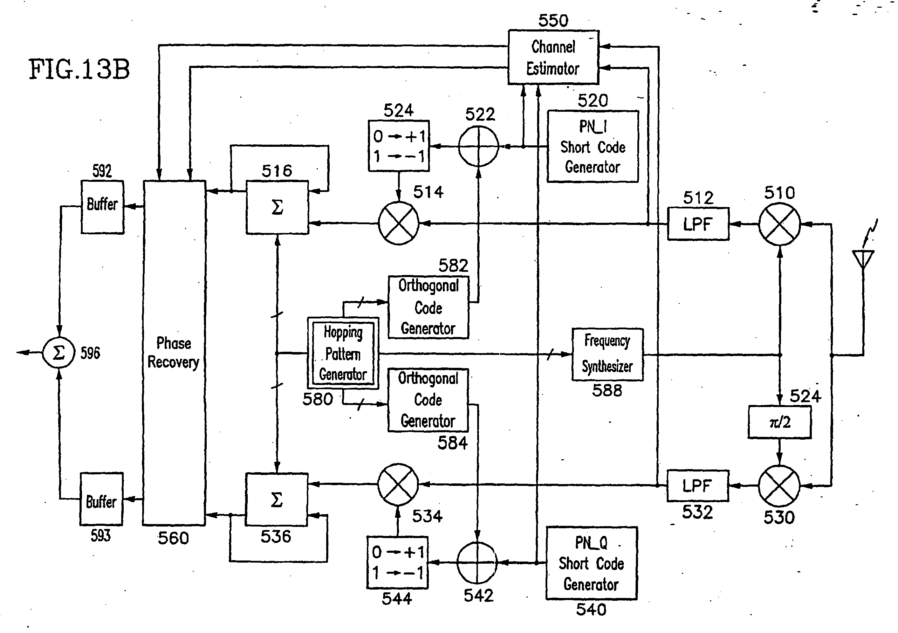

FIG. 13b is a schematic of a receiver in the secondary station for orthogonal resource hopping multiplexing according to the embodiment of the present invention shown in FIG. 10c;

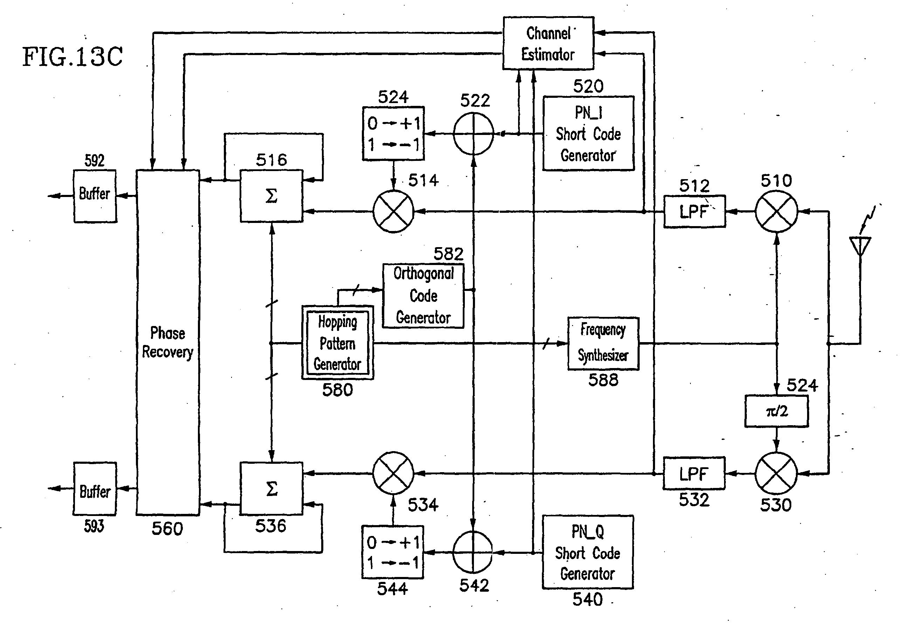

FIG. 13c is a schematic of a receiver in the secondary station for orthogonal resource hopping multiplexing according to the embodiment of the present invention shown in FIG. 10e;

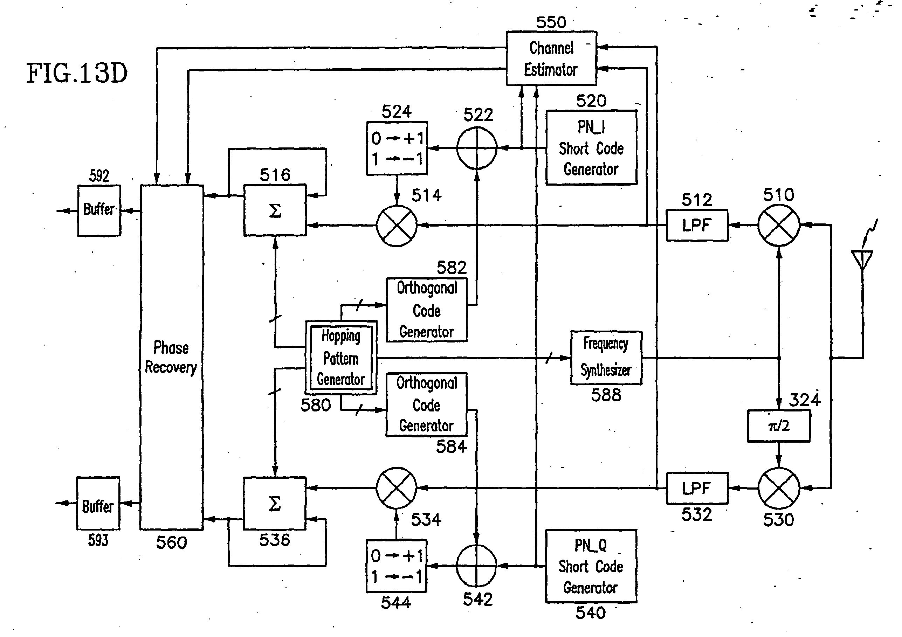

FIG. 13d is a schematic of a receiver in the secondary station for orthogonal resource hopping multiplexing according to the embodiment of the present invention shown in FIG. 10g;

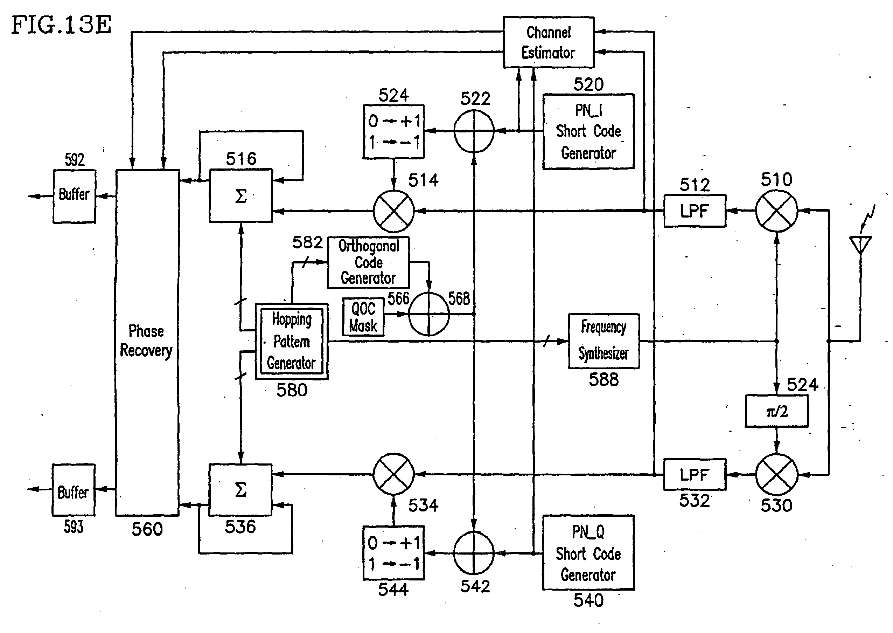

FIG. 13e is a schematic of a receiver in the secondary station for orthogonal resource hopping multiplexing according to the embodiment of the present invention shown in FIG. 10i;

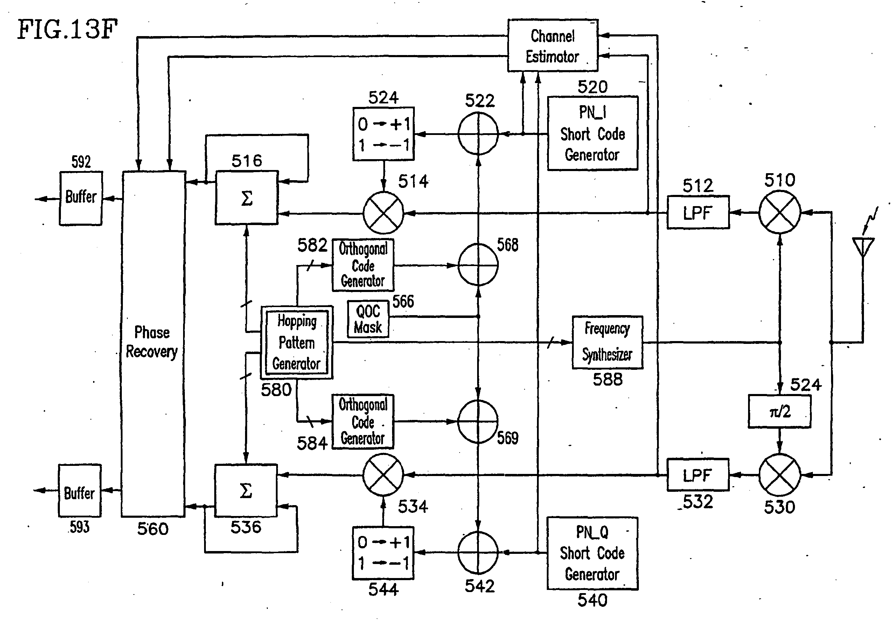

FIG. 13f is a schematic of a receiver in the secondary station for orthogonal resource hopping multiplexing according to the embodiment of the present invention shown in FIG. 10k;

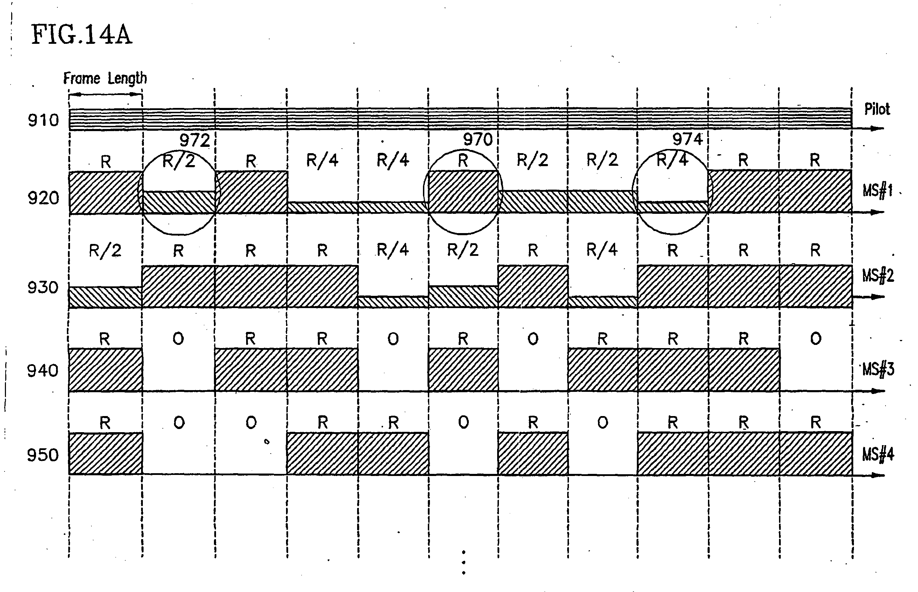

FIG. 14a is a signal diagram showing a transmit signal from the primary station by the respective frames according to an example of the prior art;

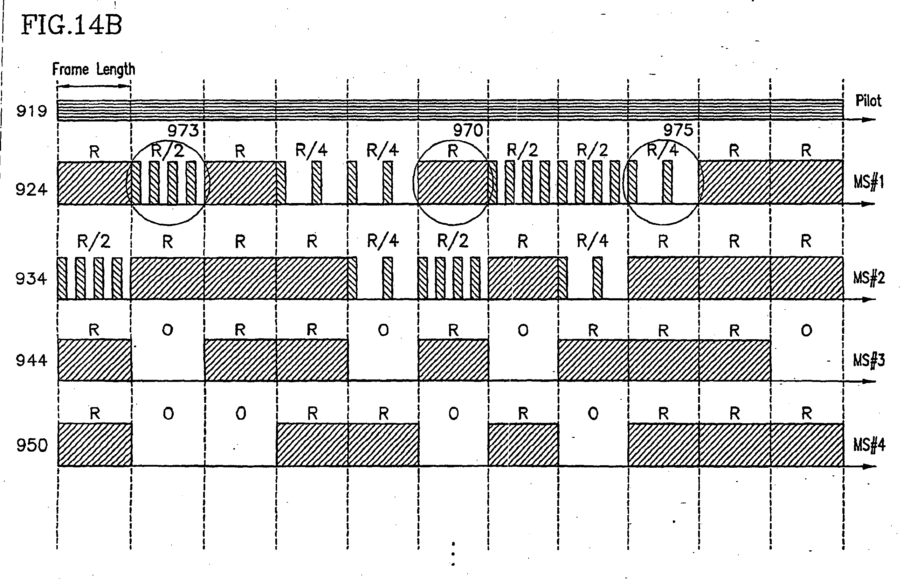

FIG. 14b is a signal diagram showing a transmit signal from the primary station by the respective frames according to an embodiment of the present invention;

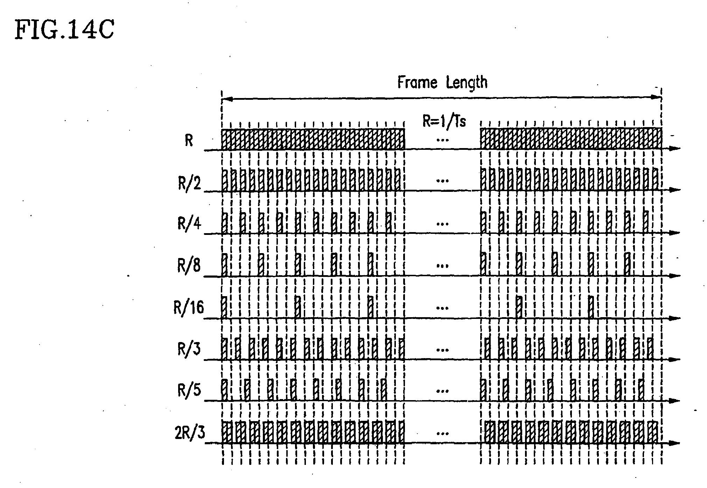

FIG. 14c is a signal diagram showing a transmit signal from the primary station in a frame having a transmission rate less than a basic transmission rate R according to an embodiment of the present invention (regular transmission time hopping);

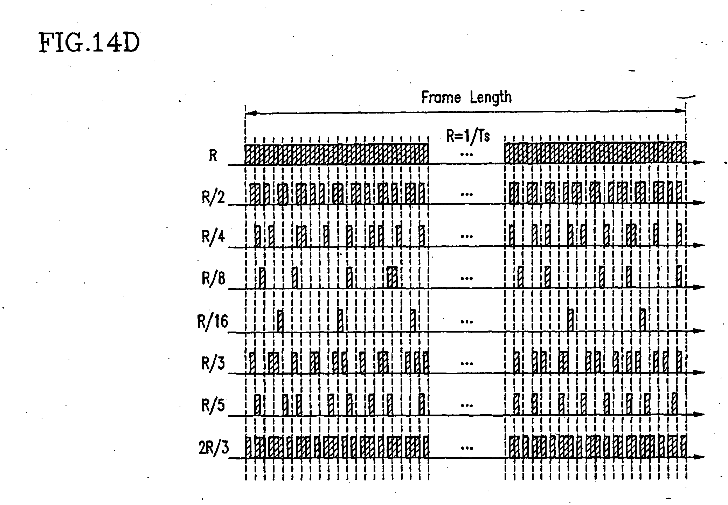

FIG. 14d is a signal diagram showing a transmit signal from the primary station in a sparse frame according to an embodiment of the present invention (irregular transmission time hopping);

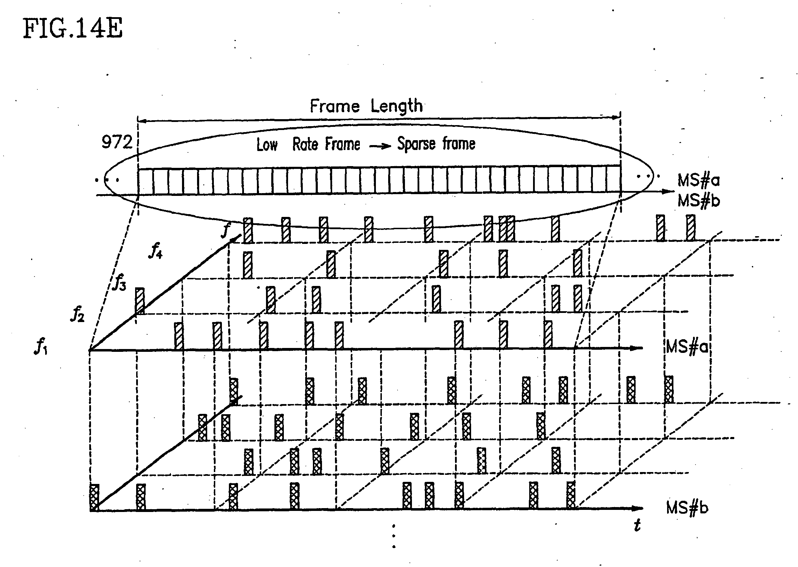

FIG. 14e is a signal diagram showing a transmit signal from the primary station in a sparse frame for the FHM (Frequency Hopping Multiplexing) system according to an embodiment of the present invention (irregular transmission time hopping);

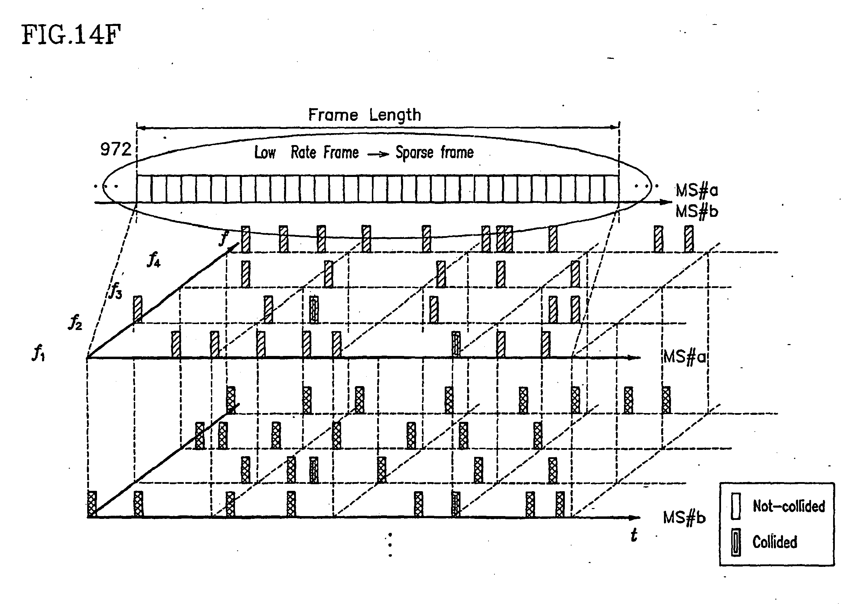

FIG. 14f is an illustration showing the case where a hopping pattern expressed in terms of the two-dimensional coordinates of transmission time and subcarrier is selected by multiple channels at the same time in FIG. 14e (the square defined by the double solid line is the collided data symbol);

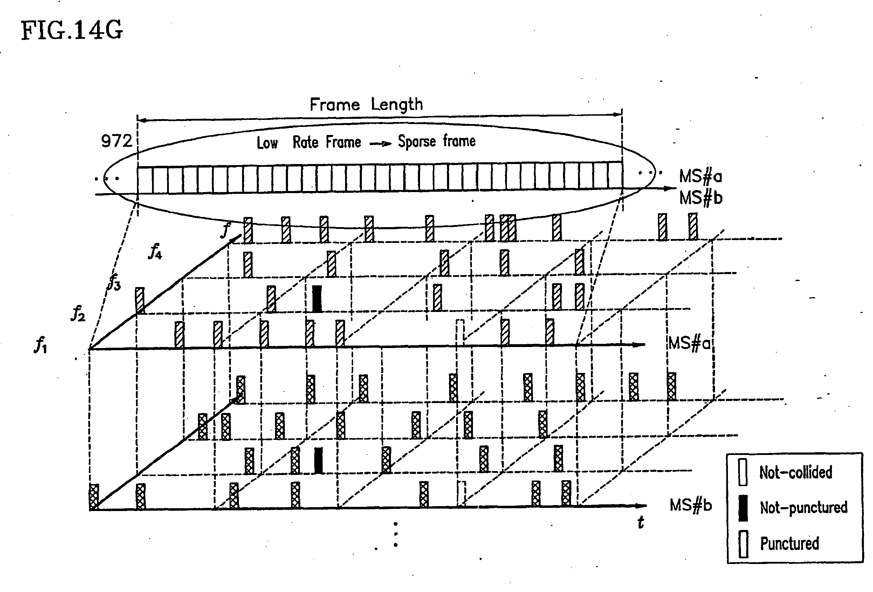

FIG. 14g is an illustration showing that the data symbols of the collided coordinates in FIG. 14f are compared with one another to determine whether to be transmitted (the black square means transmission; and the dotted line square means no transmission);

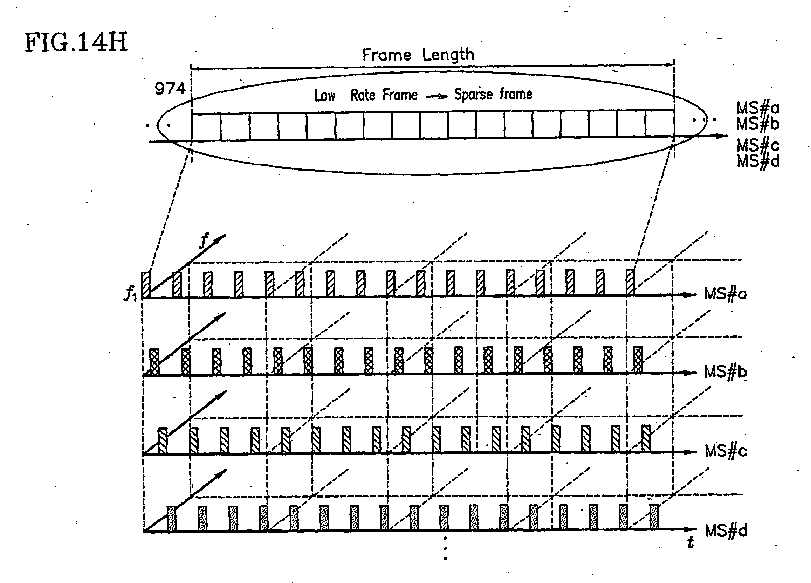

FIG. 14h is a signal diagram showing a transmit signal from the primary station in a sparse frame for time hopping multiplexing according to an embodiment of the present invention (regular transmission time hopping);

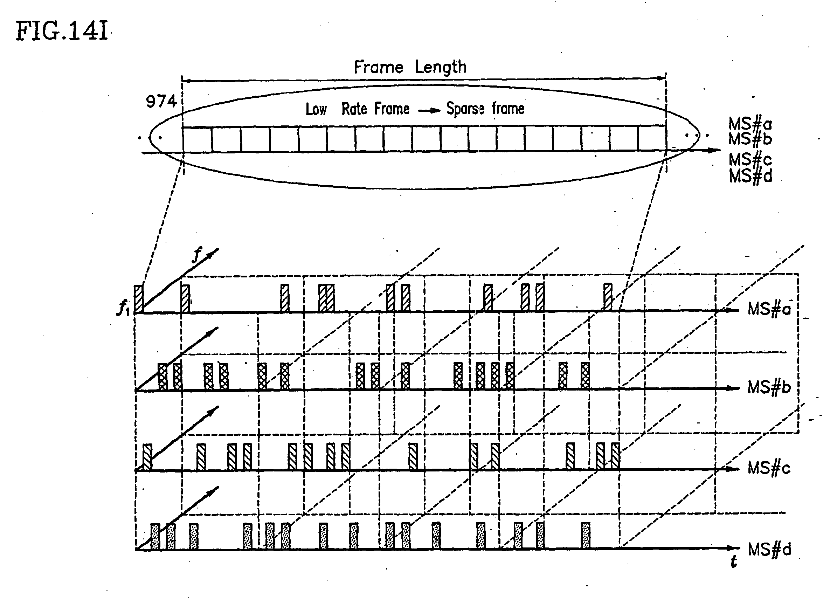

FIG. 14i is a signal diagram showing a transmit signal from the primary station in a sparse frame for time hopping multiplexing according to an embodiment of the present invention (irregular transmission time hopping);

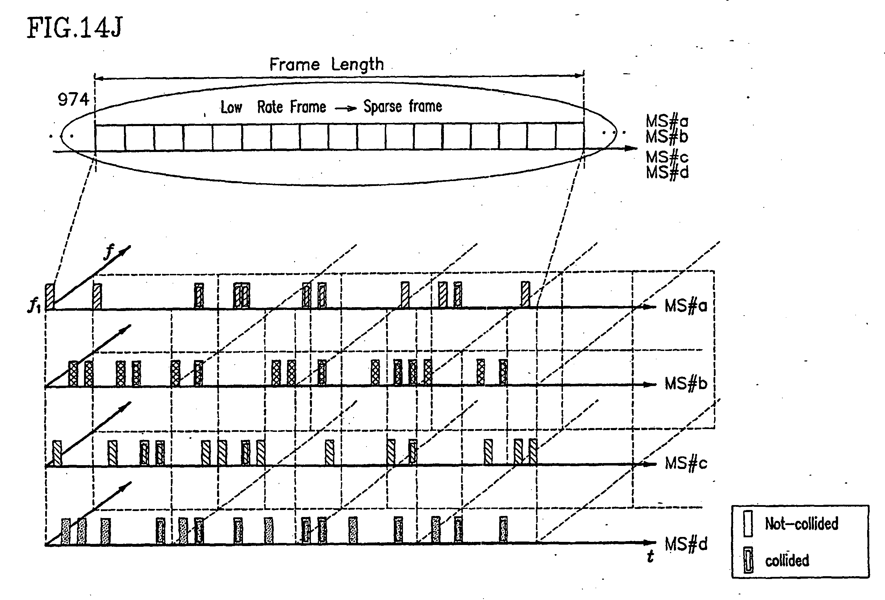

FIG. 14j is an illustration showing the case where a hopping pattern expressed in terms of the one-dimensional coordinates of transmission time is selected by multiple channels at the same time in FIG. 14i (the square defined by the double solid line is the collided data symbol);

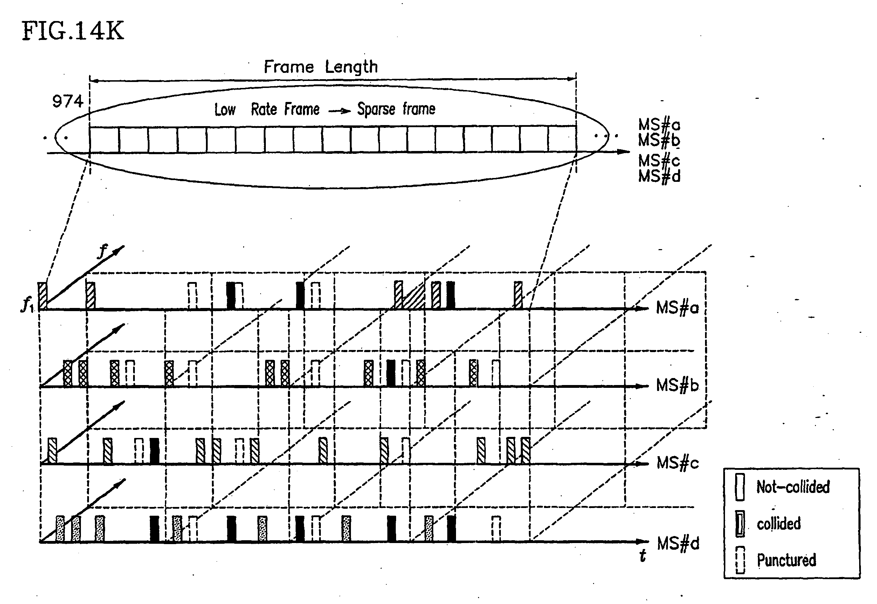

FIG. 14k is an illustration showing that the data symbols of the collided coordinates in FIG. 14j are compared with one another to determine whether to be transmitted (the black square means transmission; and the dotted line square means no transmission);

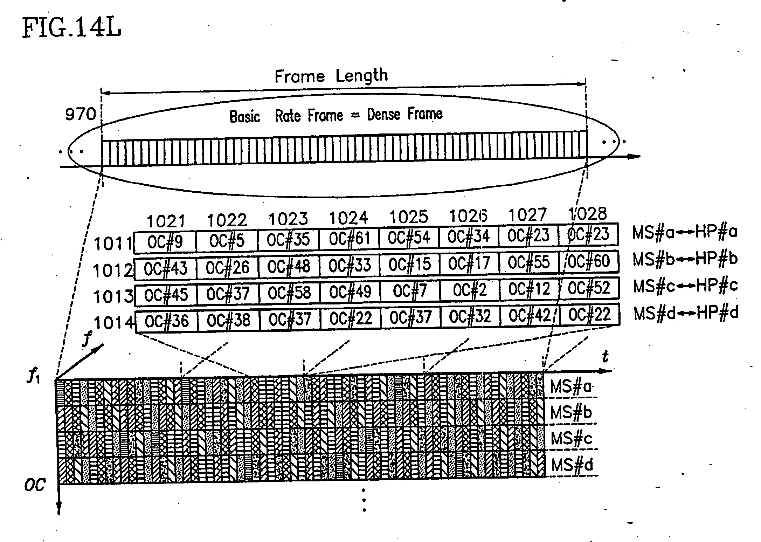

FIG. 14l is a signal diagram showing a transmit signal from the primary station in a frame (i.e., a dense frame) having a base transmission rate R for orthogonal code hopping multiplexing according to an embodiment of the present invention;

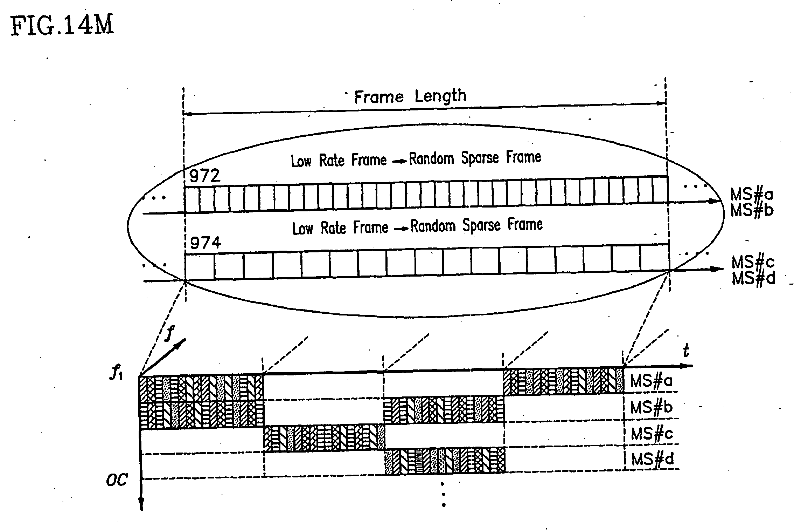

FIG. 14m is a signal diagram showing a transmit signal from the primary station in a sparse frame for time slot-based transmission time hopping multiplexing and orthogonal code hoping multiplexing according to an embodiment of the present invention;

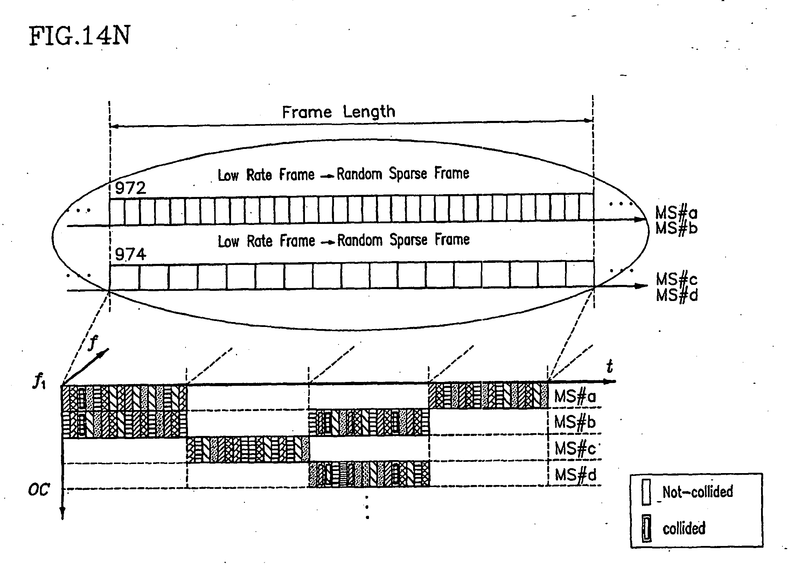

FIG. 14n is an illustration showing the case where a hopping pattern expressed in terms of the two-dimensional coordinates of transmission time and orthogonal code is selected by multiple channels at the same time in FIG. 14m (the square defined by the double solid line is the collided data symbol);

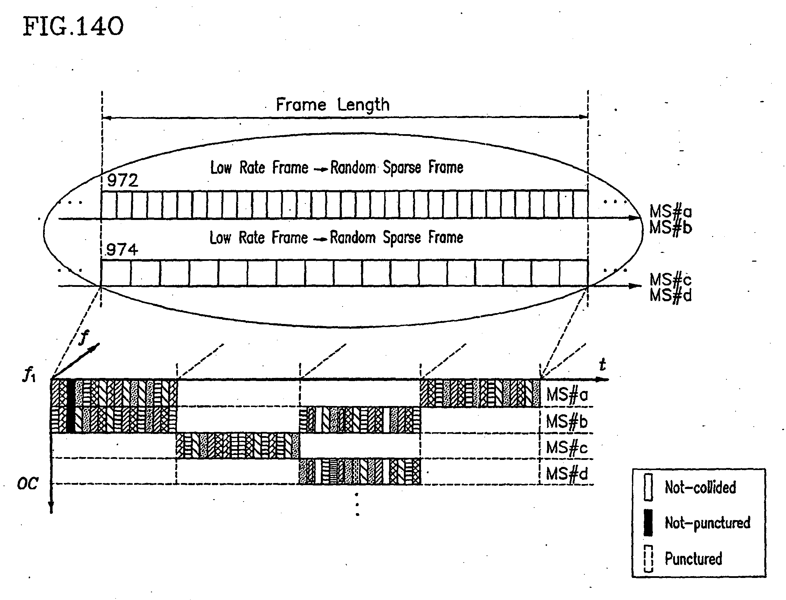

FIG. 14o is an illustration showing that the data symbols of the collided coordinates in FIG. 14n are compared with one another to determine whether to be transmitted (the black square means transmission; and the dotted line square means no transmission);

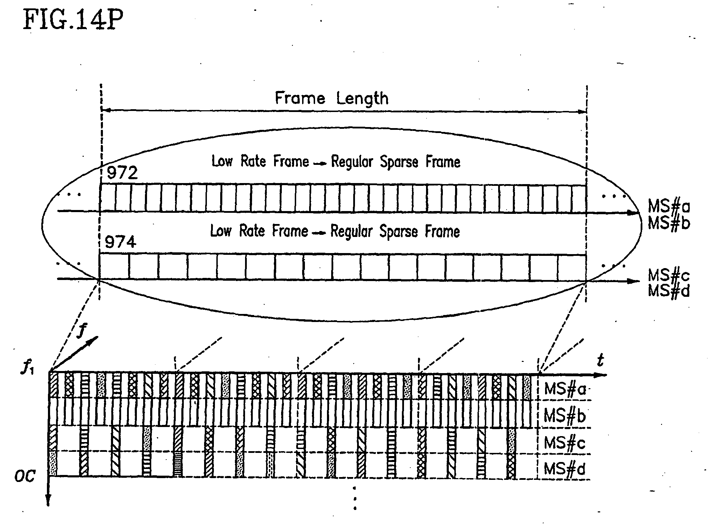

FIG. 14p is a signal diagram showing a transmit signal from the primary station in a sparse frame for symbol-based regular transmission time hopping multiplexing and orthogonal code hopping multiplexing according to an embodiment of the present invention (when the frame starting symbol is present at the same position);

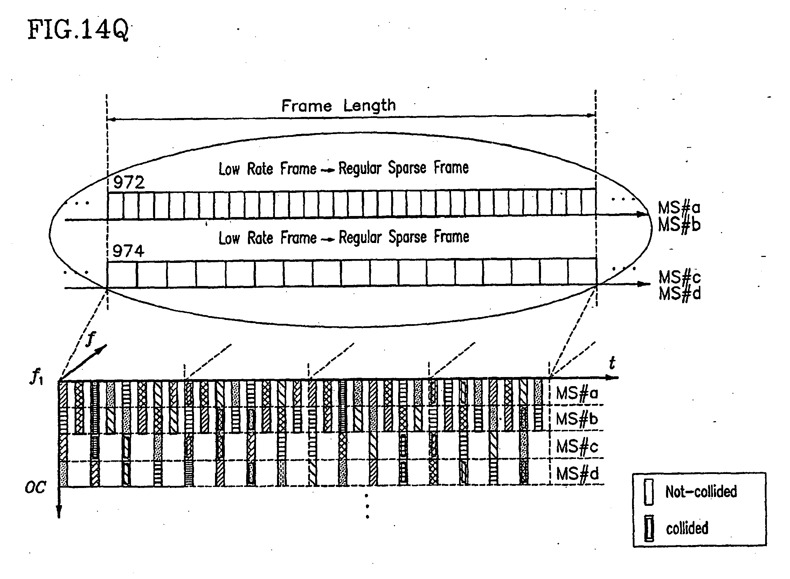

FIG. 14q is an illustration showing the case where a hopping pattern expressed in terms of the two-dimensional coordinates of transmission time and orthogonal code symbol is selected by multiple channels at the same time in FIG. 14p (the square defined by the double solid line is the collided data symbol);

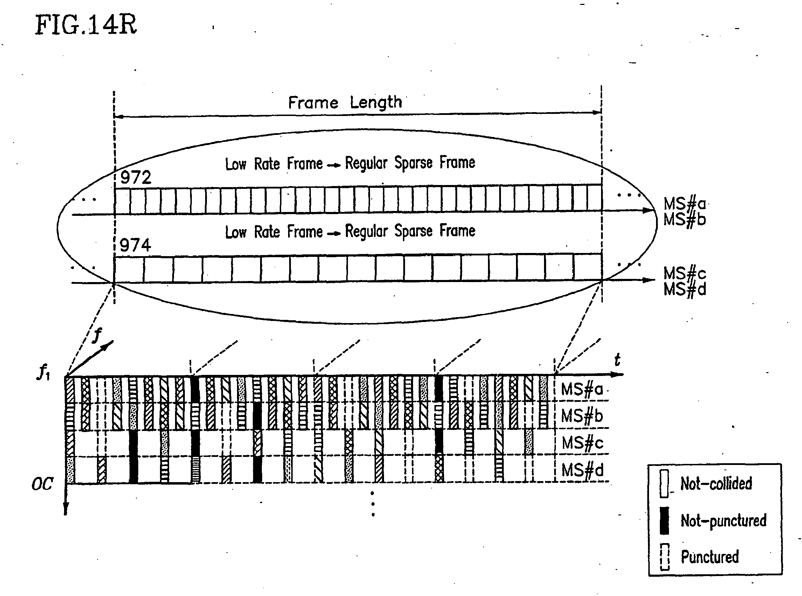

FIG. 14r is an illustration showing that the data symbols of the collided coordinates in FIG. 14q are compared with one another to determine whether to be transmitted (the black square means transmission; and the dotted line square means no transmission);

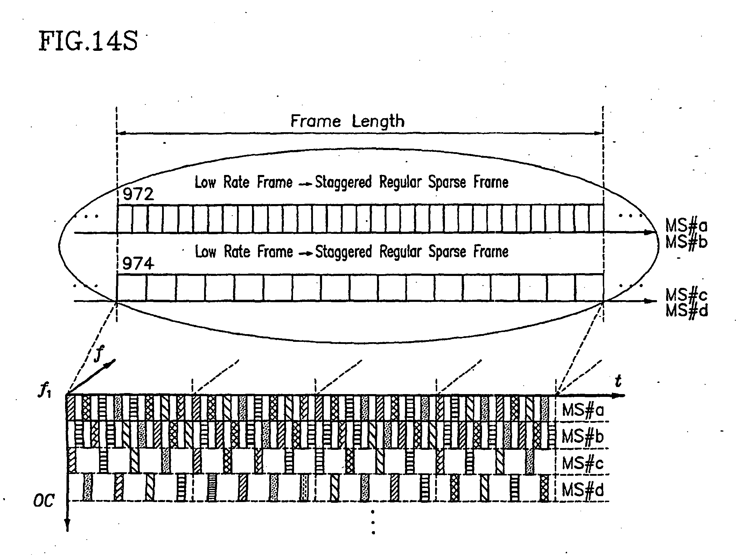

FIG. 14s is a signal diagram showing a transmit signal from the primary station in a sparse frame for symbol-based regular transmission time hopping multiplexing and orthogonal code hopping multiplexing according to an embodiment of the present invention (when the frame starting symbol is present at a staggered position;

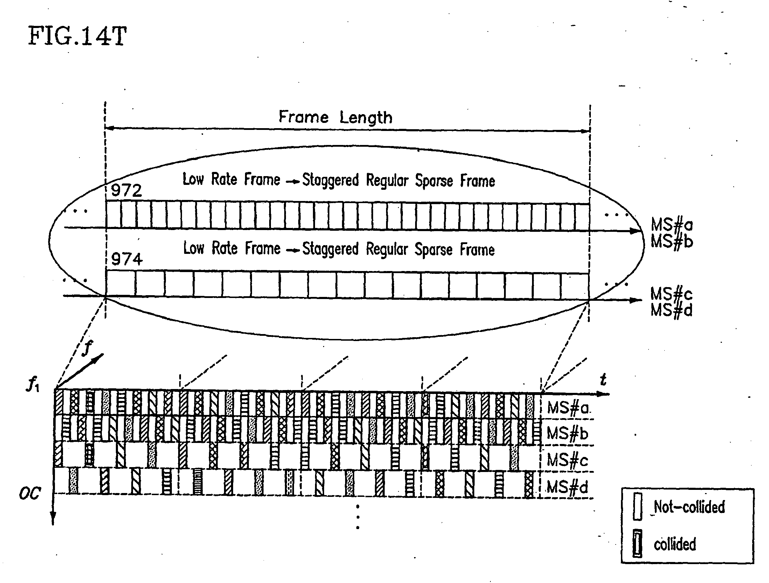

FIG. 14t is an illustration showing the case where a hopping pattern expressed in terms of the two-dimensional coordinates of transmission time and orthogonal code is selected by multiple channels at the same time in FIG. 14s (the square defined by the double solid line is the collided data symbol);

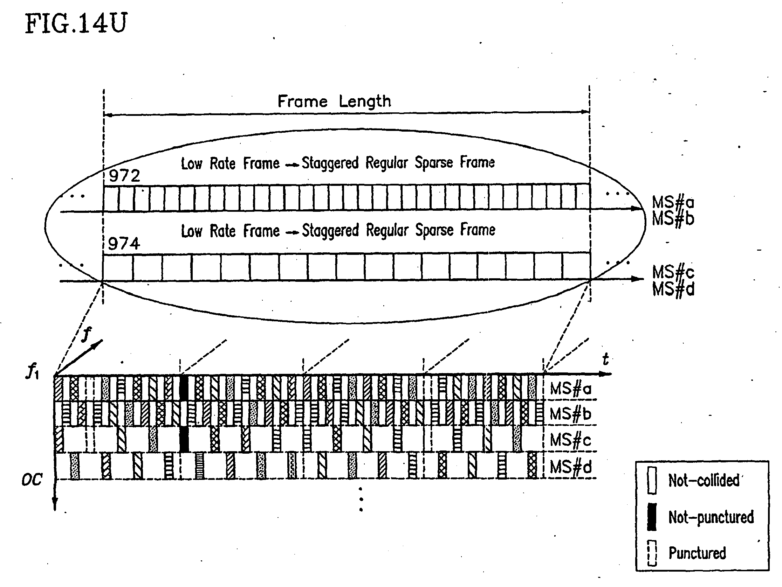

FIG. 14u is an illustration showing that the data symbols of the collided coordinates in FIG. 14t are compared with one another to determine whether to be transmitted (the black square means transmission; and the dotted line square means no transmission);

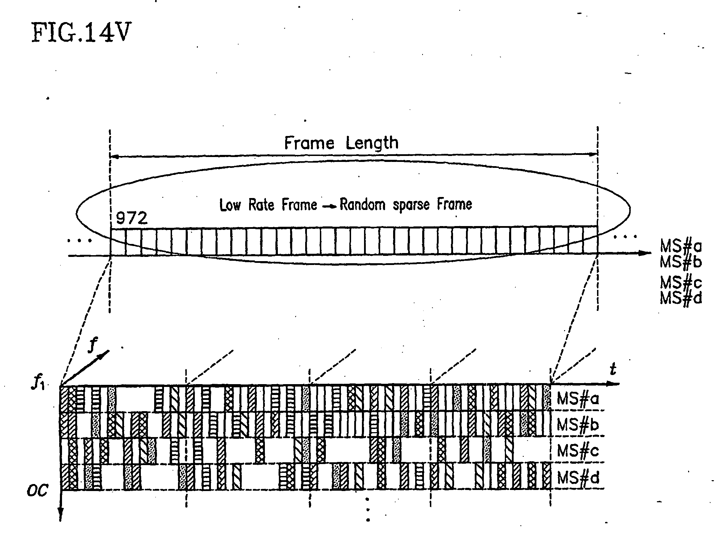

FIG. 14v is a signal diagram showing a transmit signal from the primary station in a sparse frame for channel-based irregular transmission time hopping multiplexing and orthogonal code hopping multiplexing in the unit of symbols according to an embodiment of the present invention;

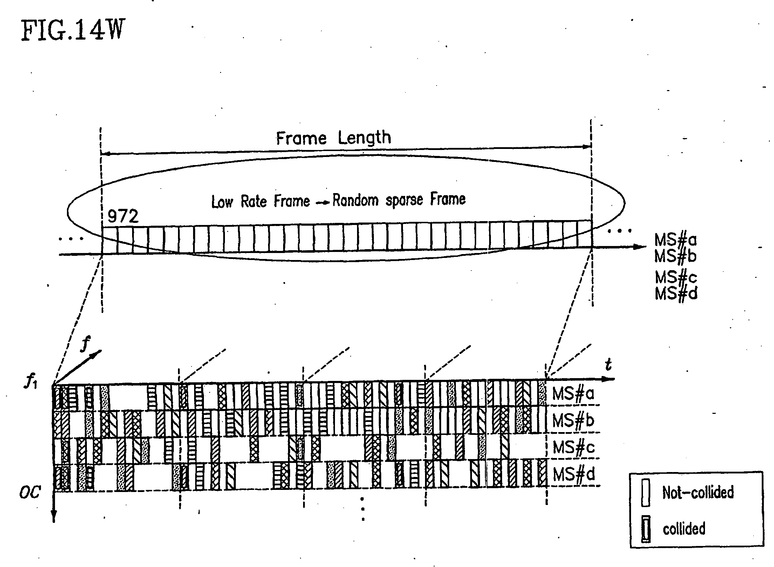

FIG. 14w is an illustration showing the case where a hopping pattern expressed in terms of the two-dimensional coordinates of transmission time and orthogonal code is selected by multiple channels at the same time in FIG. 14v (the square defined by the double solid line is the collided data symbol);

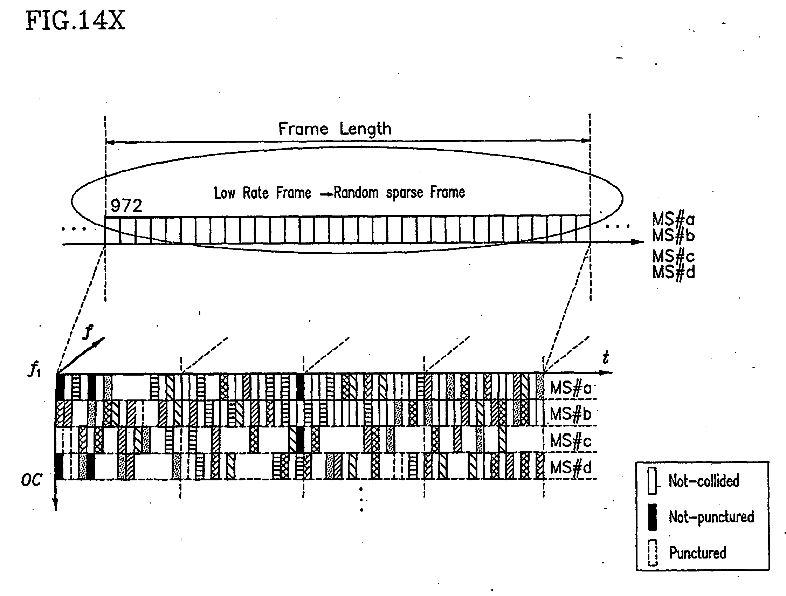

FIG. 14x is an illustration showing that the data symbols of the collided coordinates in FIG. 14w are compared with one another to determine whether to be transmitted (the black square means transmission; and the dotted line square means no transmission);

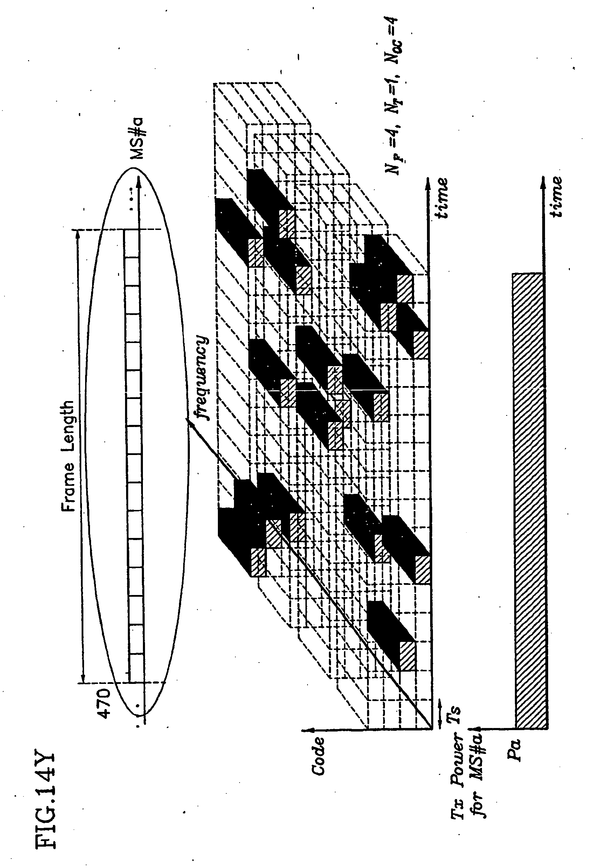

FIG. 14y is a signal diagram showing a transmit signal from the primary station in a sparse frame for channel-based irregular subcarrier frequency hopping multiplexing, transmission time hopping multiplexing and orthogonal code hopping multiplexing in the unit of symbols according to an embodiment of the present invention;

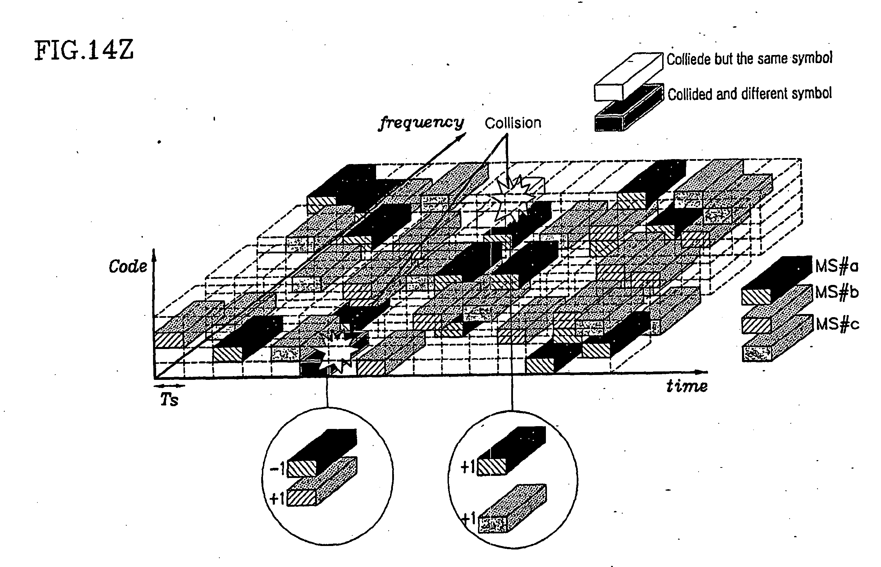

FIG. 14z is an illustration showing the case where a hopping pattern expressed in terms of the three-dimensional coordinates of subcarrier frequency, transmission time and orthogonal code is selected by multiple channels at the same time in FIG. 14y (the cuboid defined by the double solid line is the collided data symbol);

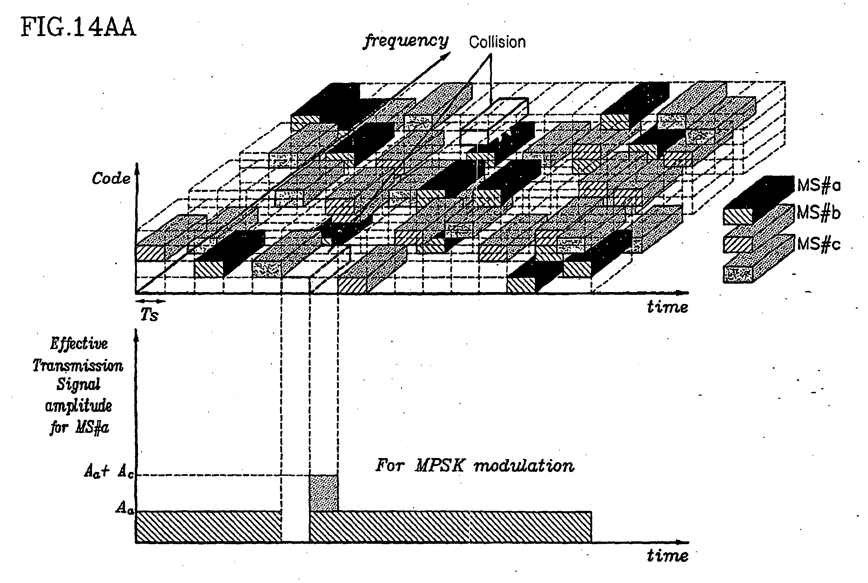

FIG. 14aa is an illustration showing that the data symbols of the collided coordinates in FIG. 14z are compared with one another to determine whether to be transmitted (the white cuboid means transmission; and the dotted cuboid means no transmission);
FIG. 15 shows that the transmission power of the primary station is increased for a predetermined interval of the frame including data symbols not transmitted so as to compensate for the average receiving energy requested by a channel decoder and thereby guarantee a desired communication quality when the transmission is stopped in a multidimensional hopping pattern conflict interval as shown in FIGS. 14g, 14k, 14o, 14r, 14u, 14x and 14aa;

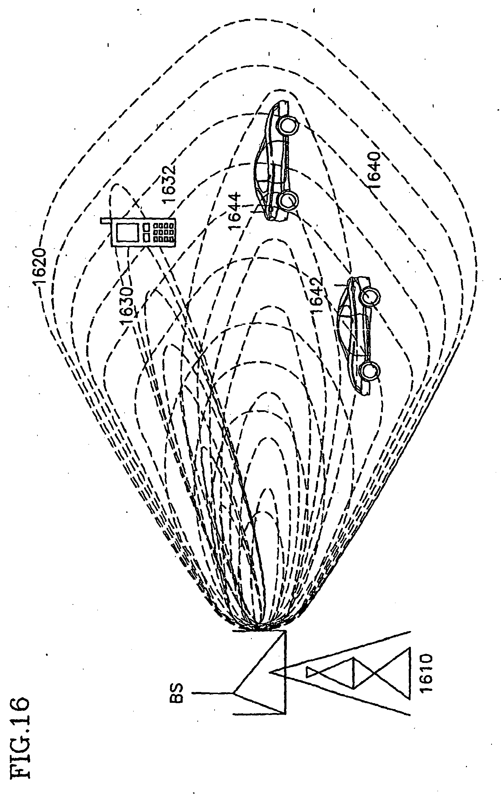

FIG. 16 is an illustration explaining that transmission is stopped due to a collision of multidimensional hopping patterns and that unmatched transmit data symbols is independently controlled by the respective transmit antenna beams of the primary station that secure spatial orthogonality;

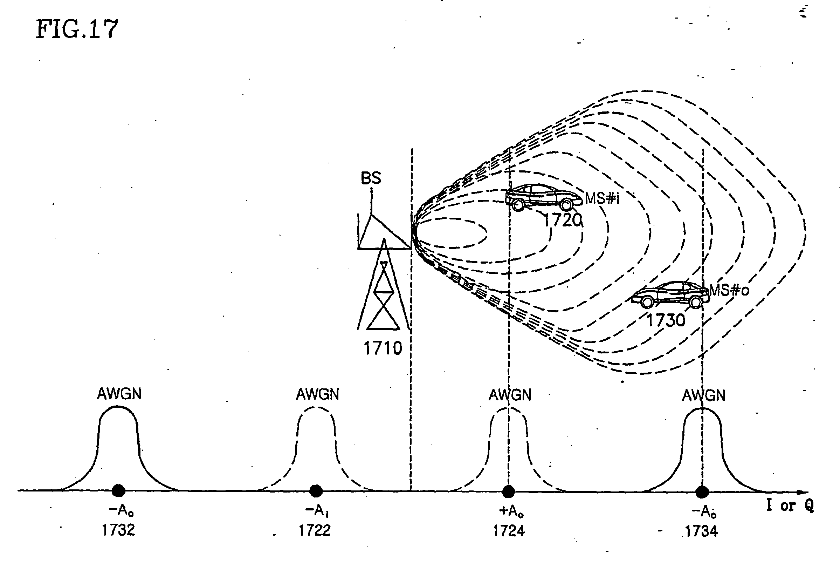

FIG. 17 is an illustration showing the difference in transmission power from the primary station between a secondary station near to the primary station for the same data service and a secondary station far from the primary station;

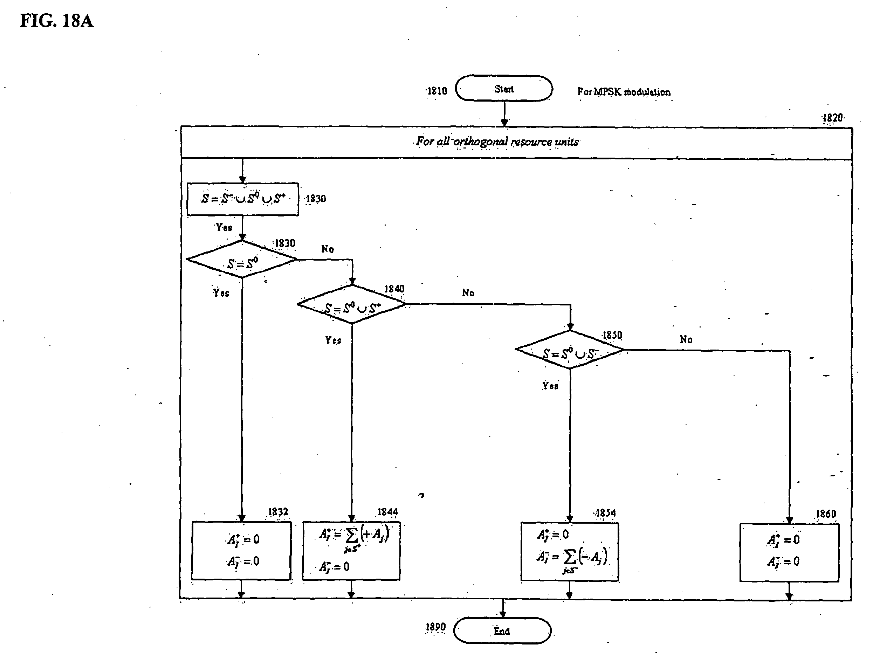

FIG. 18a is a flow chart showing a first method for determining a transmit signal by the respective orthogonal wireless resource units at a transmitter from the primary station to the secondary station according to an embodiment of the present invention (a bisectional,method of transmission and perforating);

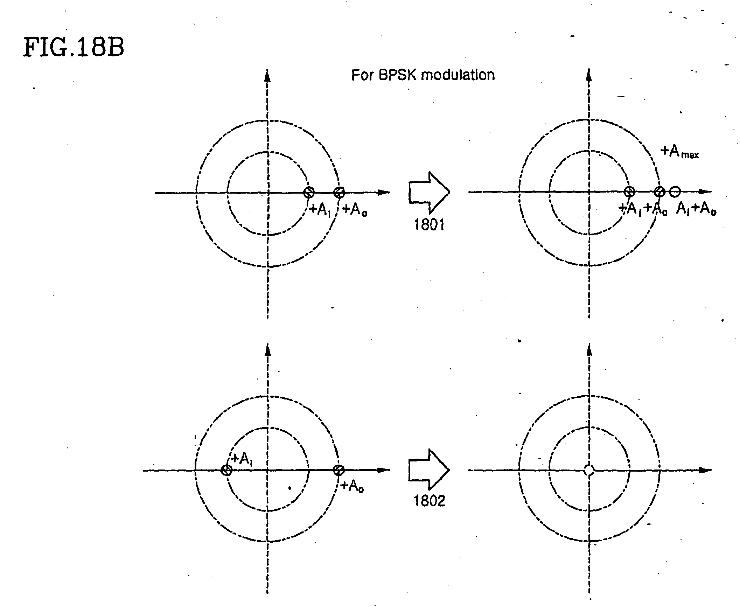

FIG. 18b illustrates the determination of the final transmit signal using the method of FIG. 18a in the case of a multidimensional orthogonal resource hopping pattern collision between two channels;

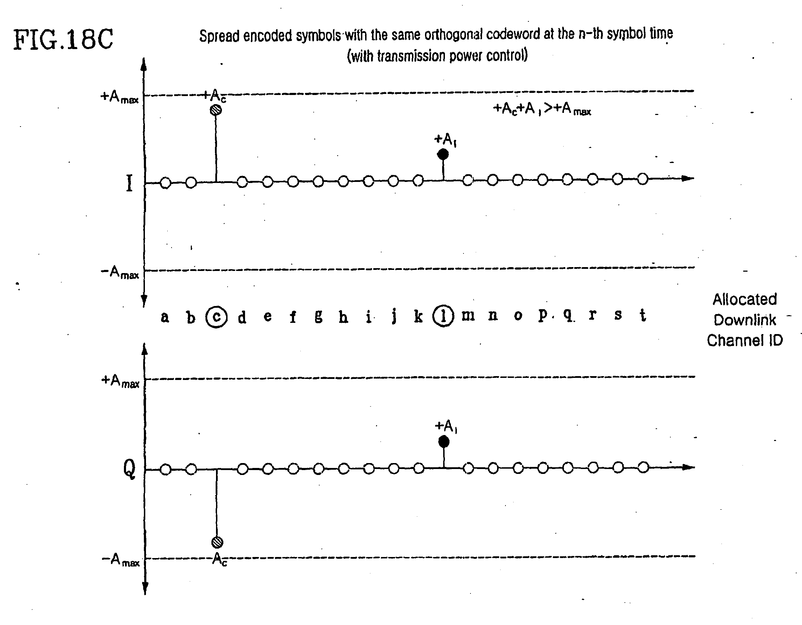

FIG. 18c illustrates a multidimensional orthogonal resource hopping pattern collision between two channels c and l for explaining the determination of the final transmit signal using the method of FIG. 18a;

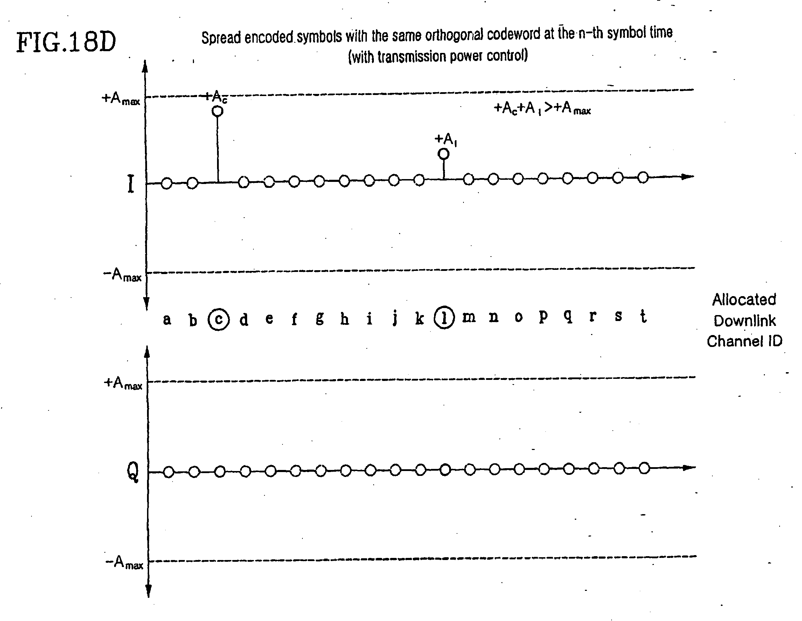

FIG. 18d illustrates the final transmit signal determined according to the algorithm of FIG. 18a in case of FIG. 18c;

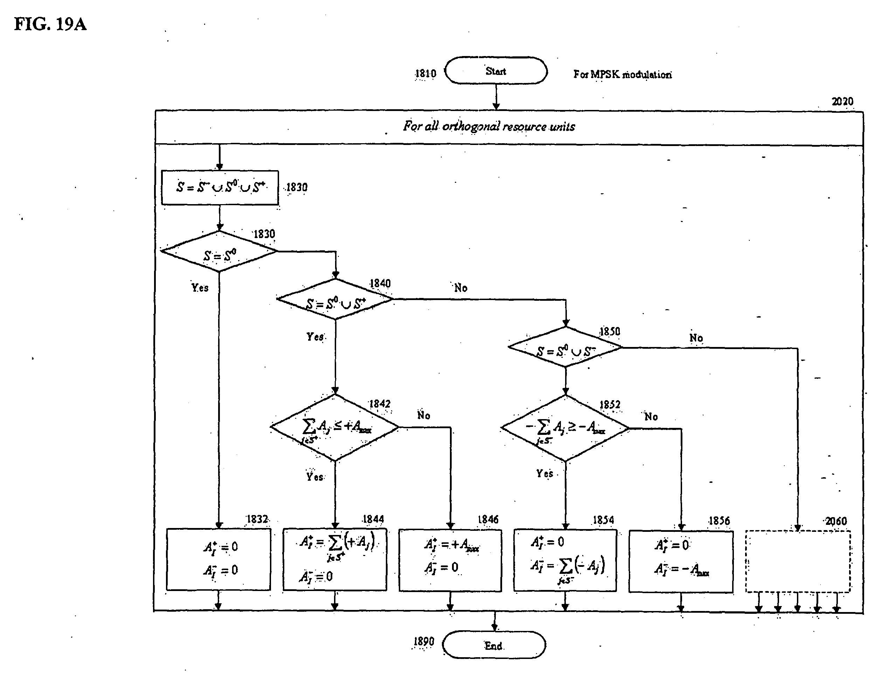

FIG. 19a is a flow chart showing a second method for determining a transmit signal by the respective orthogonal wireless resource units at a transmitter from the primary station to the secondary station according to an embodiment of the present invention (a method having a threshold value of transmission power);

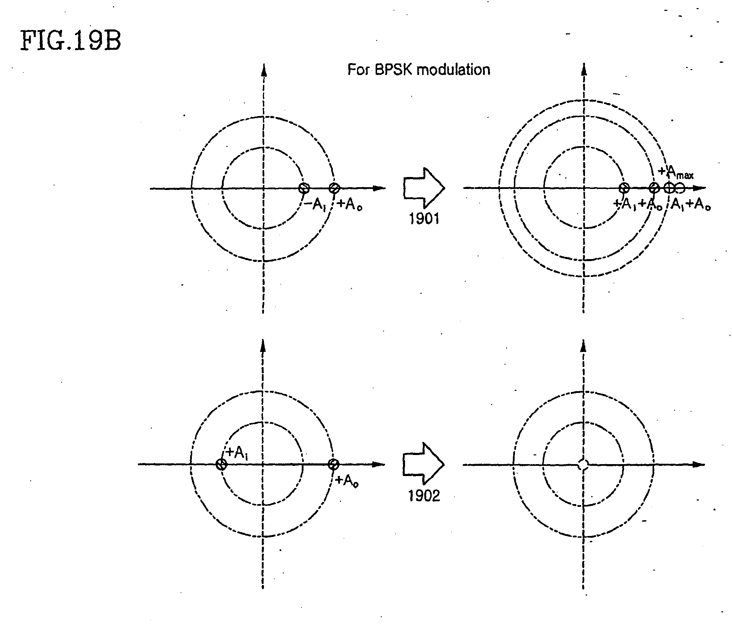

FIG. 19b illustrates the determination of the final transmit signal using the method of FIG. 19a in the case of a multidimensional orthogonal resource hopping pattern collision between two channels;

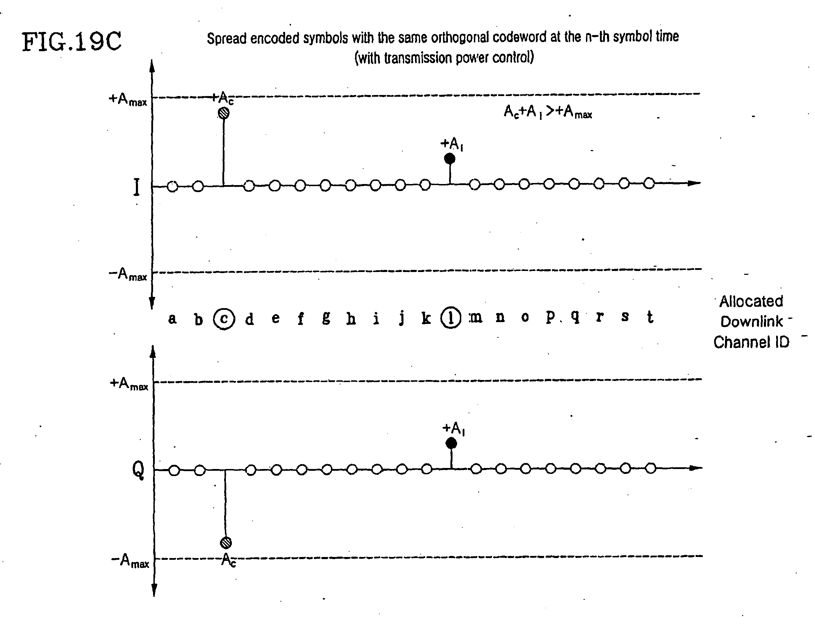

FIG. 19c illustrates a multidimensional orthogonal resource hopping pattern collision between two channels c and l for explaining the determination of the final transmit signal using the method of FIG. 19a;

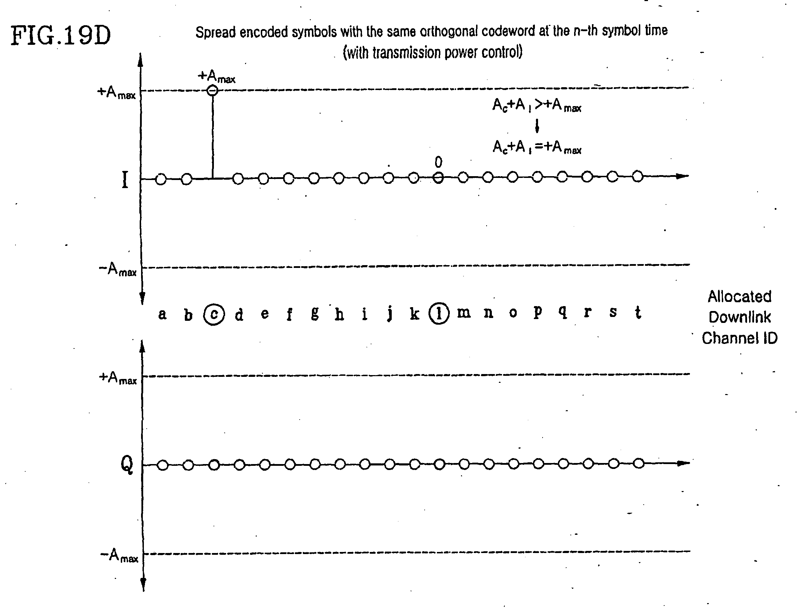

FIG. 19d illustrates the final transmit signal determined according to the algorithm of FIG. 19a in case of FIG. 19c;

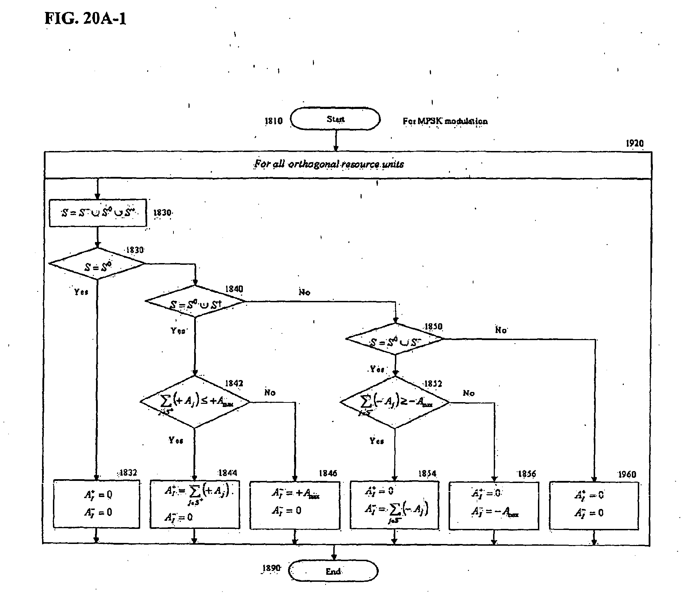

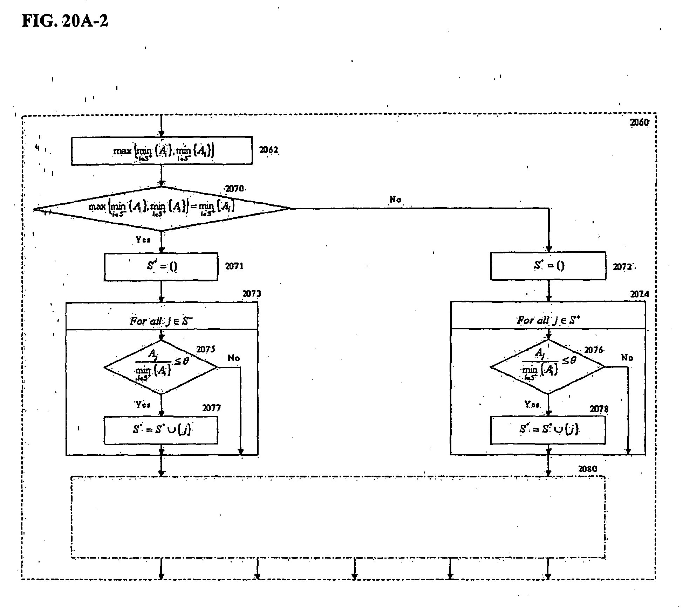

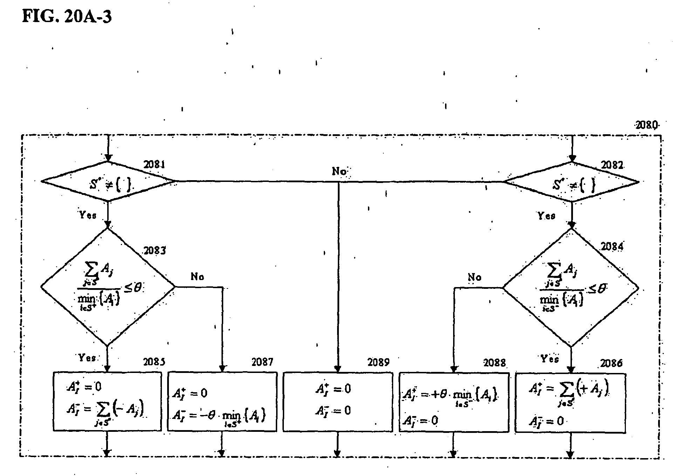

FIG. 20a is a flow chart showing the third method for determining a transmit signal by the respective orthogonal wireless resource units at a transmitter from the primary station to the secondary station according to an embodiment of the present invention; ,

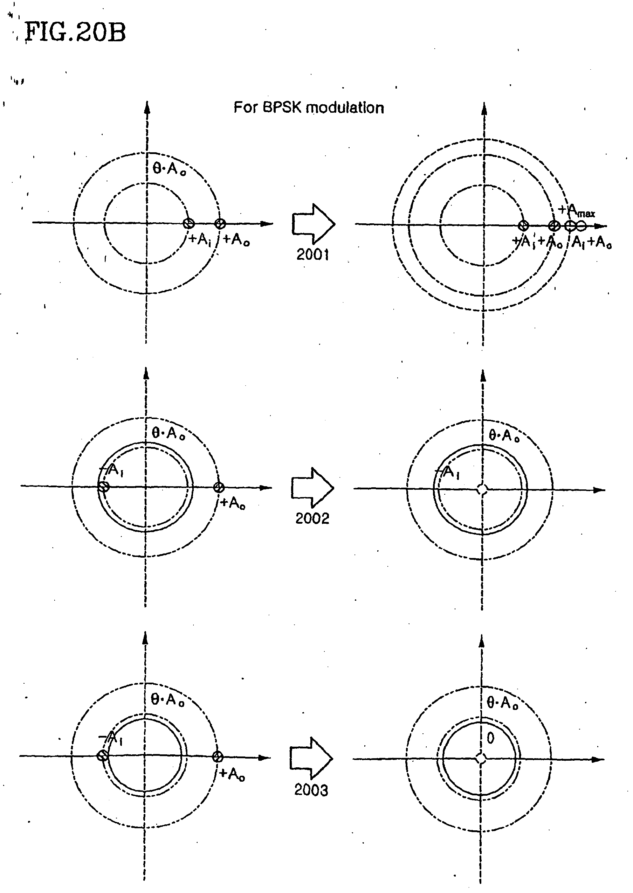

FIG. 20b illustrates the determination of the final transmit signal using the method of FIG. 20a in the case of a multidimensional orthogonal resource hopping pattern collision between two channels;

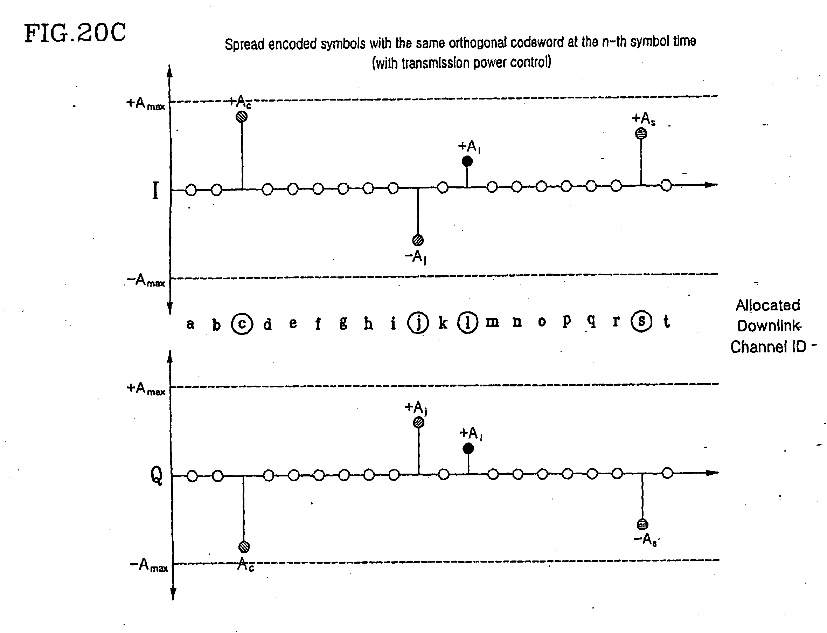

FIG. 20c illustrates a multidimensional orthogonal resource hopping pattern collision among four channels c, j, l and s for explaining the determination of the final transmit signal using the method of FIG. 20a;

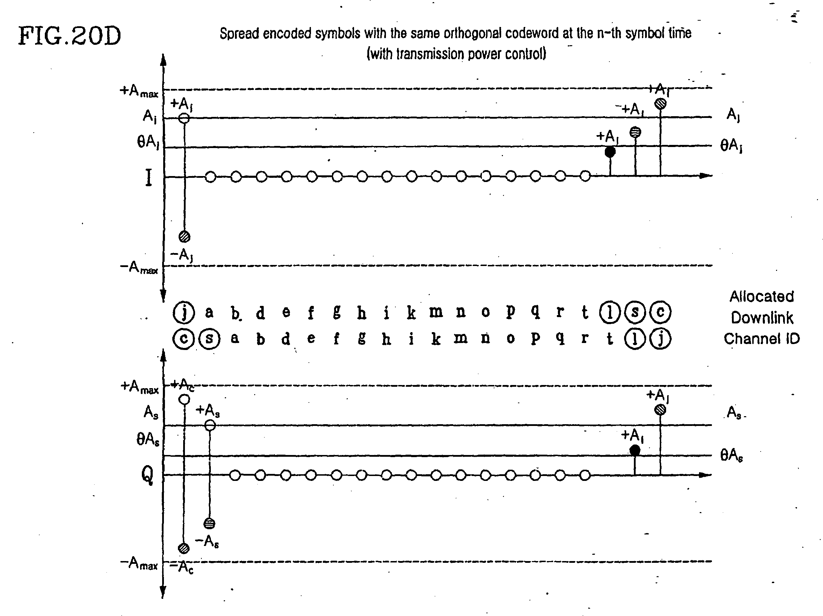

FIG. 20d shows a channel arrangement for comparing the amplitudes of channels selecting the orthogonal wireless resource unit in case of FIG. 20c;

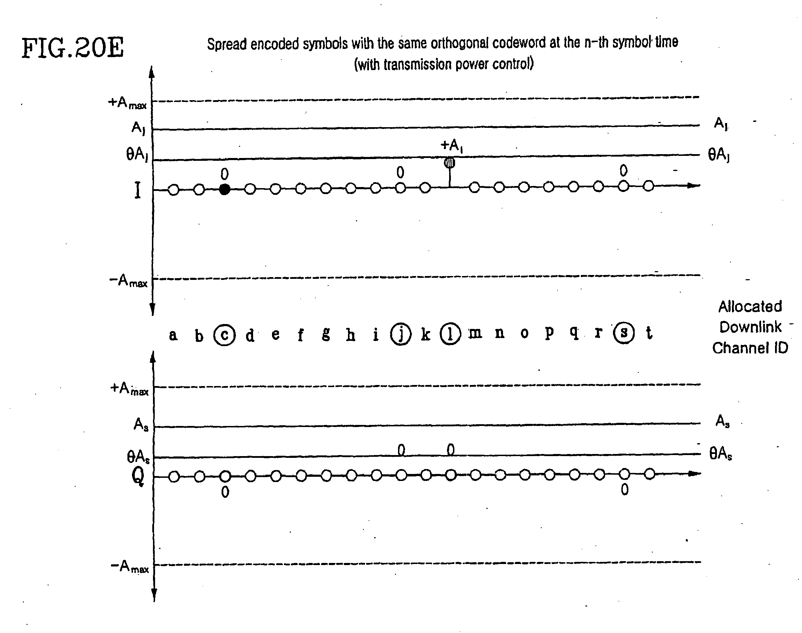

FIG. 20e illustrates the final transmit signal determined according to the algorithm of FIG. 20a in case of FIG. 20c;

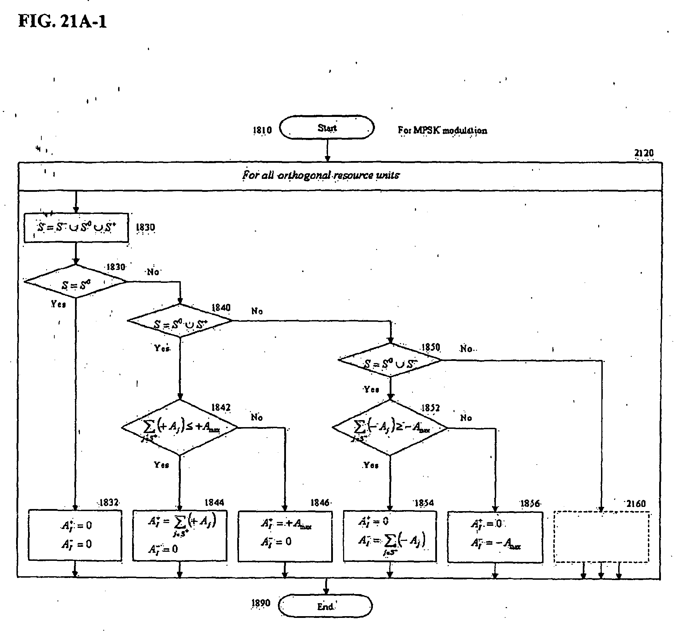

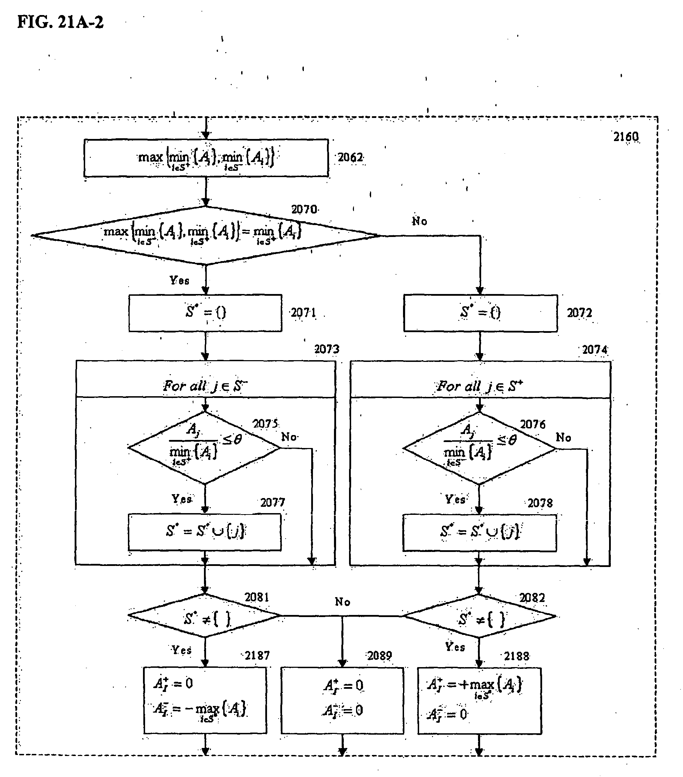

FIG. 21a is a flow chart showing the fourth method for determining a transmit signal by the respective orthogonal wireless resource units at a transmitter from the primary station to the secondary station according to an embodiment of the present invention;

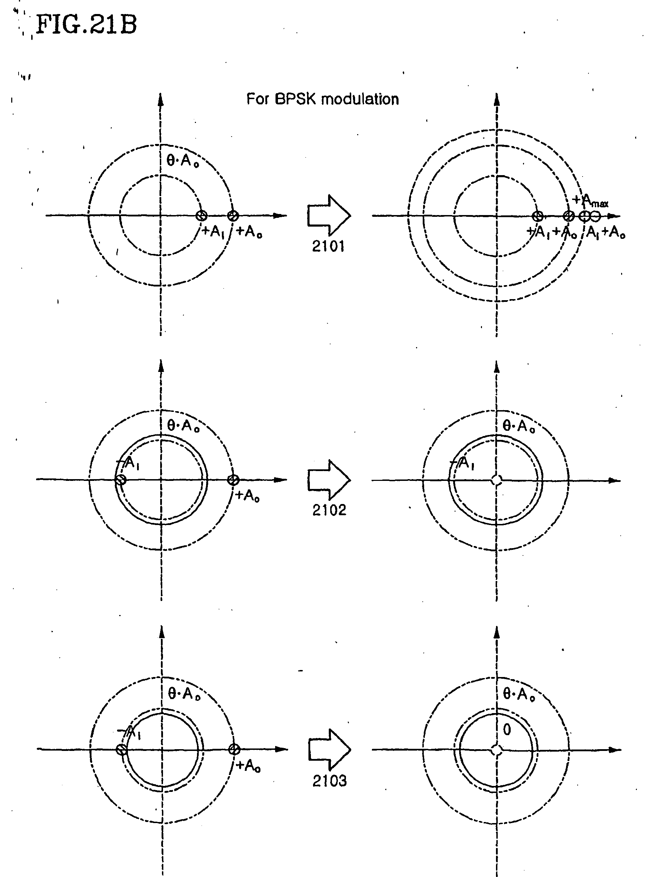

FIG. 21b illustrates the determination of the final transmit signal using the method of FIG. 21a in the case of a multidimensional orthogonal resource hopping pattern collision between two channels;

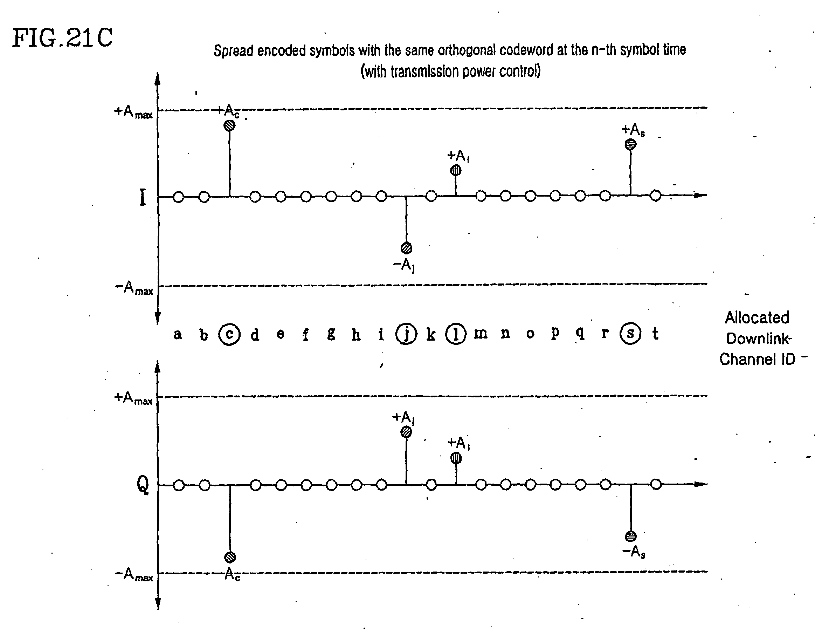

FIG. 21c illustrates a multidimensional orthogonal resource hopping pattern collision among four channels c, j, l and s for explaining the determination of the final transmit signal using the method of FIG. 21a;

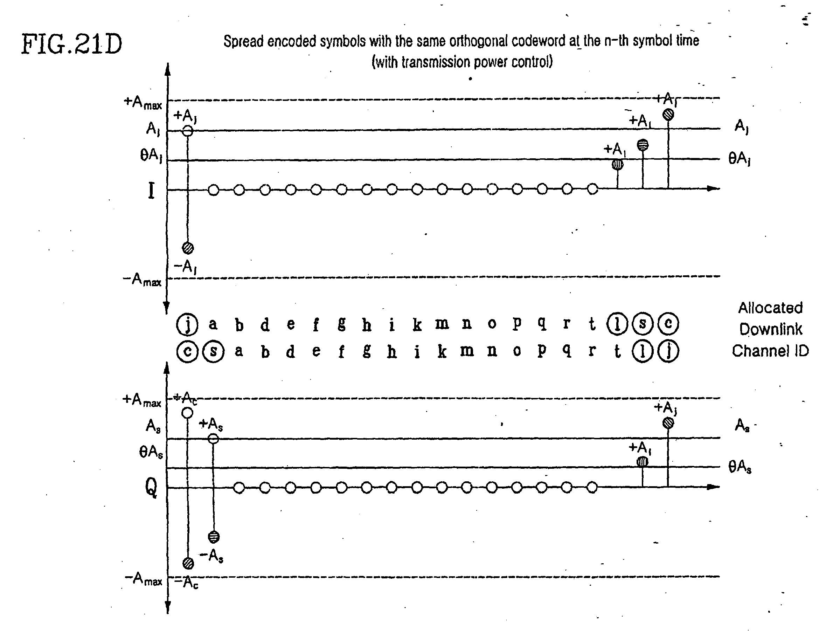

FIG. 21d shows a channel arrangement for comparing the amplitudes of channels selecting the orthogonal wireless resource unit in case of FIG. 21c;

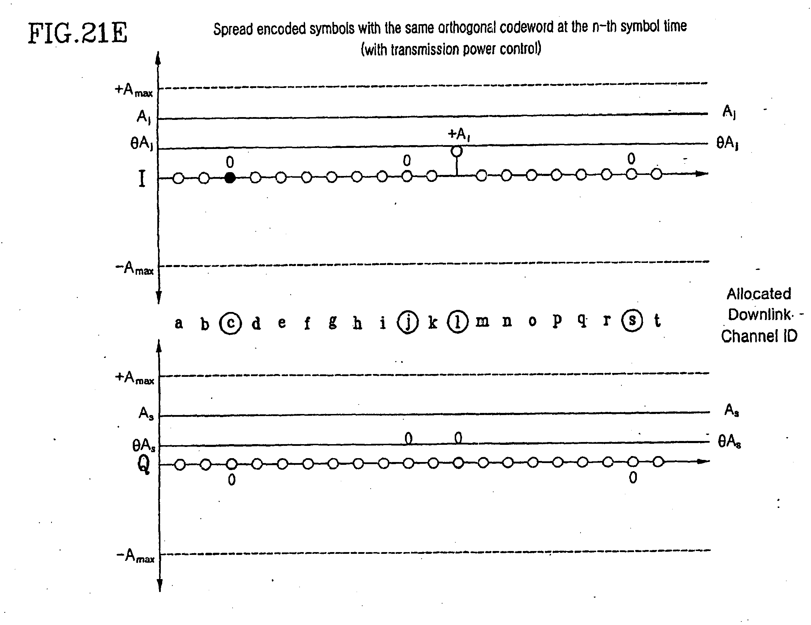

FIG. 21e illustrates the final transmit signal determined according to the algorithm of FIG. 21a in case of FIG. 21c;

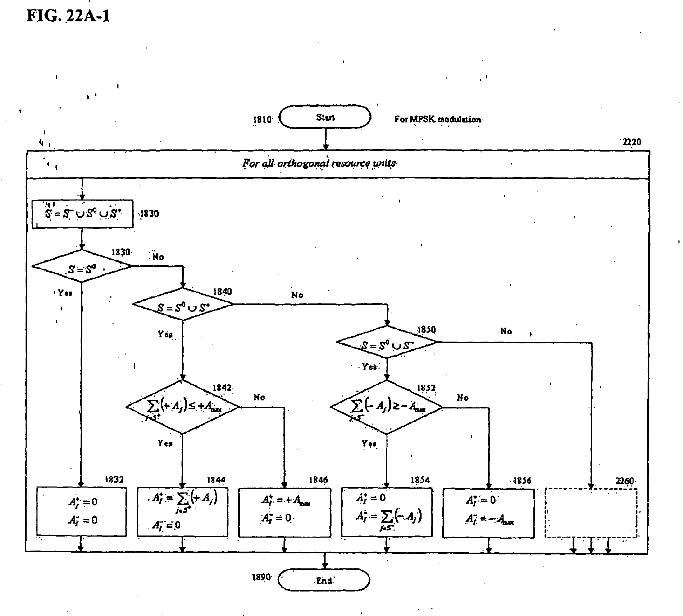

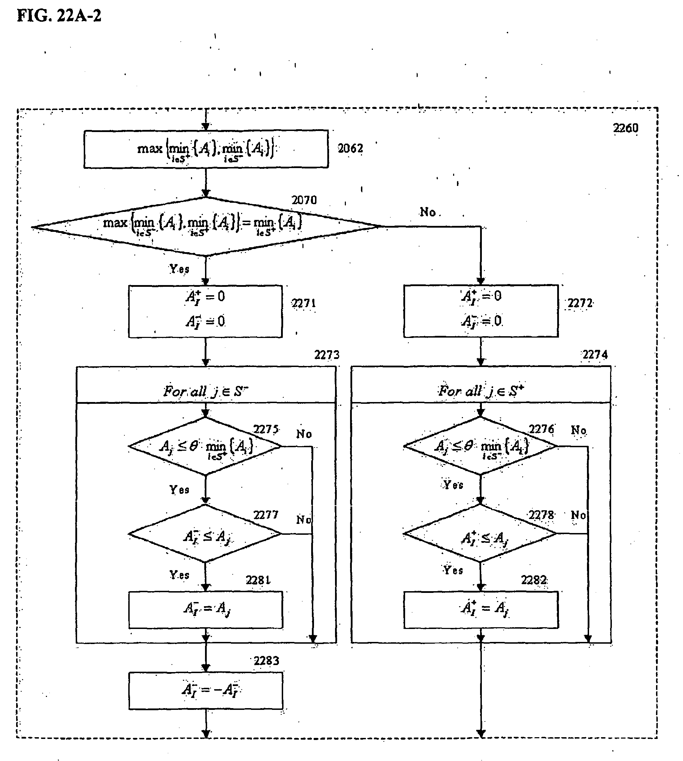

FIG. 22a is a flow chart showing the fifth method for determining a transmit signal by the respective orthogonal wireless resource units at a transmitter from the primary station to the secondary station according to an embodiment of the present invention;

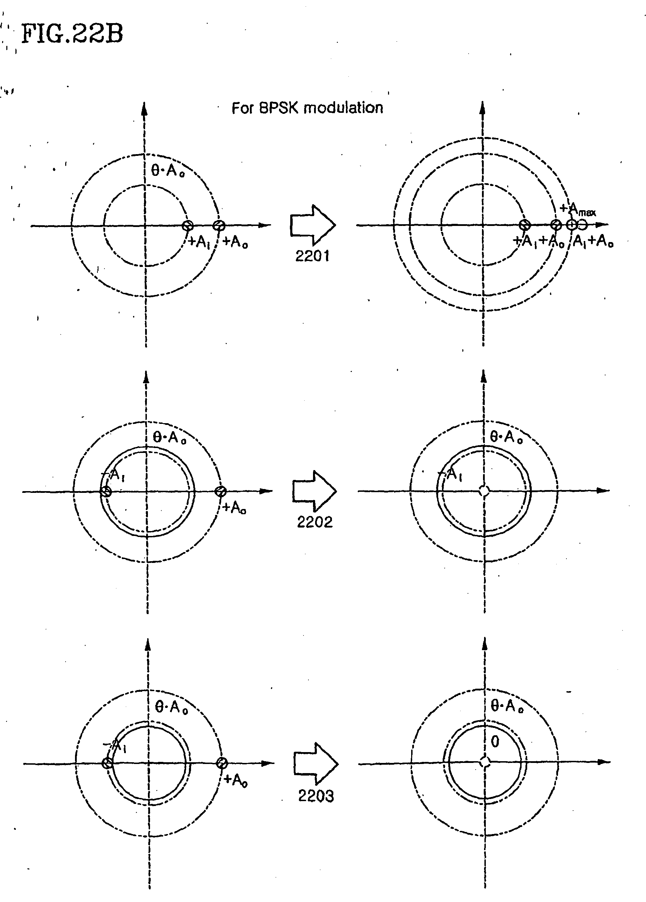

FIG. 22b illustrates the determination of the final transmit signal using the method of FIG. 22a in the case of a multidimensional orthogonal resource hopping pattern collision between two channels;

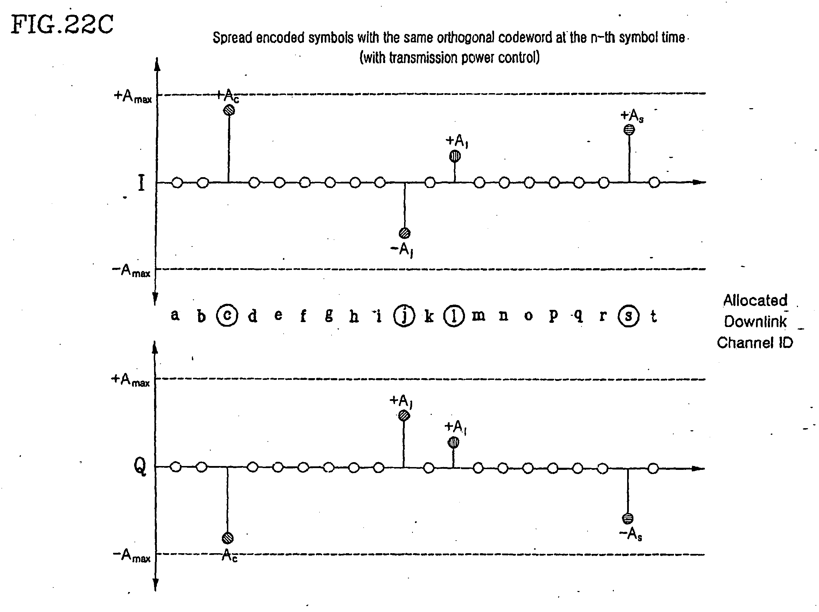

FIG. 22c illustrates a multidimensional orthogonal resource hopping pattern collision among four channels c, j, l and s for explaining the determination of the final transmit signal using the method of FIG. 22a;

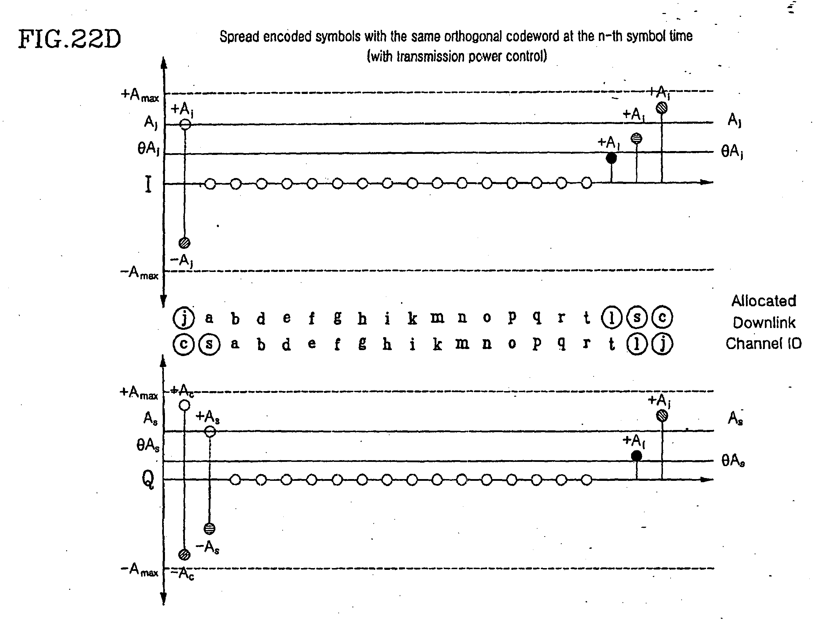

FIG. 22d shows a channel arrangement for comparing the amplitudes of channels selecting the orthogonal wireless resource unit in case of FIG. 22c;

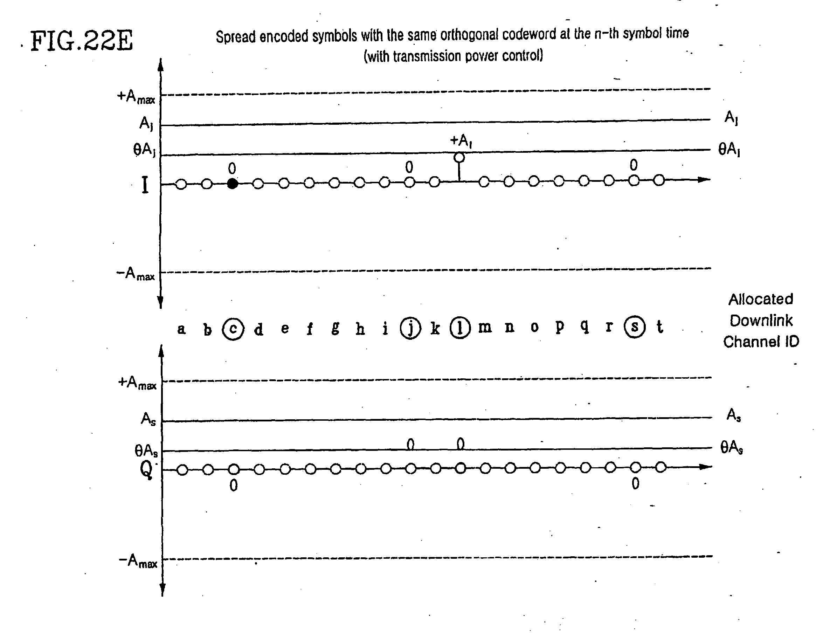

FIG. 22e illustrates the final transmit signal determined according to the algorithm of FIG. 22a in case of FIG. 22c;

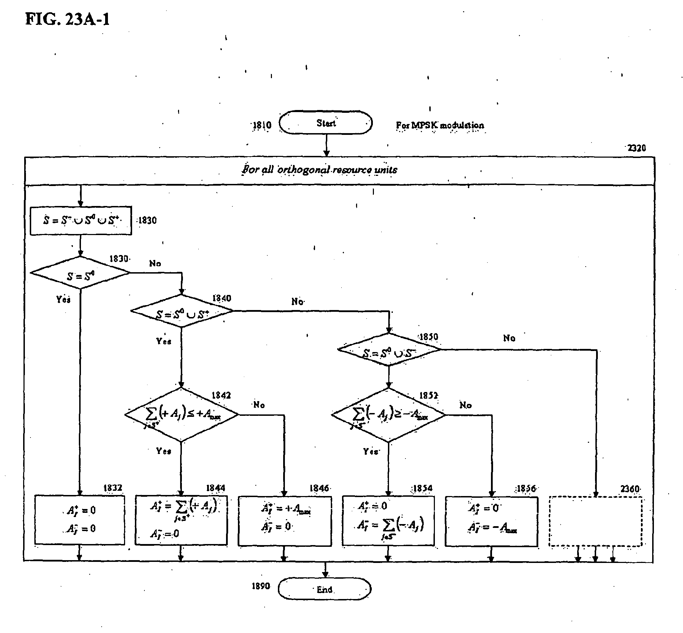

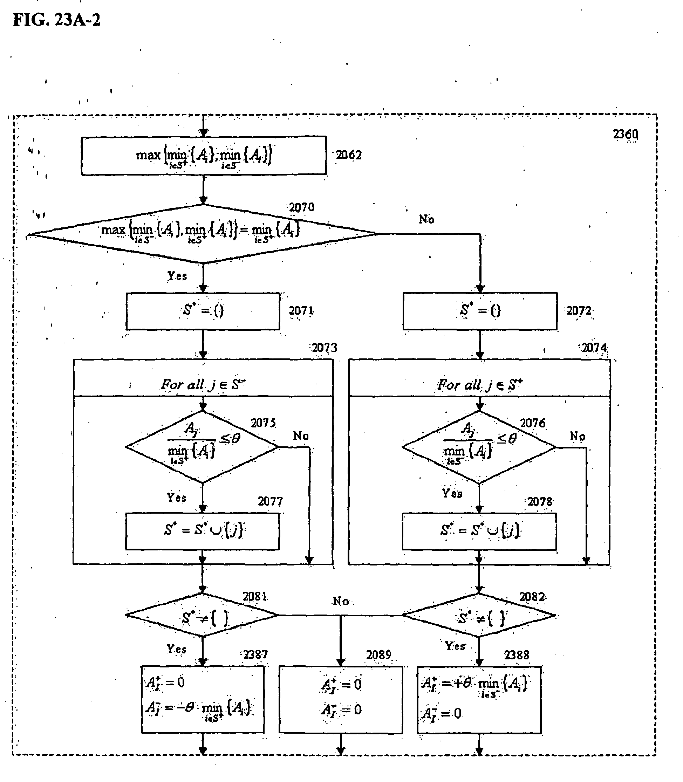

FIG. 23a is a flow chart showing the sixth method for determining a transmit signal by the respective orthogonal wireless resource units at a transmitter from the primary station to the secondary station according to an embodiment of the present invention;

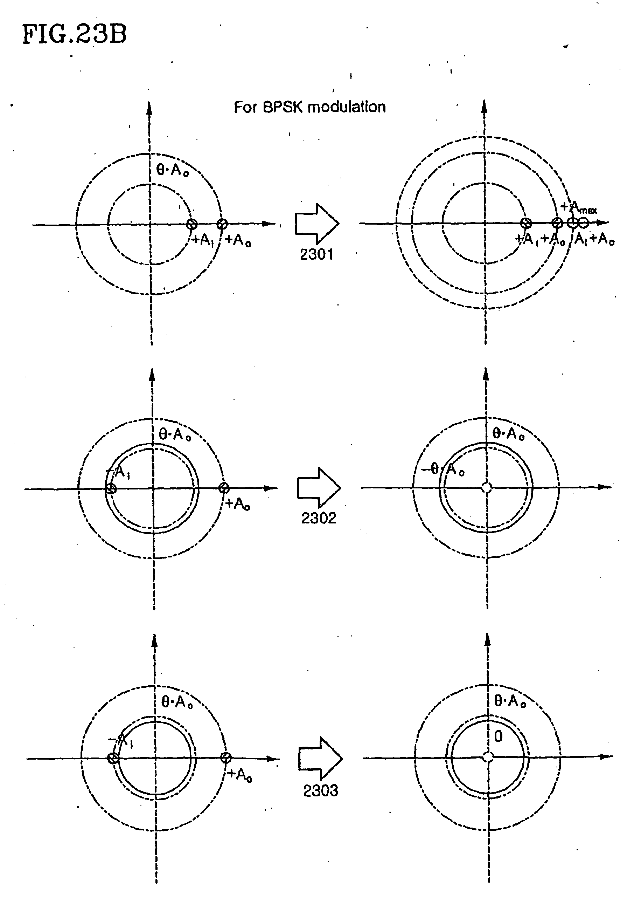

FIG. 23b illustrates the determination of the final transmit signal using the method of FIG. 23a in the case of a multidimensional orthogonal resource hopping pattern collision between two channels;

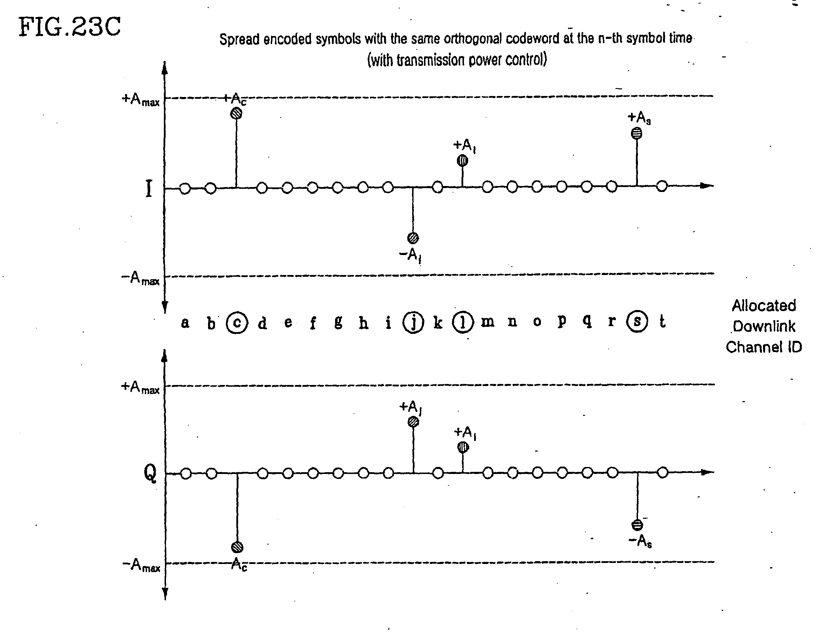

FIG. 23c illustrates a multidimensional orthogonal resource hopping pattern collision among four channels c, j, l and s for explaining the determination of the final transmit signal using the method of FIG. 23a;

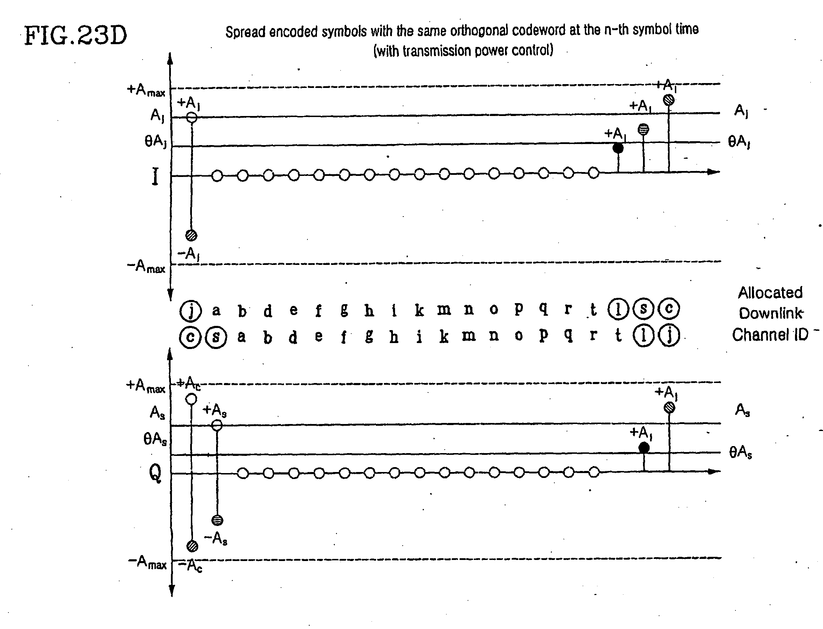

FIG. 23d shows a channel arrangement for comparing the amplitudes of channels selecting the orthogonal wireless resource unit in case of FIG. 23c;

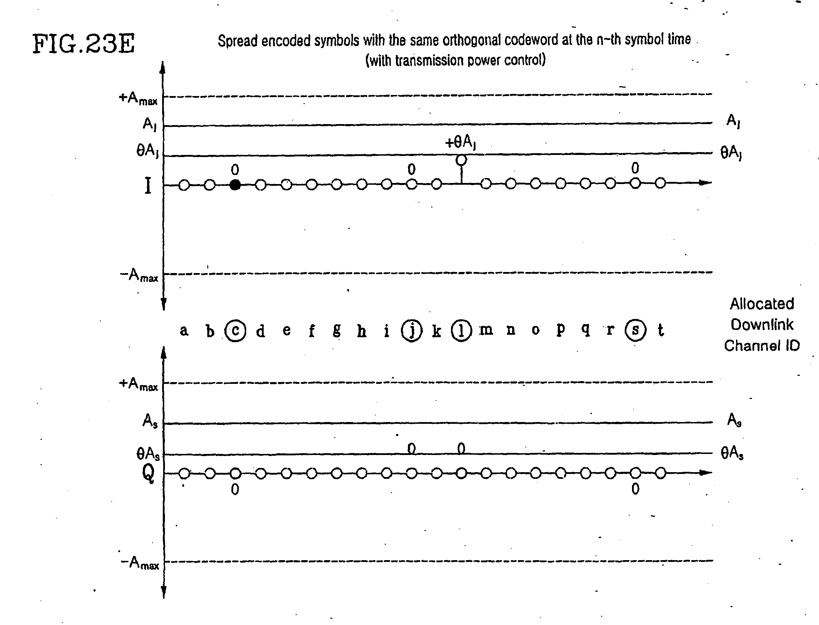

FIG. 23e illustrates the final transmit signal determined according to the algorithm of FIG. 23a in case of FIG. 23c;

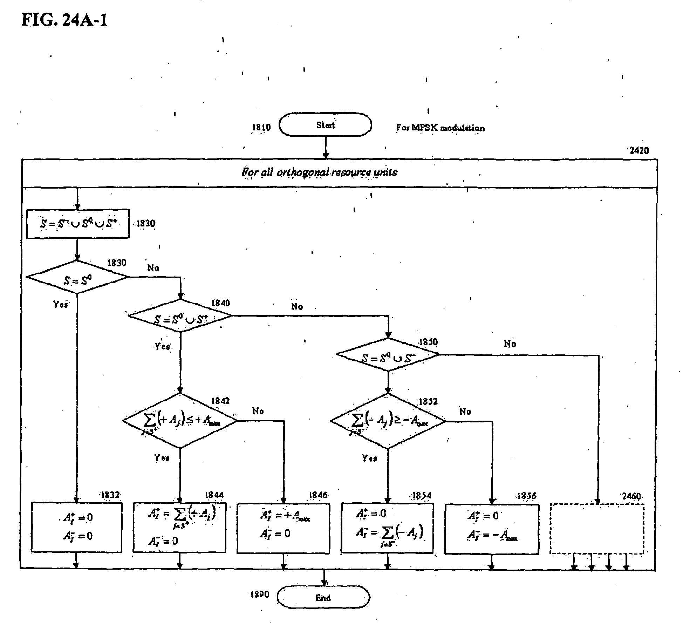

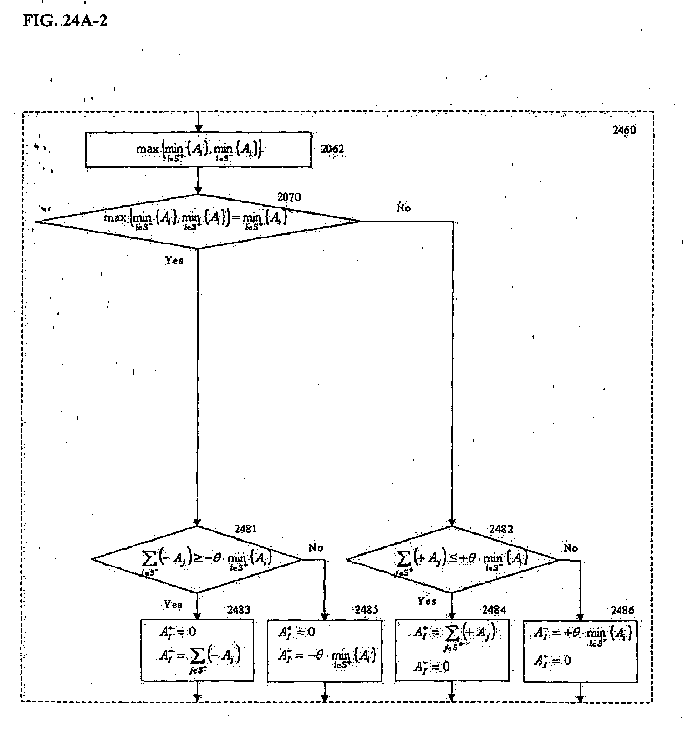

FIG. 24a is a flow chart showing the seventh method for determining a transmit signal by the respective orthogonal wireless resource units at a transmitter from the primary station to the secondary station according to an embodiment of the present invention;

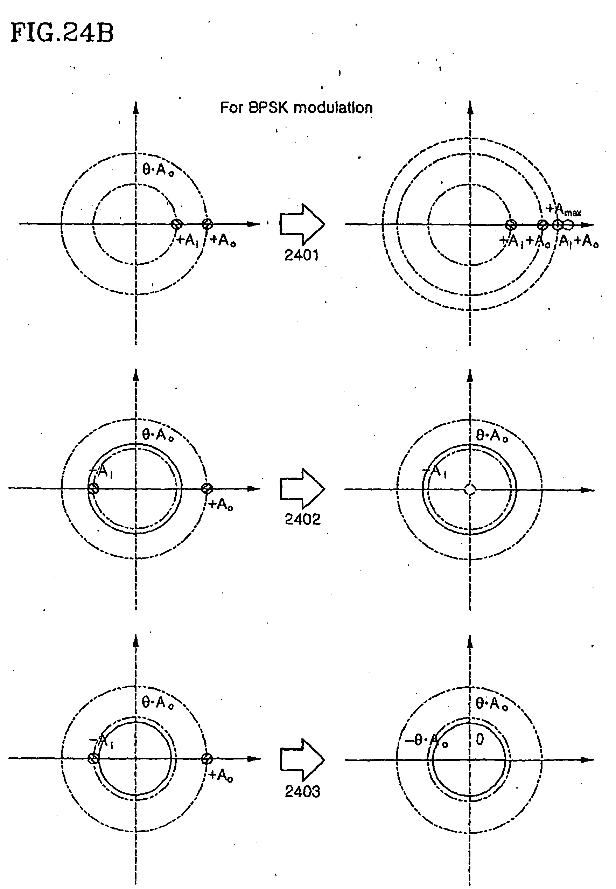

FIG. 24b illustrates the determination of the final transmit signal using the method of FIG. 24a in the case of a multidimensional orthogonal resource hopping pattern collision between two channels;

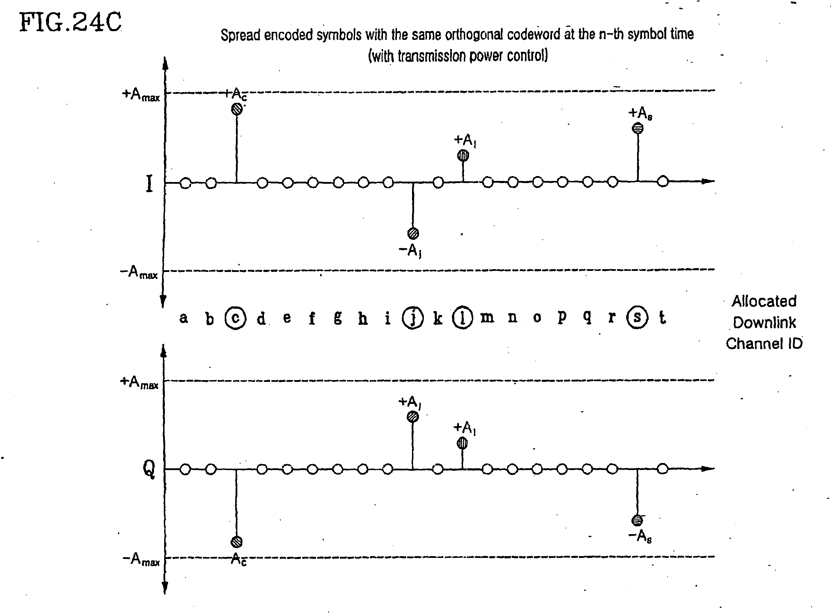

FIG. 24c illustrates a multidimensional orthogonal resource hopping pattern collision among four channels c, j, l and s for explaining the determination of the final transmit signal using the method of FIG. 24a;

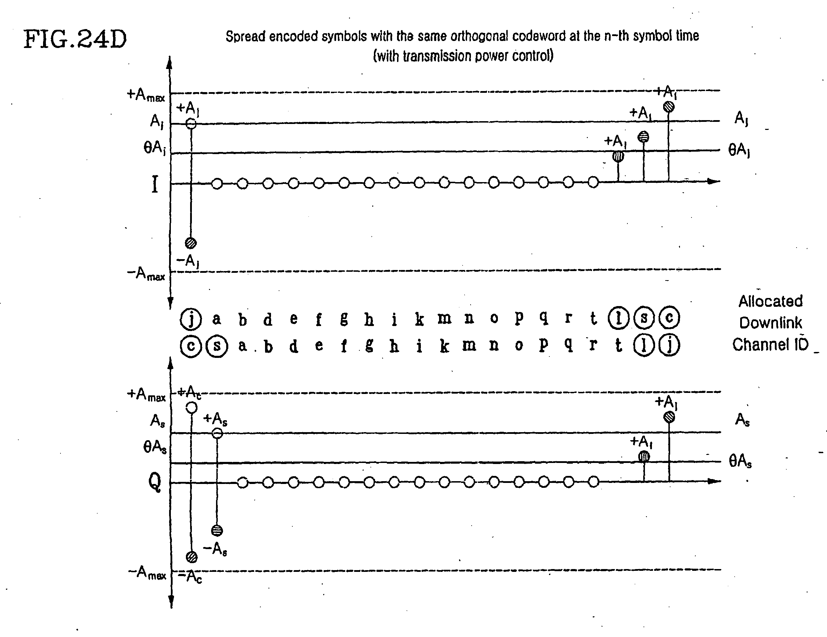

FIG. 24d shows a channel arrangement for comparing the amplitudes of channels selecting the orthogonal wireless resource unit in case of FIG. 24c;

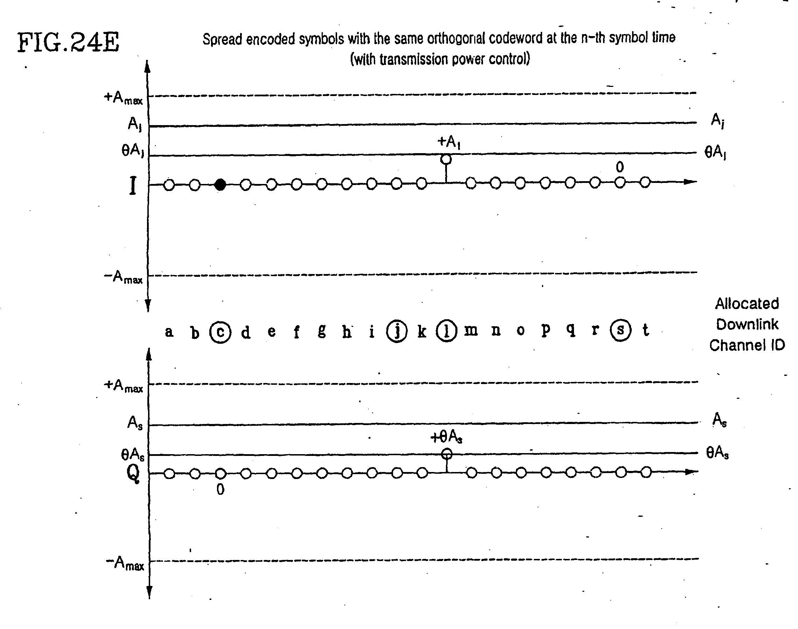

FIG. 24e illustrates the final transmit signal determined according to the algorithm of FIG. 24a in case of FIG. 24c;

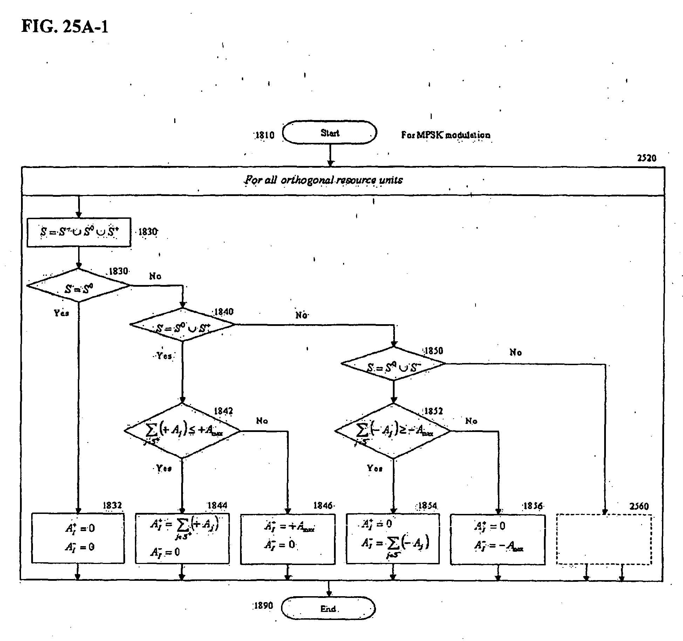

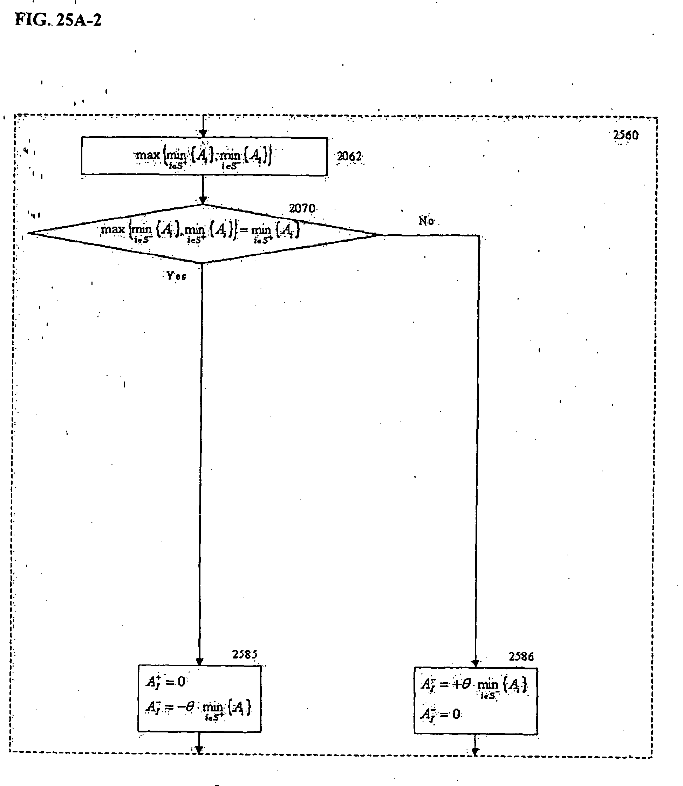

FIG. 25a is a flow chart showing the eighth method for determining a transmit signal by the respective orthogonal wireless resource units at a transmitter from the primary station to the secondary station according to an embodiment of the present invention;

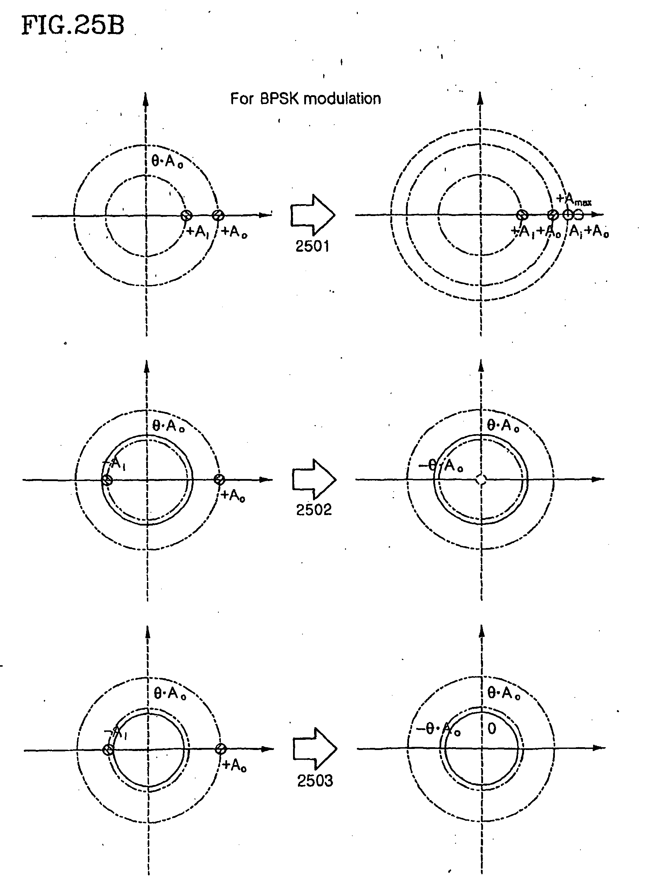

FIG. 25b illustrates the determination of the final transmit signal using the method of FIG. 25a in the case of a multidimensional orthogonal resource hopping pattern collision between two channels;

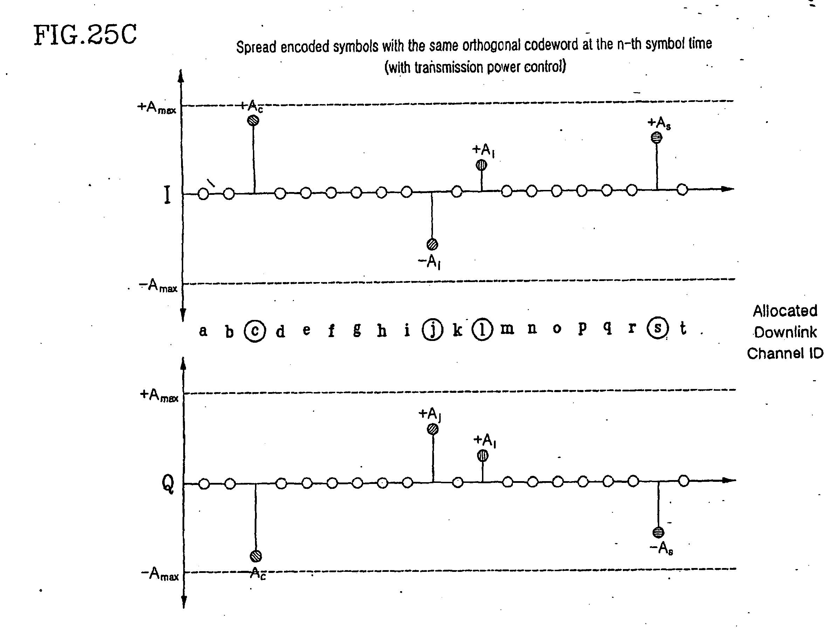

FIG. 25c illustrates a multidimensional orthogonal resource hopping pattern collision among four channels c, j, l and s for explaining the determination of the final transmit signal using the method of FIG. 25a;

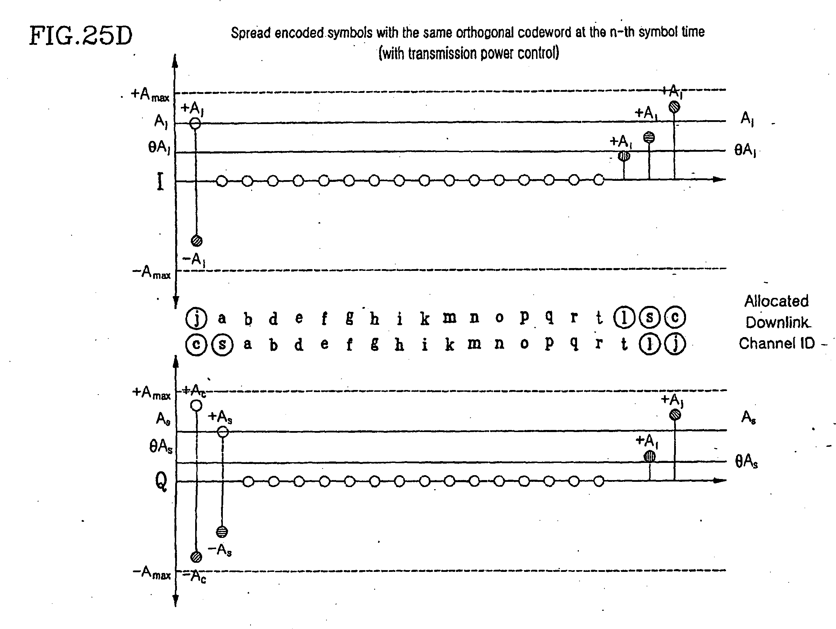

FIG. 25d shows a channel arrangement for comparing the amplitudes of channels selecting the orthogonal wireless resource unit in case of FIG. 25c;

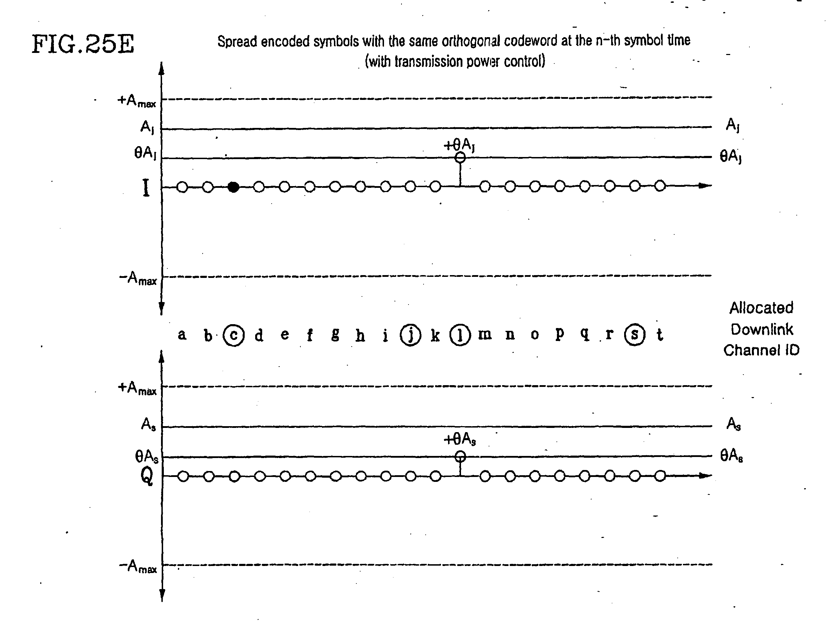

FIG. 25e illustrates the final transmit signal determined according to the algorithm of FIG. 25a in case of FIG. 25c;

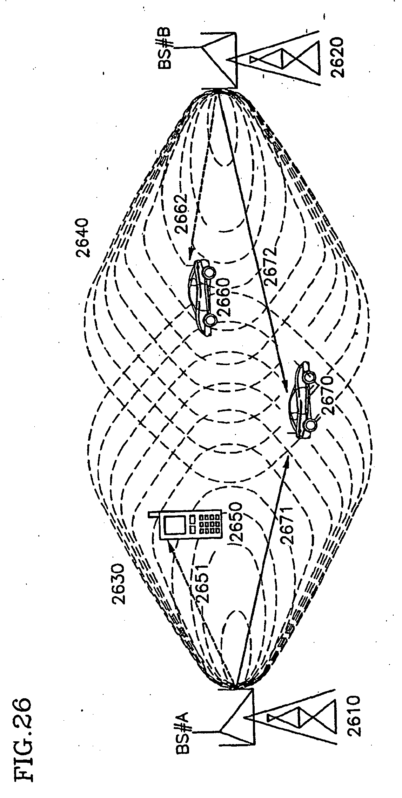

FIG. 26 illustrates that a transmitter from the primary station to the secondary station uses a soft hand-off to compensate for the disadvantageous aspect of the first to eighth transmit signal determination methods by the respective orthogonal wireless resource units on a secondary station positioned at an area (e.g., a cell boundary) having a relatively weak received signal from the primary station in accordance with an embodiment of the present invention;

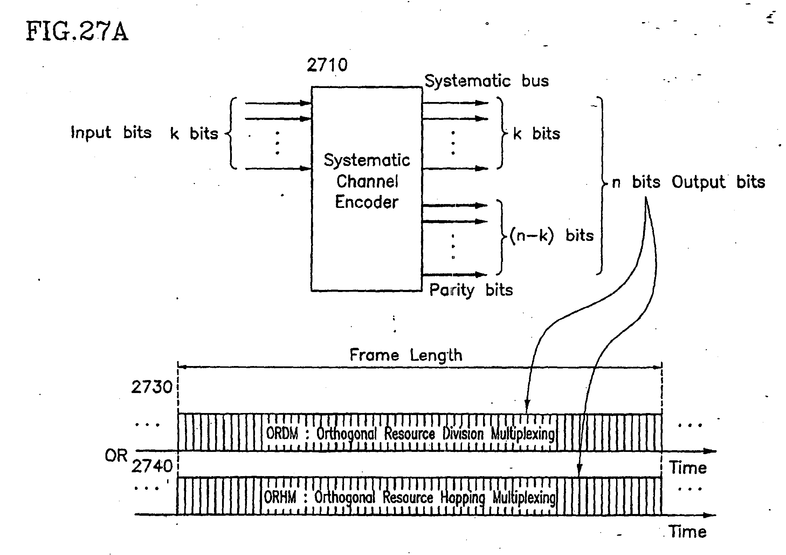

FIG. 27a illustrates an example of the prior art and an embodiment of the present invention for orthogonal resource division multiplexing of all output bits from a systematic channel encoder without distinguishing systematic bits, which are the same as input bits, from parity bits generated from a channel encoder;

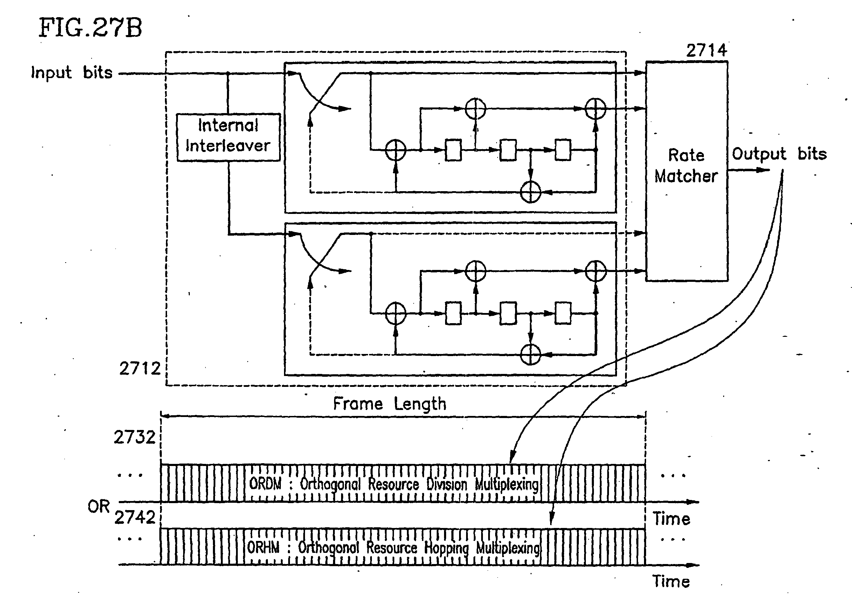

FIG. 27b illustrates, as the embodiment of FIG. 27a, an example of the prior art and an embodiment of the present invention for orthogonal resource hopping multiplexing of all output bits from a turbo encoder;

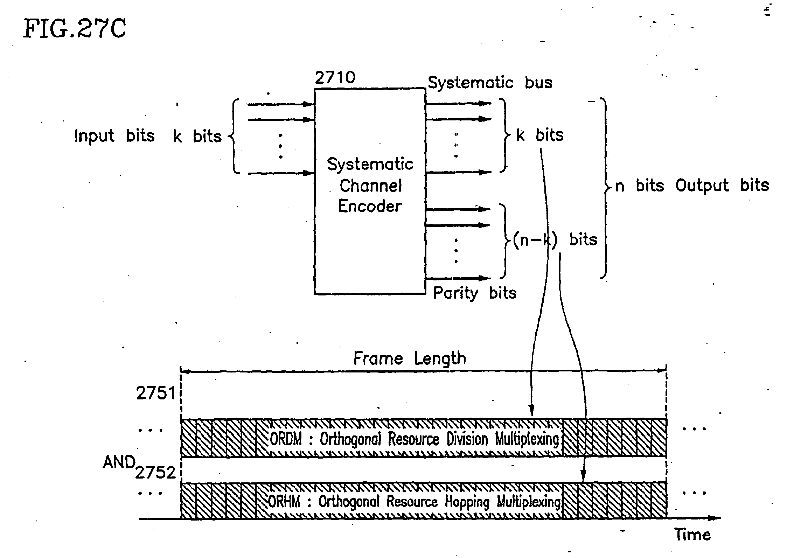

FIG. 27c illustrates that the systematic bits, which are the same as input bits, among the output bits of the systematic channel encoder are subject to an orthogonal resource division multiplexing, the parity bits generated from the systematic channel encoder being subject to an orthogonal resource hopping multiplexing;

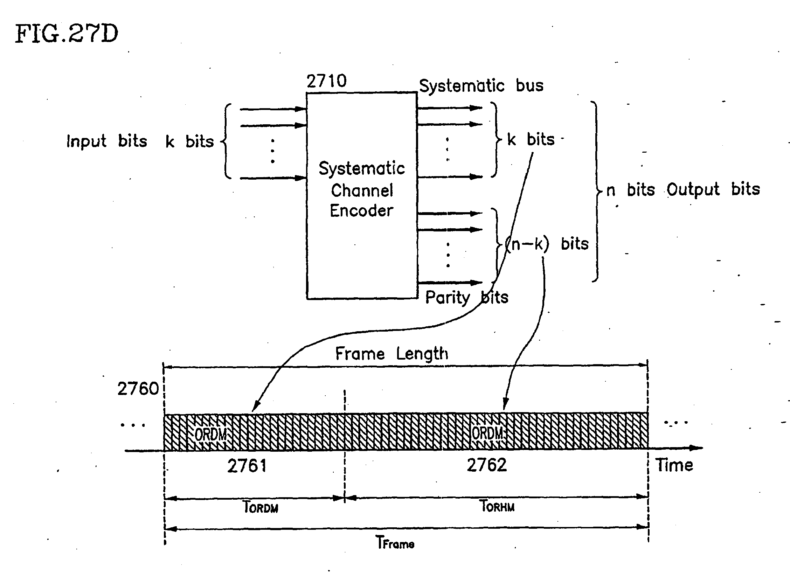

FIG. 27d illustrates the embodiment of FIG. 27c that temporally distinguishes an orthogonal resource division multiplexing region from an orthogonal resource hopping multiplexing region;

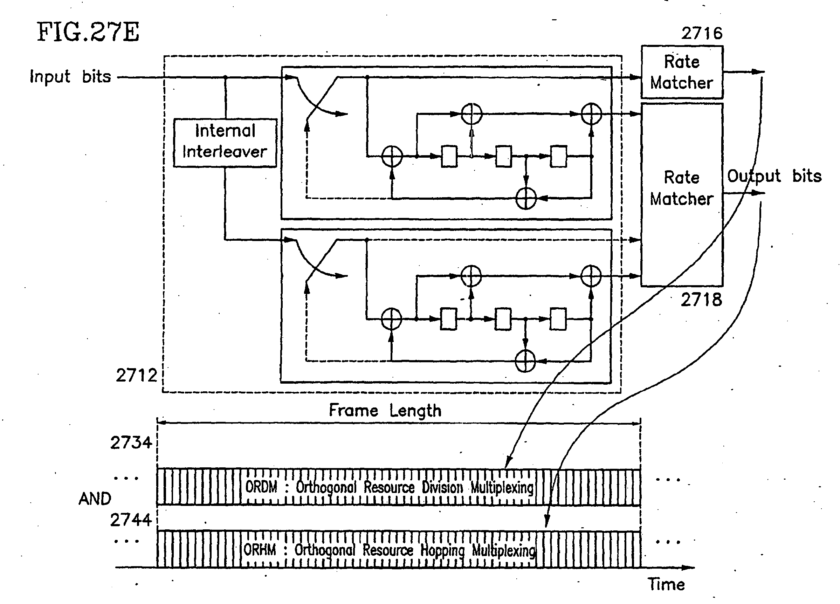

FIG. 27e illustrates that the systematic bits, which are the same as input bits, among the output bits of the turbo encoder are subject to an orthogonal resource division multiplexing, the parity bits generated from the systematic channel encoder being subject to an orthogonal resource hopping multiplexing;

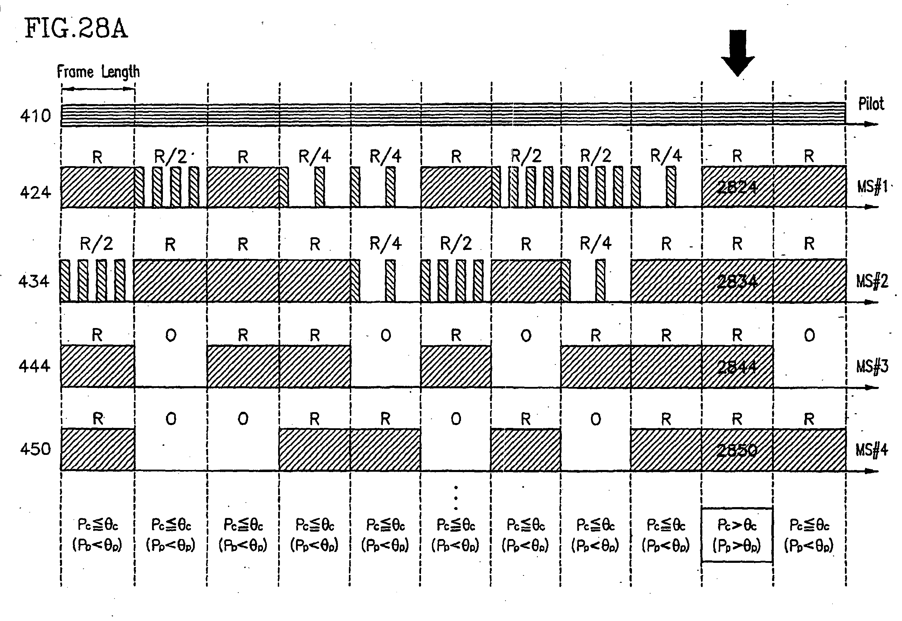

FIG. 28a illustrates in FIG. 4c that the collision probability or the perforation probability of frame-based multidimensional orthogonal resource hopping patterns are compared with a reference value in accordance with an embodiment of the present invention;

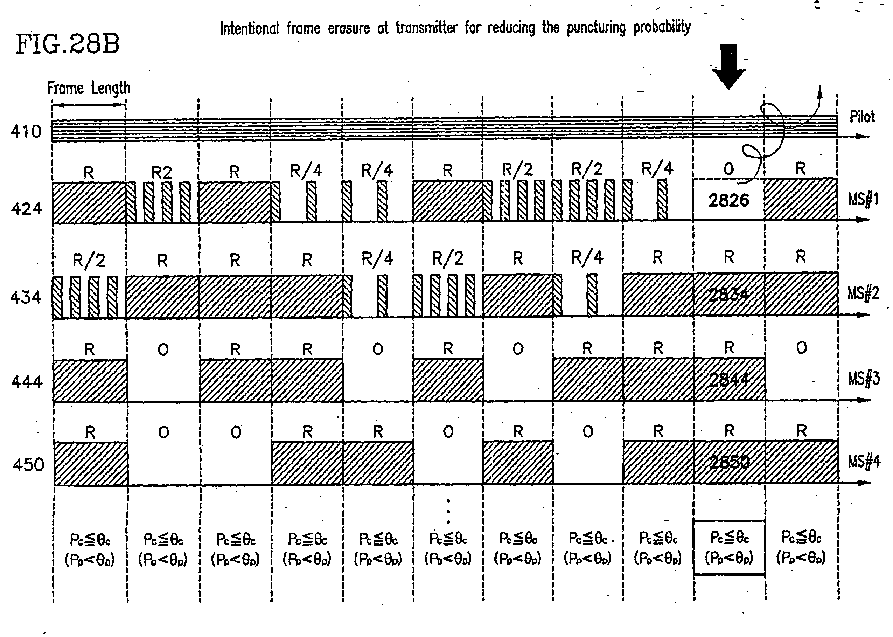

FIG. 28b illustrates that the primary station intentionally does not transmit the whole or a part of the transmit frame to a least influenced secondary station so that the collision probability or the puncturing probability of the multidimensional orthogonal resource hopping pattern should be less than the reference value;

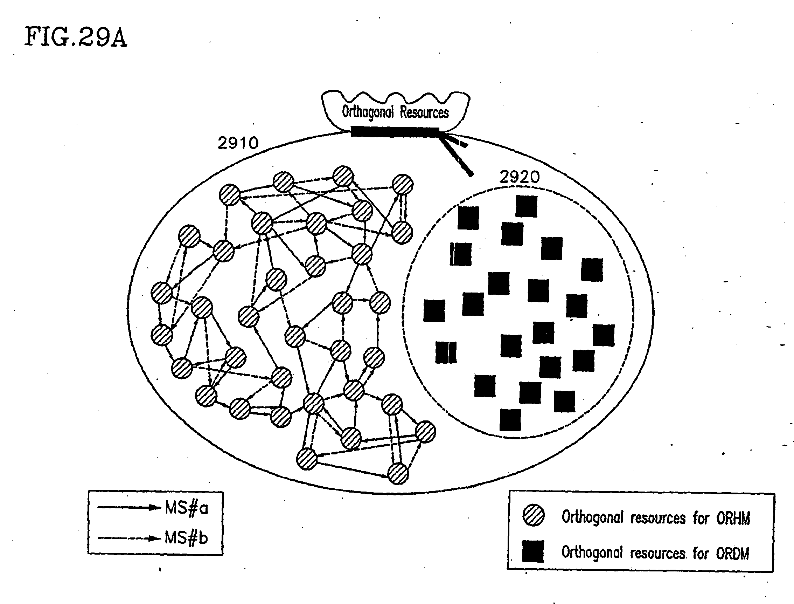

FIG. 29a illustrates that orthogonal wireless resource units for multidimensional orthogonal resource hopping multiplexing in a broad sense according to an embodiment of the present invention are divided into a set of orthogonal wireless resource units for orthogonal resource hopping multiplexing in a narrow sense and a set of orthogonal wireless resource units for orthogonal resource division multiplexing;

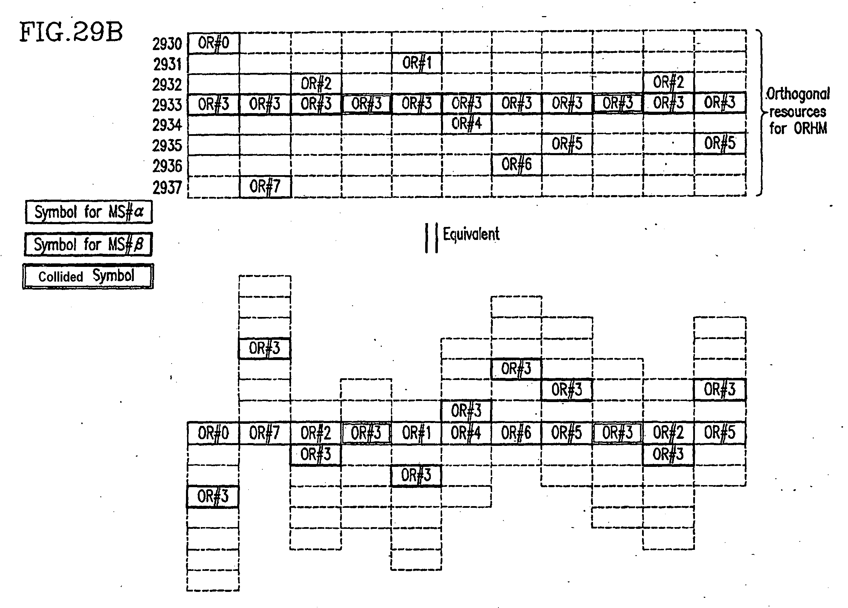

FIG. 29b illustrates that the channel with a fixedly allocated orthogonal wireless resource unit for multidimensional orthogonal resource hopping multiplexing in a narrow sense according to an embodiment of the present invention is relative to a channel with an orthogonal wireless resource unit allocated according to a hopping pattern;

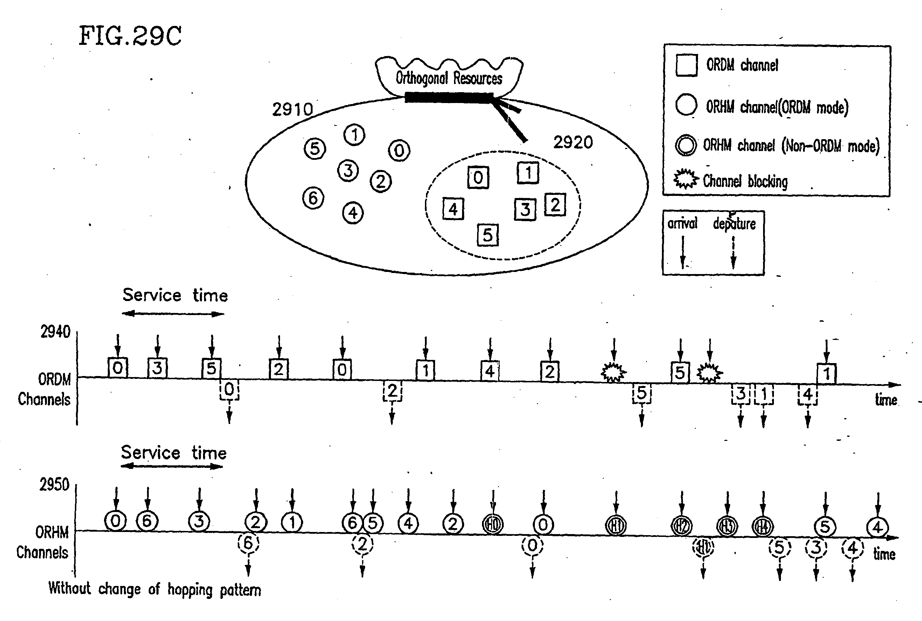

FIG. 29c is a conceptual diagram sequentially showing the steps of channel request, wireless resource allocation and channel termination in the orthogonal resource division multiplexing according to an embodiment of the prior art and the multidimensional orthogonal resource hopping multiplexing according to an embodiment of the present invention;

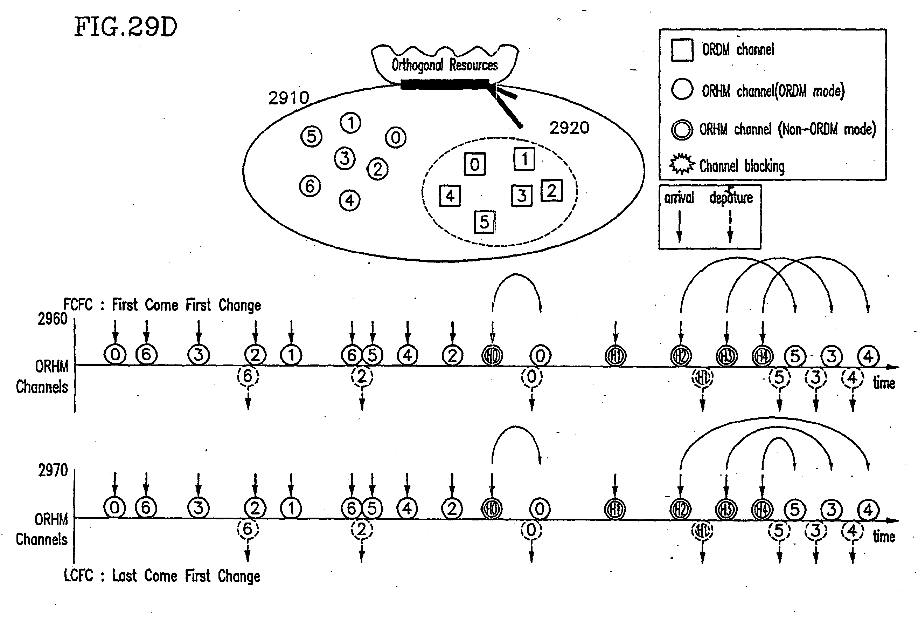

FIG. 29d is a conceptual diagram sequentially showing the steps of channel request, wireless resource allocation and channel termination in the multidimensional orthogonal resource hopping multiplexing in a narrow sense according to another embodiment of the present invention;

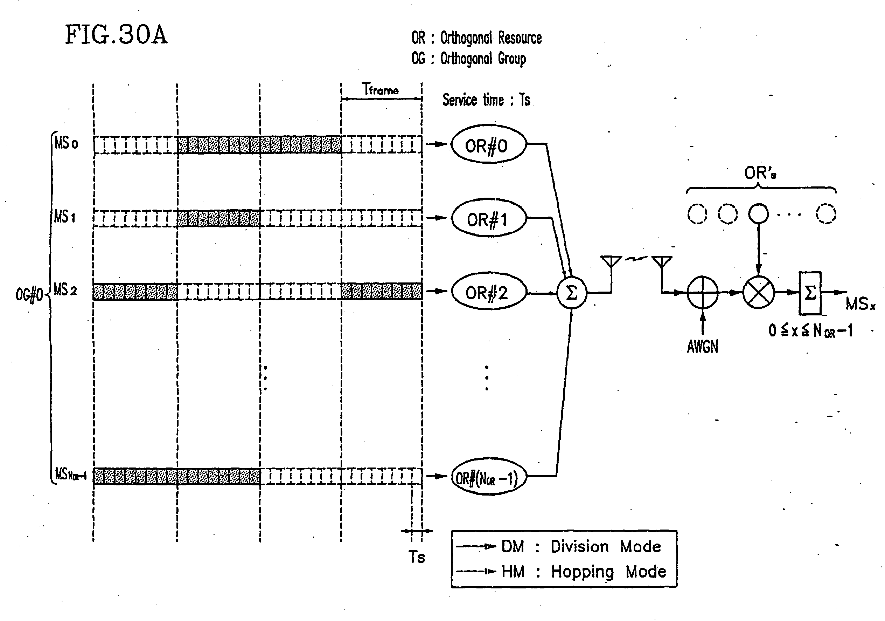

FIG. 30a is a conceptual diagram of a division mode in the multidimensional orthogonal resource hopping multiplexing in a narrow sense according to an embodiment of the present invention;

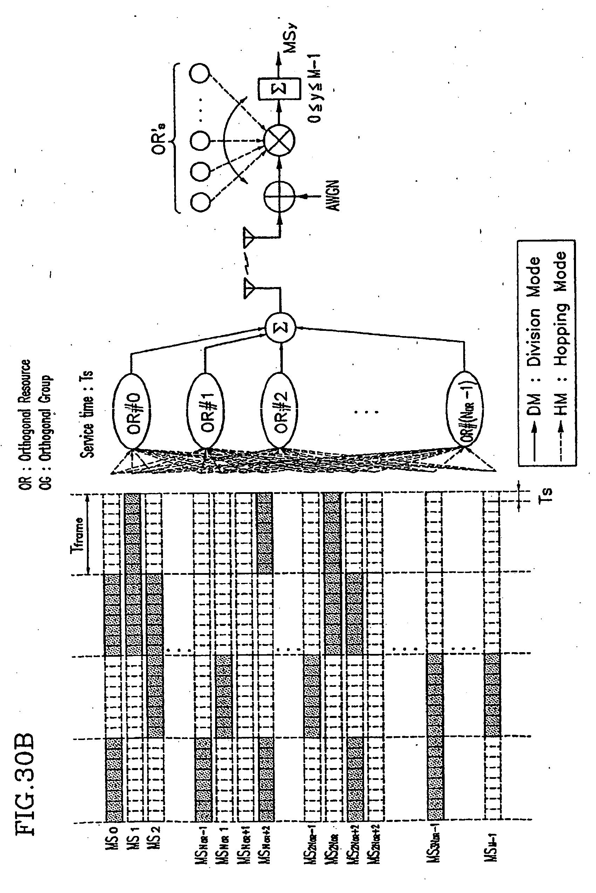

FIG. 30b is a conceptual diagram of a hopping mode in a hopping mode in the multidimensional orthogonal resource hopping multiplexing in a narrow sense according to an embodiment of the present invention;

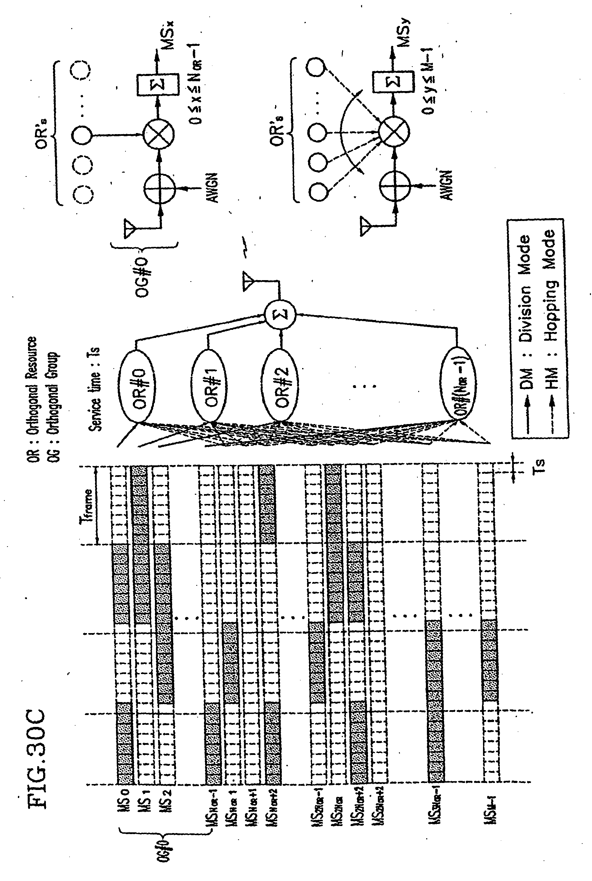

FIG. 30c is a conceptual diagram of a hybrid mode in the multidimensional orthogonal resource hopping multiplexing in a narrow sense according to an embodiment of the present invention;

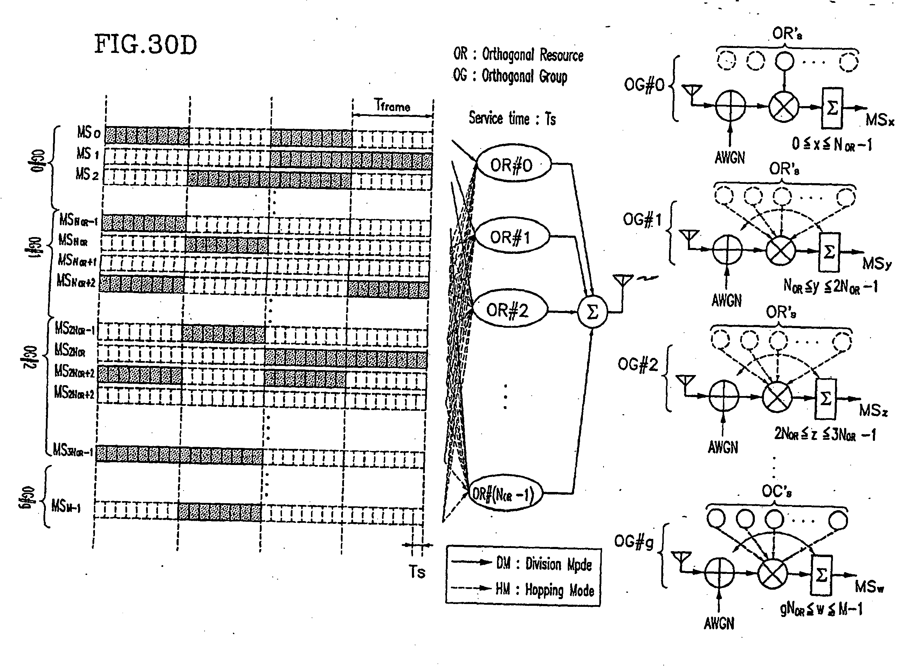

FIG. 30d is a conceptual diagram of a group mode for a single channel in the multidimensional orthogonal resource hopping multiplexing in a narrow sense according to an embodiment of the present invention; and

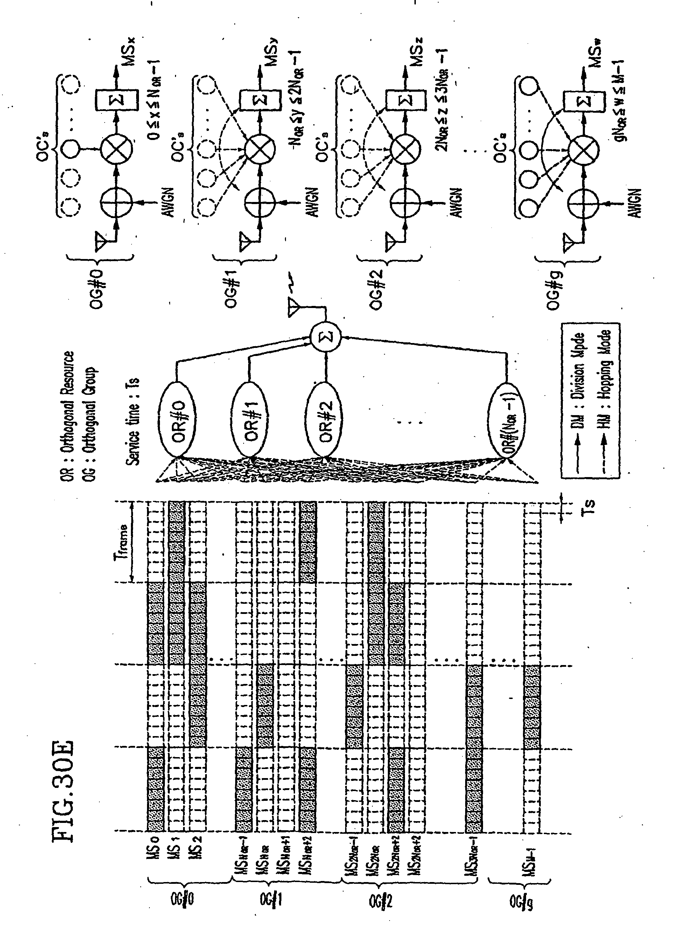

FIG. 30e is a conceptual diagram of a group mode for multiple channels in the multidimensional orthogonal resource hopping multiplexing in a narrow sense according to an embodiment of the present invention.

### DETAILED DESCRIPTION OF THE PREFERRED EMBODIMENTS

In the following detailed description, some parts named "embodiment" are merely examples instead of true embodiments in the sense of the invention as claimed. Only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

Although the embodiment of the present invention has been described specifically in regard to a wireless mobile communication system, statistical multiplexing proposed in the present invention is applicable to wire communication systems as well as wireless communication systems.

In the description of the embodiment of the present invention, the same reference numbers are assigned to the same parts as in the example of the prior art. The corresponding parts have been described previously, so that the embodiment of the present invention will be described primarily in regard to the parts to be modified or added.

FIG. 9a shows the structure of sparse channels for multidimensional orthogonal resource hopping multiplexing, in which the structure is the same as described in the prior art, except that a transmit power control command for a secondary station is punctured and inserted.

There are two types of communications, bidirectional communication and unidirectional communication. The transmit power control command for the secondary station is not necessarily transmitted in the unidirectional communication system. But the transmission power control is necessary to the bidirectional communication system, in which an efficient power control can maximize the system capacity.

For fast processing, the power control command is not channel-encoded in many cases. Due to a random orthogonal code hopping pattern, a collision of different channels inevitably occurs.

Thus the power control command must be transmitted through non-collided channels. For this purpose, the present invention introduces the concept of a common power control channel used in a candidate technology of the IMT-2000 system, cdma2000 and the non-collided channels are referred to as "common physical control channel (CPCCH)" in this description.

The CPCCH is spread with a separate orthogonal code symbol as the pilot channel and used to transmit the control command of the physical hierarchy by time division multiplexing for a plurality of secondary stations. The position of the power control command for each secondary station is allocated during a call set-up. FIG. 9a illustrates an embodiment of the CPCCH that controls, for example, 24 secondary stations in the IS-95 (cdmaOne) system. When the channel from the primary station to each secondary station has a variable transmission rate less than or equal to a basic transmission rate R, the information decided to be necessarily transferred without a collision is subject to time division multiplexing and transmitted through a common control channel as the transmit power control command of the secondary station. Without information about the actual transmission rate, the receiver determines the actual transmit data rate sequentially by channel decoding and CRC checking for all the combinations available. The combinations available are usually negotiated between the primary station and each secondary station during the initial call set-up. FIG. 9b is a signal diagram of a common physical control channel (CPCCH) according to an embodiment of the present invention, in which the CPCCH includes a CPCCH#1 for the primary station transferring a transmit power control command of the secondary station and a CPCCH#2 for transferring the transmit data rate information of the primary station.

FIG. 10a shows an embodiment method adapting the present invention to the example of the prior art shown in FIG. 3a. For statistical multiplexing based on the multidimensional orthogonal resource hopping multiplexing proposed in the present invention, there is used a collision detector and controller 384 for detecting a collision of multidimensional hopping patterns formed from a multidimensional hopping pattern generator 380 and caused by generation of channel-independent hopping patterns and properly controlling the collision. An example of the multidimensional hopping pattern generator is illustrated in FIG. 11. The multidimensional hopping pattern generator of FIG. 11 has a structure of generating a multidimensional hopping pattern with a general PN sequence generator. The multidimensional hopping pattern can also be realized by another method. The multidimensional hopping pattern may include one-dimensional hopping patterns (e.g., frequency, transmission time, orthogonal code, etc.) two-dimensional hopping patterns (e.g., frequency/transmission time, frequency/orthogonal code, transmission time/orthogonal code, etc.) or three-dimensional hopping patterns (e.g., frequency/transmission time/orthogonal code, etc.). In the system development step, it is designed that only a part of the orthogonal resources are involved in hopping and the others are fixedly allocated. Alternatively, all the orthogonal resources are involved in the hopping multiplexing and then only a part of the orthogonal resources are involved in the hopping multiplexing based on a control command. According to the multidimensional hopping pattern generator 380, there are needed a frequency synthesizer for frequency hopping 388, buffers for transmission time hopping 392 and 393, or an orthogonal code generator 382 for generating spreading orthogonal code symbols for orthogonal code hopping.

For the carriers or subcarriers generated from the frequency synthesizer 388, the number of bits representing the coordinate value on the frequency axis for the output of the multidimensional hopping pattern generator 380 is different depending on the number of (sub)carriers used in the frequency hopping, as shown in FIG. 12a. Among the outputs of the hopping pattern generator 380, the signal corresponding to the coordinate value on the frequency axis is fed into the frequency synthesizer 388 to generate a defined (sub)carrier according to the input value. Unlike time hopping or orthogonal code hopping in which the frequency of the carrier is not variable, the frequency hopping in the multidimensional orthogonal resource hopping multiplexing system has a change in the frequency of the carrier, making it difficult to achieve channel estimation and phase compensation at the receiver. Accordingly, the frequency hopping multiplexing using subcarriers related to MCs (Multi-Carriers) as carriers capable of hopping is readily realized when multi-carriers are basically provided and channel estimation for the respective carriers is independently achieved at the receiver in parallel as in the MC method of the cdma2000 system.

The buffers for transmission time hopping 392 and 393 receive the signal corresponding to the coordinate value on the time axis among the outputs of the multidimensional hopping pattern generator 380, and the transmission position of the data in the buffers is determined as shown in FIG. 12c according to the input value. In FIG. 12c, "1" means the presence of transmit data and "0" means the absence of transmit data. FIG. 12d shows an example that the transmit data has 16 probable positions (PPs) in FIG. 12c. In the multidimensional orthogonal resource hopping multiplexing, transmission time hopping is achieved in the unit of transmit symbols rather than frames or time slots using the basic transmission rate R as an instantaneous transmission rate in order to maximize statistical multiplexing and readily search communication channels to the secondary stations. The symbol-based hopping in one frame makes it easy to search the change of the channel at the receiver of the secondary station, because the transmit symbols are distributed in the frame uniformly from the aspect of probability.

The orthogonal code generated from the orthogonal code generator 382 may be any orthogonal code maintaining orthogonality, such as an orthogonal gold code generated from the orthogonal gold code generator shown in FIG. 12e or an OVSF (Orthogonal Variable Spreading Factor) code of a hierarchical structure that becomes a Walsh code for a specific spreading factor as shown in FIG. 12f. The orthogonal code division multiplexing is the same as the prior art, only if the coordinates on the orthogonal code axis among the outputs of the multidimensional hopping pattern generator 380 are fixed. With one orthogonal code divided into two orthogonal code symbol groups, the one orthogonal code symbol group is used for orthogonal code division multiplexing by a fixed allocation and the other orthogonal code symbol group is used for orthogonal code hopping multiplexing by a hopping pattern. Alternatively, the one orthogonal code symbol group is used for orthogonal code hopping multiplexing using an intentional selected hopping pattern so as not to cause a hopping pattern collision, and the other orthogonal code symbol group is used for orthogonal code hopping multiplexing based on the statistical multiplexing using channel-independent hopping patterns possibly causing a hopping pattern collision. The former case involves allocation to relative important transmit data or high-activity channels, while the latter case involves allocation to channels causing a relatively sparse traffic, thereby acquiring a statistical multiplexing gain. When using a hierarchical orthogonal code supporting a variable spreading gain as in FIG. 12f as a spreading code, it is desirable in the aspect of orthogonal code division to divide the orthogonal code into orthogonal code symbol groups 393 and 397 composed of all the daughter code symbols having the same parent code symbols 391 and 395 as "01" or "0110".

As described above, there is no hopping pattern collision when the multidimensional hopping pattern generator 380 generates multidimensional hopping patterns intentionally so that the same orthogonal resource is not selected by different channels at the same time for the respective channels. But this method has the following problems: (1) the hopping pattern is not determined by the secondary station but allocated by the primary station during a call set-up; (2) the number of multidimensional hopping patterns allocable by the primary station is limited by the number of orthogonal resources; and (3) with a handoff to an adjacent cell, a new multidimensional hopping pattern must be allocated from the adjacent cell. The allocation of multidimensional hopping patterns between channels to the secondary stations without a collision is intended to acquire a diversity gain rather than to achieve statistical multiplexing. For high-activity and dense channels to the secondary stations, it is efficient not to cause a hopping pattern collision. But, for low-activity and sparse channels to the secondary stations according to the characteristic of services, there may occur a waste and inefficiency of resources, so that channel-independent multidimensional hopping patterns are generated in order to acquire a statistical multiplexing gain and a frequency and time diversity according to the data activity of each cannel. Inevitably, this results in a multidimensional hopping pattern collision that different channels determine the coordinates of the same multidimensional orthogonal resource at the same time. To solve this problem, the present invention uses the collision detector and controllers 384 and 386 to receive the hopping patterns for all channels and data symbols to be transmitted and thereby determine whether the hopping patterns are collided. The multidimensional hopping patterns by the respective secondary stations are generated in the primary station and the data to be transmitted to each secondary station are also sent to the primary station, so that it is possible to determine before the actual collision whether the hopping patterns are collided and whether the transmit data are matched. With a multidimensional hopping pattern collision, the transmit data symbols for all channels concerned are compared. If the transmit data symbols are all matched, then the data symbols present in the collision interval are transmitted. This is because no error occurs in the channel decoding process of the secondary station concerned. But with only one unmatched transmit data symbol, the data symbols in the collision interval of the related channel are not transmitted. That is, the input of multipliers 385 and 387 is "+1" or "0" according to the output of the collision detector and comparators 384 and 386. Transmission is stopped in the interval where the input of the multipliers is "0". This interruption of the transmission of the spread data symbols results in a lack of the average received energy from the secondary station required to meet a desired quality. To compensate for the insufficient average received energy, the transmission power of the primary station is increased by adjusting the gains of amplifiers 315 and 335 of the corresponding channel as much as a magnitude given as a system parameter for an interval given as a system parameter as denoted by reference numbers 1072 and 1074 of FIG. 15. Aside from this, the secondary station can perform transmission power control of the primary station by the conventional method.

FIG. 10b is a schematic of a transmitter in the primary station for orthogonal resource hopping multiplexing according to an embodiment of the present invention, in which the signal of FIG. 10a is denoted as a complex number signal.

FIG. 10c illustrates an embodied method applying the present invention to the example of the prior art shown in FIG. 3b. The transmitter of FIG. 10c is the same in structure as that of FIG. 10a, excepting that a multidimensional hopping pattern generator 380 generates multidimensional hopping patterns independent to in-phase (I) and quadrature phase (Q) channels. For the statistical multiplexing based on the multidimensional orthogonal resource hopping multiplexing proposed in the present invention, there are needed the multidimensional hopping pattern generator 380 and collision detector and controllers 384 and 386 for detecting collision and transmission independent to I/Q channels.

FIG. 10d is a schematic of a transmitter in the primary station for orthogonal resource hopping multiplexing in accordance with an embodiment of the present invention, in which the signal of FIG. 10c is denoted as a complex number signal.

FIG. 10e illustrates an embodied method applying the present invention to the example of the prior art shown in FIG. 3c. The transmitter of FIG. 10e is the same in structure as that of FIG. 10a, excepting that transmit data are different between I-channel and Q-channel because QPSK data modulation is performed, unlike the transmitter of FiG. 10a performing BPSK data modulation.

FIG. 10f is a schematic of a transmitter in the primary station for orthogonal resource hopping multiplexing according to an embodiment of the present invention, in which the signal of FIG. 10e is denoted as a complex number signal.

FIG. 10g illustrates an embodied method applying the present invention to the example of the prior art shown in FIG. 3d. The transmitter of FIG. 10g is the same in structure as that of FIG. 10e, excepting that a multidimensional hopping pattern generator 380 generates multidimensional hopping patterns independent to in-phase (I) and quadrature phase (Q) channels. For the statistical multiplexing based on the multidimensional orthogonal resource hopping multiplexing proposed in the present invention, there are needed the multidimensional hopping pattern generator 380 and collision detector and controllers 384 and 385 for detecting collision and transmission independent to I/Q channels.

FIG. 10h is a schematic of a transmitter in the primary station for orthogonal resource hopping multiplexing in accordance with an embodiment of the present invention, in which the signal of FIG. 10g is denoted as a complex number signal.

FIG. 10i illustrates an embodied method applying the present invention to the example of the prior art shown in FIG. 3e. The transmitter of FIG. 10i is the same in structure as that of FIG. 10e, excepting that QOC (Quasi-Orthogonal Code) is used.

FIG. 10j is a schematic of a transmitter in the primary station for orthogonal resource hopping multiplexing in accordance with an embodiment of the present invention, in which the signal of FIG. 10i is denoted as a complex number signal.

FIG. 10k illustrates an embodied method applying the present invention to the example of the prior art shown in FIG. 3f. The transmitter of FIG. 10k is the same in structure as that of FIG. 10g, excepting that QOC is used. FIG. 10l is a schematic of a transmitter in the primary station for orthogonal resource hopping multiplexing in accordance with an embodiment of the present invention, in which the signal of FIG. 10k is denoted as a complex number signal.

FIG. 13a is a schematic of a receiver in the secondary station for orthogonal resource hopping multiplexing in accordance with the embodiment of the present invention illustrated in FIG. 10a. The signal received from the primary station via an antenna is sent to demodulators 510 and 530 for demodulation by a frequency synthesizer 588 under the control of a multidimensional hopping pattern generator 580. The demodulated signal is then sent to low-pass filters 512 and 532.

The low-pass filtered signal is sent to descramblers 522 and 542 for descrambling with the same scrambling codes generated from scrambling code generators 520 and 540 as in the transmitter. The descrambled signal , is fed into multipliers 514 and 534 for multiplication by an orthogonal code symbol generated from an orthogonal code symbol generator 582 according to the coordinate value of the orthogonal code axis output from a multidimensional hopping pattern generator 580 synchronized with the transmitter of the primary station. The resulting signal is integrated for a corresponding symbol interval at integrators 516 and 536 for despreading. The despread signal is fed into a compensator 560 for compensating for a phase difference using a channel estimator 550, thereby achieving synchronous demodulation. The compensated data symbol is fed into buffers 592 and 593 in accord with the coordinate value of the transmission time axis of the multidimensional hopping pattern generator. Because the transmitter of the primary station shown in FIG. 10a performs BPSK data modulation, the receiver of the primary station corresponding to FIG. 13a adds I-channel and Q-channel received data having the same information at an adder 596. With independent interleavers by I-channels and Q-channels at the transmitter of the primary station in order to provide time diversity, the secondary station adds I-channel and Q-channel received data via a deinterleaver.

FIG. 13b is a schematic of a receiver in the secondary station for orthogonal resource hopping multiplexing in accordance with the embodiment of the present invention illustrated in FIG. 10b. The receiver of FIG. 13b is the same in structure as that of FIG. 13a, excepting that independent orthogonal code generators 582 and 584 are present by I-channels and Q-channels.

FIG. 13c is a schematic of a receiver in the secondary station for orthogonal resource hopping multiplexing in accordance with the embodiment of the present invention illustrated in FIG. 10c. The receiver of FIG. 13c is the same in structure as that of FIG. 13a, excepting that the receiver of the secondary station corresponding to FIG. 13c does not add I-channel and Q-channel received data having a different information, because the receiver of the primary station shown in FIG. 10c performs QPSK data modulation.

FIG. 13d is a schematic of a receiver in the secondary station for orthogonal resource hopping multiplexing in accordance with the embodiment of the present invention illustrated in FIG. 10d. The receiver of FIG. 13d is the same in structure as that of FIG. 13c, excepting that independent orthogonal code generators 582 and 584 are present by I-channels and Q-channels.

FIG. 13e is a schematic of a receiver in the secondary station for orthogonal resource hopping multiplexing in accordance with the embodiment of the present invention illustrated in FIG. 10e. The receiver of FIG. 13e is the same in structure as that of FIG. 13c, excepting that QOC 566 is used for dispreading.

FIG. 13f is a schematic of a receiver in the secondary station for orthogonal resource hopping multiplexing in accordance with the embodiment of the present invention illustrated in FIG. 10f. The receiver of FIG. 13f is the same in structure as that of FIG. 13e, excepting that independent orthogonal code generators 582 and 584 are present by I-channels and Q-channels.

FIG. 14 is a conceptual diagram of a transmit signal from the primary station in accordance with an embodiment of the present invention. The signal diagram of FIG. 14a is the same as the signal diagram showing a transmit signal from the primary station by the respective frames according to the example of the prior art as illustrated in FIG. 4a. According to the characteristic of the services, the channel from the primary station to each secondary station has a frame-based transmission rate changed to less than or equal to the basic transmission rate R allocated during a call set up as denoted by reference numbers 920 and 930, or to the basic transmission rate R as denoted by reference numbers 940 and 950, thereby repeating between transmission (ON) and non-transmission (OFF). The channels denoted by reference numbers 940 and 950 can be expressed in terms of channel activity. In the present invention, the channels denoted by reference numbers 920 and 930 are subject to transmission time hopping multiplexing according to the frame-based transmit data rate as the channels 924 and 934 of FIG. 14b. The transmission time hopping is realized by the method of FIG. 12d. FIGS. 14c and 14d illustrate the hopping type of the transmission time actually determined according to the example of the frame-based transmit data rate. FIG. 14c shows regular and periodic hopping, and FIG. 14d shows irregular and random hopping. FIG. 14c is favorable for time diversity and channel estimation but not for statistical multiplexing. FIG. 14d may cause a collision of channel-independent multidimensional hopping patterns but is favorable for statistical multiplexing. FIG. 14e shows a system that concurrently performs FHM (Frequency Hopping Multiplexing) and THM (Time Hopping Multiplexing) in sparse channels in accordance with an embodiment of the present invention, in which the secondary stations are distinguished by the pattern in the respective squares. FIG. 14f illustrates a collision that a multidimensional hopping pattern represented by a two-dimensional coordinate of transmission time and subcarrier is selected by a plurality of channels at the same time in FIG. 14e. In the figure, the double solid line square represents the position of a data symbol with a multidimensional hopping pattern collision, and the single solid line square represents the position of a data symbol without a multidimensional hopping pattern collision. FIG. 14g illustrates that data symbols of coordinates with a collision in FIG. 14f are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14h is a signal diagram of a transmit signal from the primary station for symbol-based time division multiplexing in a sparse frame in accordance with an embodiment of the present invention. Unlike the time division multiplexing of FIG. 4e in the unit of time slots densely distributed in a specific interval of a frame, the time division multiplexing of FIG. 14h is performed in the unit of symbols uniformly distributed in the frame, thereby facilitating estimation of communication channels to the respective secondary stations and.providing time diversity. The present invention involving a periodic hopping pattern is primarily aimed at channel estimation and time diversity as mentioned above rather than statistical multiplexing. So there is no independency among channels to the secondary stations, and the primary station allocates channels with reference to the allocation to the existing secondary stations during a call set up. Accordingly, the symbol-based time division multiplexing of FIG. 14h is preferred in the case where the instantaneous transmission rate of each channel is constant.

Contrary to FIG. 14h, FIG. 14i illustrates that the transmit data symbol interval of a channel to the secondary station is selected in a pseudo-random manner in order to achieve statistical multiplexing. The transmission time hopping patterns of the respective secondary stations are mutually independent. FIG. 14j illustrates a collision that a multidimensional hopping pattern represented by a one-dimensional coordinate of transmission time is selected by a plurality of channels at the same time in FIG. 14i. In the figure, the double solid line square represents the position of a data symbol with a multidimensional hopping pattern collision, and the single solid line square represents the position of a data symbol without a multidimensional hopping pattern collision. FIG. 14k illustrates that data symbols of coordinates with a collision in FIG. 14j are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14I illustrates orthogonal code hopping multiplexing as a special case of multidimensional orthogonal resource hopping multiplexing that orthogonal codes for band-spreading transmit data symbols of a channel to the secondary station are selected in a pseudo-random manner in order to achieve statistical multiplexing. The orthogonal code hopping patterns of the respective secondary stations are mutually independent. This is described in detail in Application No. WO 01/11897 by the inventor of this invention that discloses a system and method for orthogonal code hopping multiplexing.

FIG. 14m is a signal diagram showing a transmit signal of the primary station for transmission time hopping multiplexing in the unit of time slots in combination with the orthogonal code hopping multiplexing of FIG. 14I according to an embodiment of the present invention. To achieve statistical multiplexing, orthogonal code symbols for band-spreading transmission time slots of the channel to each secondary station and the respective transmit data symbols are selected in a pseudo-random manner. The two-dimensional hopping patterns of transmission time and orthogonal code for the respective secondary stations are mutually independent. FIG. 14n illustrates a collision that a multidimensional hopping pattern represented by a two-dimensional coordinate of transmission time and orthogonal code is selected by a plurality of channels at the same time in FIG. 14m. In the figure, the double solid line square represents the position of a data symbol with a multidimensional hopping pattern collision, and the single solid line square represents the position of a data symbol without a multidimensional hopping pattern collision. FIG. 14o illustrates that data symbols of coordinates with a collision in FIG. 14n are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14p is a signal diagram showing a transmit signal of the primary station for the transmission division multiplexing of FIG. 14h in combination with the orthogonal code hopping multiplexing of FIG. 14I. FIG. 14h is a structure incapable of acquiring a statistical multiplexing gain, and FIG. 14I as described above. But the statistical multiplexing can be achieved by using the orthogonal code hopping multiplexing of FIG. 14I capable of acquiring a statistical multiplexing gain. The position of the first transmit symbol to every secondary station is all the same irrespective of the transmission rate of each channel in the frame. Orthogonal code symbols for band-spreading the respective transmit data symbols of channels to each secondary station are selected in a pseudo-random manner. The one-dimensional hopping patterns of orthogonal code for the respective secondary stations are mutually independent. FIG. 14q illustrates a collision that a multidimensional hopping pattern represented by a one-dimensional coordinate of orthogonal code is selected by a plurality of channels at the same time in FIG. 14o. In the figure, the double solid line square represents the position of a data symbol with a multidimensional hopping pattern collision, and the single solid line square represents the position of a data symbol without a multidimensional hopping pattern collision. FIG. 14r illustrates that data symbols of coordinates with a collision in FIG. 14q are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14s is a modification of the time division and orthogonal code hopping multiplexing of FIG. 14p. The primary station arranges the first transmit symbols to the secondary stations staggered in the frame to maintain a balance of the transmission power. In the same way of FIG. 14p, orthogonal code symbols for band-spreading the respective transmit data symbols of channels to each secondary station are selected in a pseudo-random manner. The one-dimensional hopping patterns of orthogonal code for the respective secondary stations are mutually independent. FIG. 14t illustrates a collision that a multidimensional hopping pattern represented by a one-dimensional coordinate of orthogonal code is selected by a plurality of channels at the same time in FIG. 14s. In the figure, the double solid line square represents the position of a data symbol with a multidimensional hopping pattern collision, and the single solid line square represents the position of a data symbol without a multidimensional hopping pattern collision. FIG. 14u illustrates that data symbols of coordinates with a collision in FIG. 14t are compared with one another to finally determine whether to be transmitted. The black square represents data transmission with a multidimensional hopping pattern collision but the same.data symbols for all channels involved in the collision. The dotted line square represents no data transmission with different data symbols for all channels involved in the collision.

FIG. 14v is signal diagram showing a transmit signal of the primary station for the transmission time hopping multiplexing of FIG. 14i and the orthogonal code hopping multiplexing of FIG. 14l. This is a compound statistical multiplexing system that acquires a statistical multiplexing gain by both the transmission time hopping multiplexing of FIG. 14i and the orthogonal code hopping multiplexing of FIG. 14I. The transmission time of each channel in the frame and an orthogonal code symbol for band-spreading each transmit data symbol of the channel to each secondary station are selected in a pseudo-random manner by a multidimensional (i.e., two-dimensional) hopping pattern. The two-dimensional hopping patterns of transmission time and orthogonal code for the respective secondary stations are mutually independent. FIG. 14w illustrates a collision that a multidimensional hopping pattern represented by a two-dimensional coordinate of transmission time and orthogonal code is selected by a plurality of channels at the same time in FIG. 14v. In the figure, the double solid line square represents the position of a data symbol with a multidimensional hopping pattern collision, and the single solid line square represents the position of a data symbol without a multidimensional hopping pattern collision. FIG. 14x illustrates that data symbols of coordinates with a collision in FIG. 14w are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

The statistical multiplexing using the two-dimensional hopping pattern of transmission time and orthogonal code as shown in FIG. 14v can be expanded to the statistical multiplexing using the three-dimensional hopping pattern of frequency, transmission time and orthogonal code as shown in FIG. 14y. FIG. 14y is a signal diagram showing a transmit signal from the primary station for channel-based irregular carrier frequency hopping multiplexing in the unit of symbols for a sparse frame, transmission time hopping multiplexing and orthogonal code hopping multiplexing in accordance with an embodiment of the present invention. FIG. 14z illustrates a collision that a multidimensional hopping pattern represented by a three-dimensional coordinate of carrier frequency, transmission time and orthogonal code is selected by a plurality of channels at the same time in FIG. 14y. In the figure, the heavy solid line cuboid represents the collided data symbol, the blank cuboid represents that the data symbol to be transmitted is matched, and the black cuboid represents that the data symbol to be transmitted is not matched. FIG. 14aa illustrates that data symbols of coordinates with a collision in FIG. 14z are compared with one another to finally determine whether to be transmitted. The blank cuboid represents data transmission, and the dotted line cuboid represents no data transmission with different data symbols for all channels involved in the collision.

A further expansion of the system proposed in the present invention enables statistical multiplexing by a hoping multiplexing of N-dimensional orthogonal resources represented as orthogonal resource 1, orthogonal resource 2, ..., orthogonal resource N. The statistical multiplexing gain by the multidimensional resource hopping multiplexing can be analogized from the collision probability of the multidimensional hopping pattern and the non-transmission probability of the corresponding transmit data symbol. The likelihood of recovering the non-transmitted data symbol is dependent upon the channel encoding method. In this description, only the case of carrying information on the channel will be analyzed, because the case where information is not carried on the channel to the secondary station of interest is not worth analyzing. The following mathematic analysis is based on a control algorithm for the multidimensional hopping pattern collision shown in FIGS. 18 and 19. In FIG. 20, the mathematic analysis on the control algorithm for the multidimensional hopping pattern collision of FIG. 25 is too complicated and will not be described.
M = the number of channels allocated by the primary station;
N = the number of active channels in a given time interval;
α= channel activity (= average transmission rate per frame / basic transmission rate)
πᵢ = probability of transmitting data symbol i, where i ∈ {0, 1, 2, ..., s-1}; and
s = the number of data symbols

Example : For 8FSK, s = 8; and for 16QAM, s = 16.
1) Frequency hopping multiplexing
   c₁ = the total number of subcarriers on the frequency axis in multidimensional hopping pattern
   (1) Hopping pattern collision probability ${\sum }_{N = 2}^{M} \left\{1-{\left(1-\frac{1}{{c}_{1}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$
   (2) Data symbol puncturing (Transmission OFF) probability ${\sum }_{N = 2}^{M} \left[{\sum }_{i = 0}^{s - 1}\left\{1-{\left(1-\frac{1 - {π}_{i}}{{c}_{1}}\right)}^{N - 1}\right\}⋅{π}_{i}\right] ⁢ \left(\begin{matrix}M - 1 \\ N - 1\end{matrix}\right) ⁢ {α}^{N - 1} ⁢ {\left(1-α\right)}^{M - N}$
   (3) Data symbol puncturing probability for all the same πᵢ ${\sum }_{N = 2}^{M} \left\{1-{\left(1-\frac{1 - \frac{1}{s}}{{c}_{1}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$
2) Transmission time hopping multiplexing
   c₂ = the total number of transmittable symbol intervals on the time axis in multidimensional hopping pattern
   (1) Hopping pattern collision probability ${\sum }_{N = 2}^{M} \left\{1-{\left(1-\frac{1}{{c}_{2}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$
   (2) Data symbol puncturing probability ${\sum }_{N = 2}^{M} \left[{\sum }_{i = 0}^{s - 1}\left\{1-{\left(1-\frac{1 - {π}_{i}}{{c}_{2}}\right)}^{N - 1}\right\}⋅{π}_{i}\right] ⁢ \left(\begin{matrix}M - 1 \\ N - 1\end{matrix}\right) ⁢ {α}^{N - 1} ⁢ {\left(1-α\right)}^{M - N}$
   (3) Data symbol puncturing probability for all the same πᵢ ${\sum }_{N = 2}^{M} \left\{1-{\left(1-\frac{1 - \frac{1}{s}}{{c}_{2}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$
3) Orthogonal code hopping multiplexing
   c₃ = the total number of orthogonal code symbols on the orthogonal code axis in multidimensional hopping pattern
   (1) Hopping pattern collision probability ${\sum }_{N = 2}^{M} \left\{1-{\left(1-\frac{1}{{c}_{3}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$
   (2) Data symbol puncturing probability ${\sum }_{N = 2}^{M} \left[{\sum }_{i = 0}^{s - 1}\left\{1-{\left(1-\frac{1 - {π}_{i}}{{c}_{3}}\right)}^{N - 1}\right\}⋅{π}_{i}\right] ⁢ \left(\begin{matrix}M - 1 \\ N - 1\end{matrix}\right) ⁢ {α}^{N - 1} ⁢ {\left(1-α\right)}^{M - N}$
   (3) Data symbol puncturing probability for all the same πᵢ ${\sum }_{N = 2}^{M} \left\{1-{\left(1-\frac{1 - \frac{1}{s}}{{c}_{3}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$
4) Frequency, transmission time and orthogonal code hopping multiplexing
   c₁ = the total number of subcarriers on the frequency axis in multidimensional hopping pattern
   c₂ = the total number of transmittable symbol intervals on the time axis in multidimensional hopping pattern
   c₃ = the total number of orthogonal code symbols on the orthogonal code axis in multidimensional hopping pattern
   (1) Hopping pattern collision probability ${\sum }_{N = 2}^{M} \left\{1-{\left(1-\frac{1}{{c}_{1} + {c}_{2} + {c}_{3}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$
   (2) Data symbol puncturing probability ${\sum }_{N = 2}^{M} \left[{\sum }_{i = 0}^{s - 1}\left\{1-{\left(1-\frac{1 - {π}_{i}}{{c}_{1} + {c}_{2} + {c}_{3}}\right)}^{N - 1}\right\}⋅{π}_{i}\right] ⁢ \left(\begin{matrix}M - 1 \\ N - 1\end{matrix}\right) ⁢ {α}^{N - 1} ⁢ {\left(1-α\right)}^{M - N}$
   (3) Data symbol perforation probability for all the same πᵢ ${\sum }_{N = 2}^{M} \left\{1-{\left(1-\frac{1 - \frac{1}{s}}{{c}_{1} + {c}_{2} + {c}_{3}}\right)}^{N - 1}\right\} ⁢ \left(\begin{matrix}M - 1 \\ N - 1\end{matrix}\right) ⁢ {α}^{N - 1} ⁢ {\left(1-α\right)}^{M - N}$

FIG. 15 illustrates that the transmission power of the primary station is increased for a defined interval after a non-transmitted data symbol to compensate for the average received energy required by a channel decoder for the purpose of meeting a desired communication quality when transmission is stopped in a multidimensional hopping pattern collision interval as shown in FIGS. 14g, 14k, 14o_{,} 14r, 14u and 14x. If it is possible to determine the number of data symbols damaged due to a multidimensional hopping pattern collision in the corresponding frame prior to the start time of the frame, the effect of the damage can be reduced with a maximized statistical multiplexing gain by previously adjusting the variation of the received energy caused by the damage as denoted by reference number 1076of FIG. 15.

Because of the multidimensional hopping pattern collision and unmatched transmit data symbols, transmission is stopped for a channel group present in the same transmitter antenna beam from the primary station. With a plurality of transmitter antenna beams 1120, 1130 and 1140 from the primary station as the smart antenna of FIG. 16, transmission is not stopped in the collision interval for channels 1132, 1142 and 1144 in the non-overlapped transmitter antenna beams 1130 and 1140 in spite of the multidimensional hopping pattern collision.

In the embodiment of the present invention, a loss of transmit data may occur intentionally in the multidimensional hopping pattern collision interval when the multidimensional orthogonal resource hopping multiplexing is performed with a pseudo-random hopping pattern. To reconstitute data present in the data loss interval at the receiver in this case, channel encoding at the transmitter and channel decoding at the receiver are necessarily used.

As described above, an intentional loss of transmit data is inevitable in the multidimensional orthogonal resource hopping multiplexing using channel-independent hopping patterns as adopted to maximize the statistical multiplexing gain. The following description will be given as to different algorithms for controlling a transmit signal from the primary station for reducing the effect of the data loss and thereby increasing the channel decoding gain at the receiver of the secondary stations.

FIG. 17 shows the difference of transmission power from the primary station 1710 between a secondary station 1720 near the primary station and another secondary station 1730 far away from the primary station for the same data service, In the figure, the difference of transmission power from the primary station 1710 is illustrated simply according to the distance from the primary station to each secondary station. Actually, contrary to FIG. 17, the higher transmission power may be necessary to the secondary station 1720 nearer to the primary station according to a transmission power control of the primary station (open-loop transmission power control) or the secondary station (closed-loop transmission power control) based on the primary station's estimation using the intensity of the signal received from the secondary station so as to overcome fading. But this problem is not so significant to change the bottom line of the present invention. Expediently, it is assumed herein that the distance between the primary station and each secondary station is proportionate to the intensity of the transmission power from the primary station. The primary station 1710 sends a signal having an amplitude of Aᵢ (transmission power of Aᵢ²) to the nearer secondary station 1720 and a signal having an amplitude of A₀ (transmission power of A₀²) to the secondary station 1730.

In the following description of FIGS. 18 to 25, signals are all considered as a complex number composed of real part (I-channel) and imaginary part (Q-channel). The description will be given primarily in regard to the real part (I-channel) but is the same to the imaginary part (Q-channel). The real part may be negative, zero, or positive. In each case, the I-channel transmit signal actually transferred during a multidimensional orthogonal resource hopping pattern collision can be determined as Aᵢ = Aᵢ⁺ + Aᵢ⁻, where Aᵢ⁺ is the sum of transmit signals for I-channels having a positive value during the collision; and Aᵢ⁻ is the sum of transmit signals for I-channels having a negative value during the collision. All the channels allowed to be connected by the primary station by the orthogonal wireless resource units in the unit of data symbol intervals must be included in any one set of S⁰, S⁺ and S⁻. Here, S is the set of all the channels allowed to be connected by the primary station; S⁰ is the set of channels included in the set S that are not selecting the corresponding orthogonal wireless resource; S⁺ is the set of channels having a positive value among the channels selecting the orthogonal wireless resource; and S⁻ is the set of, channels having a negative value among the channels selecting the orthogonal wireless resource.

FIG. 18a is a flow chart showing the first method for determining a transmit signal by the respective orthogonal wireless resource units at a transmitter from the primary station to the secondary station according to an , embodiment of the present invention. The first method can be described as follows. For *S* = *S*⁰ (in step 1830), which means that the orthogonal wireless resource unit is not selected by any channel, the I-channel transmit signal is set as Aᵢ = 0 (Aᵢ⁺ = 0, and Aᵢ⁻ = 0) so that the primary station does not transmit the orthogonal wireless resource unit. For *S* = *S*⁰ ∪ *S*⁺ (in step 1840), which means that all the channels selecting the orthogonal wireless resource unit have a positive value, the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right),and {A}_{I}^{-}=0\right) .$ For *S* = *S*⁰ ∪ *S*⁻ (in step 1850), which means that all the channels selecting the orthogonal wireless resource unit have a negative value, the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) .$ For *S*⁺ ≠ {} and *S*⁻ ≠ {} (in step 1860), the I-channel transmit signal is set as Aᵢ = 0 (Aᵢ⁺ = 0, and Aᵢ⁻ = 0) so that the primary station does not transmit the orthogonal wireless resource unit.

FIG. 18b illustrates the determination of the final transmit signal using the method of FIG. 18a in the case of a multidimensional orthogonal resource hopping pattern collision between two channels. Let the two channels select the same orthogonal wireless resource unit in the same data symbol interval. When the data symbol values are +Aᵢ and +A₀ (Aᵢ < A₀), then the final data symbol value transferred by the orthogonal wireless resource unit is Aᵢ = 0 (in step 1802).

FIG. 18c illustrates a multidimensional orthogonal resource hopping pattern collision between two channels c and l for explaining the determination of the final transmit signal using the method of FIG. 18a. For I-channels, S⁰ = {a, b, d, e, f, g, h, i, j, k, m, n, o, p, q, r, s, t}, S⁺ = {c, l}, and S⁻ = {} = Φ (empty set). For Q-channels S⁰ = {a, b, d, e, f, g, h i, j, k, m, n, o, p, q, r, s, t}, S⁺ = {I}, and S⁻ = {c}.

FIG. 18d illustrates the final transmit signal determined according to the algorithm of FIG. 18a in case of FIG. 18c. For I-channels, A_{c} + Aᵢ > Aₘₐₓ but the orthogonal wireless resource unit has a value of Aᵢ = A_{c} + Aᵢ (Aᵢ⁺ = A_{c} + Aᵢ, and Aᵢ⁻ = 0) by sending the original signals of channels c and l as they are. For Q-channels, the transmit signal of channel c has an opposite sign to that of channel I and the orthogonal wireless resource unit has a value of A_{Q} = 0 (A_{Q}⁺ = 0, and A_{Q}⁻ = 0).

FIG. 19a is a flow chart showing the second method for determining a transmit signal by the respective orthogonal wireless resource units at a transmitter from the primary station to the secondary station according to an embodiment of the present invention. The second method can be described as follows. For *S* = *S*⁰ (in step 1830), which means that the orthogonal wireless resource unit is not selected by any channel, the I-channel transmit signal is set as Aₗ = 0 (Aₗ⁺ = 0, and Aₗ⁻ = 0) so that the primary station does not transmit the orthogonal wireless resource unit. For *S* = *S*⁰U*S*⁺ (in step 1840), it means that all the channels selecting the orthogonal wireless resource unit have a positive value. If ${\sum }_{j ∈ {S}^{+}} \left(+{A}_{j}\right) \leq + {A}_{max}$ (in step 1842), then the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right) ;$ otherwise, the primary station transmits the orthogonal wireless resource unit having a value of ${A}_{I} = + {A}_{max} ⁢ \left({A}_{I}^{+}=+{A}_{max}, and {A}_{I}^{-}=0\right) .$ For *S* = *S*⁰ ∪ *S*⁻ (in step 1850), it means that all the channels selecting the orthogonal wireless resource unit have a negative value. If ${\sum }_{j ∈ {S}^{-}} \left(-{A}_{j}\right) \geq - {A}_{max}$ (in step 1852), then the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) ;$ otherwise, the primary station transmits the orthogonal wireless resource unit having a value of ${A}_{I} = - {A}_{max} ⁢ \left({A}_{I}^{+}=0, and {A}_{I}^{-}=+{A}_{max}\right) .$ For *S*⁺ ≠ {} and *S*⁻ ≠ {} (in step 1960), the I-channel transmit signal is set as Aᵢ = 0 (Aᵢ⁺ = 0, Aᵢ⁻ = 0) so that the primary station does not transmit the orthogonal wireless resource unit.

FIG. 19b illustrates the determination of the final transmit signal using the method of FIG. 19a in the case of a multidimensional orthogonal resource hopping pattern collision between two channels. Let the two channels select the same orthogonal wireless resource unit in the same data symbol interval. If the data symbol values are +Aᵢ and +A₀ (Aᵢ < A₀), then the final data symbol value transferred by the orthogonal wireless resource unit is *Aₗ* = + *A*ₘₐₓ because *Aᵢ* + *A*₀ > + *A*ₘₐₓ (in step 1901). If the data symbol values are -Aᵢ and +A₀ (Aᵢ < A₀), then the final data symbol value transferred by the orthogonal wireless resource unit is *Aᵢ* = 0 (in step 1902). Here, Aₘₐₓ for curbing the increase of an unnecessary interference is determined as a system parameter.

FIG. 19c illustrates a multidimensional orthogonal resource hopping pattern collision between two channels c and l for explaining the determination of the final transmit signal using the method of FIG. 19a. For I-channels, S⁰ = {a, b, d, e, f, g, h, i, j, k, m, n, o, p, q, r, s, t}, S⁺ = {c, I}, and S⁻ = {} = Φ (empty set). For Q-channels, S⁰ = {a, b, d, e, f, g, h, i, j, k, m, n, o, p, q, r, s, t}, S⁺ = {I}, and S⁻ = {c}.

FIG. 19d illustrates the final transmit signal determined according to the algorithm of FIG. 19a in case of FIG. 19c. For I-channels, A_{c} + Aᵢ > Aₘₐₓ but the orthogonal wireless resource unit has a value of Aᵢ = + Aₘₐₓ (Aᵢ⁺ = + Aₘₐₓ, and Aᵢ⁻ = 0) by sending the original signals of channels c and l as they are. For Q-channels, the transmit signal of channel c has an opposite sign to that of channel I and the orthogonal wireless resource unit has a value of A_{Q} = 0 (A_{Q}⁺ = 0, and A_{Q}⁻ = 0).

FIG. 20a is a flow chart showing the third method for determining a transmit signal by the respective orthogonal wireless resource units at a transmitter from the primary station to the secondary station according to an embodiment of the present invention. The third method can be described as follows. For *S* = *S*⁰ (in step 1830), which means that the orthogonal wireless resource unit is not selected by any channel, the I-channel transmit signal is set as Aᵢ = 0 (Aᵢ⁺ = 0, and Aᵢ⁻ = 0) so that the primary station does not transmit the orthogonal wireless resource unit. For *S* = *S*⁰ ∪ *S*⁺ (in step 1840), it means that all the channels selecting the orthogonal wireless resource unit have a positive value. If ${\sum }_{j ∈ {S}^{+}} \left(+{A}_{j}\right) \leq + {A}_{max}$ (in step 1842), then the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right) ;$ otherwise, the primary station transmits the orthogonal wireless resource unit having a value of *Aᵢ* = + *A*ₘₐₓ and For *S* = *S*⁰ ∪ *S*⁻ (in step 1850), it means that all the channels selecting the orthogonal wireless resource unit have a negative value. If ${\sum }_{j ∈ {S}^{-}} \left(-{A}_{j}\right) \geq - {A}_{max}$ (in step 1852), then the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) ;$ otherwise, the primary station transmits the orthogonal wireless resource unit having a value of ${A}_{I} = - {A}_{max} ⁢ \left({A}_{I}^{+}=0, and {A}_{I}^{-}=+{A}_{max}\right) .$ For *S*⁺ ≠ {} and *S*⁻ ≠ {} (in step 2060), the reference value is determined as the larger one ( max{min{*Aᵢ*,*i* ∈ *S*⁺},min{*Aᵢ*,*i* ∈ *S*⁻}}) of the smallest amplitude having a positive value (min{*Aᵢ*,*i* ∈ *S*⁺}) and the smallest amplitude having a negative value (min{*Aᵢ*,*i* ∈ *S*⁻}) (in step 2062). If the smaller one is the smallest amplitude having a positive value (max{min{*Aᵢ*,*i* ∈ *S*⁺},min{*Aᵢ*,*i* ∈ *S*⁻}} = min{*Aᵢ*,*i* ∈ *S*⁺}), then a set of channels having a negative value and an ' amplitude of less than θ min{*Aᵢ*,*i* ∈ *S*⁺} is defined as S^{*} (0, ≤θ≤1), If S^{*} is an empty set (in step 2081), then the I-channel transmit signal is set as Aᵢ = 0 (Aᵢ⁺ = 0, Aᵢ⁻ = 0) so that the primary station does not transmit the orthogonal wireless resource unit (in step 2089). If the sum of the amplitudes of all the channels in S^{*} is less than θ · min{*Aᵢ*,*i* ∈ *S*⁺} (in step 2083), then the primary station transmits the orthogonal wireless resource unit having a value of ${A}_{I} = {\sum }_{j ∈ {S}^{-}} \left(-{A}_{j}\right) ⁢ \left({A}_{I}^{+}=0 and {A}_{I}^{-}={\sum }_{j ∈ {S}^{-}}\left(-{A}_{j}\right)\right)$ (in step 2083); otherwise, the primary station transmits the orthogonal wireless resource unit having a value of ${A}_{I} = - θ ⋅ min \left\{{A}_{i},i∈{S}^{+}\right\} ⁢ \left({A}_{I}^{+}=0,and {A}_{I}^{-}=-θ⋅min\left\{{A}_{i},i∈{S}^{*}\right\}\right)$(in step 2087). If the smaller one is the smallest amplitude having a negative value (max{min{*Aᵢ*,*i* ∈ *S*⁺ },min{*A*_{*i*,}*i* ∈ *S*⁻}} = min{*Aᵢ*,*i* ∈ *S*⁻}, then a set of channels having a positive value and an amplitude of less than θ·min{*Aᵢ*,*i* ∈ *S*⁻} is defined as S^{*}. If S^{*} is an empty set (in step 2082), then the I-channel transmit signal is set as Aᵢ = 0 (Aᵢ⁺ = 0, Aᵢ⁻ = 0) so that the primary station does not transmit the orthogonal wireless resource unit (in step 2089). If the sum of the amplitudes of all the channels in S^{*} is less than θ·min{*Aᵢ*,*i* ∈ *S*⁻} (in step 2084), then the primary station transmits the orthogonal wireless resource unit having a value of ${A}_{I} = {\sum }_{j ∈ {S}^{*}} \left(+{A}_{j}\right) ⁢ \left({A}_{I}^{+}={\sum }_{j ∈ {S}^{*}}\left(+{A}_{j}\right) and {A}_{I}^{-}=0\right)$ (in step 2086); otherwise, the primary station transmits the orthogonal wireless resource unit having a value of ${A}_{I} = + θ ⋅ min \left\{{A}_{i},i∈{S}^{-}\right\} ⁢ \left({A}_{I}^{+}=+θ⋅min\left\{{A}_{i},i∈{S}^{*}\right\} and {A}_{I}^{-}=0\right)$ (in step 2088).

FIG. 20b illustrates the determination of the final transmit signal using the method of FIG. 20a in the case of a multidimensional orthogonal resource hopping pattern collision between two channels. Let the two channels select the same orthogonal wireless resource unit in the same data symbol interval. If the data symbol values are +Aᵢ and +A₀ (Aᵢ < A₀), then the final data symbol value transferred by the orthogonal wireless resource unit is *Aᵢ* = + *A*ₘₐₓ because *Aᵢ* + *A*₀ > + *A*ₘₐₓ (in step 2001). If the data symbol values are -Aᵢ and +A₀ (Aᵢ < A₀), then the final data symbol value transferred by the orthogonal wireless resource unit is *Aᵢ* = - *Aᵢ* (Aᵢ⁺ = 0, and Aᵢ⁻ = -Aᵢ) for Aᵢ ≤+θA₀ (in step 2002), and *Aᵢ* = 0 (Aᵢ⁺ = 0, and Aᵢ⁻ = 0) for Aᵢ > +θA₀ (in step 2003). Here, Aₘₐₓ for curbing the increase of an unnecessary interference and θ for determining whether to puncture are given as a system parameter. independently by I- and Q-channels. The determination of Aₘₐₓ and θ is affected by |min{*Aᵢ*,*i* ∈ *S*⁺}- min{*Aᵢ*, *i* ∈ *S*⁻}| of the I- and Q-channels.

FIG. 20c illustrates a multidimensional orthogonal resource hopping pattern collision among four channels c, j, l and s for explaining the determination of the final transmit signal using the method of FIG. 20a. For I-channels, S⁰ = {a, b, d, e, f, g, h, i, j, k, m, n, o, p, q, r, t}, S⁺ = {c, l, s}, and S⁻ = {j}. For Q-channels, S⁰ = {a, b, d, e, f, g, h, i, j, k, m, n, o, p, q, r, t}, S⁺ = {j, l), and S⁻ = {c, s}.

FIG. 20d shows a channel arrangement for comparing the amplitudes of channels selecting the orthogonal wireless resource unit in case of FIG. 20c. For I-channels, the reference value determined by the steps 2062 and 2070 is the size of the j-th channel (-Aⱼ). For Q-channels, the reference value determined by the steps 2062 and 2070 is the size of the s-th channel (-Aₛ).

FIG. 20e illustrates the final transmit signal determined according to the algorithm of FIG. 20a in case of FIG. 20c. For I-channels, the channel having a value of less than θAⱼ is the I-th channel, and thus the orthogonal wireless resource unit has a value of Aᵢ = + Aᵢ (Aᵢ⁺ = + Aᵢ, and Aᵢ⁻ = 0). In FIG. 20e, the channels c, j and s are OFF (A_{c} = 0, Aⱼ = 0, and Aₛ = 0) and only the channel I is ON (transmission) (Aᵢ ≠ 0). But the amplitude of each channel is not important as long as the sum of the amplitudes satisfies A_{c} + Aⱼ + Aᵢ + Aₛ = Aᵢ. For Q-channels, there is no channel having a value of less than θAₛ, and thus the orthogonal wireless resource unit has a value of A_{Q} = 0 (A_{Q}⁺ = 0, and A_{Q}⁻ = 0).

FIG. 21 a is a flow chart showing the fourth method for determining a transmit signal by the respective orthogonal wireless resource units at a transmitter from the primary station to the secondary' station according to an embodiment of the present invention. The fourth method can be described as follows. For *S* = *S*⁰ (in step 1830), which means that the orthogonal wireless resource unit is not selected by any channel, the I-channel transmit signal is set as Aᵢ = 0 (Aᵢ⁺ = 0, and Aᵢ⁻ = 0) so that the primary station does not transmit the orthogonal wireless resource unit. For *S* = *S*⁰ ∪ *S*⁺ (in step 1840), it means that all the channels selecting the orthogonal wireless resource unit have a positive value. If ${\sum }_{j ∈ {S}^{+}} \left(+{A}_{j}\right) \leq + {A}_{max}$ (in step 1842), then the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right) ;$ otherwise, the primary station transmits the orthogonal wireless resource unit having a value of ${A}_{I} = + {A}_{max} ⁢ \left({A}_{I}^{+}=+{A}_{max}, and {A}_{I}^{-}=0\right) .$ For *S* = *S*⁰ ∪ *S*⁻ (in step 1850), it means that all the channels selecting the orthogonal wireless resource unit have a negative value. If ${Σ}_{j ∈ {S}^{-}} ⁢ \left(-{A}_{j}\right) \geq - {A}_{max}$ (in step 1852), then the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) ;$ otherwise, the primary station transmits the orthogonal wireless resource unit having a value of ${A}_{I} = - {A}_{max} ⁢ \left({A}_{I}^{+}=0, and {A}_{I}^{-}=+{A}_{max}\right) .$ For *S*⁺ ≠ {} and *S*⁻ ≠ {} (in step 2160), the reference value is determined as the larger one ( max{min{*Aᵢ*,*i* ∈ *S*⁺},min{*Aᵢ*,*i* ∈ *S*⁻} ) of the smallest amplitude having a positive value (min{*Aᵢ*, *i* ∈ *S*⁺}) and the smallest amplitude having a negative value (min{*Aᵢ*,*i* ∈ *S*⁻}) (in step 2062). If the smaller one is the smallest amplitude having a positive value ( max{min{*Aᵢ*,*i* ∈ *S*⁺},min{*Aᵢ*,*i* ∈ *S*⁻}} = minmin{*Aᵢ*,*i* ∈ *S*⁺}, then a set of channels having a negative value and an amplitude of less than θ·minmin{*Aᵢ*,*i* ∈ *S*⁺} is defined as S^{*} (0 ≤θ≤1). If S^{*} is an empty set (in step 2081), then the I-channel transmit signal is set as Aᵢ = 0 (Aᵢ⁺ = 0, Aᵢ⁻ = 0) so that the primary station does not transmit the orthogonal wireless resource unit (in step 2089). If S^{*} is not an empty set, then the primary station transmits the orthogonal wireless resource unit having the largest amplitude ${A}_{I} = - max \left\{{A}_{i},i∈{S}^{*}\right\} ⁢ \left({A}_{I}^{+}=0 and {A}_{I}^{-}=-max\left\{{A}_{i},i∈{S}^{*}\right\}\right)$ in the set S^{*} (in step 2187). If the smaller one is the smallest amplitude having a negative value (max{min{*Aᵢ*,*i* ∈ *S*⁺},min{*Aᵢ*,*i* ∈ *S*⁻} = min{*Aᵢ*,*i* ∈ *S*⁻}), then a set of channels having a positive value and an amplitude of less than θ·min{*Aᵢ*,*i* ∈ *S*⁻} is defined as S^{*}. If S^{*} is an empty set (in step 2082), then the I-channel transmit signal is set as Aᵢ = 0 (Aᵢ⁺ = 0, Aᵢ⁻ = 0) so that the primary station does not transmit the orthogonal wireless resource unit (in step 2089). If S^{*} is not an empty set, then the primary station transmits the orthogonal wireless resource unit having the largest amplitude in the set S^{*}, that is, ${A}_{I} = + max \left\{{A}_{i},i∈{S}^{*}\right\} ⁢ \left({A}_{I}^{+}=+max\left\{{A}_{i},i∈{S}^{*}\right\}, and {A}_{I}^{-}=0\right)$ (in step 2188).

FIG. 21b illustrates the determination of the final transmit signal using the method of FIG. 21a in the case of a multidimensional orthogonal resource hopping pattern collision between two channels. Let the two channels select the same orthogonal wireless resource unit in the same data symbol interval. If the data symbol values are +Aᵢ and +A₀ (Aᵢ < A₀), then the final data symbol value transferred by the orthogonal wireless resource unit is *Aᵢ* = + *A*ₘₐₓ because *Aᵢ + A*₀ > + *A*ₘₐₓ (in step 2101). If the data symbol values are -Aᵢ and +A₀ (Aᵢ < A₀), then the final data symbol value transferred by the orthogonal wireless resource unit is *Aᵢ* = - *Aᵢ* (Aᵢ⁺ = 0, and Aᵢ⁻ = -Aᵢ) because Aᵢ ≤+θA₀ and *Aᵢ* = max{*Aᵢ*,*i* ∈ *S*^{*}} (in step 2102). For Aᵢ > +θA₀, the set S^{*} is an empty set and *A_{I}* = 0 (Aᵢ⁺ = 0, and Aᵢ⁻ = 0) (in step 2103). Here, Aₘₐₓ for curbing the increase of an unnecessary interference and θ for determining whether to puncture are given as a system parameter..

FIG. 21c illustrates a multidimensional orthogonal resource hopping pattern collision among four channels c, j, l and s for explaining the determination of the final transmit signal using the method of FIG. 21a. For I-channels, S⁰ = {a, b, d, e, f, g, h, i, k, m, n, o, p, q, r, t}, S⁺ = {c, l, s}, and S⁻ = {j}. For Q-channels, S⁰ = {a, b, d, e, f, g, h, i, k, m, n, o, p, q, r, t}, S⁺ = {j, i}, and S⁻ = {c, s}.

FIG. 21d shows a channel arrangement for comparing the amplitudes of channels selecting the orthogonal wireless resource unit in case of FIG. 21 c. For I-channels, the reference value determined by the steps 2062 and 2070 is the size of the j-th channel (-Aⱼ). For Q-channels, the reference value determined by the steps 2062 and 2070 is the size of the s-th channel (-Aₛ).

FIG. 21e illustrates the final transmit signal determined according to the algorithm of FIG. 21 a in case of FIG. 21c. For I-channels, the channel having the largest value less than θAⱼ is the I-th channel, and thus the orthogonal wireless resource unit has a value of Aᵢ = + Aᵢ (Aᵢ⁺ = + Aᵢ, and Aᵢ⁻ = 0). In FIG. 21e, the channels c, j and s are OFF (A_{c} = 0, Aⱼ = 0, and As = 0) and only the channel I is ON (transmission) (Aᵢ ≠ 0). But the amplitude of each channel is not important as long as the sum of the amplitudes satisfies A_{c} + Aⱼ + Aₗ + Aₛ = Aᵢ. For Q-channels, S^{*} is an empty set, and thus the orthogonal wireless resource unit has a value of A_{Q} = 0 (A_{Q}⁺ = 0, and A_{Q}⁻ = 0).

FIG. 22a is a flow chart showing the fifth method for determining a transmit signal by the respective orthogonal wireless resource units at a transmitter from the primary station to the secondary station according to an embodiment of the present invention. The fifth method can be described as follows. For *S* = *S*⁰ (in step 1830), which means that the orthogonal wireless resource unit is not selected by any channel, the I-channel transmit signal is set as Aₗ = 0 (Aₗ⁺ = 0, and Aₗ⁻ = 0) so that the primary station does not transmit the orthogonal wireless resource unit. For *S = S*⁰ ∪ *S*⁺ (in step 1840), it means that all the channels selecting the orthogonal wireless resource unit have a positive value. If ${\sum }_{j ∈ {S}^{+}} \left(+{A}_{j}\right) \leq + {A}_{max}$ (in step 1842), then the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right) ;$ otherwise, the primary station transmits the orthogonal wireless resource unit having a value of ${A}_{I} = + {A}_{max} ⁢ \left({A}_{I}^{+}=+{A}_{max}, and {A}_{I}^{-}=0\right) .$ For *S* = *S*⁰ ∪ *S*⁻ (in step 1850), it means that all the channels selecting the orthogonal wireless resource unit have a negative value. If ${\sum }_{j ∈ {S}^{-}} \left(-{A}_{j}\right) \geq - {A}_{max}$ (in step 1852), then the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) ;$ otherwise, the primary station transmits the orthogonal wireless resource unit having a value of ${A}_{I} = - {A}_{max} ⁢ \left({A}_{I}^{+}=0, and {A}_{I}^{-}=+{A}_{max}\right) .$ For *S*⁺ ≠ {} and *S*⁻ ≠ {} (in step 2260), the reference value is determined as the larger one ( max{min{*Aᵢ*,*i* ∈ *S*⁺},min{*A_{l,} i* ∈ *S⁻*}} ) of the smallest amplitude having a positive value ( min{*Aᵢ, i* ∈ *S*⁺}) and the smallest amplitude having a negative value ( min{*Aᵢ*, *i* ∈ *S*⁻ }) (in step 2062). If the smaller one is the smallest amplitude having a positive value ( max{min{*Aᵢ*, *i* ∈ *S*⁺},min{*Aᵢ*, *i* ∈ *S*⁻}} = min{*Aᵢ*, *i* ∈ *S*⁺}) (in step 2070), then Aᵢ⁺ and Aᵢ⁻ are initialized as Aᵢ⁺ = 0 and Aᵢ⁻ = 0 (in step 2271), and the channel having a negative value and the largest amplitude smaller than θ·min{*A_{i, i}* ∈ *S*⁺} is designated as Aₗ⁻ (in steps 2273 and 2283). The primary station in this case transmits the orthogonal wireless resource unit having a value of Aₗ = Aᵢ⁺ + Aₗ⁻. If the smaller one is the smallest amplitude having a negative value (max{min{*A_{i,} i* ∈ *S⁺*},min{*A_{i,} i* ∈ *S*⁻}} = min{*Aᵢ*,*i ∈ S*⁻}), then Aₗ⁺ and Aₗ⁻ are initialized as Aₗ⁺ = 0 and Aₗ⁻ = 0 (in step 2272), and the channel having a negative value and the largest amplitude smaller than θ·min{*Aᵢ*,*i* ∈ *S*⁻} is designated as Aₗ⁺ (in step 2274). The primary station in this case transmits the orthogonal wireless resource unit having a value of Aₗ = Aᵢ⁺ + Aₗ⁻.

FIG. 22b illustrates the determination of the final transmit signal using the method of FIG. 22a in the case of a multidimensional orthogonal resource hopping pattern collision between two channels. Let the two channels select the same orthogonal wireless resource unit in the same data symbol interval. If the data symbol values are +Aᵢ and +A₀ (Aᵢ < A₀)**,** then the final data symbol value transferred by the orthogonal wireless resource unit is *Aᵢ* = + *A*ₘₐₓ because *Aᵢ* + *A*₀ > + *A*ₘₐₓ (in step 2201). If the data symbol values are -Aᵢ and +A₀ (Aᵢ < A₀), then the final data symbol value transferred by the orthogonal wireless resource unit is *Aᵢ* = *-Aᵢ* (Aᵢ⁺ = 0, and Aₗ⁻ = -Aᵢ) because Aᵢ ≤+θA₀ and Aᵢ is the maximum (*Aᵢ* = max{*A_{i,} i* ∈ *S^{*}*}) (in step 2202). For Aᵢ > +θA₀, *Aᵢ* = 0- (Aᵢ⁺ = 0, and Aᵢ⁻ = 0) (in step 2203). Here, Aₘₐₓ for curbing the increase of an unnecessary interference and 8 for determining whether to perforate are given as a system parameter..

FIG. 22c illustrates a multidimensional orthogonal resource hopping pattern collision among four channels c, j, l and s for explaining the determination of the final transmit signal using the method of FIG. 22a. For I-channels, S⁰ = {a, b, d, e, f, g, h, i. k, m, n, o, p, q, r, t}, S⁺ = {c, l, s}, and S⁻ = {j}. For Q-channels, S⁰ = {a, b, d, e, f, g, h, i, k, m, n, o, p, q, r, t}, S⁺ = {j, l}, and S⁻ = {c, s}.

FIG. 22d shows a channel arrangement for comparing the amplitudes of channels selecting the orthogonal wireless resource unit in case of FIG. 22c. For I-channels, the reference value determined by the steps 2062 and 2070 is the size of the j-th channel (-Aⱼ). For Q-channels, the reference value determined by the steps 2062 and 2070 is the size of the s-th channel (-Aₛ).

FIG. 22e illustrates the final transmit signal determined according to the algorithm of FIG. 22a in case of FIG. 22c. For I-channels, the channel having the largest value less than θAⱼ is the I-th channel, and thus the orthogonal wireless resource unit has a value of Aᵢ = + Aₗ (Aₗ⁺ = + Aₗ, and Aₗ⁻ = 0).In FIG. 22e, the channels c, j and s are OFF (A_{c} = 0, Aⱼ = 0, and Aₛ = 0) and only the channel I is ON (transmission) (Aₗ ≠ 0). But the amplitude of each channel is not important as long as the sum of the amplitudes satisfies A_{c} + Aⱼ + Aₗ + Aₛ = Aₗ. For Q-channels, there is no channel having a value of less than θAₛ, and thus the orthogonal wireless resource unit has a value of A_{Q} = 0 (A_{Q}⁺ = 0, and A_{Q}⁻ = 0).

FIG. 23a is a flow chart showing the sixth method for determining a transmit signal by the respective orthogonal wireless resource units at a transmitter from the primary station to the secondary station according to an embodiment of the present invention. The sixth method can be described as follows. For *S* = *S*⁰ (in step 1830), which means that the orthogonal wireless resource unit is not selected by any channel, the I-channel transmit signal is set as Aₗ = 0 (Aₗ⁺ = 0, and Aₗ⁻ = 0) so that the primary station does not transmit the orthogonal wireless resource unit. For *S* = *S*⁰ ∪ *S*⁺ (in step 1840), it means that all the channels selecting the orthogonal wireless resource unit have a positive value. If ${\sum }_{j ∈ {S}^{+}} \left(+{A}_{j}\right) \leq + {A}_{max}$ (in step 1842), then the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right) ;$ otherwise, the primary station transmits the orthogonal wireless resource unit having a value of ${A}_{I} = + {A}_{max} ⁢ \left({A}_{I}^{+}=+{A}_{max}, and {A}_{I}^{-}=0\right) .$ For *S* = *S*⁰ ∪ *S*⁻ (in step 1850), it means that all the channels selecting the orthogonal wireless resource unit have a negative value. If ${\sum }_{j ∈ {S}^{-}} \left(-{A}_{j}\right) \geq - {A}_{max}$ (in step 1852), then the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) ;$ otherwise, the primary station transmits the orthogonal wireless resource unit having a value of ${A}_{I} = - {A}_{max} ⁢ \left({A}_{I}^{+}=0, and {A}_{I}^{-}=+{A}_{max}\right) .$For *S*⁺ ≠ {} and *S*⁻ ≠ {} (in step 2360), the reference value is determined as the larger one ( max{min{*Aᵢ*,*i* ∈ *S*⁺},min{*Aᵢ*,*i* ∈ *S⁻*}}) = of the smallest amplitude having a positive value (min{*Aᵢ*, *i* ∈ *S*⁺ }) and the smallest amplitude having a negative value (min{*Aᵢ*,*i* ∈ *S*⁺}) (in step 2062). If the smaller one is the smallest amplitude having a positive value ( max{min{*Aᵢ*,*i* ∈ *S*⁺},min{*Aᵢ*,*i* ∈ *S⁻*}} = min{*Aᵢ*,*i* ∈ *S*⁺}), then a set of channels having a negative value and an amplitude of less than θ· min{*Aᵢ*,*i* ∈ *S*⁺} is defined as S^{*} (0 ≤θ≤1). If S^{*} is an empty set (in step 2081), then the I-channel transmit signal is set as Aₗ = 0 (Aᵢ⁺ = 0, Aᵢ⁻ = 0) so that the primary station does not transmit the orthogonal wireless resource unit (in step 2089). If S^{*} is not an empty set (in step 2081), then the primary station transmits the orthogonal wireless resource unit having the largest amplitude ${A}_{I}^{-} = - θ ⁢ min \left\{{A}_{i},i∈{S}^{*}\right\} )$ $\left({A}_{I}^{+}=0, and {A}_{I}^{-}=-θmin\left\{{A}_{I},i∈{S}^{*}\right\}\right)$(in step 2387). If the smaller one is the smallest amplitude having a negative value (max{min{*Aᵢ*,*i* ∈ *S*⁺},min{*Aᵢ*,*i* ∈ *S⁻*}} = min{*Aᵢ*,*i* ∈ *S*⁻}), then a, set of channels having a negative value and an amplitude of less than θ·min{*Aᵢ*,*i* ∈ *S*⁻} is defined as S^{*}. If S^{*} is an empty set (in step 2082), then the I-channel transmit signal is set as Aᵢ = 0 (Aₗ⁺ = 0, Aᵢ⁻ = 0) so that the primary station does not transmit the orthogonal wireless resource unit (in step 2089). If S^{*} is not an empty set, then the primary station transmits the orthogonal wireless resource unit having a value ${A}_{I} = + θ ⁢ min \left\{{A}_{i},i∈{S}^{-}\right\} ⁢ \left({A}_{I}^{+}=+θ⁢min\left\{{A}_{i},i∈{S}^{*}\right\}, and {A}_{I}^{-}=0\right)$ (in step 2388).

FIG. 23b illustrates the determination of the final transmit signal using the method of FIG. 23a in the case of a multidimensional orthogonal resource hopping pattern collision between two channels. Let the two channels select the same orthogonal wireless resource unit in the same data symbol interval. If the data symbol values are +A_{¡} and +A₀ (Aᵢ < A₀), then the final data symbol value transferred by the orthogonal wireless resource unit is *Aₗ =* + *A*ₘₐₓ because *Aᵢ* + *A*₀ > + *A*ₘₐₓ (in step 2301). If the data symbol values are -Aᵢ and +A₀ (Aᵢ < A₀), then the final data symbol value transferred by the orthogonal wireless resource unit is Aₗ = +θA₀ (Aₗ⁺ = 0, and Aᵢ⁻ = -θA₀) for Aᵢ ≤+θA₀ (in step 2302), and Aₗ = 0 (Aₗ⁺ = 0, and Aₗ⁻ = 0) for Aᵢ > +θA₀ (in step 2303). Here, Aₘₐₓ for curbing the increase of an unnecessary interference and θ for determining whether to puncture are given as a system parameter..

FIG. 23c illustrates a multidimensional orthogonal resource hopping pattern collision among four channels c, j, I and s for explaining the determination of the final transmit signal using the method of FIG. 23a. For I-channels, S⁰ = {a, b, d, e, f, g, h, i, k, m, n, o, p, q, r, t}, S⁺ = {c, l, s}, and S⁻ = {j}. For Q-channels, S⁰ = {a, b, d, e, f, g, h, i, k, m, n, o, p, q, r, t}, S⁺ = {j, l}, and S⁻ = {c, s}.

FIG. 23d shows a channel arrangement for comparing the amplitudes of channels selecting the orthogonal wireless resource unit in case of FIG. 23c.

For I-channels, the reference value determined by the steps 2062 and 2070 is the size of the j-th channel (-Aⱼ). For Q-channels, the reference value determined by the steps 2062 and 2070 is the size of the s-th channel (-Aₛ).

FIG. 23e illustrates the final transmit signal determined according to the algorithm of FIG. 23a in case of FIG. 23c. For I-channels, there is a channel (the I-th channel) having the largest value less than θAⱼ, and thus the orthogonal wireless resource unit has a value of Aₗ = +θ Aₗ (Aₗ⁺ = + θAₗ, and Aₗ⁻ = 0).In FIG. 23e, the channels c, j and s are OFF (A_{c} = 0, Aⱼ = 0, and Aₛ = 0) and only the channel I is ON (transmission) (Aₗ ≠ 0). But the amplitude of each channel is not important as long as the sum of the amplitudes satisfies A_{c} + Aⱼ + Aₗ + Aₛ = +θAⱼ. For Q-channels, there is no channel having a value of less than θAₛ, and thus the orthogonal wireless resource unit has a value of A_{Q} = 0 (A_{Q}⁺ = 0, and A_{Q}⁻ = 0).

FIG. 24a is a flow chart showing the seventh method for determining a transmit signal by the respective orthogonal wireless resource units at a transmitter from the primary station to the secondary station according to an embodiment of the present invention. The seventh method can be described as follows. For *S* = *S*⁰ (in step 1830), which means that the orthogonal wireless resource unit is not selected by any channel, the I-channel transmit signal is set as Aₗ = 0 (Aₗ⁺ = 0, and Aᵢ⁻ = 0) so that the primary station does not transmit the orthogonal wireless resource unit. For *S* = *S*⁰ ∪ *S*⁺ (in step 1840), it means that all the channels selecting the orthogonal wireless resource unit have a positive value. If ${\sum }_{j ∈ {S}^{+}} \left(+{A}_{j}\right) \leq + {A}_{max}$ (in step 1842), then the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right) ;$ otherwise, the primary station transmits the orthogonal wireless resource unit having a value of ${A}_{I} = + {A}_{max} ⁢ \left({A}_{I}^{+}=+{A}_{max}, and {A}_{I}^{-}=0\right) .$ For *S* = *S*⁰ ∪ *S⁻* (in step 1850), it means that all the channels selecting the orthogonal wireless resource unit have a negative value. If ${\sum }_{j ∈ {S}^{-}} \left(-{A}_{j}\right) \geq - {A}_{max}$ (in step 1852), then the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) ;$ otherwise, the primary station transmits the orthogonal wireless resource unit having a value of ${A}_{I} = - {A}_{max} ⁢ \left({A}_{I}^{+}=0, and {A}_{I}^{-}=+{A}_{max}\right) .$ For *S⁺* ≠ {} and *S⁻* ≠ {} (in step 2460), the reference value is determined as the larger one ( max{min{*Aᵢ*,*i* ∈ *S*⁺},min{*Aᵢ*,*i* ∈ *S⁻*}}) of the smallest amplitude having a positive value (min{*Aᵢ*,*i* ∈ *S*⁺}) and the smallest amplitude having a negative value (min{*Aᵢ*,*i* ∈ *S⁻*}) (in step 2062). Let the smaller one be the smallest amplitude having a positive value ( max{min{*Aᵢ*,*i* ∈ *S*⁺},min{*Aᵢ*,*i* ∈ *S⁻*}} = {min{*Aᵢ*,*i* ∈ *S*⁺}). If the sum ${\sum }_{j ∈ {S}^{-}} \left(-{A}_{j}\right)$ of all channels having a negative value is greater than -θ·min{*Aᵢ*,*i* ∈ *S*⁺} (in step 2481), then the primary station transmits the orthogonal wireless resource unit having a value ${A}_{I} = {\sum }_{j ∈ {S}^{-}} \left(-{A}_{j}\right) \left({A}_{I}^{+}=0, and {A}_{I}^{-}={\sum }_{j ∈ {S}^{-}}\left(-{A}_{j}\right)\right)$ (in step 2483); otherwise, the primary station transmits the orthogonal wireless resource unit having a value *Aᵢ* = -θmin{*Aᵢ*,*i* ∈ *S*⁺} and *Aᵢ⁻* = -θmin{*Aᵢ*,*i* ∈ *S*⁺}) (in step 2485). Let the smaller one be the smallest amplitude having a negative value (max{min{*Aᵢ*,*i* ∈ *S*⁺},min{*Aᵢ*,*i* ∈ *S⁻*}} = min{*Aᵢ*,*i* ∈ *S⁻*}). = min{*Aᵢ*,*i* ∈ *S⁻*}). If the sum ${\sum }_{j ∈ {S}^{+}} \left(+{A}_{j}\right)$ of all channels having a positive value is less than θ·min{*Aᵢ*,*i* ∈ *S⁻*} (in step 2482), then the primary station transmits the orthogonal wireless resource unit having a value ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right)$ (in step 2484); otherwise, the primary station transmits the orthogonal wireless resource unit having a value ${A}_{I} = + θmin \left\{{A}_{i},i∈{S}^{-}\right\} ( {A}_{I}^{+} = + θmin \left\{{A}_{i},i∈{S}^{-}\right\} and {A}_{I}^{-} = 0 )$ (in step 2486).

FIG. 24b illustrates the determination of the final transmit signal using the method of FIG. 24a in the case of a multidimensional orthogonal resource hopping pattern collision between two channels. Let the two channels select the same orthogonal wireless resource unit in the same data symbol interval. If the data symbol values are +Aᵢ and +A₀ (Aᵢ < A₀), then the final data symbol value transferred by the orthogonal wireless resource unit is *Aₗ =* +*A*ₘₐₓ because *Aₗ* + *A*₀ > +*A*ₘₐₓ (in step 2401). If the data symbol values are -Aᵢ and +A₀ (Aᵢ < A₀), then the final data symbol value transferred by the orthogonal wireless resource unit is Aₗ = -Aₗ (Aₗ⁺ = 0, and Aₗ⁻ = -Aᵢ) for -Aᵢ ≥ - θA₀ (in step 2402), and Aₗ = -θA₀ (Aₗ⁺ = 0, and Aₗ⁻ = -θA₀) for -Aᵢ < -θA₀ (in step 2403). Here, Aₘₐₓ for curbing the increase of an unnecessary interference and θ for determining whether to puncture are given as a system parameter..

FIG. 24c illustrates a multidimensional orthogonal resource hopping pattern collision among four channels c, j, I and s for explaining the determination of the final transmit signal using the method of FIG. 24a. For I-channels, S⁰ = {a, b, d, e, f, g, h, i, k, m, n, o, p, q, r, t}. S⁺ = {c, l, s}, and S⁻ = {j}. For Q-channels, S⁰ = {a, b, d, e, f, g, h, i, k, m, n, o, p, q, r, t}, S⁺ = {j, l}, and S⁻ = {c, s}.

FIG. 24d shows a channel arrangement for comparing the amplitudes of channels selecting the orthogonal wireless resource unit in case of FIG. 24c. For I-channels, the reference value determined by the steps 2062 and 2070 is the size of the j-th channel (-Aⱼ). For Q-channels, the reference value determined by the steps 2062 and 2070 is the size of the s-th channel (-Aₛ).

FIG. 24e illustrates the final transmit signal determined according to the algorithm of FIG. 24a in case of FIG. 24c. For I-channels, there is a channel (the I-th channel) having the largest value less than θAⱼ, and thus the orthogonal wireless resource unit has a value of Aₗ = +Aⱼ (Aₗ⁺ = +Aⱼ, and Aₗ⁻ = 0).In FIG. 24e, the channels c, j and s are OFF (A_{c} = 0, Aⱼ = 0, and Aₛ = 0) and only the channel I is ON (transmission) (Aₗ ≠ 0). But the amplitude of each channel is not important as long as the sum of the amplitudes satisfies A_{c} + Aⱼ + Aₗ + Aₛ = Aₗ. For Q-channels, there is no channel having a value of less than θAₛ, but the orthogonal wireless resource unit has a value of A_{Q} = + θAₛ (A_{Q}⁺ = + θAₛ, and A_{Q}⁻ = 0).

FIG. 25a is a flow chart showing the eighth method for determining a transmit signal by the respective orthogonal wireless resource units at a transmitter from the primary station to the secondary station according to an embodiment of the present invention. The eighth method can be described as follows. For *S* = *S*⁰ (in step 1830), which means that the orthogonal wireless resource unit is not selected by any channel, the I-channel transmit signal is set as Aᵢ = 0 (Aᵢ⁺ = 0, and Aᵢ⁻ = 0) so that the primary station does not transmit the orthogonal wireless resource unit. For *S = S*⁰ ∪ *S*⁺ (in step 1840), it means that all the channels selecting the orthogonal wireless resource unit have a positive value. If ${\sum }_{j ∈ {S}^{+}} \left(+{A}_{j}\right) \leq + {A}_{max}$ (in step 1842), then the primary station transmits the orthogonal wireless resource unit having a value of ${A}_{I} = {\sum }_{j ∈ {S}^{+}} \left(+{A}_{j}\right) ⁢ \left({A}_{I}^{+}={\sum }_{j ∈ {S}^{+}}\left(+{A}_{j}\right), and {A}_{I}^{-}=0\right) ;$ otherwise, the primary station transmits the orthogonal wireless resource unit having a value of ${A}_{I} = + {A}_{max} ⁢ \left({A}_{I}^{+}=+{A}_{max}, and {A}_{I}^{-}=0\right) .$ For *S* = *S*⁰ ∪ *S*⁻ (in step 1850), it means that all the channels selecting the orthogonal wireless resource unit have a negative value. If ${\sum }_{j ∈ {S}^{-}} \left(-{A}_{j}\right) \geq - {A}_{max}$ (in step 1852), then the primary station transmits the orthogonal wireless resource unit having a value of ${A}_{I} = {\sum }_{j ∈ {S}^{-}} \left(-{A}_{j}\right) ⁢ \left({A}_{I}^{+}=0, and {A}_{I}^{-}={\sum }_{j ∈ {S}^{-}}\left(-{A}_{j}\right)\right) ;$ otherwise, the primary station transmits the orthogonal wireless resource unit having a value of ${A}_{I} = - {A}_{max} ⁢ \left({A}_{I}^{+}=0, and {A}_{I}^{-}=+{A}_{max}\right) .$ For *S*⁺ ≠ {} and *S⁻* ≠ {} (in step, 2560), the reference value is determined as the larger one (max{min{*Aᵢ*,*i* ∈ *S*⁺},min{*Aᵢ*,*i* ∈ *S⁻*}}) of the smallest amplitude having a positive value (min{*Aᵢ*,*i* ∈ *S*⁺}) and then smallest amplitude having a negative value ( min{*Aᵢ*,*i* ∈ *S⁻*}) (in step 2062). If the smaller one is the smallest amplitude having a positive value ( max{min{*Aᵢ*,*i* ∈ *S*⁺},min{*Aᵢ*,*i* ∈ *S⁻*}} = min{*Aᵢ*,*i* ∈ *S*⁺}), then the primary station transmits the orthogonal wireless resource unit having a value ${A}_{i} = - θ min \left\{{A}_{i},i∈{S}^{+}\right\} ⁢ \left({A}_{i}^{+}=0, and {A}_{i}^{-}=-θ min\left\{{A}_{i},i∈{S}^{*}\right\}\right)$ (in step 2585). If the smaller one is the smallest amplitude having a negative value ( max{min{*Aᵢ*,*i* ∈ *S*⁺},min{*Aᵢ*,*i* ∈ *S⁻*}} = min{*Aᵢ*,*i* ∈ *S⁻*}), then the primary station transmits the orthogonal wireless resource unit having a value ${A}_{I} = + θ ⁢ min ⁢ \left({A}_{i},i∈{S}^{-}\right) ⁢ \left({A}_{I}^{+}=+θmin\left\{{A}_{i},i∈{S}^{*}\right\}, and {A}_{I}^{-}=0\right)$ (in step 2586).

FIG. 25b illustrates the determination of the final transmit signal using the method of FIG. 25a in the case of a multidimensional orthogonal resource hopping pattern collision between two channels. Let the two channels select the same orthogonal wireless resource unit in the same data symbol interval. If the data symbol values are +A_{¡} and +A₀ (Aᵢ < A₀), then the final data symbol value transferred by the orthogonal wireless resource unit is *Aₗ* = + *A*ₘₐₓ because *Aᵢ* + *A*₀ > +*A*ₘₐₓ (in step 2501). If the data symbol values are -Aᵢ and +A₀ (Aᵢ < A₀), then the final data symbol value transferred by the orthogonal wireless resource unit is Aₗ = -θA₀ (Aᵢ⁺ = 0, and Aₗ⁻ = -θA₀) (in step 2502). If Aᵢ > +θA₀, then Aᵢ = -θA₀ (Aₗ⁺ = 0, and Aₗ⁻ = -θA₀) (in step 2503). Here, Aₘₐₓ for curbing the increase of an unnecessary interference and θ for determining whether to perforate are given as a system parameter.

FIG. 25c illustrates a multidimensional orthogonal resource hopping pattern collision among four channels c, j; l and s for explaining the determination of the final transmit signal using the method of FIG. 25a. For I-channels, S⁰ = {a, b, d, e, f, g, h, i, k, m, n, o, p, q, r, t}, S⁺ = {c, l, s}, and S⁻ = {j}. For Q-channels, S⁰ = {a, b, d, e, f, g, h, i, k, m, n, o, p, q, r, t}, S⁺ = {j, l}, and S⁻ = {c, s}.

FIG. 25d shows a channel arrangement for comparing the amplitudes of channels selecting the orthogonal wireless resource unit in case of FIG. 25c. For I-channels, the reference value determined by the steps 2062 and 2070 is the size of the j-th channel (-Aⱼ). For Q-channels, the reference value determined by the steps 2062 and 2070 is the size of the s-th channel (-Aₛ).

FIG. 25e illustrates the final transmit signal determined according to the algorithm of FIG. 25a in case of FIG. 25c. For I-channels, the orthogonal wireless resource unit has a value of Aₗ = +θAⱼ (Aᵢ⁺ = +θAⱼ, and Aₗ⁻ = 0).In FIG. 25e, the channels c, j and s are OFF (A_{c} = 0, Aⱼ = 0, and Aₛ = 0) and only the channel I is ON (transmission) (Aₗ ≠ 0). But the amplitude of each channel is not important as long as the sum of the amplitudes satisfies A_{c} + Aⱼ + Aₗ + Aₛ = +θAⱼ. For Q-channels, there is no channel having a value of less than θAₛ, but the orthogonal wireless resource unit has a value of A_{Q} = + θAₛ (A_{Q}⁺ = + GAₛ, and A_{Q}⁻ = 0).

FIG. 26 illustrates that a transmitter from the primary station to the secondary station uses a soft hand-off to compensate for the disadvantageous aspect of the first to eighth transmit signal determination methods by the respective orthogonal wireless resource units on a secondary station positioned at an area (e.g., a cell boundary) having a relatively weak received signal from the primary station in accordance with an embodiment of the present invention. During a soft hand-off of the secondary station 2670 in communication using the multidimensional orthogonal resource hopping multiplexing, the transmit signal control proposed in FIGS. 18 to 25 is independently performed on wireless links 2671 and 2672 from the primary stations A and B 2610 and 2620. Therefore, even when the puncturing probability of the wireless link 2671 from the primary station A 2710 is greater than the reference value θ*_{P},* the final perforation probability ${P}_{P} = {P}_{P}^{A} ⋅ {P}_{P}^{B} .$ may be less than θ*_{P}* because of the perforation probability ${P}_{P}^{B}$ of the wireless link 2672 from the secondary station B 2620, thereby-reducing the relative disadvantage of the secondary station located at the cell boundary.

FIG. 27a illustrates an example of the prior art 2730 and an embodiment of the present invention 2740 for orthogonal resource division multiplexing of all output bits from a systematic channel encoder 2710 without distinguishing systematic bits, which are the same as input bits, from parity bits generated from a channel encoder. FIG. 27b illustrates, as the embodiment of FIG..27a, an example of the prior art 2732 and an embodiment of the present invention 2742 for orthogonal resource hopping multiplexing of all output bits from a turbo encoder 2712. Typically, among the output bits of the systematic channel encoder, the systematic bits not providing time diversity are more sensitive to errors than the parity bits providing time diversity. Therefore, the use of the pure orthogonal resource hopping multiplexing, which method has a possibility of puncturing, on both systematic and parity bits possibly deteriorates the quality of decoded signals from a systematic channel decoder of the receiver.

FIG. 27c illustrates that the systematic bits, which are the same as input bits, among the output bits of the systematic channel encoder are subject to an orthogonal resource division multiplexing 2751, the parity bits generated from the systematic channel encoder being subject to an orthogonal resource hopping multiplexing 2752. FIG. 27d illustrates the embodiment of FIG. 27c that temporally distinguishes an orthogonal resource division multiplexing region 2761 from an orthogonal resource hopping multiplexing region 2762. Let a set of all orthogonal wireless resource units be divided into two subsets A and B. The orthogonal wireless resource units of the subset A are used for the orthogonal resource division multiplexing, while those of the subset B are used for the orthogonal resource hopping multiplexing. FIG. 27e illustrates that the systematic bits, which are the same as input bits, among the output bits of the turbo encoder are subject to an orthogonal resource division multiplexing 2734, the parity bits generated from the systematic channel encoder being subject to an orthogonal resource hopping multiplexing 2744. The output bits of the channel encoder 2712 may be more or less than the bits necessary to the modulator because of a limited bandwidth. So, rate matchers 2716 and 2718 are used to match the number of output bits of the channel encoder 2712 to the number of bits necessary to the modulator.

FIG. 28a illustrates in FIG. 4c that the collision probability or the puncturing probability of frame-based multidimensional orthogonal resource hopping patterns are compared with a reference value in accordance with an embodiment of the present invention. As the instantaneous activity of an authorized channel in the frame denoted by a black arrow is increased to above an average activity, the collision probability p_{c} of the multidimensional pattern of secondary stations MS#1, MS#2, MS#3, MS#4, ... during orthogonal resource hopping multiplexing communication, or the perforation probability pₚ exceeds a reference value θ_{c} or θₚ, respectively, thereby deteriorating the quality of channels involved in transmission in the frame. FIG. 28b illustrates that the primary station intentionally does not transmit the whole or a part of the transmit frame to a least influenced secondary station so that the collision probability or the perforation probability of the multidimensional orthogonal resource hopping pattern should be less than the reference value. The channel in which the whole or a part of the transmit frame is not intentionally transmitted can be determined by a system designer according to the following standards:
(1) A channel with a lower quality requirement is not transmitted in preference to one with a higher quality requirement;
(2) A channel operated by ARQ (Automatic Repeat reQuest) is not transmitted in preference to one not operated by ARQ;
(3) Among channels operated by ARQ, a channel with a smaller number of retransmissions is, not transmitted in preference to one with a larger number of retransmissions;
(4) A channel with higher transmission power is not transmitted in preference to one with lower transmission power;
(5) A channel with a smaller number of consecutive transmitted frames is not transmitted in preference to one with a larger number of consecutive transmitted frames; and
(6) A channel in soft handoff is not transmitted later than one not in soft handoff. This is because all the base stations involved in the soft handoff are difficult to control at the same time and, as previously described, the secondary station located at the cell boundary is disadvantageous relative to ones near the primary station.

The system designer may apply the above-stated standards inversely according to circumstances. In some cases, the primary station may cancel channel allocation preferentially for less influenced channels out of the range not transferring several frames so as to lower the collision probability *p*_{c} or the puncturing probability *pₚ* of the multidimensional hopping pattern than a reference value θ_{c} or θₚ, respectively.

FIG. 29a illustrates that orthogonal wireless resource units for multidimensional orthogonal resource hopping multiplexing in a broad sense according to an embodiment of the present invention are divided into a set of orthogonal wireless resource units for orthogonal resource hopping multiplexing in a narrow sense and a set of orthogonal wireless resource units for orthogonal resource division multiplexing. The channels multiplexed by the orthogonal resource hopping multiplexing in a narrow sense use orthogonal wireless resource units denoted by a circle, and those multiplexed by the orthogonal resource division multiplexing use orthogonal wireless resource units denoted by a square. The orthogonal wireless resource unit are denoted by multidimensional coordinates composed of frequency, time, and orthogonal code. For example, let the frequency component, the time component and the orthogonal code component be expressed by binary numbers "010", "0101" and "11011", respectively. Then the multidimensional coordinates are denoted by a binary vector (010, 0101, 11011) or a binary number "010010111011". The channels to the secondary stations MS#a and MS#b served by the multidimensional orthogonal resource hopping multiplexing in a narrow sense select orthogonal resource units according to the hopping patterns denoted by a solid line and a dotted line, respectively.

FIG. 29b illustrates that the channel with a fixedly allocated orthogonal wireless resource unit for multidimensional orthogonal resource hopping multiplexing in a narrow sense according to an embodiment of the present invention is relative to a channel with an orthogonal wireless resource unit allocated according to a hopping pattern. In the upper figure, the channel to the secondary station MS#α selects an orthogonal wireless resource unit circumscribed by a thin solid line to transmit data according to a time-varying hopping pattern, and the channel to the secondary station MS#β fixedly uses an orthogonal wireless resource unit 2933 circumscribed by a bold solid line to transmit data according to a time-invariant hopping pattern. In the lower figure, it appears as if the channel to the secondary station MS#β carries data according to the time-varying hopping pattern, when viewing the channel to the secondary station MS#β from the secondary station MS# α.

Namely, the selection of an orthogonal wireless resource unit according to a time-varying hopping pattern is relative to the selection of an orthogonal wireless resource unit according to a time-invariant hopping pattern.

FIG. 29c is a conceptual diagram sequentially showing the steps of channel request, wireless resource allocation and channel termination in the orthogonal resource division, multiplexing according to an example of the prior art and the multidimensional orthogonal resource hopping multiplexing according to an embodiment of the present invention. Reference number 2940 shows the steps of channel request, wireless resource allocation and channel termination based on an orthogonal resource division multiplexing using six orthogonal wireless resource units each denoted by a square. Once an orthogonal resource division multiplexing channel is requested (or received) and there are orthogonal wireless resource units available, a wireless resource manager allocates one of the available orthogonal wireless resource units. Without any orthogonal wireless resource unit available, the wireless resource manager does not accept the corresponding channel. If the used orthogonal wireless resource unit is released upon termination of the channel, then the released orthogonal wireless resource unit is available for allocation. Reference number 2950 shows the steps of channel request, wireless resource allocation and channel termination based on an orthogonal resource hopping multiplexing in a narrow sense using seven orthogonal wireless resource units each denoted by a circle. If the number of requested orthogonal resource hopping multiplexing channels in a narrow sense is equal to or less than the number of orthogonal wireless resource units available, then the channel is fixedly allocated with the orthogonal wireless resource unit as an orthogonal resource division multiplexing channel so as to substantially avoid a hopping pattern collision. In a moment that the number of requested orthogonal resource hoping multiplexing channels in a narrow sense exceeds the number of orthogonal wireless resource units available, the allocated channels select the orthogonal wireless resource unit according to the hopping pattern to transmit data. If the orthogonal wireless resource unit fixedly allocated to the channel is released upon termination of the channel, it is then allocated to an orthogonal resource hopping multiplexing channel first requested subsequent to the terminated channel. This is a wireless resource operation method based on the concept of FIG. 29b.

FIG. 29d is a conceptual diagram sequentially showing the steps of channel request, wireless resource allocation, mode conversion, and channel termination in the multidimensional orthogonal resource hopping multiplexing in a narrow sense according to another embodiment of the present invention. Reference numbers 2960 and 2970 show the steps of channel request, wireless resource allocation, mode conversion, and channel termination based on an orthogonal resource hopping multiplexing in a narrow sense using seven orthogonal wireless resource units each denoted by a circle. The FCFC (First Come First Change) of the reference number 2960 is partly the same as the reference number 2950 in FIG. 29c. If the number of requested orthogonal resource hopping multiplexing channels in a narrow sense is equal to or less than the number of orthogonal wireless resource units available, then the channel is fixedly allocated with the orthogonal wireless resource unit as an orthogonal resource division multiplexing channel so as to substantially avoid a hopping pattern collision. In a moment that the number of requested orthogonal resource hoping multiplexing channels in a narrow sense exceeds the number of orthogonal wireless resource units available, the allocated channels select the orthogonal wireless resource unit according to the hopping pattern to transmit data. Unlike the reference number 2950 in FIG. 29c, if the orthogonal wireless resource unit fixedly allocated to the channel is released upon termination of the channel, it is then allocated to a most early served one of the orthogonal resource hopping multiplexing channels being served until the moment of release rather than the orthogonal resource hopping multiplexing channel first requested subsequent to the terminated channel. Then the orthogonal resource hopping multiplexing channel is subject to mode conversion to fixedly use the allocated orthogonal wireless resource unit for data transmission.

The LCFC (Last Come First Change) of the reference number 2970 is partly the same as the reference number 2950 in FIG. 29c. If the number of requested orthogonal resource hopping multiplexing channels in a narrow sense is equal to or less than the number of orthogonal wireless resource units available, then the channel is fixedly allocated with the orthogonal wireless resource unit as an orthogonal resource division multiplexing channel so as to substantially avoid a hopping pattern collision. In a moment that the number of requested orthogonal resource hopping multiplexing channels in a narrow sense exceeds the number of orthogonal wireless resource units available, the allocated channels select the orthogonal wireless resource unit according to the hopping pattern to transmit data. Unlike the reference number 2950 in FIG. 29c, if the orthogonal wireless resource unit fixedly allocated to the channel is released upon termination of the channel, it is then allocated to a most lately served one of the orthogonal resource hopping multiplexing channels being served until the moment of release rather than the orthogonal resource hopping multiplexing channel first requested subsequent to the terminated channel. Then the orthogonal resource hopping multiplexing channel is subject to mode conversion to fixedly use the allocated orthogonal wireless resource unit for data transmission. The priority may be determined differently according to residual service time, residual transmit data amount, quality requirement, transmission power, and client rank.

Also in the present invention, if the number of requested orthogonal resource hoping multiplexing channels in a narrow sense is equal to or less than the number of orthogonal wireless resource units available, then the channel is fixedly allocated with the orthogonal wireless resource unit as an orthogonal resource division multiplexing channel, so as to substantially avoid a hopping pattern collision. In a moment that the number of requested orthogonal resource hopping multiplexing channels in a narrow sense exceeds the number of orthogonal wireless resource units available, the allocated channels select the orthogonal wireless resource unit according to the hopping pattern to transmit data.

FIG. 30a is a conceptual diagram of a division mode in the multidimensional orthogonal resource hopping multiplexing in a narrow sense according to an embodiment of the present invention. The division mode is substantially similar to the conventional orthogonal resource division multiplexing so long as the number of allocated channels is less than that of orthogonal wireless resource units. Accordingly, there is no collision of multidimensional orthogonal resource hopping patterns and hence no perforating of transmit data symbols. Let *N_{OR}* be the number of orthogonal wireless resource units and *v̅* be the average channel activity. It can be seen that the collision probability *p_{c}* of multidimensional orthogonal resource hopping patterns, the puncturing probability *pₚ* of transmit data symbols, and the number of allocable channels M have nothing to do with the average channel activity *v̅* as follows. ${p}_{c} = 0$ ${p}_{p} = 0$ $M \leq {N}_{OR}$

The division mode can be easily applied to the system having more than one-bit information, such as MPSK (M > 4) or MQAM (M > 4), which is inferior in power efficiency to BPSK or QPSK but excellent in band efficiency, as well as the system having one-bit information (two values) in which the transmit data symbol has a value of "+1" or "-1", such as BPSK or QPSK (for the respective I- and Q-channels) excellent in power efficiency. In the system having a limited frequency band, channels less than or equal to the number of orthogonal wireless resource units *N_{OR}* are allocated and the power efficiency deteriorates with an increase in the required transmit data rate of each channel. Nevertheless, the system employs a modulation method excellent in band efficiency and thereby transmits more data in a short time. Because of the restricted data rate allowable in the limited frequency band, the modulation with a high band efficiency is switched to the modulation with a high power efficiency in a moment that the number of allocated channels M exceeds the number of orthogonal wireless resource units *N_{OR}*, thereby increasing the processing capacity of the system.

FIG. 30b is a conceptual diagram of a hopping mode in the multidimensional orthogonal resource hopping multiplexing in a narrow sense according to an embodiment of the present invention. In the hopping mode, the channels are distinguished with independent orthogonal resource hopping patterns irrespective of whether or not the number of allocated channels is greater than that of orthogonal wireless resource units, so that a collision may occur even when the number of channels is less than that of orthogonal wireless resource units. Moreover, when the average activity of the channels is low, the number of allocated channels is greater than the number of wireless resource units *N_{OR}* due to channel encoding. Nevertheless, a loss of the signal-to-interference ratio required to meet a wanted quality such as BER (Bit Error Rate) or FER (Frame Error Rate) is not so significant. Let *N_{OR}* be the number of orthogonal wireless resource units and *v̅* be the average channel activity of the channels. The collision probability *p_{c}* of multidimensional orthogonal resource hopping patterns, the puncturing probability *pₚ* of transmit data symbols, and the number of allocable channels M have the following correlation, where s represents the number of modulation symbols in the I- or Q-channel): ${p}_{c} = 1 - {\left\{1-\frac{{v}^{}}{{N}_{OR}}\right\}}^{M - 1}$ ${p}_{p} = 1 - {\left\{1-\frac{s - 1}{s}⋅\frac{{v}^{}}{{N}_{OR}}\right\}}^{M - 1}$

For BPSK or QPSK (for the respective I- or Q-channels) modulation, the perforation probability *pₚ* of transmit data symbols (where s = 2) is given by: ${p}_{p} = 1 - {\left\{1-\frac{{v}^{}}{2 ⁢ {N}_{OR}}\right\}}^{M - 1}$

The number of channels M accepted in the hopping mode for statistical multiplexing can be determined as follows according to a given maximum allowable collision probability ${p}_{c}^{max}$ of multidimensional orthogonal resource hopping patterns and a given maximum allowable puncturing probability ${p}_{p}^{max}$ of transmit data symbols: $M \leq 1 + \frac{In ⁢ \left(1-{P}_{c}^{max}\right)}{In ⁢ \left(1-\frac{{v}^{}}{{N}_{OR}}\right)}$ $M \leq 1 + \frac{In ⁢ \left(1-{P}_{c}^{max}\right)}{In ⁢ \left(1-\frac{s - 1}{s}⋅\frac{{v}^{}}{{N}_{OR}}\right)}$

For BPSK or QPSK (for the respective I- or Q-channels) modulation, the number M of accepted channels (where s = 2) is given by: $M \leq 1 + \frac{In ⁢ \left(1-{P}_{c}^{max}\right)}{In ⁢ \left(1-\frac{{v}^{}}{2 ⁢ {N}_{OR}}\right)}$

As can be seen from the above equations, the hopping mode is applicable to the system having more than one-bit information (s > 2), such as MPSK (M > 4) or MQAM (M > 4) excellent in band efficiency, and also to BPSK or QPSK (for the respective I- and Q-channels) modulation excellent in power efficiency in which case the perforation probability *pₚ* of transmit data symbols can be minimized.

FIG. 30c is a conceptual diagram of a hybrid mode in the multidimensional orthogonal resource hopping multiplexing in a narrow sense according to an embodiment of the present invention. The hybrid mode is a mixed mode of the division mode of FIG. 30a and the hopping mode of FIG. 30b. Namely, the system operates in the division mode of FIG. 30a to avoid a collision between orthogonal resource hopping patterns (perforating of transmit data symbols does not occur because there is no collision) while the number of allocated channels M is less than the number of orthogonal wireless resource units *N_{OR}*. The system enters the hopping mode of FIG. 30b for distinguishing channels with channel-independent orthogonal hopping patterns in a moment that the number of allocated channels M exceeds the number of orthogonal wireless resource units *N_{OR}*. Let *N_{OR}* be the number of orthogonal wireless resource units and *v̅* be the average channel activity of channels. The collision probability *p_{c}* of multidimensional orthogonal resource hopping patterns, the puncturing probability *pₚ* of transmit data symbols, and the number of allocable channels M have the correlation as follows (where s represents the number of modulation symbols in I- or Q-channels):
(a) For M ≤ *N_{OR}*, ${p}_{c} = 0$ ${p}_{p} = 0$
(b) For M > *N_{OR}*, ${p}_{c} = \frac{{N}_{OR}}{M} \left\{1-{\left(1-\frac{{v}^{}}{{N}_{OR}}\right)}^{M - {N}_{OR}}\right\} + \frac{M - {N}_{OR}}{M} \left\{1-\left(1-{v}^{}\right)⁢{\left(1-\frac{{v}^{}}{{N}_{OR}}\right)}^{M - {N}_{OR} - 1}\right\}$ ${p}_{p} = \frac{{N}_{OR}}{M} \left\{1-{\left(1-\frac{s - 1}{s}⁢\frac{{v}^{}}{{N}_{OR}}\right)}^{M - {N}_{OR}}\right\} + \frac{M - {N}_{OR}}{M} \left\{1-\left(1-\frac{s - 1}{s}⁢{v}^{}\right)⁢{\left(1-\frac{s - 1}{s}⁢\frac{{v}^{}}{{N}_{OR}}\right)}^{M - {N}_{OR} - 1}\right\}$

For BPSK or QPSK (for the respective I- or Q-channels) modulation, the perforation probability *pₚ* of transmit data symbols (where s = 2) is given by: ${p}_{p} = \frac{{N}_{OR}}{M} \left\{1-{\left(1-\frac{{v}^{}}{2 ⁢ {N}_{OR}}\right)}^{M - {N}_{OR}}\right\} + \frac{M - {N}_{OR}}{M} \left\{1-\left(1-\frac{{v}^{}}{2}\right)⁢{\left(1-\frac{{v}^{}}{2 ⁢ {N}_{OR}}\right)}^{M - {N}_{OR} - 1}\right\}$

The number of channels accepted by the hopping mode for statistical multiplexing can be calculated by substituting the maximum allowable collision probability ${p}_{c}^{max}$ of multidimensional orthogonal resource hopping patterns and the maximum allowable puncturing probability ${p}_{p}^{max}$ of transmit data symbols into the above equation for numerical analysis.

It can be seen that the hybrid mode selectively has the advantages of the division mode and the hopping mode. The modulation method poor in power efficiency but excellent in band efficiency is used only in the division mode and the modulation method excellent in power efficiency is used in the hopping mode as the number of channels is increased. The hybrid mode is operated by the wireless orthogonal resource operating methods of FIGS. 29a to 29d to acquire a higher performance.

FIG. 30d is a conceptual diagram of a group mode for a single channel in the multidimensional orthogonal resource hopping multiplexing in a narrow sense according to an embodiment of the present invention. The group mode is the improved form of the hybrid mode of FIG. 30c. The group mode is the same as the division mode of FIG. 30a and the hybrid mode of FIG. 30c while the number of allocated channels M is less than the number of orthogonal wireless resource units *N_{OR}*. In the hybrid mode of FIG. 30c, the system enters the hopping mode of FIG. 30b for distinguishing channels with channel-independent orthogonal hopping patterns in a moment that the number of allocated channels M exceeds the number of orthogonal wireless resource units *N_{OR}*. Unlike the hybrid mode, the group mode of FIG. 30d involves dividing channels into groups, each of which includes channels as many as the number of orthogonal wireless resource units *N_{OR}*, so that there is only a collision among channels of a different group without a collision of orthogonal resource hopping patterns among channels in each group. Accordingly, the orthogonal resource hopping patterns of channels in a same group are not mutually independent, but the hopping pattern of one group is independent to the hopping pattern of another group. Namely, the first group OG#0 includes 0-th to (*N_{OR}* -1)-th channels, and the second group OG#1 includes *N_{OR}* -th to (2 *N_{OR}* -1)-th channels. Let *N_{OR}* be the number of orthogonal wireless resource units and *v̅* be the average channel activity of channels. The collision probability *p_{c}* of multidimensional orthogonal resource hopping patterns, the puncturing probability *pₚ* of transmit data symbols, and the number of allocable channels M have the correlation as follows (where s represents the number of modulation symbols in I- or Q-channels):
(a) For M ≤ *N_{OR}*, ${p}_{c} = 0$ ${p}_{p} = 0$
(b) For M > *N_{OR}*, ${p}_{c} = \left[\frac{M}{{N}_{OR}}\right] ⁢ \frac{{N}_{OR}}{M} ⋅ \left\{1-{\left(1-{v}^{}\right)}^{\left[\frac{M}{{N}_{OR}}\right] - 1}⋅\left(1-\frac{M - \left[\frac{M}{{N}_{OR}}\right] ⁢ {N}_{OR}}{{N}_{OR}}\right)⋅{v}^{}\right\} + \frac{M - \left[\frac{M}{{N}_{OR}}\right] ⁢ {N}_{OR}}{M} ⋅ \left\{1-{\left(1-{v}^{}\right)}^{\left[\frac{M}{{N}_{OR}}\right]}\right\}$ ${p}_{p} = \left[\frac{M}{{N}_{OR}}\right] ⁢ \frac{{N}_{OR}}{M} ⋅ \left\{1-{\left(1-\frac{s - 1}{s}⁢{v}^{}\right)}^{\left[\frac{M}{{N}_{OR}}\right] - 1}⋅\left(1-\frac{M - \left[\frac{M}{{N}_{OR}}\right] ⁢ {N}_{OR}}{{N}_{OR}}\right)⋅\frac{s - 1}{s}⁢{v}^{}\right\} + \frac{M - \left[\frac{M}{{N}_{OR}}\right] ⁢ {N}_{OR}}{M} ⋅ \left\{1-{\left(1-\frac{s - 1}{s}⁢{v}^{}\right)}^{\frac{M}{{N}_{OR}}}\right\}$

For BPSK or QPSK (for the respective I- or Q-channels) modulation, the perforation probability *pₚ* of transmit data symbols (where s = 2) is given by: ${p}_{p} = \left[\frac{M}{{N}_{OR}}\right] ⁢ \frac{{N}_{OR}}{M} ⋅ \left\{1-{\left(1-\frac{{v}^{}}{2}\right)}^{\left[\frac{M}{{N}_{OR}}\right] - 1}⋅\left(1-\frac{M - \left[\frac{M}{{N}_{OR}}\right] ⁢ {N}_{OR}}{{N}_{OR}}\right)⋅\frac{{v}^{}}{2}\right\} + \frac{M - \left[\frac{M}{{N}_{OR}}\right] ⁢ {N}_{OR}}{M} ⋅ \left\{1-{\left(1-\frac{{v}^{}}{2}\right)}^{\left[\frac{M}{{N}_{OR}}\right]}\right\}$

The number of channels accepted by the hopping mode for statistical multiplexing can be calculated by substituting the maximum allowable collision probability ${p}_{c}^{max}$of multidimensional orthogonal resource hopping patterns and the maximum allowable puncturing probability ${p}_{p}^{max}$ of transmit data symbols into the above equation for numerical analysis.

The group mode is intended to reduce a collision of orthogonal resource hopping patterns caused in the hopping mode at a moment that the number of channels exceeds that of wireless orthogonal resource units in the hybrid mode of FIG. 30c, and the perforation probability of transmit data symbols.

FIG. 30e is a conceptual diagram of a group mode for multiple channels in the multidimensional orthogonal resource hopping multiplexing in a narrow sense according to an embodiment of the present invention. The group mode of FIG. 30e has the equivalent function of FIG. 30d in the case where one orthogonal channel from the primary station is allocated to the secondary station. Contrarily, when a plurality of orthogonal channels from the primary station are allocated to the secondary station, the multiple channels are not independent in activity to one another and a collision occurs even in the first group OG#0 including 0-th to (*N_{OR}*-1)-th channels. But the group mode of FIG. 30e disperses the consecutive collision probability between the secondary stations of multiple channels in a different group and uniformly distributes the collision of orthogonal resource hopping patterns over all the channels.

As described above, the present invention improves the weak points of the simple perforating method previously suggested by the inventor of this invention when the hopping patterns of multidimensional orthogonal , resources are collided between mutually independent channels and the data symbols to be transmitted are different from one another during the collision as is usual in the statistical orthogonal multiplexing system based on the multidimensional orthogonal resource hopping method in which a plurality of communication channels synchronized with one another via a single medium.

The present invention also subdivides a bisectional processing method of transmission and perforating during a hopping pattern collision of the multidimensional orthogonal resources so as to enhance the performance of a system using a multidimensional orthogonal resource hopping multiplexing, thereby reducing the puncturing probability.

The present invention also uses a soft handoff to reduce the puncturing probability of the secondary station located at a cell boundary that is relatively disadvantageous.

In addition, the present invention divides the output bits of a systematic channel encoder into systematic bits and parity bits, and transmits the systematic bits by an orthogonal division multiplexing, which method has no risk of a loss caused by a collision, and the parity bits by an orthogonal resource hopping multiplexing, thereby lowering the required bit energy to satisfy quality requirement such as a required BER (Bit Error Rate).

The present invention stops frame transmission in the order of starting from a least influenced channel when an instantaneous collision rate in a specific frame of the multidimensional hopping pattern exceeds a reference collision rate, thereby enhancing the performance of the entire system.

Furthermore, the present invention stops channel allocation in the order of starting from a least influenced channel when an instantaneous collision rate of the multidimensional hopping pattern successively exceeds a reference collision rate, thereby enhancing the performance of the entire system.

In the foregoing description the term "perforate" is used synonymously with "puncture", and references to "perforating" and "perforation" are to be construed accordingly.

## Claims

1. A digital communication method, which performs statistical multiplexing by allocating communication channels from a primary station (101) to a plurality of secondary stations (111, 112, 113) in synchronization using N-dimensional (N≥1) orthogonal resource hopping multiplexing, the method comprising:
(a) determining whether or not signs of then transmit data symbols are matched (1840, 1850), when a collision between hopping patterns of N-dimenslonal orthogonal resources occurs, the transmit data symbols being data symbols for all channels Involved in the collision;
(b) transmitting all the transmit data symbols, when the signs of the transmit data symbols are matched (1844, 1846, 1854, 1856); and
(c) determining data symbols to be transmitted according to the amplitudes of the transmit data symbols when the signs of the transmit data symbols are not matched, puncturing (1860, 1940, 2089) the transmit data symbols except the determined data symbols, and transmitting the determined data symbols on the collided channels wherein the determining step in the step (c) includes calculating (2060, 2160, 2260, 2360, 2460, 2560) the amplitudes of the determined data symbols to control the .respective amplitudes of the transmit signals to be transmitted on the collided channels according to the step (c), to thereby reduce transmit data loses.

2. The digital communication method as claimed in Claim 1, wherein the hopping patterns of the N-dimensional orthogonal resources of the respective secondary stations are mutually independent.

3. The digital communication method as claimed in Claim 2, wherein the N-dimensional orthogonal resources include frequency, time and orthogonal codes that secure orthogonality.

4. The digital communication method as claimed in Claim 3, wherein the N-dimensional orthogonal resources with a collision of hopping patterns are limited in the total transmit signal amplitude from the primary station.

5. The digital communication method as claimed in Claim 1, wherein a set S of all channels allowed to be connected by the primary station comprises a set S⁰. a set S⁺, and a set S⁻, the set S⁰ being a set of remaining channels excluding the collided channels in the set S, the set S⁺ being a set of the collided channels in which the signs of the transmit data symbols to be transmitted on the collided channels are positive, and the set S⁻ being a set of the collided channels in which the signs of the transmit data symbol to be transmitted on the collided channels are negative, and the steps (b) and (c) determine (1844, 1854, 1856, 2060, 2160, 2260, 2360, 2460, 2560) the respective amplitudes of the transmit signals to be transmitted on the collided channels according to whether or not the set S⁰, the set S⁺ and the set S⁻ have a channel respectively (1830, 1840, 1850).

6. The digital communication method as claimed in Claim 5, wherein the step (c) comprise:
comparing (2062, 2070) the transmit signal amplitudes of two channels having a minimum transmit signal amplitude in each set, when neither the set S⁺ nor the set S⁻ is an empty set; and
determining (2073, 2072, 2273, 2272) transmit data symbols to be transmitted in the units of the orthogonal wireless resource using the channel having the larger of the minimum transmit signal amplitudes as a reference value.

7. The digital communication method as claimed in Claim 6, further comprising:
controlling a transmission power of all channels in the set S including the channel determined as the reference value.

8. The digital communication method as claimed in Claim 6, further comprising:
sending a transmit signal value having the sign of the channel, but not including the channel determined as the reference value, and having an amplitude being a multiple (2087, 2088).

9. The digital communication method as claimed in Claim 6, further comprising:
sending the sum of the amplitude of the transmit signals of the channels included In the set S, not including the channel determined as the reference Value, in the units of the orthogonal wireless resource (2085, 2086).

10. The digital communication method as claimed in Claim 9, further comprising:
comparing (2083, 2084) the sum of the amplitudes of the transmit signal of the channels included in the set S, not including the channel determined as the reference value, with a multiple of the reference value, and sending a value having the smaller amplitude in the units of the orthogonal wireless resource.

11. The digital communication method, as claimed in Claim 1, further comprising, before the step (a):
(i) determining an instantaneous collision rate in a predetermined transmission time interval; and
(ii) canceling channel allocation in a predefined order, when the instantaneous collision rate exceeds a reference collision rate.

12. The digital communication method as claimed in Claim 11, wherein the step (ii) comprises:
canceling channel allocation in the order of starting from a channel with the lowest quality requirement to a channel with the highest quality requirement.

13. The digital communication method as claimed in Claim 11, wherein the step (ii) comprises:
canceling channel allocation in the order of starting from channels operated by automatic repeat request to channels not operated by automatic repeat request.

14. The digital communication method as claimed in Claim 13, wherein for channels operated by automatic repeat request, the channel allocation is canceled in the order of starting from the channel in which the number of retransmissions is the smallest to the channel in which the number of retransmissions is the largest.

15. The digital communication method as claimed in Claim 11, wherein the step (ii) comprises:
canceling channel allocation for the channel having higher transmission power in preference to the channel having lower transmission power.

16. The digital communication method as claimed in Claim 11, wherein the step (ii) comprises:
canceling channel allocation in the order of starting from the channel in which the number of already consecutively transmitted frames is the smallest to the channel in which the number of already consecutively transmitted frames is the largest.

17. The digital communication method as claimed in Claim 11, wherein the step (ii) comprises:
canceling channel allocation in the order of starting from channels being in soft handoff to channels not being in soft handoff.

18. A digital communication apparatus for allocating communication channels from a primary station (101) to a plurality of secondary stations (111, 112, 113) in synchronization using N-dimensional (N≥1) orthogonal resource hopping multiplexing, the apparatus comprising:
means (380; 1080) for generating N-dimensional hopping patterns;
means (312, 332; 1012) for modulating transmit data symbols according to the output of the N-dimensional hopping pattern generating means;
collision detecting and control means (384; 386; 1084) for monitoring whether or not a collision of the N-dimensional hopping patterns occurs, and comparing transmit data symbols to the secondary stations in an interval of the collision to determine whether or not signs of the transmit data symbols are matched; and
transmission power control means (315, 335; 1015) for controlling a transmission power of the primary station,
wherein the collision detecting and control means (384, 386; 1084) is operable to determine whether or not the signs of the transmit data symbols are matched, when the collision between the hopping patterns of the N-dimensional orthogonal resources occurs,
wherein the collision detecting and control means (384; 386; 1084) is operable to transmit all the transmit data symbols when the signs of the transmit data symbols are matched, the transmit data symbols being data symbols for all channels involved in collision,
wherein the collision detecting and control means (384; 386; 1084) is operable to determine data symbols to be transmitted according to the amplitudes of the transmit data symbols when the signs of the transmit data symbols are not matched and puncturing the transmit data symbols except the determined data symbols,
wherein the transmission power control means is operable to increase the transmission power of the primary station in order to compensate a lack of the average received energy in the secondary stations (111, 112, 113) resulting from an interruption of the transmission of the transmit data symbols being caused by puncturing of the transmit data symbols.

19. The digital communication apparatus as claimed in Claim 18, wherein the N-dimensional orthogonal resource hopping patterns of the respective secondary stations are mutually independent.

20. The digital communication apparatus as claimed in Claim 18, wherein the primary station is operable to determines the number of allocated channels according to channel activity.

21. The digital communication apparatus as claimed in Claim 18, wherein a unit of the orthogonal wireless resource includes frequency, time and orthogonal code data that secure orthogonality.

22. The digital communication apparatus as claimed in Claim 18, wherein at the time of collision of the hopping pattern the orthogonal wireless resource unit is limited in total transmit signal amplitude from the primary station.

23. The digital communication apparatus as claimed in Claim 18, wherein the collision detection and control means (384; 386; 1084) is operable to control a transmit signal of each orthogonal wireless resource according to the transmit data symbol of a channel involved in the hopping pattern collision of the N-dimensional orthogonal resources and the transmit signal amplitude of the channel, and wherein
the collision detention and control means (384; 386; 1084) is operable to determine the amplitudes of the transmit data symbols transmitted in the units of the orthogonal wireless resource of the channel having hopping pattern collisions, and wherein
the collision detection and control means (384; 386; 1084) is operable to generate a complex number representation of all of the channels to determine a set S of all channels allowed to be connected by the primary station,
wherein the set S comprises a set S⁰, a set S⁺, and a set S⁻, the set S⁰ being a set of remaining channels excluding the collided channels in the set S, the set S⁺ being a set of the collided channels in which the signs of the transmit data symbols to be transmitted on the collided channels are positive, and the set S⁻ being a set of the collided channels in which the signs of the transmit data symbol to be transmitted on the collided channels are negative, and the collision detention and control means is operable to determine (1844, 1854, 1856, 2060, 2160, 2260, 2360, 2460, 2560) the respective amplitudes of the transmit signals to be transmitted on the collided channels according to whether or not the set S⁰, the set S⁺, and the set S⁻ have a channel respectively (1830, 1840, 1850).

24. The digital communication apparatus as claimed in Claim 23, wherein the collision detection and control means (384; 386; 1084) is operable to compare the transmit signal amplitudes of two channels having a minimum transmit signal amplitude in each set, when neither the set S⁺ nor the set S⁻ is an empty set, and
the collision detection and control means (384; 386; 1084) is operable to determine transmit data symbols to be transmitted in the units of the orthogonal wireless resource using the channel with the larger transmit signal amplitude as a reference velue.

25. The digital communication apparatus as claimed in Claim 24, wherein the power control means is operable to control the transmission power of all channels in the set S including the channel determined as the reference value.

26. The digital communication apparatus as claimed in Claim 24, wherein the collision detection control means (384; 386; 1084) is operable to send a transmit signal value having the sign of the channel, but not including the channel determined as the reference value, and an amplitude being a muitiple of the reference value in the units of the orthogonal wireless resource.

27. The digital communication apparatus as claimed in Claim 24, wherein the collision detection and control means (384; 386; 1084) is operable to send the sum of the amplitudes of the transmit signals of the channels included in the set S, not including the channel determined as the reference value, in the units of the orthogonal wireless resource.

28. The digital communication apparatus as claimed in Claim 24, wherein the collision detection and control means (384; 386; 1084) is operable to compare the sum of the amplitudes of the transmit signals of the channels included in the set S, not including the channel determined as the reference value, with a multiple of the reference value, and to send a value having a smaller amplitude in the units of the orthogonal wireless resource.

29. The digital communication apparatus as claimed in Claim 18 further comprising: means for determining an instantaneous collision rate of the N-dimensional hopping patterns; and
means for canceling channel allocation in a predefined order, when the instantaneous collision rate successively exceeds a reference collision rate for a predetermined number of times.

30. The digital communication apparatus as claimed In Claim 29, wherein the canceling means is operable to cancel channel allocation in the predefined order from a channel with the lowest quality requirement to a channel with the highest quality requirement.

31. The digital communication apparatus as claimed in Claim 29, wherein the canceling means is operable to cancel channel allocation in the predefined order from a channel having the smallest number of consecutive transmitted frames to a channel having the largest number of consecutive transmitted frames.

32. The digital communication apparatus as claimed in Claim 29, wherein the canceling means is operable to cancel channel allocation in the order of starting from channels being in soft handoff to channels not being in soft handoff.

## Patentansprüche

1. Digitales Kommunikationsverfahren, das eine statistische Multiplexierung durchführt, indem es Kommunikationskanäle von einer Primärstation (101) einer Vielzahl von Sekundärstationen (111, 112, 113) zuweist, die durch N-dimensionale (N≥1) Orthogonal-Resource-Hopping-Multiplexierung synchronisiert werden, wobei das Verfahren umfasst:
(a) das Bestimmen, ob Vorzeichen der Übertragungsdatensymbole übereinstimmen oder nicht (1840, 1850), wenn eine Kollision zwischen Sprungmustern von N-dimensionalen orthogonalen Ressourcen auftritt, wobei die Übertragungsdatensymbole Datensymbole für alle Kanäle sind, die an der Kollision beteiligt sind;
(b) das Übertragen aller Übertragungsdatensymbole, wenn die Vorzeichen der Übertragungsdatensymbole übereinstimmen (1844, 1846, 1854, 1856); und
(c) das Bestimmen der zu übertragenden Datensymbole den Amplituden der Übertragungsdatensymbole entsprechend, wenn die Vorzeichen der Übertragungsdatensymbole nicht übereinstimmen, das Punktieren (1860, 1960, 2089) der Übertragungsdatensymbole mit Ausnahme der bestimmten Datensymbole, wobei der Bestimmungsschritt in Schritt (c) das Berechnen (2060, 2160, 2260, 2360, 2460, 2560) der Amplituden der bestimmten Datensymbole einschließt, um die jeweiligen Amplituden der Übertragungssignale zu steuern, die Schritt (c) entsprechend auf den kollidierten Kanälen zu übertragen sind, um **dadurch** Übertragungsdatenverluste zu reduzieren.

2. Digitales Kommunikationsverfahren nach Anspruch 1, wobei die Sprungmuster der N-dimensionalen orthogonalen Ressourcen der jeweiligen Sekundärstationen voneinander unabhängig sind.

3. Digitales Kommunikationsverfahren nach Anspruch 2, wobei die N-dimensionalen orthogonalen Ressourcen Frequenz-, Zeit- und orthogonale Codes einschließen, die die Orthogonalität sicherstellen.

4. Digitales Kommunikationsverfahren nach Anspruch 3, wobei die N-dimensionalen orthogonalen Ressourcen mit einer Kollision von Sprungmustern in der Gesamtübertragungssignalamplitude von der Primärstation beschränkt werden.

5. Digitales Kommunikationsverfahren nach Anspruch 4, wobei eine Menge S aller Kanäle, die von der Primärstation verbunden werden können, eine Menge S⁰, eine Menge S⁺ und eine Menge S⁻ einschließt, die Menge S⁰ eine Menge der restlichen Kanäle ausschließlich der kollidierten Kanäle in der Menge S ist, die Menge S⁺ eine Menge der kollidierten Kanäle ist, in welcher die Vorzeichen der auf den kollidierten Kanälen zu übertragenden Übertragungsdatensymbole positiv sind, und die Menge S⁻ eine Menge der kollidierten Kanäle ist, in welcher die Vorzeichen der auf den kollidierten Kanälen zu übertragenden Übertragungsdatensymbole negativ sind, und die Schritte (b) und (c) die jeweiligen Amplituden der auf den kollidierten Kanälen zu übertragenden Übertragungssignale bestimmen (1844, 1854, 1856, 2060, 2160, 2260, 2360, 2460, 2560), je nachdem, ob die Menge S⁰, die Menge S⁺ und die Menge S⁻ jeweils einen Kanal (1830, 1840, 1850) aufweisen oder nicht.

6. Digitales Kommunikationsverfahren nach Anspruch 5, wobei der Schritt (c) umfasst:
das Vergleichen (2062, 2070) der Übertragungssignalamplituden der zwei Kanäle, die in jeder Menge eine Mindestübertragungssignalamplitude aufweisen, wenn weder die Menge S⁺ noch die Menge S⁻ eine leere Menge ist; und
das Bestimmen (2073, 2072, 2273, 2272) der Übertragungsdatensymbole, die in den Einheiten der orthogonalen drahtlosen Ressource mit dem Kanal zu übertragen sind, der die größere Mindestübertragungssignalamplitude als Bezugswert aufweist.

7. Digitales Kommunikationsverfahren nach Anspruch 6, außerdem umfassend:
das Regeln einer übertragungsleistung aller Kanäle in der Menge S einschließlich des Kanals, der als Bezugswert bestimmt wurde.

8. Digitales Kommunikationsverfahren nach Anspruch 6, außerdem umfassend:
das Senden eines Übertragungssignalwerts mit dem Vorzeichen des Kanals, aber ohne den Kanal, der als Bezugswert bestimmt wurde, und mit einer Amplitude, die ein Mehrfaches des Bezugswerts ist, in den Einheiten der orthogonalen drahtlosen Ressource (2087, 2088).

9. Digitales Kommunikationsverfahren nach Anspruch 6, außerdem umfassend:
das Senden der Summe der Amplituden der Übertragungssignale der Kanäle, die in der Menge S enthalten sind, ohne den Kanal, der als Bezugswert bestimmt wurde, in den Einheiten der orthogonalen drahtlosen Ressource (2085, 2086).

10. Digitales Kommunikationsverfahren nach Anspruch 9, außerdem umfassend:
das Vergleichen (2083, 2084) der Summe der Amplituden der Übertragungssignale der Kanäle, die in der Menge S enthalten sind, ohne den Kanal, der als Bezugswert bestimmt wurde, mit einem Vielfachen des Bezugswerts, und das Senden eines Werts mit der kleineren Amplitude in den Einheiten der orthogonalen drahtlosen Ressource.

11. Digitales Kommunikationsverfahren nach Anspruch 1, außerdem umfassend, vor dem Schritt (a):
(i) das Bestimmen einer Momentankollisionsrate in einem vorbestimmten Übertragungszeitintervall; und
(ii) das Aufheben der Kanalzuweisung in einer vordefinierten Reihenfolge, wenn die Momentankollisionsrate eine Bezugskollisionsrate übersteigt.

12. Digitales Kommunikationsverfahren nach Anspruch 11, wobei der Schritt (ii) umfasst:
das Aufheben der Kanalzuweisung in der Reihenfolge des Startens von einem Kanal mit der niedrigsten Qualitätsanforderung zu einem Kanal mit der höchsten Qualitätsanforderung.

13. Digitales Kommunikationsverfahren nach Anspruch 11, wobei der Schritt (ii) umfasst:
das Aufheben der Kanalzuweisung in der Reihenfolge des Startens von Kanälen, die durch automatische Wiederholungsanforderung betrieben werden, zu Kanälen, die nicht durch automatische Wiederholungsanforderung betrieben werden.

14. Digitales Kommunikationsverfahren nach Anspruch 13, wobei für Kanäle, die durch automatische Wiederholungsanforderung betrieben werden, die Kanalzuweisung in der Reihenfolge des Startens von dem Kanal, in welchem die Zahl der Neuübertragungen die kleinste ist, zu dem Kanal, in welchem die Zahl der Neuübertragungen die größte ist, aufgehoben wird.

15. Digitales Kommunikationsverfahren nach Anspruch 11, wobei der Schritt (ii) umfasst:
das Aufheben der Kanalzuweisung für den Kanal, der die höhere Übertragungsleistung aufweist, bevorzugt zu dem Kanal, die die niedrigere Übertragungsleistung aufweist.

16. Digitales Kommunikationsverfahren nach Anspruch 11, wobei der Schritt (ii) umfasst:
das Aufheben der Kanalzuweisung in der Reihenfolge des Startens von dem Kanal, in welchem die Zahl der bereits aufeinanderfolgend übertragenen Frames die kleinste ist, zu dem Kanal, in welchem die Zahl der bereits aufeinanderfolgend übertragenen Frames die größte ist.

17. Digitales Kommunikationsverfahren nach Anspruch 11, wobei der Schritt (ii) umfasst:
das Aufheben der Kanalzuweisung in der Reihenfolge des Startens von Kanälen, die weich umgeschaltet werden, zu Kanälen, die nicht weich umgeschaltet werden.

18. Digitale Kommunikationsvorrichtung zur Zuweisung von Kommunikationskanälen von einer Primärstation (101) zu einer Vielzahl von Sekundärstationen (111, 112, 113), die durch eine N-dimensionale (N≥1) Orthogonal-Resource-Hopping-Multiplexierung synchronisiert werden, wobei die Vorrichtung umfasst:
Mittel (380, 1080), um N-dimensionale Sprungmuster zu erzeugen;
Mittel (312, 332; 1012), um Übertragungsdatensymbole der Ausgabe der Mittel zur Erzeugung von N-dimensionalen Sprungmustern zu modulieren;
Kollisionserkennungs- und -steuermittel (384, 386; 1084), um zu überwachen, ob in den N-dimensionalen Sprungmustern eine Kollision auftritt oder nicht, und um Übertragungsdatensymbole zu den Sekundärstationen in einem Intervall der Kollision zu vergleichen, um zu bestimmen, ob Vorzeichen der Übertragungsdatensymbole übereinstimmen oder nicht; und
Übertragungsleistungssteuermittel (315, 335; 1015), um eine Übertragungsleistung der Primärstation zu regeln,
wobei das Kollisionserkennungs- und -steuermittel (384, 386; 1084) betreibbar ist, um zu bestimmen, ob die vorzeichen der Übertragungsdatensymbole übereinstimmen oder nicht, wenn die Kollision zwischen den Sprungmustern der orthogonalen N-dimensionalen Ressourcen auftritt, wobei das Kollisionserkennungs- und -steuermittel (384, 386; 1084) betreibbar ist, um alle Übertragungsdatensymbole zu übertragen, wenn die Vorzeichen der Übertragungsdatensymbole übereinstimmen, wobei die Übertragungsdatensymbole Datensymbole für alle Kanäle sind, die an der Kollision beteiligt sind,
wobei das Kollisionserkennungs- und -steuermittel (384, 386; 1084) betreibbar ist, um zu übertragende Datensymbole den Amplituden der Übertragungsdatensymbole entsprechend zu bestimmen, wenn die Vorzeichen der Datenübertragungssymbole nicht übereinstimmen, und die Datenübertragungssymbole mit Ausnahme der bestimmten Datensymbole punktiert,
wobei das Kollisionserkennungs- und -steuermittel betreibbar ist, um die Übertragungsleistung der Primärstation zu erhöhen, um einen Mangel der durchschnittlichen Empfangsenergie in den Sekundärstationen (111, 112, 113) auszugleichen, der aus einer Unterbrechung der Übertragung der Übertragungsdatensymbole resultiert, die durch Punktieren der Übertragungsdatensymbole verursacht wird.

19. Digitale Kommunikationsvorrichtung nach Anspruch 18, wobei die N-dimensionalen orthogonalen Ressourcen-Sprungmuster der jeweiligen Sekundärstationen voneinander unabhängig sind.

20. Digitale Kommunikationsvorrichtung nach Anspruch 18, wobei die Primärstation betreibbar ist, um die Zahl der zugewiesenen Kanäle der Kanalaktivität entsprechend zu bestimmen.

21. Digitale Kommunikationsvorrichtung nach Anspruch 18, wobei eine Einheit der N-dimensionalen orthogonalen drahtlosen Ressourcen Frequenzdaten, Zeitdaten und orthogonale Codedaten einschließt, die die Orthogonalität sicherstellen.

22. Digitale Kommunikationsvorrichtung nach Anspruch 18, wobei die orthogonale drahtlose Ressourceneinheit bei der Kollision des Sprungmusters in der Gesamtübertragungssignalamplitude von der Primärstation beschränkt wird.

23. Digitale Kommunikationsvorrichtung nach Anspruch 18, wobei das Kollisionserkennungs- und -steuermittel (384, 386; 1084) betreibbar ist, um ein Übertragungssignal jeder orthogonalen drahtlosen Ressource dem Übertragungsdatensymbol eines Kanals, der an der Sprungmusterkollision der N-dimensionalen drahtlosen Ressourcen beteiligt ist, und der Übertragungssignalamplitude des Kanals entsprechend zu steuern, und wobei
das Kollisionserkennungs- und -steuermittel (384, 386; 1084) betreibbar ist, um die Amplituden der Übertragungsdatensymbole zu bestimmen, die in den Einheiten der orthogonalen drahtlosen Ressource des Kanals mit Sprungmusterkollisionen übertragen werden, und wobei
das Kollisionserkennungs- und -steuermittel (384, 386; 1084) betreibbar ist, um eine komplexe Zahlendarstellung aller Kanäle zu erzeugen, um eine Menge S aller Kanäle zu bestimmen, die von der Primärstation verbunden werden können,
wobei die Menge S eine Menge S⁰, eine Menge S⁺ und eine Menge S⁻ enthält, die Menge S⁰ eine Menge der restlichen Kanäle ausschließlich der kollidierten Kanäle in der Menge S ist, die Menge S⁺ eine Menge der kollidierten Kanäle ist, in welcher die Vorzeichen der auf den kollidierten Kanälen zu übertragenden Übertragungsdatensymbole positiv sind, und die Menge S⁻ eine Menge der kollidierten Kanäle ist, in welcher die Vorzeichen der auf den kollidierten Kanälen zu übertragenden Übertragungsdatensymbole negativ sind, und das Kollisionserkennungs- und -steuermittel die jeweiligen Amplituden der auf den kollidierten Kanälen zu übertragenden Übertragungssignale bestimmt (1844, 1854, 1856, 2060, 2160, 2260, 2360, 2460, 2560), je nachdem, ob die Menge S⁰, die Menge S⁺ und die Menge S⁻ jeweils einen Kanal (1830, 1840, 1850) aufweisen oder nicht.

24. Digitale Kommunikationsvorrichtung nach Anspruch 23, wobei das Kollisionserkennungs- und -steuermittel (384, 386; 1084) betreibbar ist, um die Übertragungssignalamplituden von zwei Kanälen zu vergleichen, die eine Mindestübertragungssignalamplitude in jeder Menge haben, wenn weder die Menge S⁺ noch die Menge S⁻ eine leere Menge ist; und
das Kollisionserkennungs- und -steuermittel (384, 386; 1084) betreibbar ist, um Übertragungsdatensymbole zu bestimmen, die in den Einheiten der orthogonalen drahtlosen Ressource durch den Kanal mit der größeren Mindestübertragungssignalamplitude als Bezugswert zu übertragen sind.

25. Digitale Kommunikationsvorrichtung nach Anspruch 24, wobei das Leistungssteuermittel betreibbar ist, um die Übertragungsleistung aller Kanäle in der Menge S einschließlich des als Bezugswert bestimmten Kanals zu regeln.

26. Digitale Kommunikationsvorrichtung nach Anspruch 24, wobei das Kollisionserkennungs- und -steuermittel (384, 386; 1084) betreibbar ist, um einen Übertragungssignalwert
mit dem Vorzeichen des Kanals, aber ohne den Kanal, der als Bezugswert bestimmt wurde, und mit einer Amplitude, die ein Mehrfaches des Bezugswerts ist, in den Einheiten der orthogonalen drahtlosen Ressource zu senden.

27. Digitale Kommunikationsvorrichtung nach Anspruch 24, wobei das Kollisionserkennungs- und -steuermittel (384, 386; 1084) betreibbar ist, um die Summe der Amplituden der Übertragungssignale der Kanäle, die in der Menge S enthalten sind, ohne den Kanal, der als Bezugswert bestimmt wurde, in den Einheiten der orthogonalen drahtlosen Ressource zu senden.

28. Digitale Kommunikationsvorrichtung nach Anspruch 24, wobei das Kollisionserkennungs- und -steuermittel (384, 386; 1084) betreibbar ist, um die Summe der Amplituden der Übertragungssignale der Kanäle, die in der Menge S enthalten sind, ohne den Kanal, der als Bezugswert bestimmt wurde, mit einem Vielfachen des Bezugswerts zu vergleichen, und einen Wert mit einer kleineren Amplitude in den Einheiten der orthogonalen drahtlosen Ressource zu senden.

29. Digitale Kommunikationsvorrichtung nach Anspruch 18, außerdem umfassend:
Mittel zum Bestimmen einer Momentankollisionsrate der N-dimensionalen Sprungmuster; und
Mittel, um die Kanalzuweisung in einer vordefinierten Reihenfolge aufzuheben, wenn die Momentankollisionsrate eine bestimmte Zahl von Malen aufeinanderfolgend eine Bezugskollisionsrate übersteigt.

30. Digitale Kommunikationsvorrichtung nach Anspruch 29, wobei das Aufhebungsmittel betreibbar ist, um die Kanalzuweisung in der vorbestimmten Reihenfolge von einem Kanal mit der niedrigsten Qualitätsanforderung zu einem Kanal mit der höchsten Qualitätsanforderung aufzuheben.

31. Digitale Kommunikationsvorrichtung nach Anspruch 29, wobei das Aufhebungsmittel betreibbar ist, um die Kanalzuweisung in der vordefinierten Reihenfolge von einem Kanal, in welchem die Zahl der bereits aufeinanderfolgend übertragenen Frames die kleinste ist, zu dem Kanal, in welchem die Zahl der bereits aufeinanderfolgend übertragenen Frames die größte ist, aufzuheben.

32. Digitale Kommunikationsvorrichtung nach Anspruch 29, wobei das Aufhebungsmittel betreibbar ist, um die Kanalzuweisung in der Reihenfolge des Startens von Kanälen aus, die weich umgeschaltet werden, zu Kanälen, die nicht weich umgeschaltet werden, aufzuheben.

## Revendications

1. Procédé de communication numérique, qui effectue un multiplexage statistique en attribuant des canaux de communication à partir d'une station principale (101) à une pluralité de stations secondaires (111, 112, 113) en synchronisation en utilisant un multiplexage à sauts de ressources orthogonales à N dimensions (N ≥ 1), le procédé consistant à :
(a) déterminer si, oui ou non, les signes des symboles de données émis correspondent (1840, 1860), lorsqu'une collision entre des motifs de sauts de ressources orthogonales à N dimensions se produisent, les symboles de données émis étant des symboles de données pour tous les canaux impliqués dans la collision ;
(b) émettre tous les symboles de données émis, lorsque les signes des symboles de données émis correspondent (1844, 1846, 1854, 1856) ;
(c) déterminer les symboles de données à émettre en fonction des amplitudes des symboles de données émis lorsque les signes des symboles de données émis ne correspondent pas, perforer (1860, 1960, 2089) les symboles de données émis à l'exception des symboles de données déterminés, et émettre les symboles de données déterminés sur les canaux en collision, dans lequel l'étape de détermination à l'étape (c) comprend le calcul (2060, 2160, 2260, 2360, 2460, 2560) des amplitudes des symboles de données déterminés pour commander les amplitudes respectives des signaux émis à émettre sur les canaux en collision selon l'étape (c), pour réduire de ce fait les pertes des données émises.

2. Procédé de communication numérique selon la revendication 1, dans lequel les motifs de sauts des ressources orthogonales à N dimensions des stations secondaires respectives sont mutuellement indépendants.

3. Procédé de communication numérique selon la revendication 2, dans lequel les ressources orthogonales à N dimensions comprennent une fréquence, un temps et des codes orthogonaux qui garantissent l'orthogonalité.

4. Procédé de communication numérique selon la revendication 3, dans lequel les ressources orthogonales à N dimensions avec une collision de motifs de sauts sont limitées dans l'amplitude du signal émis totale de la station principale.

5. Procédé de communication numérique selon la revendication 1, dans lequel un ensemble S de tous les canaux autorisés à être connectés par la station principale comprend un ensemble S⁰, un ensemble S⁺, et un ensemble S⁻, l'ensemble S⁰ étant un ensemble des canaux restants à l'exclusion des canaux en collision dans l'ensemble S, l'ensemble S⁺ est un ensemble des canaux en collision dans lequel les signes des symboles de données émis à émettre sur les canaux en collision sont positifs, et l'ensemble S⁻ est un ensemble des canaux en collision dans lequel les signes des symboles de données émis à émettre sur les canaux en collision sont négatifs, et les étapes (b) et (c) déterminent (1844, 1854, 1856, 2060, 2160, 2260, 2360, 2460, 2560) les amplitudes respectives des signaux émis à émettre sur les canaux en collision selon que l'ensemble S⁰, l'ensemble S⁺ et l'ensemble S⁻ ont ou non un canal respectivement (1830, 1840, 1850).

6. Procédé de communication numérique selon la revendication 5, dans lequel l'étape (c) consiste à :
comparer (2062, 2070) les amplitudes des signaux émis de deux canaux ayant une amplitude de signal émis minimum dans chaque ensemble, lorsque ni l'ensemble S⁺, ni l'ensemble S⁻ n'est un ensemble vide ; et
déterminer (2073, 2072, 2273, 2272) les symboles de données émis à émettre dans les unités de ressources sans fil orthogonales en utilisant le canal ayant la plus grande des amplitudes des signaux émis minimums en tant que valeur de référence.

7. Procédé de communication numérique selon la revendication 6, consistant en outre à :
commander une puissance d'émission de tous les canaux dans l'ensemble S y compris le canal déterminé en tant que valeur de référence.

8. Procédé de communication numérique selon la revendication 6, consistant en outre à :
envoyer une valeur de signal émis ayant le signe du canal, mais ne comprenant pas le canal déterminé en tant que valeur de référence et ayant une amplitude qui est un multiple de la valeur de référence dans les unités de la ressource sans fil orthogonale (2087, 2088).

9. Procédé de communication numérique selon la revendication 6, consistant en outre à :
envoyer la somme des amplitudes des signaux émis des canaux inclus dans l'ensemble S, ne comprenant pas le canal déterminé en tant que valeur de référence, dans les unités de la ressource sans fil orthogonale (2085, 2086).

10. Procédé de communication numérique selon la revendication 9, consistant en outre à :
comparer (2083, 2084) la somme des amplitudes des signaux émis des canaux inclus dans l'ensemble S, ne comprenant pas le canal déterminé en tant que valeur de référence, avec un multiple de la valeur de référence, et envoyer une valeur ayant la plus petite amplitude dans les unités de la ressource sans fil orthogonale.

11. Procédé de communication numérique selon la revendication 1, consistant en outre, avant l'étape (a), à :
(i) déterminer un taux de collision instantané dans un intervalle de temps d'émission prédéterminé ; et
(ii) annuler une attribution de canal dans un ordre prédéfini, lorsque le taux de collision instantané dépasse un taux de collision de référence.

12. Procédé de communication numérique selon la revendication 11, dans lequel l'étape (ii) comprend :
annuler l'attribution de canal dans l'ordre en commençant par un canal avec la spécification de qualité la plus faible jusqu'à un canal avec la spécification de qualité la plus élevée.

13. Procédé de communication numérique selon la revendication 11, dans lequel l'étape (ii) comprend :
annuler l'attribution de canal dans l'ordre en commençant par les canaux qui sont mis en oeuvre par une demande de répétition automatique jusqu'aux canaux qui ne sont pas mis en oeuvre par une demande de répétition automatique.

14. Procédé de communication numérique selon la revendication 13, dans lequel, pour des canaux qui sont mis en oeuvre par une demande de répétition automatique, l'attribution de canal est annulée dans l'ordre en commençant par le canal dans lequel le nombre de réémissions est le plus faible jusqu'au canal dans lequel le nombre de réémissions est le plus grand.

15. Procédé de communication numérique selon la revendication 11, dans lequel l'étape (ii) comprend :
annuler une attribution de canal du canal ayant la puissance d'émission la plus élevée de préférence jusqu'au canal ayant la puissance d'émission la plus faible.

16. Procédé de communication numérique selon la revendication 11, dans lequel l'étape (ii) comprend :
annuler une attribution de canal dans l'ordre en commençant par le canal dans lequel le nombre de trames déjà émises consécutivement est le plus faible jusqu'au canal dans lequel le nombre de trames déjà émises consécutivement est le plus grand.

17. Procédé de communication numérique selon la revendication 11, dans lequel l'étape (ii) comprend :
annuler une attribution de canal dans l'ordre en commençant par les canaux qui sont en transfert intercellulaire sans coupure jusqu'aux canaux qui ne sont pas en transfert intercellulaire sans coupure.

18. Dispositif de communication numérique pour attribuer des canaux de communication d'une station principale (101) à une pluralité de stations secondaires (111, 112, 113) en synchronisation en utilisant un multiplexage à sauts de ressources orthogonales à N dimensions (N ≥ 1), le dispositif comprenant :
des moyens (380 ; 1080) pour générer des motifs de sauts à N dimensions ;
des moyens (312, 332 ; 1012) pour moduler des symboles de données émis en fonction de la sortie des moyens de génération de motifs de sauts à N dimensions ;
des moyens de détection de collision et de commande (384, 386 ; 1084) pour surveiller si, oui ou non, une collision des motifs de sauts à N dimensions se produit, et comparer les symboles de données émis vers les stations secondaires dans un intervalle de la collision pour déterminer si, oui ou non, les signes des symboles de données émis correspondent ; et
des moyens de commande de puissance d'émission (315, 335 ; 1015) pour commander une puissance d'émission de la station principale,
dans lequel les moyens de détection de collision et de commande (384, 386 ; 1084) peuvent être utilisés pour déterminer si, oui ou non, les signes des symboles de données émis correspondent, lorsque la collision entre les motifs de sauts des ressources orthogonales à N dimensions se produit,
dans lequel les moyens de détection de collision et de commande (384 ; 386 ; 1084) peuvent être utilisés pour émettre tous les symboles de données émis, lorsque les signes des symboles de données émis correspondent, les symboles de données émis étant des symboles de données pour tous les canaux impliqués dans la collision,
dans lequel les moyens de détection de collision et de commande (384 ; 386 ; 1084) peuvent être utilisés pour déterminer les symboles de données à émettre en fonction des amplitudes des symboles de données émis lorsque les signes des symboles de données émis ne correspondent pas et pour perforer les symboles de données émis à l'exception des symboles de données déterminés,
dans lequel les moyens de commande de puissance d'émission peuvent être utilisés pour augmenter la puissance d'émission de la station principale afin de compenser une insuffisance de l'énergie reçue moyenne dans les stations secondaires (111, 112, 113) résultant d'une interruption de l'émission des symboles de données émis provoquée par la perforation des symboles de données émis.

19. Dispositif de communication numérique selon la revendication 18, dans lequel les motifs de sauts de ressources orthogonales à N dimensions des stations secondaires respectives sont mutuellement indépendants.

20. Dispositif de communication numérique selon la revendication 18, dans lequel la station principale peut être utilisée pour déterminer le nombre de canaux attribués en fonction de l'activité des canaux.

21. Dispositif de communication numérique selon la revendication 18, dans lequel une unité de ressource sans fil orthogonale comprend des données de fréquence, de temps et de codes orthogonaux qui garantissent l'orthogonalité.

22. Dispositif de communication numérique selon la revendication 18, dans lequel, à l'instant de collision du motif de sauts, l'unité de ressources sans fil orthogonale est limitée dans l'amplitude du signal émis totale de la station principale.

23. Dispositif de communication numérique selon la revendication 18, dans lequel les moyens de détection de collision et de commande (384 ; 386 ; 1084) peuvent être utilisés pour commander un signal émis de chaque ressource sans fil orthogonale en fonction du symbole de données émis d'un canal impliqué dans une collision de motifs de sauts des ressources orthogonales à N dimensions et de l'amplitude de signal émis du canal, et dans lequel
les moyens de détection de collision et de commande (384 ; 386 ; 1084) peuvent être utilisés pour déterminer les amplitudes des symboles de données émis qui sont émis dans les unités de la ressource sans fil orthogonale du canal présentant des collisions de motifs de sauts, et dans lequel
les moyens de détection de collision et de commande (384 ; 386 ; 1084) peuvent être utilisés pour générer une représentation en nombres complexes de tous les canaux pour déterminer un ensemble S de tous les canaux autorisés à être connectés par la station principale,
dans lequel l'ensemble S comprend un ensemble S⁰, un ensemble S⁺, et un ensemble S⁻, l'ensemble S⁰ étant un ensemble des canaux restants à l'exclusion des canaux en collision dans l'ensemble S, l'ensemble S⁺ est un ensemble des canaux en collision dans lequel les signes des symboles de données émis à émettre sur les canaux en collision sont positifs, et l'ensemble S⁻ est un ensemble des canaux en collision dans lequel les signes des symboles de données émis à émettre sur les canaux en collision sont négatifs, et les moyens de détection de collision et de commande peuvent être utilisés pour déterminer (1844, 1854, 1856, 2060, 2160, 2260, 2360, 2460, 2560) les amplitudes respectives des signaux émis à émettre sur les canaux en collision selon que l'ensemble S⁰, l'ensemble S⁺ et l'ensemble S⁻ ont ou non un canal respectivement (1830, 1840, 1850).

24. Dispositif de communication numérique selon la revendication 23, dans lequel les moyens de détection de collision et de commande (384 ; 386 ; 1084) peuvent être utilisés pour comparer les amplitudes des signaux émis de deux canaux ayant une amplitude de signal émis minimum dans chaque ensemble, lorsque ni l'ensemble S⁺, ni l'ensemble S⁻ n'est un ensemble vide ; et
les moyens de détection de collision et de commande (384 ; 386 ; 1084) peuvent être utilisés pour déterminer les symboles de données émis à émettre dans les unités de ressources sans fil orthogonales en utilisant le canal avec l'amplitude de signal émis la plus grande en tant que valeur de référence.

25. Dispositif de communication numérique selon la revendication 24, dans lequel les moyens de commande de puissance peuvent être utilisés pour commander la puissance d'émission de tous les canaux dans l'ensemble S y compris le canal déterminé en tant que valeur de référence.

26. Dispositif de communication numérique selon la revendication 24, dans lequel les moyens de détection de collision et de commande (384 ; 386 ; 1084) peuvent être utilisés pour envoyer une valeur de signal émis ayant le signe du canal, mais ne comprenant pas le canal déterminé en tant que valeur de référence et ayant une amplitude qui est un multiple de la valeur de référence dans les unités de la ressource sans fil orthogonale.

27. Dispositif de communication numérique selon la revendication 24, dans lequel les moyens de détection de collision et de commande (384 ; 386 ; 1084) peuvent être utilisés pour envoyer la somme des amplitudes des signaux émis des canaux inclus dans l'ensemble S, ne comprenant pas le canal déterminé en tant que valeur de référence, dans les unités de la ressource sans fil orthogonale.

28. Dispositif de communication numérique selon la revendication 24, dans lequel les moyens de détection de collision et de commande (384 ; 386 ; 1084) peuvent être utilisés pour comparer la somme des amplitudes des signaux émis des canaux inclus dans l'ensemble S, ne comprenant pas le canal déterminé en tant que valeur de référence, avec un multiple de la valeur de référence, et envoyer une valeur ayant une plus petite amplitude dans les unités de la ressource sans fil orthogonale.

29. Dispositif de communication numérique selon la revendication 18, comprenant en outre :
des moyens pour déterminer un taux de collision instantané des motifs de sauts à N dimensions ; et
des moyens pour annuler une attribution de canal dans un ordre prédéfini, lorsque le taux de collision instantané dépasse successivement un taux de collision de référence un nombre de fois prédéterminé.

30. Dispositif de communication numérique selon la revendication 29, dans lequel les moyens d'annulation peuvent être utilisés pour annuler l'attribution de canal dans l'ordre prédéfini d'un canal avec la spécification de qualité la plus faible jusqu'à un canal avec la spécification de qualité la plus élevée.

31. Dispositif de communication numérique selon la revendication 29, dans lequel les moyens d'annulation peuvent être utilisés pour annuler l'attribution de canal dans l'ordre prédéfini d'un canal ayant le nombre de trames émises consécutivement le plus faible jusqu'à un canal ayant le nombre de trames émises consécutivement le plus grand.

32. Dispositif de communication numérique selon la revendication 29, dans lequel les moyens d'annulation peuvent être utilisés pour annuler l'attribution de canal dans l'ordre en commençant par les canaux qui sont en transfert intercellulaire sans coupure jusqu'aux canaux qui ne sont pas en transfert intercellulaire sans coupure.
